## Europäisches Patentamt
## European Patent Office
## Office européen des brevets

(19)

(11) Veröffentlichungsnummer: **0 192 226 B1**

# EUROPÄISCHE PATENTSCHRIFT

(12)

(45) Veröffentlichungstag der Patentschrift: **05.06.91**

(51) Int. Cl.⁵: **G05D 23/19, F24D 19/10**

(21) Anmeldenummer: **86102043.6**

(22) Anmeldetag: **18.02.86**

(54) **Verfahren zur Regelung der Temperatur in Räumen, die Heiz- oder Kühleinrichtungen mit Thermostatventilen aufweisen.**

(30) Priorität: **18.02.85 DE 3505600**
**18.02.85 DE 3505601**
**18.02.85 DE 3505602**
**18.02.85 DE 3505603**

(43) Veröffentlichungstag der Anmeldung:
**27.08.86 Patentblatt 86/35**

(45) Bekanntmachung des Hinweises auf die
Patenterteilung:
**05.06.91 Patentblatt 91/23**

(84) Benannte Vertragsstaaten:
**AT CH DE LI**

(56) Entgegenhaltungen:
**EP-A- 0 050 978**
**FR-A- 2 129 169**
**US-A- 4 199 102**
**US-A- 4 245 501**

(73) Patentinhaber: **Stiebel Eltron GmbH & Co. KG**
**Dr.-Stiebel Strasse**
**W-3450 Holzminden(DE)**

(72) Erfinder: **Kantner, Alexander, Dipl.-Phys. Dr.
rer. nat.**
**Paul-Windgassen-Strasse 99**
**W-5630 Remscheid 11(DE)**

(74) Vertreter: **Cohausz & Florack Patentanwälte**
**Postfach 14 01 61 Schumannstrasse 97**
**W-4000 Düsseldorf 1(DE)**

**Beschreibung**

Die Erfindung betrifft ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und das von den Thermostatventilen beeinflußte Produkt aus Massenstrom und Temperaturdifferenz ermittelt und entsprechend die Wärme- oder Kältequelle gesteuert wird.

Hierbei umfaßt der Begriff des Regelns (im späteren meist auch Temperieren genannt) sowohl das Heizen als auch das Kühlen von Räumen, welche ihrerseits Aufenthaltsräume für Menschen oder Tiere oder aber auch Lagerräume für empfindliche Güter oder Maschinen bzw. Apparaturen, wie beispielsweise Computer oder dergleichen, oder aber auch Räume sein können, in denen bestimmte Behandlungen an toter Materie oder aber auch an Lebewesen, wie beispielsweise Bakterien- oder Virenkulturen oder dergleichen, vorgenommen werden sollen, die in solchen Fällen üblicherweise als Zuchträume bezeichnet werden. Entsprechend werden solche Räume entweder durch mit einer Wärmequelle (im späteren meist auch Wärmeerzeuger genannt) verbundene Heizeinrichtung (im späteren meist auch Heizkörper genannt) oder aber durch mit einer Kältequelle (im späteren meist auch Kälteerzeuger) verbundene Kühleinrichtungen geregelt (bzw. im späteren meist auch Temperieren genannt), wobei diese Heizeinrichtungen (Heizkörper) oder Kühleinrichtungen jeweils mit Thermostatventilen (im späteren meist auch automatisch wirkende Drosseleinrichtungen genannt) ausgerüstet sind.
Ferner wird im folgenden synonym für die Schwankung der Amplitude des Produktes aus Massenstrom und Temperaturdifferenz auch Schwankung der Verbraucherleistung bzw. auch Schwankung der Differenz zwischen der in den Heizungs- bzw. Kühlmittelvorlauf eingespeisten und der dem Wärme- bzw. Kälteerzeuger über den Rücklauf rückgespeisten Wärme- bzw. Kälteleistung oder der durch die die einzelnen Heizkörper bzw. Kühleinrichtungen durchströmenden Einzelmassenströme des Wärmeträgermediums zusammenfassende Rücklaufleitung rückgespeisten Wärme- bzw. Kälteleistung benutzt. Durch diese Ausführung ist aber in jeder Weise klar und präzise, was unter der Schwankung bzw. der Schwankungsbreite der Verbraucherleistung bzw. der Schwankung der Amplitude des Produktes aus Massenstrom und Temperaturdifferenz zu verstehen ist.

Bei zu beheizenden Aufenthaltsräumen für Menschen wird bislang die Temperatur in diesen durch Steuerung der Temperatur des Wärmeträgermediums im Heizungsvorlauf (Vorlauftemperatur) einerseits und durch Regelung der Raumtemperatur andererseits beeinflusst. Die Anpassung der Vorlauftemperatur des Heiznetzes an den Wärmebedarf eines zu beheizenden Raumes oder eines Hauses erfolgt durch eine sogenannte außentemperatur- oder witterungsgeführte Vorlauftemperatursteuerung, bei der in Abhängigkeit von der durch einen Außentemperaturfühler erfaßten Außentemperatur mit Hilfe einer als "Heizkurve" bezeichneten Heizkennlinie die entsprechende Vorlauftemperatur gewählt wird. Hierbei ist man bemüht, die Heizkennlinie in jedem Fall so zu legen, daß sämtliche automatischen Drosseleinrichtungen der an das Heiznetz angeschlossenen Heizkörper in ihrem Regelbereich arbeiten. Daraus ergeben sich aber erhebliche Abweichungen zwischen der Sollkennlinie und der vom Heizungsinstallateur eingestellten Kennlinie. Erfahrungsgemäß pflegt nämlich der Heizungsinstallateur, da einerseits die nichtlineare Abhängigkeit der Außentemperatur von der Vorlauftemperatur nur durch eine Schar von Heizkennlinien wiederzugeben ist, wobei ihm der individuelle Zusammenhang von Außentemperatur und Vorlauftemperatur nicht bekannt ist, und andererseits auch noch weitere heizungsanlagenspezifische und/oder durch die Eigenheiten des zu beheizenden Raumes bzw. Hauses als Gesamtheit einer Vielzahl von Räumen bedingte Einflußgrößen zu berücksichtigen sind, vorsorglich eine hohe Kennlinie zu wählen, um sicherzustellen, daß die Vorlauftemperatur ausreichend hoch ist, um auch unter extremen Betriebsbedingungen, die einerseits durch extreme Schwankungen der Außentemperatur und andererseits durch extreme Anforderungen an die Raumtemperatur und nicht zuletzt durch ihm im einzelnen nicht bekannte ungünstige Eigenschaften des die zu beheizenden Räume bildenden Gebäudes und/oder der Heizungsanlage insbesondere bezüglich Wärmeverlusten durch Wärmeableitung und/oder -abstrahlung einerseits und/oder Wärmeaufnahme durch beispielsweise Sonneneinstrahlung andererseits, und zwar dies möglicherweise auch noch gleichzeitig bezüglich unterschiedlich gelegener Räume, bedingt sein können, die gewünschten Raumtemperaturen zu gewährleisten. Abgesehen davon, daß somit das Einschätzen der Art der benötigten Heizkennlinie dem Heizungsinstallateur überlassen bleibt und damit ungeachtet einer etwaigen Möglichkeit nachträglicher Korrekturnachstellung hinsichtlich seiner Güte allein von dessen individueller Erfahrung abhängt, ist erfahrungsgemäß auf diese Weise nicht einmal eine brauchbare Annäherung an eine den tatsächlichen individuellen Verhältnissen gerecht werdende Sollkennlinie erreichbar, vielmehr sind häufig sogar beträchtliche Fehler durch falsches Einschätzen der Steilheit der Kennlinienkurve und deren Nullpunktes die Folge.

Ein weiterer Mangel ist die schlechte Einstellsystematik. Abgesehen davon, daß häufig eine Anpassung der Heizkennlinie an die Gegebenheiten im über die Heizungsanlage mit Wärmeenergie bedienten Verbraucherkreis gar nicht möglich ist, ist für die Einstellung der jeweiligen Heizkennlinie die Kenntnis der Verhaltensweise der gesamten Heizungsanlage in bezug auf die Abhängigkeit ihrer einzelnen Betriebsparameter von den relevanten äußeren Einflussgrößen über mindestens zwei Heizperioden, d. h. zwei bis drei Jahre unerläßlich. Hierdurch gestaltet sich die Optimierungsanpassung der Heizkennlinie schwierig und langwierig, und die nachteiligen Folgen hiervon sind unnötig hohe Stillstands- und Abstrahlungsverluste sowohl des Wärmeerzeugers, z. B. eines Heizkessels, als auch der Rohrleitungen des Heiznetzes. Nachteilig ist ferner, daß außentemperaturunabhängige Einflußgrößen, wie beispielsweise die Lüftungsgewohnheiten der Bewohner, die Sonneneinstrahlung durch Fensterflächen oder die Abwärme elektrischer Geräte, wie z. B. von Kühlschränken, Elektroherden oder Kopiergeräten oder dergleichen, bei bekannten witterungsgeführten Vorlauftemperatursteuerungen selbst bei verhältnismäßig präzise eingestellten Heizkennlinien systembedingt nicht berücksichtigt werden können.

Es ist ersichtlich, daß es sich bei solchen bekannten Vorlauftemperatursteuerungen bezüglich der Raumtemperatur um reine Steuerungen handelt, da eine Rückmeldung der Raumtemperatur fehlt.

Im Rahmen der individuellen Raumtemperaturregelung hat man daher zur individuellen Beeinflussung der Raumtemperatur in den einzelnen Räumen den Heizkörpern jeweils eine automatisch wirkende Drosseleinrichtung zugeordnet, die den in den jeweiligen Heizkörper eintretenden Massenstrom des Wärmeträgermediums in Abhängigkeit der Raum-Ist-Temperatur von einer Raum-Soll-Temperatur regelt. Diese selbsttätig wirkenden Drosseleinrichtungen können als Kombination eines Heizkörperventils mit auf dieses wirkendem Regelgerät mit Sollwertgeber, Temperaturfühler und Regler ausgebildet sein, es haben jedoch hierfür zusammenfassend als Heizkörperthermostat bezeichnete thermostatische Heizkörperventile weitverbreiteten Anklang gefunden, die meist als Dehnstoffregler oder aber als Dehnkörperregler mit einem als gekapselter und gasgefüllter Wellrohrkörper ausgebildeten Dehnkörper ausgeführt sind. Diese automatisch wirkenden Drosseleinrichtungen regeln zwar jeweils selbsttätig die Raumtemperatur, wobei der Massenstrom des den jeweiligen Heizkörper durchfließenden Wärmeträgermediums selbst eine Funktion der Regelabweichung, der Vorlauftemperatur, des in der gesamten Heizungsanlage herrschenden Drucks und nicht zuletzt auch spezieller Kenngrößen des Thermostatventils ist. sie sind jedoch proportional wirkende Regler und können die Raumtemperatur wegen der bleibenden Regelabweichung in der Größenordnung von in ungünstigen Fällen sogar bis zu 6 K nur ungenau auf den gewünschten Temperaturwert einregeln. Diese treten systembedingt dann auf, wenn die empirisch gewählte Heizkurve aufgrund ungünstiger Auslegung oder Wahl oder aufgrund von Fremdeinflüssen nicht dem tatsächlichen Angebot an Wärmeenergie entspricht. Dies führt nicht selten zu dem Bedürfnis, lüften zu müssen, das seinerseits wieder zu erfahrungsgemäß nicht unerheblichen Energieverlusten zu führen pflegt.

Bei mit Messung des Gesamtmassenstroms arbeitenden Heizungsanlagen hat man für den Sonderfall kontinuierlich dem Heizungsvorlauf zugeführten Wärmeträgermediums versucht, von der Führung über die Außentemperatur und der Auswahl einer anlagenspezifischen Heizkennlinie unabhängig zu werden. Hierfür hat man im Gegensatz zu älteren außentemperatur-bzw. witterungsgeführten Raumtemperatursteuerungen, bei denen die Vorlauftemperatur des Wärmeträgermediums gemessen und als Regelgröße dem Regler aufgeschaltet wurde, während die Führungsgröße entweder von Hand eingestellt oder in Abhängigkeit von der Außentemperatur geführt wurde, die Vorlauftemperatur zur Stellgröße für den Regler gemacht, während die Regelgröße der Gesamtmassenstrom im Verbraucherkreis der Heizungsanlage ist. Dabei wirkt das Stellsignal des Durchflußreglers entweder auf das Stellglied für die Energiezufuhr zum Wärmeerzeuger oder auf einen Mehr-Wege-Mischer, der in bekannter Weise den Anteil des vom Wärmeerzeuger kommenden hocherhitzten Wärmeträgermediums in dem vom Kesselkreislauf getrennten Verbraucherkreislauf so einstellt, daß eine vorgegebene Vorlauftemperatur aufrecht erhalten wird.

Hierbei handelt es sich zwar erstmalig bereits um eine echte Regelung der Raumtemperatur, da die sich im Zuge der durch Veränderung der Vorlauftemperatur des vom Wärmeerzeuger abgegebenen Wärmeträgermediums oder der Veränderung des Anteils desselben am im Verbraucherkreislauf zirkulierenden Wärmeträgermedium erfolgenden Veränderung der Energiezufuhr zum Verbraucherkreislauf einstellende Veränderung des Gesamtmassenstroms des Wärmeträgermediums als Rückmeldegröße benutzt wird, um die Abweichung des Gesamtmassenstroms von seinem vorgegebenen Sollwert (Regeldifferenz des Gesamtmassenstroms) zu eliminieren.

Diese bekannte Art der Regelung weist jedoch eine Zahl von gravierenden Nachteilen auf:

Sie ist auf Heizungsanlagen mit kontinuierlicher Zufuhr der Wärmeleistung zum im Heizungsvorlauf der Heizanlage befindlichen Wärmeträgermedium beschränkt, deren Verbreitung jedoch beschränkt ist. Für die weit verbreiteten Heizungsanlagen mit diskontinuierlich arbeitendem Wärmeerzeuger, der dann beispielsweise als Heizkessel mit im Ein-Aus-Betrieb arbeitendem öl- bzw. gasbefeuertem Brenner oder einer entsprechend betriebenen elektrischen Heizeinrichtung oder als diskontinuierlich betriebene Wärmepumpe ausgebildet sein kann, ist diese bekannte Regelung ungeeignet, da für Ein-Aus-Betrieb stets zwei Schaltpunkte, nämlich ein Einschalt- und ein Ausschaltpunkt, gegeben sein müssen, diese bekannte Art der Regelung jedoch nur eine Führungsgröße in Form des vorgegebenen Sollwertes des Gesamtmassenstroms zur Verfügung hat.

Weiterhin ist diese bekannte Regelung nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch kann erfahrungsgemäß eine Regelung dieser bekannten Art nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei dieser bekannten Regelung zwar eine Einstellbarkeit des Sollwertes, nicht aber eine werkseitige und schon gar nicht eine durch den Benutzer vorzunehmende Umschaltung auf verschiedene Betriebszustände vorgesehen ist. Das führt dazu, daß in einem solchen Falle von Auslegung für beispielsweise normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden kann, jedoch es in einem solchen Falle nicht möglich ist, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Wird hingegen diese bekannte Regelung für solchen Komfortbetrieb ausgelegt, so ergeben sich aufgrund der verhältnismäßig hohen Vorlauftemperatur des Wärmeträgermedium verhältnismäßig hohe Verluste des gesamten Heizungssystems durch Wärmeableitung und -abstrahlung. Eine Auslegung für ein als Sparbetrieb zu bezeichnendes Betriebsverhalten ist bei dieser bekannten Regelung nicht sinnvoll, da dadurch die in den einzelnen Räumen erzielbare Raumtemperatur noch weiter begrenzt wird. Eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) ist bei dieser bekannten Regelung nicht möglich.

Nachteilig hinzu kommt weiterhin, daß ungeachtet des ausgelegten Betriebszustandes diese bekannte Art der Regelung trotz ihrer lediglich kontinuierlich möglichen Betriebsweise notwendigerweise eine verhältnismäßig große Zahl von Regeleingriffen zur Folge hat, um den Gesamtmassenstrom als Führungsgröße auf Konstanz zu regeln. Dies gilt insbesondere für aufgrund beispielsweise äußerer Einflüsse oder vom Benutzer veranlaßte schnelle Änderungen der Führungsgröße selbst und/oder der Regelabweichung von dieser. Je größer aber die Zahl von Regeleingriffen ist, desto mehr wird erfahrungsgemäß die gesamte Regelvorrichtung einschließlich besonders auch der Stellglieder derselben in Form der je nach Auslegung der Anlage mit Heizkessel oder Wärmepumpe oder Wärmetauscherstation als Wärmeerzeuger erforderlichen Brenner bzw. Kompressoren bzw. elektrischen Heizelemente bzw. Verdampferventile bzw. Überströmventile bzw. Absperr- oder Regelventile für die Zuführung des Primärenergieträgermediums verschleißmäßig belastet und dadurch die Lebensdauer dieser einzelnen Komponenten ungünstig beeinflußt, zumindest jedoch die Intervallzeit zwischen notwendigen Inspektionen bzw. Wartungen nicht unerheblich nachteilig verkürzt. Außerdem ist auch bei Regeleingriff in eine mit kontinuierlicher Einspeisung der Wärmeleistung in den Heizungsvorlauf arbeitende Heizungsanlage mit steigender Zahl solcher Regeleingriffe eine vermehrte Belastung der Umwelt mit Schadstoffimmissionen zu erwarten.

Soweit bei Kühlanlagen, die eine Vielzahl von Räumen auf unterschiedlichen Kühltemperaturen zu halten haben, wie das beispielsweise bei Kühlanlagen für Lagerhäuser oder Großmärkte oder dergleichen der Fall sein kann, der bzw. die Kompressor(en) des Kältemaschinenkreislaufs als Teil des Kälteerzeugers desselben nicht in üblicher Weise über Hochdruck- und/oder Niederdruckpressostaten betrieben werden, während die die einzelnen Kühlräume, beispielsweise einen Raum für die Frischhaltung von Obst und Gemüse, ferner einen Raum für Salate und Aufschnitt sowie ferner einen Raum für Fleisch oder Fisch und schließlich möglicherweise auch noch einen Raum für Tiefkühlkost, auf der jeweils erforderlichen Temperatur haltenden, für tiefere Raumtemperaturen meist mit einem oder mehreren Verdampfergebläse(n) ausgestatteten Kühleinrichtungen jeweils über einen eigenen Verdampfungsdruckregler auf Aufrechterhaltung konstanter vorbestimmter Raumtemperatur geregelt werden, gelten die vorstehend für eine Heizungsanlage gattungsgemäßer Art dargelegten Gesichtspunkte in noch schwerwiegenderem Maße für Kühlen. Dies hat seinen prinzipiellen Grund darin, daß Kälteerzeuger, wenn sie als mit elektrischer Energie angetriebene Kompressionskältemaschinen ausgeführt sind, eine Leistungszahl von 2 bis 3 und, wenn sie als gas- und/oder dieselmotorisch betriebene Kompressions- oder als Absorptionskältemaschinen ausgeführt sind, eine Leistzungszahl bzw. ein Wärmeverhältnis von 0,4 bis 0,6 haben, während entsprechende Wärmeerzeuger eine Leistungszahl bzw. ein Wärmeverhältnis haben, die bzw. das prinzipiell um 1 größer ist. Das aber bedeutet, daß grundsätzlich eine Wärmepumpe immer einen besseren Wärmewirkungsgrad hat als eine Kältemaschine einen Kältewirkungsgrad, bei der die in Form von Kälteleistung abgegebene Leistung bezogen auf den Energieeinsatz immer kleiner ist. Entsprechend ist die Erzeugung von Kälteleistung grundsätzlich sehr viel kostspieliger als die von Wärmeleistung.

Anzustreben ist daher aus energetischer Sicht für Kühlbetrieb eine möglichst hohe Vorlauftemperatur des Wärmeträgermediums bei möglichst hohem Gesamtmassendurchsatz desselben, um die gewünschte niedrige Raumtemperatur zu erreichen oder zu erhalten. Führung der Vorlauftemperatur des in einer Kühlanlage befindlichen Wärmeträgermediums über die Außentemperatur ist somit genauso wenig optimal, wie eine Führung der Vorlauftemperatur des Wärmeträgermediums einer Heizungsanlage über die Außentemperatur, wie vorstehend erläutert. Wenn nämlich die Außentemperatur eine zu niedrige Vorlauftemperatur in der Kühlanlage vorschreibt, müßten die automatisch wirkenden Drosseleinrichtungen zu stark drosseln, so daß sich für den Kälteerzeuger ein zu hoher Betriebsenergie-Einsatz ergibt, und zwar dies ganz abgesehen davon, daß unterhalb gewisser Temperaturen des im Kühlbetrieb arbeitenden Wärmeträgermediums bei Raumkühlung eine Luftenfeuchtung zu zusätzlichem Energieaufwand und entsprechenden nicht unerheblichen Kosten führt, prinzipiell auch deshalb, weil die Leistungszahl bzw. das Wärmeverhältnis des Kälteerzeugers bei tiefen Wärmeträgermediums-Temperaturen (Kühlmitteltemperaturen) und hohen Außentemperaturen in gleicher Weise abfällt wie die Leistungszahl bzw. das Wärmeverhältnis einer Wärmepumpe einer Heizungsanlage bei tiefen Außentemperaturen und hoher Vorlauftemperatur. Es würde also ein gleiches Maß an Verschlechterung der Leistungszahl bzw. des Wärmeverhältnisses, das für eine Wärmepumpe allenfalls noch tolerierbar ist, für eine Kältemaschine zu untragbaren Verhältnissen führen. Sogar für einen mit Gas oder Öl oder elektrischer Energie betriebenen Kessel wäre ein schlechterer Wirkungsgrad aus Energie-und Kostensicht eher tolerierbar als für eine Kältemaschine.

Es ist ersichtlich, daß sich gerade aufgrund dieses prinzipiellen Unterschiedes des Kühlverfahrens gegenüber dem Beheizen von Räumen alle vorstehend für Heizen als nachteilig erläuterten Verhältnisse für Kühlen noch in jeder Hinsicht ungünstiger auswirken.

Einen Weg zur Vermeidung dieser beschriebenen bekannten Nachteile der witterungsgeführten Außentemperatursteuerung hat man in sogenannten Raumtemperaturkorrekturaufschaltungen gesehen. Bei diesen wird in einem Referenzraum ein Raumthermostat vorgesehen, der die allen herrschenden Einflüssen unterliegende Raum-Ist-Temperatur desselben mißt und dafür sorgt, daß dann, wenn in diesem Referenzraum die Raum-Soll-Temperatur erreicht oder überschritten wird, die Vorlauftemperatur durch Ausschalten des Kessels zurückgenommen wird, während andererseits ein Einschaltsignal für den Kessel von diesem Raumthermostaten her so lange bestehen bleibt, wie eine Differenz zwischen Raum-Ist-Temperatur und Raum-Soll-Temperatur dieses Referenzraumes gemessen wird.

Abgesehen von den durch das Erfordernis einer zusätzlichen Verkabelung zwischen Referenzraumthermostat und Kesselsteuerung (Vorlauftemperatur-Steuerung) bedingten Unannehmlichkeiten bezüglich Arbeitsaufwand und oder benötigter Montagezeit und/oder Schmutzanfall und insbesondere auch aus allen angesprochenen anderen Gesichtspunkten nicht unbeträchtlichen Kosten ist eine solche Raumtemperaturkorrekturaufschaltung auch aus im eigenen System liegenden Gründen unbefriedigend. Einerseits nämlich ist bereits das Maß der jeweiligen Änderung der Vorlauftemperatur in Abhängigkeit von der Abweichung der Referenzraum-Ist-Temperatur von der Referenzraum-Soll-Temperatur nicht anders als nur empirisch zu wählen, unterliegt also grundsätzlich der Möglichkeit nicht unbeträchtlicher Fehler bereits in der Wahl der Abhängigkeit der Vorlauftemperatur von der genannten Referenzraum-Temperatur-Abweichung, und zum anderen steht man vor der praktisch kaum lösbaren Schwierigkeit der Auswahl des Referenzraums selbst. Wird nämlich, was aus Gründen der Sicherstellung ausreichenden Wärmeenergienachschubs zu allen anderen Räumen zu empfehlen wäre, als Referenzraum ein im allgemeinen verhältnismäßlg kühler Raum bzw. ein Raum mit vergleichsweise hohem Wärmeverlust gewählt, so wird einerseits die Vorlauftemperatur für den Einzelbedarf der anderen - insbesondere aus Gründen der beschriebenen Fremdeinflüsse wärmeren - Räume zu hoch gewählt und lassen sich praktisch in jenen Räumen die dort auftretenden Fremdeinflüsse nicht nutzen, um die Vorlauftemperatur abzusenken. Wird hingegen als Referenzraum ein verhältnismäßig warmer Raum bzw. ein Raum mit verhältnismäßig geringem Wärmeverlust gewählt, so ist es nicht auszuschließen, daß insbesondere aufgrund von Fremdeinflüssen der beschriebenen Art, möglicherweise aber auch außentemperatur-bzw. witterungsbedingten Einflüssen, wie beispielsweise eines Kälteinbruchs, die anderen Räume unterversorgt werden. Ein solcher Zustand ist natürlich höchst unerwünscht und ermöglicht im übrigen gleichfalls nicht die individuelle Berücksichtigung der genannten außentemperatur- bzw. witterungsunabhängigen Fremdeinflüsse. In beiden Fällen ist die notwendige Folge eine systembedingt nicht vermeidbare Wärmeenergievergeudung.

Diese Probleme einer sich somit allenfalls für Beheizung grundsätzlich relativ gleichmäßig warmer Räume oder einer extrem geringen Zahl unterschiedlich warmer Räume eignenden Raumtemperaturkorrekturaufschaltung bekannter Art werden noch gravierender, wenn es gilt, das Heizungsverhalten für eine Vielzahl von Raumgesamtheiten, wie beispielsweise der jeweils mehrere Räume unterschiedlicher Temperaturanforderungen aufweisenden Wohnungen eines Mehrfamilienhauses, in dem angesprochenen Sinne zu optimieren. Hier nämlich stellt sich zusätzlich das Problem, welche der Wohnungen einen Referenzraum erhalten soll oder, wenn jede einen Referenzraum für sich erhalten sollte, welcher der einzelnen Referenzräume hinsichtlich seiner Raum-Soll-Ist-Temperatur-Abweichung Vorrang haben soll. Abgesehen davon, daß eine solche Korrekturaufschaltung eine höchst aufwendige und kostenintensive Vorranglogik benötigen würde, könnte sie die in sie zu setzenden Erwartungen praktisch kaum erfüllen, weil dies zur Voraussetzung hätte, daß bereits vorab eine Einigung über das zulässige Maß der Referenzraum-Soll-Ist-Temperatur-Abweichung getroffen wurde. Ist dies nämlich nicht der Fall, so muß aus den gleichen Gründen, wie vorstehend für den Fall einer einzigen Wohnung mit mehreren Räumen erläutert, eine Vorabentscheidung darüber getroffen werden, ob der auf die geringste oder der auf die größte Soll-Ist-Temperatur-Abweichung eingestellte Referenzraum die Führungsfunktion für die Veränderung der Vorlauftemperatur übernehmen soll. Unter diesen Umständen aber wird es für die überwiegende Art und Zahl von Einsatzfällen eher zu empfehlen sein, auf eine solche Raumtemperaturkorrekturaufschaltung überhaupt zu verzichten.

Angesichts dieser vielfältigen Schwierigkeiten hat man bereits auf unterschiedliche Weise versucht, eine echte Regelung der Wärmeenergie-Zufuhr in Abhängigkeit vom Bedarf zu verwirklichen. Hierfür hat man versucht, aus einzelnen für das Betriebsverhalten des Heizungsvorganges bestimmenden Größen, wie beispielsweise der Rücklauftemperatur zusätzlich zur schon immer als Steuerungsgröße benutzten Vorlauftemperatur und/oder der Differenz von Vorlauf- und Rücklauf-temperatur gegebenenfalls unter weiterer Berücksichtigung in ihrer Größe und Einflußsystematik willkürlich angenommener Einflußgrößen, wie der einen oder anderen der vorstehend genannten außentempera- tur- bzw. witterungsunabhängigen Fremdeinflußgrößen, Gesetzmäßig- keiten zu abstrahieren, von denen zu erwarten ist, daß sie mit mög- lichst guter Genauigkeit die sich bei natürlichem Verhalten der Hei- zungsanlage einstellenden Verhältnisse weitestgehend annähern.

Zu diesem Zwecke wurde für den speziellen Sonderfall einer mit einem Heizkessel mit im Ein-Aus-Betrieb arbeitendem Brenner und dem Kessel nachgeschaltetem Mischer betriebenen Heizungsanlage versucht, durch vereinfachende Annahmen einen mathematischen Algorithmus aufzustellen, der für die Behandlung in einem Mikrocomputer so geeignet ist, daß mittels dessen die Mischerstellung geregelt werden kann, wobei dieser Algorithmus mit lediglich Temperaturwerten auskommt, die einfach im Betrieb zu messen sind. Dieser Algorithmus soll, um eine Möglichkeit zu schaffen, in Abhängigkeit von der Differenz von Vorlauf- und Rücklauftemperatur Einfluß auf die Mischerstellung und damit die in das Heizungssystem eingespeiste Wärmeleistung nehmen zu können, dem Produkt aus einer Konstanten, der Differenz von Vorlauf-und Raum-Ist-Temperatur sowie der Differenz von Raum-Soll-Temperatur und Raum-Ist-Temperatur entsprechen. Abgesehen davon, daß ein solcher Algorithmus Gültigkeit allenfalls in einem sehr begrenzten Bereich haben kann, ist die Abweichung des Raumtemperaturwertes von dem am Thermostatventil des Raumheizkörpers eingestellten Raumtemperatur-Sollwert ihrerseits eine ebenfalls variable Größe, so daß es nicht möglich ist, die Regelung der Mischerstellung und damit der Vorlauftemperatur mit Hilfe der Differenz von Vorlauf- und Rücklauftemperatur vorzunehmen. Daher sieht dieser bekannte Vorschlag vor, eine nach der Differenz von Vorlauf- und Raum-Ist-Temperatur normierte Temperaturdifferenz einzuführen, die dann nur noch dem Produkt aus der genannten Konstanten und der Differenz der Raum-Soll-Temperatur und der Raum-Ist-Temperatur, also der Abweichung der gemessenen Raumtemperatur von der Solltemperatur, entspricht. Daraus ergibt sich - naturgemäß immer nur unter Hinnahme der zugrundeliegenden vereinfachenden Annahmen und in dem resultierenden engen Geltungsbereich - eine eine Proportionalität zwischen der Vorlauftemperatur und der Rücklauftemperatur wiedergebende geradlinige Verknüpfung dieser beiden Temperaturen. Damit will dieser bekannte Vorschlag die Vorlauftemperatur und damit die Menge der zugeführten Wärmeenergie bzw. die Wärmeleistung steuern.

Abgesehen davon, daß die diese Beziehung bestimmenden Konstanten frei zu wählen sind, ohne daß es hierfür logische Bezugspunkte gäbe, wodurch auch die diesen Steueralgorithmus bestimmende Kurvensteilheit ohne jeden Anspruch auf auch nur annähernde Übereinstimmung mit den in der Wirklichkeit des Betriebes einer Heizungsanlage auftretenden Verhältnissen willkürlich gewählt werden muß, kann eine über diesen Algorithmus gesteuerte Heizungsanlage weder anfahren noch in einem Betriebszustand, in dem die zugeführte Wärmeenergie ungefähr dem von der Anlage geforderten Verbrauch entspricht, ausreichend stabil arbeiten. Bereits aus prinzipieller Sicht muß es bei einer solchen Betriebsweise zu Mitkopplungen und damit Regelschwingungen kommen, die nach diesem bekannten Vorschlag durch nicht beschriebene, angeblich geeignete Maßnahmen im Programm des Mikrocomputers unterbunden werden sollen. Selbst wenn dies möglich sein sollte, könnte dies allenfalls für wiederum sehr eng begrenzte Regelbereiche gelten und würde dies mit sich bringen, daß das gesamte Steuerungsverhalten noch weiter von dem je nach Heizungsanlage, Klimazone, Ortslage, Bauphysik und Nutzergewohnheiten unterschiedlichen e-Funktionen folgenden wirklichen Verhalten einer solchen Heizungsanlage abweicht.

Eine andere bekannte, als Regelung bezeichnete Verfahrensweise versucht diesen Nachteilen dadurch zu begegnen, daß bei einer Heizungsanlage, die über einen Kessel oder eine Wärmepumpe mit Wärmeenergie versorgt wird, die Vorlauftemperatur so geändert wird, daß die Differenz zwischen Vorlauf- und Rücklauftemperatur auf einem vorgegebenen Sollwert gehalten wird, wobei dieser Sollwert wiederum als Funktion der Rücklauftemperatur vorgegeben ist und mit steigender Rücklauftemperatur konstant bleiben oder bevorzugt linear zunehmen kann. Die Veränderung der sich im Betrieb einstellenden Differenz von Vorlauf- und Rücklauftemperatur erfolgt dabei über eine Veränderung der Vorlauftemperatur, während die Rücklauftemperatur die Funktion der Führungsgröße übernimmt. Zur entsprechenden Nachführung der Vorlauftemperatur wird bei einer Ausführung dieser bekannten Heizungsanlage mit einem im Ein-Aus-Betrieb arbeitenden Kessel und diesem nachgeschaltetem Drei-Wege-Mischer die Mischerstellung verändert und bei einer anderen Ausführungsform dieser bekannten Heizungsanlage mit gleichfalls diskontinuierlich arbeitendem Kessel ohne nachgeschalteten Mehrwege-Mischer die Zufuhr von Betriebsenergie zum Brenner des Kessels getaktet unterbrochen bzw. wieder aufgenommen. Zur Vermeidung der Anfahrschwierigkeiten der erstbeschriebenen bekannten Heizungsanlage wird unterhalb einer vorgegebenen Rücklauftemperatur, also in einem vorgegebenen Anfahrbereich, mit konstantem Sollwert der Vorlauftemperatur gefahren. Hierfür ist es erforderlich, in der Vorlaufleitung ein von der Differenz von Vorlauf- und Rücklauftemperatur abhängiges Mengenbegrenzungsventil einzuschalten und stromabwärts von diesem Vorlauf- und Rücklaufleitung mit einer Rückmischleitung zu verbinden, in der eine konstante Strömungsdrossel angeordnet ist. Andererseits ist es auch möglich, unterhalb eines vorgegebenen Wertes der Rücklauftemperatur die Differenz zwischen Vorlauf- und Rücklauftemperatur nicht etwa linear zu verkleinern, was - wie vorstehend beschrieben - durch Konstanthaltung der Vorlauftemperatur erfolgt, sondern diesen durch die Differenz von Vorlauf- und Rücklauftemperatur gegebenen Sollwert selbst konstant zu halten. In allen Fällen erfolgt dann für oberhalb des die Beendigung des Aufheizvorganges markierenden Grenzwertes der Rücklauftemperatur liegende Werte derselben eine ansteigende Nachführung des durch die Differenz von Vorlauf- und Rücklauftemperatur gegebenen Sollwertes.

Ersichtlich umgeht diese bekannte Lösung somit das Unvermögen des vorher beschriebenen bekannten Vorschlages, die Heizungsanlage anfahren zu können, und zwar dies dadurch, daß hier bewußt auf eine regelungs- bzw. steuerungstechnische Beeinflussung der Anlage für die Dauer des Anfahrvorganges verzichtet wird, vielmehr für diesen ein willkürlich gewähltes Verhalten vorgegeben wird. Für den Zustand angefahrenen Betriebes der Heizungsanlage weist diese bekannte Lösung jedoch im wesentlichen die gleichen nachteiligen Eigenschaften auf wie der vorher beschriebene bekannte Vorschlag. Auch hier nämlich wird eine lineare Abhängigkeit der Sollgröße von der Rückmeldegröße, nämlich hier der Rücklauftemperatur, willkürlich erzwungen und deren funktionsbestimmende Konstanten, nämlich Sockelbetrag und Steilheit, gleichfalls willkürlich und ohne jede erkennbare logische Bezugnahme auf natürliche Betriebswerte oder Eigenschaften der Heizungsanlage vorgegeben. Die notwendige Folge hiervor ist auch hier ein unerwünschtes Mitkopplungsverhalten mit kaum zu beherrschenden nervösen Schwingungsreaktionen, und zwar dies aus Gründen der Konzeption dieser bekannten Lösung über deren gesamtem Betriebsbereich der Rücklauftemperatur. Die dieser bekannten Konzeption zugrundeliegende Annahme, daß mit steigender Rücklauftemperatur auch stets die Differenz zwischen Vorlauf- und Rücklauftemperatur zunehmen müßte und umgekehrt oder aber auch konstant bleiben könnte, ist allenfalls für stationäre Betrachtung gültig, im tatsächlichen Betriebsverhalten einer Heizungsanlage, das stets dynamisch ist, ist es jedoch der Regelfall, daß diese angenommene Beziehung nicht stimmt, also durchaus bei höheren Rücklauftemperaturen vergleichsweise niedrigere Temperaturdifferenzen zwischen Vorlauf und Rücklauf auftreten können und umgekehrt bei verhältnismäßig tiefen Rücklauftemperaturen sogar sehr hohe Differenzen zwischen Vorlauf- und Rücklauftemperatur zu verzeichnen sein können. Und gerade dies führt zu jenen unerwünschten Mitkopplungen im Betriebsverhalten. Und weiterhin ist ersichtlich diese bekannte Lösung nicht universell einsetzbar. Beispielsweise für Wärmepumpen oder aber für im Ein-Aus-Betrieb arbeitende Kessel mit keiner oder nur geringer Vorlage an Wärmeträgermedium und entsprechend geringer Wärmespeicherkapazität ist diese bekannte Lösung unbrauchbar. Die Ausführungsform dieser bekannten Lösung mit Beeinflussung der Zufuhr der Betriebsenergie zum diskontinuierlich arbeitenden Brenner, die ohne Mehrwege-Mischer auskommen soll, ist grundsätzlich auf eine gewisse Mindest-Wärmespeicherkapazität angewiesen und kann auch bei deren Vorhandensein nur höchst unbefriedigend arbeiten. Wird nämlich beispielsweise aufgrund eines erhöhten Wärmebedarfs die Vielzahl der Heizkörper für Durchströmen einer größeren Menge an Wärmeträgermedium geöffnet, so resultiert hieraus eine steigende Rücklauftemperatur und damit ein geringer werdender Meßwert der Temperaturdifferenz zwischen Vorlauf und Rücklauf. Nach der Konzeption dieser bekannten Lösung bedeutet dies eine Anforderung von mehr Wärmeenergie vom Kessel her. Dieser jedoch muß auf seinen Speicher arbeiten und kann die erforderliche Wärmeenergie (Wärmeleistung) erst abgeben, wenn sein Speicher ausreichend aufgeladen ist. Nicht selten aber ist zu verzeichnen, daß die Parameter des Heizungssystems sich während dieser Aufladezeit so verändert haben, daß nunmehr der frühere Bedarf nicht mehr benötigt bzw. der Speicher jetzt seine aufgeladene Wärmeenergie nicht mehr los wird. Dies führt außer zu einem ungünstigen Regelverhalten zu nicht unbeträchtlichen Energieverlusten mit entsprechender Unwirtschaftlichkeit des Betriebes einer solchen bekannten Heizungsanlage.

Weiterhin ist für ein Heizungssystem bekannter mit Bestimmung der Differenz von Vorlauf- und Rücklauftemperatur des Wärmeträgermediums arbeitender Art mit einem Kessel als Wärmeerzeuger mit einem im Ein-Aus-Betrieb arbeitenden Brenner mit über einen Mikrorechner gesteuerter Zufuhr seiner Betriebsenergie, bei der zudem auch noch die Vorlaufleitung und die Rücklaufleitung über eine mit einem eingebauten Überströmventil als Begrenzer für den im Vorlauf fließenden Massenstrom versehene Überströmleitung in Verbindung stehen, vorgeschlagen worden, über einen verhältnismäßig komplizierten Rechenalgorithmus, der demgemäß auch eine einigermaßen aufwendige Implementierung im Mikrorechner bedingt, aus der Differenz von Vorlauf- und Rücklauftemperatur des Wärmeträgermediums, die im übrigen wahlweise noch mit einem Verstärkungsfaktor multipliziert werden kann, um eine Tages- und eine Nachtsteuerung realisieren zu können, durch Addition eines die durch den Kessel bedingte minimale Vorlauftemperatur repräsentierenden Wertes einen Sollwert für die Vorlauftemperatur zu bilden und diesen mit dem gemessenen Istwert desselben zu vergleichen und bei Feststellung einer Abweichung beider den Istwert durch Ein- und Ausschalten des Brenners nachzuregeln, wobei davon ausgegangen wird, daß der die Nachtsteuerung des Brenners gegenüber dessen Tagessteuerung bestimmende Verstärkungsfaktor, mit dem die Differenz von Vorlauf- und Rücklauftemperatur multipliziert wird, eine gebäudespezifische Stellgröße ist. Obgleich sich auch bei dieser bekannten Lösung eine lineare Abhängigkeit der Vorlauftemperatur von der Rücklauftemperatur ebenso wie der Differenz von Vorlauf-und Rücklauftemperatur von der Rücklauftemperatur mit allen bereits im Zusammenhang mit den anderen bekannten Lösungen beschriebenen nachteiligen Folgen ergibt, ist die Wirkung dieser bekannten Lösung eine andere als bei der letztbeschriebenen. Hier nämlich erzwingt das zwischen Vorlauf- und Rücklaufleitung eingeschaltete Überströmventil einen praktisch konstanten Massenstrom im Heizkörperkreislauf, indem immer dann, wenn mindestens eines der thermostatischen Heizkörperventile aufgrund einer Änderung des Wärmebedarfs im jeweils zugeordneten Raum drosselt, ein der damit erzwungenen Verringerung des Massenstroms des Wärmeträgermediums entsprechender Anteil zwangsweise über das Überströmventil unmittelbar in den zum Rücklauf gehörigen Kesseleinlauf zurückgespeist wird. Dies aber bedeutet hier, daß in solchen Fällen zu großen Wärmeangebotes an die Heizkörper die Rücklauftemperatur nicht etwa fallen würde, wie bei der vorher beschriebenen bekannten Lösung, sondern hier aufgrund der Zuspeisung von Vorlaufanteil über das Überströmventil steigt. Die Folge davon ist, daß hier die Vorlauftemperatur für steigende Rücklauftemperatur und nicht für fallende Rücklauftemperatur zurückgenommen werden muß. Zwar versucht diese bekannte Lösung somit von den sich daraus, daß der Massenstrom im Heizkörperkreis praktisch nicht zu beherrschen ist, bei den vorher beschriebenen bekannten Lösungen ergebenden nachteiligen Folgen dadurch loszukommen, daß zwangsweise dieser Massenstrom konstant gehalten wird, jedoch erkauft diese bekannte Lösung dies durch eine gefährliche Rekursion ihres zugrundeliegenden Rechenalgorithmus. Dieser nämlich sieht vor, daß aus den Meßwerten von Vorlauftemperatur und Rücklauftemperatur ein Sollwert für die Vorlauftemperatur gebildet und anschließend mit diesem Sollwert der sich tatsächlich einstellende Istwert der Vorlauftemperatur verglichen wird. Liegt eine Abweichung vor, so ist der Istwert der Vorlauftemperatur an deren Sollwert durch Ein- und Ausschalten des Brenners anzugleichen. Dadurch aber generiert sich aus dem zugrundeliegenden Algorithmus notwendigerweise ein neuer Sollwert für die Vorlauftemperatur. Mit anderen Worten heißt dies, daß jede Regeländerung automatisch einen neuen Sollwert der Vorlauftemperatur nach sich zieht. Dies aber führt notwendigerweise zu Instabilitäten der gesamten Regelung. Diesem systemimmanenten Nachteil kann auch nicht der weitere Vorschlag dieser bekannten Lösung Abhilfe schaffen, die Differenzbildung aus Vorlauf- und Rücklauftemperatur in der Umlaufzeit des Wärmeträgermediums entsprechenden periodischen Zeitabständen und nicht sogleich vorzunehmen. Diese bekannte Lösung erreicht somit trotz ihres durch das Überströmventil und dessen Montage bedingten Mehraufwandes weder das ihr gesetzte Ziel noch einen brauchbaren Vorteil gegenüber den anderen bekannten Lösungen.

Allen diesen bekannten mit Bestimmung der Differenz von Vorlauf- und Rücklauftemperatur des Wärmeträgermediums arbeitenden Lösungen ist weiterhin gemeinsam, daß sie im Prinzip keine echten Regelungen darstellen, denn sie benutzen zur Bildung ihrer jeweiligen Sollwerte stets die Rückmeldegröße, indem entsprechend dem jeweiligen zur Verwendung kommenden Rechenalgorithmus diese Rückmeldegröße für die Bildung des Sollwertes bestimmend wird. Das aber bedeutet nichts anderes, als daß der Sollwert stets abhängig ist von der Rückmeldegröße und damit seine Generierung eine Funktion des Istzustandes des Heizungssystems wird, mit anderen Worten also der Sollwert stets in dem Sinne nachgezogen wird, daß er dem jeweiligen Istwert nachläuft. Eine Regelung aber ist dadurch bestimmt, daß für sie definiert ist, was Istwert und was Sollwert ist, mithin der Sollwert stets vom Istwert unterscheidbar und unabhängig zu sein hat, weil sich nur auf diese Weise eine Abweichung des Istwertes vom Sollwert auf Eliminierung derselben regeln läßt.

In diesem Sinne aber stellen diese bekannten Lösungen nicht Regelungen, sondern Steuerungen dar, wobei sie als Rückmeldegrößen keine wie auch immer gearteten unabhängigen Informationen des Heizungssystems benutzen, sondern Größen, die eigentlich keine echten Informationen über den Wärmebedarf des zu beheizenden Gebäudes zu tragen geeignet sind, denen jedoch pseudo-empirische Zusammenhänge aufgepfropft werden, die ihrerseits zudem auch noch - wie vorstehend bereits dargelegt - allenfalls Annäherungen an das tatsächliche Funktionsverhalten der miteinander gemäß der jeweiligen angenommenen algorithmischen Verknüpfung mit allen entsprechenden durch Näherungsannahmen bedingten Fehlern sind. Diese somit nur Steuerungen darstellenden bekannten Lösungen erweisen sich somit in mancherlei Hinsicht den bekannten außentemperatur- bzw. witterungsgeführten Steuerungen sogar noch unterlegen. Letztere arbeiten zwar bekanntlich nicht gerade besonders wirtschaftlich, sie unterliegen jedoch nicht - wie die beschriebenen bekannten Lösungen ohne Führung über die Außentemperatur - dem gefürchteten und praktisch nicht zu vermeidenden Mitkopplungsverhalten, das die erforderliche Stabilität einer Regelung ausschließt. Wenn nämlich beispielsweise aufgrund zusätzlicher Wärmelieferung durch einen oder mehrere der beschriebenen außentemperatur- bzw. witterungsunabhängigen Fremdeinflüsse bei den bekannten Lösungen ohne Außentemperaturführung der Istwert der Führungsgröße, wie beispielsweise der Vorlauftemperatur oder der Differenz von Vorlauf- und Rücklauftemperatur, steigt, so wird automatisch auch der Sollwert für die betreffende Größe angehoben, was aufgrund der zugrundegelegten Funktionsverknüpfung von Sollwert und Rückmeldegröße wiederum zu einer solchen Veränderung der Rückmeldegröße führt, die ihrerseits eine weitere Veränderung des Sollwertes in der gleichen Richtung veranlaßt. Dies aber wäre ein Mitkopplungsverhalten gegen unendlich, das ein Ausbrechen der Regelung zur Folge hätte. Im umgekehrten Falle, beispielsweise eines zusätzlichen Wärmebedarfs etwa durch plötzlich geöffnete Fenster oder aber eines starken Kälteeinbruchs oder dergleichen, würde die Rückmeldegröße eine Verringerung der Wärmezufuhr fordern und aufgrund ihrer funktionalen Verknüpfung mit dem Sollwert diesen senken, um als Folge hiervon ihrerseits sich zu verringern und dadurch eine Nachführung des Sollwertes in Abhängigkeit von ihrer eigenen Änderung und im gleichen Sinne wie dieselbe zu erzwingen. Die Folge hiervor wäre, daß bei diesen bekannten Lösungen ohne Außentemperaturführung das gesamte Heizsystem unvermeidbar in einen Betriebszustand mit ständig ausgeschaltetem Wärmeerzeuger fährt und keine Möglichkeit mehr hat, selbst eine Wiederaufnahme oder Erhöhung der Wärmezufuhr zu sich selbst zu veranlassen.

Und schließlich ist allen diesen bekannten Lösungen auch noch gemeinsam, daß sie jeweils nicht für alle Arten von Heizungsanlagen, wie gleichzeitig für solche mit kontinuierlich befeuertem Wärmeerzeuger oder diskontinuierlich befeuertem bzw. betriebenem Wärmeerzeuger mit oder ohne Speicher und/oder mit oder ohne nachgeschaltetem Mehrwege-Mischer, und schon gar nicht für Kühlanlagen geeignet sind.

Der Vollständigkeit halber sei auch noch erwähnt, daß diese bekannten Lösungen zwar jeweils eine Möglichkeit angeben, von einem Tagesbetrieb auf einen Nachtbetrieb umzuschalten, sie sind jedoch sämtlich nicht dafür geeignet, stark unterschiedliche Wärmeanforderungen in einzelnen Räumen zu erfüllen, wie beispielsweise in einem bestimmten Raum über den bzw. die diesem zugeordneten Heizkörper eine besonders hohe Temperatur im Sinne eines Komfortbetriebes aufrechtzuerhalten, während andere Räume auf vergleichsweise sehr niedriger Temperatur zu halten sind. Zwar haben die automatischen Drosseleinrichtungen der den einzelnen Räumen zugeordneten Heizkörper jeweils eigene Sollwertgeber für die jeweilige Raumtemperatur, jedoch können erfahrungsgemäß Heizungsanlagen gemäß diesen bekannten Lösungen nicht einen Heizbetrieb optimal fahren, bei dem in einem Raum oder einer Vielzahl von Räumen eine sehr hohe Temperatur und in einem anderen Raum oder einer Vielzahl solcher anderer Räume davon wesentlich unterschiedliche niedrigere Temperaturen aufrecht erhalten werden sollen, da bei diesen bekannten Steuerungen, auch wenn sie als Regelungen bezeichnet werden, das gesamte System nur für einen Betriebszustand ausgelegt werden kann. In einem solchen Falle von Auslegung für beispielsweise einen normaler Wärmeanforderung entsprechenden Betrieb, der stets eine Begrenzung der in einem beliebigen zu beheizenden Raum maximal erzielbaren bzw. aufrechterhaltbaren Raumtemperatur zur Folge hat, kann zwar in einem gewissen Rahmen, der durch die Stellspanne der einzelnen Sollwertgeber für die Raumtemperatur vorgegeben ist, die Raumtemperatur in den einzelnen Räumen unterschiedlich gehalten werden, jedoch ist es in solchen Fällen nicht möglich, einen Raum oder mehrere Räume auf sehr hoher Temperatur zu halten (Komfortbetrieb für diesen Raum bzw. diese Räume), wie das beispielsweise im Wohnbereich für Zimmer mit kranken oder rekonvaleszenten Benutzern oder im industriellen Bereich für spezielle Zuchträume mit Brutfunktion der Fall sein kann. Eine Auslegung für solchen Komfortbetrieb ist bei diesen bekannten Lösungen vom Prinzip her nicht möglich. Dadurch aber ist auch jede Möglichkeit für eine im Interesse einer weitestgehenden Universalität der Anpassungsmöglichkeiten an anlagen- und/oder bauspezifische sowie klimazonen- und/oder ortslagenbedingte und besonders auch benutzerspezifische Parameter an sich wünschenswerte Umschaltung von einer Betriebsart, die zwar höhere Wärmeverluste in Kauf nimmt, dabei aber in einem Raum oder mehreren oder allen Räumen die Aufrechterhaltung einer wesentlich höheren Temperatur ermöglicht, auf einen beispielsweise als Nachtabsenkungs- oder Frostschutzbetrieb zu bezeichnenden Betrieb, der in Zeiten geringen Wärmebedarfs in den betreffenden Räumen minimale Wärmeverluste garantiert, mit oder ohne eine oder mehrere zwischengeschaltete Betriebsstufe(n) bei diesen bekannten Lösungen ausgeschlossen.

Der Erfindung liegt somit die Aufgabe zugrunde, mit einfachen und kostengünstigen Mitteln unter Vermeidung der Nachteile der für Heizen bekannten Lösungen eine bedarfsweise sowohl für Heizen als auch für Kühlen unabhängig von der Art des Wärme- bzw. Kälteerzeugers mit kontinuierlichem oder diskontinuierlichem Betrieb und unabhängig davon, ob die Wärme- bzw. Kälteleistung dem im Heizungs- bzw. Kühlmittelvorlauf befindlichen Wärmeträgermedium kontinuierlich oder diskontinuierlich zugeführt wird, gleichermaßen einsetzbare Möglichkeit zu schaffen, die Raumtemperaturen einer Vielzahl von zu beheizenden bzw. zu kühlenden Räumen individuell jeweils auf einem gewünschten Wert zu halten, und zwar dies in dem Sinne optimal, daß Vorteile nicht nur hinsichtlich der Universalität der Einsetzbarkeit für Einrohr- oder Zweirohrheizungen bzw. -kühlungen mit oder ohne kontinuierlich oder diskontinuierlich arbeitendem Mehrwege-Mischer, sondern auch ökonomischer Art in bezug auf insbesondere Vereinfachung von Produktion, Lagerhaltung, Distribution, niedrigen Gestehungspreis, Vereinfachung der Montage, Erweiterung des technischen Einsatzfeldes und Nachrüstbarkeit und schließlich auch technischer Art erzielbar sind, indem bereits bei der Ersterstellung einer Heizungs- oder Kühlanlage nach der Erfindung Planung und Einsatz der Regeleinrichtung derart möglich sein soll, daß erstmalig schon in diesem Stadium auf eine etwa beabsichtigte Erweiterung oder aus irgendwelchen Gründen vorgesehene zukünftige Umrüstungen, wie beispielsweise nachträglichen Einbau einer Wärmepumpe oder Kältemaschine zusätzlich zu einem ursprünglich vorgesehenen Wärme- bzw. Kälteerzeuger anderer Art, Rücksicht genommen werden kann, oder aber die Nachrüstung einer Klimaanlage zusätzlich zu einer vorhandenen Heizungsanlage oder umgekehrt einer Heizungsanlage zusätzlich zu einer vorhandenen Kühlanlage oder aber auch die Nutzung einer für Winterbetrieb vorhandenen Heizungsanlage als im Sommerbetrieb arbeitende Kühlanlage ermöglicht wird, wobei in allen Fällen mit erheblichen arbeits- und schmutzmäßigen Belastungen verbundene Umrüstungsarbeiten bezüglich Kabelverlegungen etc. weitestgehend vermeidbar sein sollen. Dabei soll gleichzeitig die Möglichkeit gegeben sein, jederzeit wunschgemäß von einer Betriebsart, die die Aufrechterhaltung einer bei Heizung sehr hohen bzw. bei Kühlung sehr tiefen Temperatur in einem Raum oder mehreren oder allen an das Heizungs-bzw. Kühlungssystem angeschlossenen Räumen gewährleistet, mit oder ohne Zwischenschaltung eines Betriebszustandes oder mehrerer Betriebszustände mit bei Heizung geringerer bzw. bei Kühlung höherer erreichbarer Raumtemperatur, jedoch auch geringeren Wärmeverlusten durch Wärme- bzw. Kälteableitung und/oder -abstrahlung auf eine Betriebsart umschalten zu können, bei der aufgrund bei Heizung sehr niedriger bzw. bei Kühlung sehr hoher benötigter Raumtemperaturen die Wärmeverluste minimal gehalten werden können.

Zusammenfassend läßt sich die übergeordnete Aufgabe auch so formulieren, daß mit minimalem Aufwand eine echte Regelung geschaffen werden soll, die nicht auf äußere Größen angewiesen ist, dennoch aber alle Fremdeinflüsse aus sich heraus bereits berücksichtigt und hierfür eine von allen inneren Systemgrößen des Heiz- bzw. Kühlkreislaufes des Wärmeträgermediums unabhängige Größe als Führungsgröße für die Regelung benutzt.

Dies wird durch die Erfindung in überraschend einfacher und wirtschaftlicher Weise dadurch erreicht, daß gemäß dem auf ein Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und das von den Thermostatventilen beeinflußte Produkt aus Massenstrom und Temperaturdifferenz ermittelt und entsprechend die Wärme- oder Kältequelle gesteuert wird, gerichteten ersten übergeordneten Erfindungsgedanken, wobei für die Schwankungen der Amplitude des Produktes aus Massenstrom und Temperaturdifferenz (Schwankung der Verbraucherleistung) ein Sollwert-Band angelegt ist, innerhalb dessen die zulässigen Werte der Schwankung der Verbraucherleistung liegen, und daß in den Bereichen außerhalb des Sollwert-Bandes der jeweilige Ist-Wert zum Soll-Wert hin geregelt wird.

Die Eliminierung der Differenz des Ist-Wertes zum Sollwert-Band kann dabei je nach Anwendungsfall stetig kontinuierlich, oder quasi kontinuierlich, oder diskontinuierlich (z. B. durch Ein- und Ausschalten) erfolgen.

Ersichtlich wird durch die Erfindung erstmalig eine Möglichkeit geschaffen, ein Heizungsverfahren so führen zu können, daß eine echte Regelung mit einem von einer Rückmeldegröße unabhängigen Sollwert vorliegt, wobei nach der Konzeption der Erfindung die Funktion des Sollwertes nicht etwa durch einen konstanten oder gar in irgend einer Form gemäß einer irgendwie gearteten Abhängigkeit nachgeführten Wert einer der für das Heizungsverfahren bestimmenden physikalischen Größen, sondern in Form eines Sollwert-Bandes vorgegeben wird, und zwar dies spezifisch in Form eines durch eine obere Grenze und eine untere Grenze der Schwankungsbreite der Verbraucherleistung bestimmten Sollwert-Bandes. Zudem bietet die Konzeption dem Erfindung erstmalig die Möglichkeit, mit den gleichen Verfahrensschritten und gleichen Mitteln eine solche echte Regelung in praktisch voller Universalität ungeachtet der Art der Ausbildung der Heizungsanlage insbesondere hinsichtlich der Art der Erzeugung bzw.

Einbringung der erforderlichen Wärmeleistung zu verwirklichen, wobei es grundsätzlich gleichgültig ist, ob beispielsweise der Wärmeerzeuger als für kontinuierlichen oder aber für Ein-Aus-Betrieb ausgelegter Kessel mit oder ohne nachgeschaltete-(r) Mehrwege-Mischeinrichtung oder aber als entsprechend konzipierte Wärmepumpe ausgebildet ist. Dabei ist besonders hervorzuheben, daß die Erfindung sich nicht nur erstmalig gleichermaßen auch für Kühlanlagen eignet, sondern bei diesen geradezu gegenüber Heizungsanlagen noch gesteigerte Vorteile erbringt.

Bereits die Beseitigung der eingangs beschriebenen Nachteile bekannter Lösungen für den Betrieb von Heizungsanlagen durch die Erfindung stellt eine wesentliche Weiterentwicklung der Technik auf dem Gebiet des Heizens dar, es gelten jedoch sämtliche für eine Heizungsanlage gattungsgemäßer Art dargelegten Gesichtspunkte in noch schwerwiegenderem Maße für Kühlen. Dies hat seinen prinzipiellen Grund darin, daß , wie schon früher dargelegt wurde, die rationelle Energieverwendung durch eine optimale und energiesparende Regelung bei Kühlanlagen noch mehr Kosteneinsparungen erbringt als bei Heizungsanlagen, weil die Erzeugung von Kälteleistung grundsätzlich sehr viel kostspieliger ist als die von Wärmeleistung.

Ein weiterer Vorteil der Erfindung ist darin zu sehen, daß für das Regelungsverfahren ein wie auch immer gearteter Rechenalgorithmus nicht erforderlich ist, vielmehr die Erfindung mit der höchst einfachen Anweisung auskommt, daß immer dann, wenn die Führungsgröße in Form der Schwankungsbreite der Verbraucherleistung die eine Grenze des erfindungsgemäßen Sollwert-Bandes überschreitet, ein bestimmter Einfluß auf die Stellgröße in Form einer Veränderung der Zuführung von Wärme- bzw. Kälteenergie zum Heizungs- bzw. Kühlmittelvorlauf genommen wird, während bei Ausscheren dieser Führungsgröße über die andere Grenze ihres Sollwert-Bandes hinweg die gleiche Stellgröße eben in der anderen Richtung beeinflusst wird. Während also alle bekannten Lösungen statisch deterministisch arbeiten, das heißt in diesem Sinn mit formal beschreibendem Algorithmus und - wie schon ausgeführt - unzulänglich linearen Beziehungen, die dynamisch keinerlei Gültigkeit haben und entsprechend mit der Überwindung von systemimmanenten Schwierigkeiten zu kämpfen haben, geht die Erfindung von einem ganz anderen Ansatz, der viel eher als ein dynamisch stochastischer zu bezeichnen ist, aus und überwindet gerade wegen seines innewohnenden dynamischen Prinzips, das für alle Zeiten gültig ist und niemals zu irgendeiner Instabilität neigen kann, alle vorgenannten Schwierigkeiten und heimst dabei aufgabengemäß den Vorteil ein, ohne Messungen von anlagen- bzw. gebäudespezifischen und/oder nutzerbezogenen physikalischen Größen und auch ohne Zuhilfenahme notwendigerweise mehr oder weniger gequälter Rechenalgorithmen jegliche wie auch immer gearteten Außen- und/oder Inneneinflüsse auf den tatsächlichen Wärmebedarf automatisch mitzuberücksichtigen und dadurch einen optimal wirtschaftlichen Betrieb gewährleisten zu können.

Der Erfindung liegt darüber hinaus erstmalig im Gegensatz zu Lösungen nach dem Stande der Technik die Erkenntnis zugrunde, daß als Maß bzw. Führungsgröße für die dem jeweiligen Heizungs- bzw. Kühlmittelvorlauf zuzuspeisende Wärme- bzw. Kälteleistung nicht irgendwelche physikalischen Größen, wie z. B. Vor- und/oder Rücklauftemperaturen bzw. deren Differenz etc., herangezogen werden müssen, um diese direkt oder mittelbar als Führungsgröße der Regelung einzusetzen, sondern daß es durchaus möglich ist, die jeweils gemessene Verbraucherleistung selbst mittelbar und/oder unmittelbar als Führungsgröße für die dem Heizungs- bzw. Kühlmittelvorlauf zuzuspeisende Wärme- bzw. Kälteleistung, mithin zur Regelung, zu nutzen. Dabei stellt sich das erfindungsgemäße Konzept so dar, daß diese von der Erkenntnis ausgeht, daß die dem Heizungs- bzw. Kühlmittelvorlauf zuzuspeisende Wärme- bzw. Kälteleistung mindestens so groß sein muß, daß sie der Differenz zwischen der in den Heizungs- bzw. Kühlmittelvorlauf eingespeisten und der dem Wärme- bzw. Kälteerzeuger über den Rücklauf rückgespeisten Wärme- bzw. Kälteleistung oder der durch die die einzelnen Heizkörper bzw. Kühleinrichtungen durchströmenden Einzelmassenströme des Wärmeträgermediums zusammenfassende Rücklaufleitung rückgespeisten Wärme- bzw. Kälteleistung, die hier stets als Verbraucherleistung bezeichnet wird, entspricht und diese gerade deckt. Der entscheidende und viel wichtigere Gedankenschritt ist aber die Umkehrung dieses Schrittes und die Frage, was passiert, wenn dem nicht so ist, also die Verbraucherleistung größer/kleiner als die zugeführte Leistung ist.

Dieser Gedankenschritt führt zu einer weiteren fundamentalen Erkenntnis mit ganz bedeutenden Vorteilen, nämlich dazu, daß man unabhängig von allen möglichen Werten von Verbraucherleistungen als optimale Führungsgröße für diese selbst die Schwankung dieser Verbraucherleistung benutzen kann und damit unabhängig wird von dieser selbst. Diese wird nämlich nicht etwa auf Verschwinden ausgeregelt, sondern innerhalb eines vorgegebenen Sollwert-Bandes für die Schwankung dieser Verbraucherleistung entsprechend dem physikalischen Verhalten der Heizungs- bzw. Kühlanlage gehalten, wobei nur Überschreitungen der oberen und/oder Unterschreitungen der unteren Grenze dieses Sollwert-Bandes nicht hingenommen, sondern als Unregelmäßigkeiten des Betriebes der Heizungs- bzw. Kühlanlage ausgeregelt werden, während entsprechend dem Konzept der Erfindung alle anderen Schwankungen als regulär akzeptiert werden.

Nicht ohne Grund herrscht in der Fachwelt das technische Vorurteil, daß grundsätzlich eine Regelung mit der Verbraucherleistung als Führungsgröße unmittelbar nicht möglich ist, weil nämlich sich auch die Stellgröße, welche ja je nach Ausgestaltung des Heizungs- bzw. Kühlsystems mit Beeinflussung der seinem Heizungs- bzw. Kühlmittelvorlauf zugeführten Wärme- bzw. Kälteleistung über einen Brenner, einen zuflußgeregelten Wärmetauscher etwa einer Fernwärme-Übergabestation oder aber über eine Mehrwege-Mischeinrichtung oder dergleichen, gleichfalls eine Wärme- bzw. Kälteleistungsgröße ist, sich im gleichen "physikalischen Sprachsystem" befindet und daher jede Änderung der beispielsweise Brennerleistung oder Stellung des das Verhältnis von vom Wärme- bzw. Kälteerzeuger her zugespeisten Massenstroms zum Gesamtmassenstrom bestimmenden Organs der Mehrwege-Mischeinrichtung unmittelbar auch eine Änderung der Rückmeldegröße in Form einer Wärme- bzw. Kälteleistung bedeutet. Eine Regelung wird unter diesen Umständen von sich im gleichen "physikalischen Sprachsystem", nämlich in Wärme- bzw Kälteleistungswerten ausdrückenden Informationen bezüglich Führungsgröße bzw. Rückmeldegröße einerseits und Stellgröße andererseits für nicht möglich gehalten. Hier geht die Erfindung einen wesentlichen Schritt voran, indem sie nämlich sehr wohl sich die Vorteile ein und desselben physikalischen Sprachsystems nutzbar machen will, dafür aber, um den beschriebenen dessen Nutzung ausschließenden Nachteil auszuschalten, sich bewußt und gezielt eine Informationsquelle in Form nicht etwa einer Wärme- bzw. Kälteleistungsgröße selbst, sondern in Form einer Schwankung derselben schafft, die nun ihrerseits im Zusammenwirken mit der weiterhin in üblicher Weise eine Leistungsgröße unmittelbar bleibenden Stellgröße in Form beispielsweise der Brennerleistung bzw. der Stellung des Stellorgans der Mehrwege-Mischeinrichtung als Rückmeldegröße mit entsprechender Aussagefähigkeit für das Verbrauchsverhalten der Heizungs- bzw. Kühlanlage verwendbar ist. Überraschend hat sich nämlich herausgestellt, daß durch die erfindungsgemäße Wahl der Schwankung der Verbraucherleistung sich eine Selektionsmöglichkeit für die aufgrund beispielsweise äußerer Einflußgrößen oder dergleichen erforderlichen Regelungsmaßnahmen in dem Sinne ergibt, daß bei Vorhandensein einer im Vergleich zu einer willkürlich gesetzten Größe zu geringen Schwankung der Verbraucherleistung die Stellgröße in dem Sinne verändert werden muß, daß mehr Wärme- bzw. Kälteleistung in den Heizungs- bzw. Kühlmittelvorlauf eingespeist wird, und bei Auftreten einer zu großen Schwankung der Verbraucherleistung eben diese Wärme- bzw. Kälteleistungszufuhr gedrosselt oder gar ganz beendet werden muß. Dabei ist entscheidend, daß das erfindungsgemäße Verfahren gezieltermaßen unabhängig ist von der der Führungsgröße für die Regelung zugrundeliegenden physikalischen Größe, nämlich von der Verbraucherleistung selbst, indem nämlich nach der Erfindung diese nicht unmittelbar, sondern das Maß von deren Schwankung als Führungsgröße für die Regelung benutzt wird.

Dies erbringt den gegenüber dem Stand der Technik äußerst gravierenden weiteren Vorteil, daß nicht etwa ein zweckmäßig gewähltes Maß bzw. Niveau der als Führungsgröße für die Regelung benutzten, die Verbraucherleistung abbildenden, weil für diese zumindest mitbestimmenden physikalischen Größe gewählt werden muß, sondern man mit einer willkürlich beliebig, und zwar gegebenenfalls auch extrem schlecht gewählten Leistung anfahren kann und sich die Regelung aufgrund des erfindungsgemäßen Konzeptes im Verlauf der Betriebszeit erfahrungsgemäß bereits nach unerwartet kurzer Betriebsdauer das zweckmäßigste Maß bzw. Niveau der Führungsgröße als Bezugsgröße wählt bzw. automatisch dort hingeführt wird. Die Erfindung umgeht somit gezielt das bisher gleichfalls in der Fachwelt für unüberwindlich gehaltene Problem der zweckmäßigen Wahl des Maßes bzw. Bezugsniveaus der Führungsgröße, indem sie nämlich die Führungsgröße selbst durch die Art der Auswahl einer als Führungsgröße geeigneten physikalischen Größe von dem Maß und damit auch dem Bezugsniveau als solchem entkoppelt.

Somit kombiniert die Erfindung die sich als Vorteil der Schwankung der physikalischen Größe in Form der Wärme- bzw. Kälteleistung als Führungsgröße ergebende Unabhängigkeit gerade dieser Führungs- bzw. Rückmeldegröße von der zugrundeliegenden physikalischen Größe der Wärme- bzw. Kälteleistung mit der als unsinnig, weil praktisch nicht gangbar erachteten Nutzung des gleichen physikalischen "Sprachsystems" für den gesamten Regelkreis und erhält dadurch überraschend nicht nur die Nutzbarkeit eines mit gleichen physikalischen Größen, nämlich Leistungsgrößen, operierenden Informationssystems zur Regelung entgegen der Meinung der Fachwelt auch noch den wichtigen Vorteil einer echten Plausibilität insoweit, als nämlich der jeweiligen Rückmeldeinformation in Form eines Leistungswertes bei gleichfalls durch einen Leistungswert gegebener Stellgröße des Regelsystems zusätzlich noch eine weitere Information "beigepackt" bzw. zugeordnet ist, nämlich die sich im übrigen gleichfalls als Leistungsgröße darstellende Änderung der Schwankung der grundlegenden physikalischen Größe in Form der Wärme- bzw. Kälteleistung in ihrer Darstellung als als Verbraucherleistung bezeichnete Differenz zwischen in den Heizungs- bzw. Kühlmittelvorlauf eingespeister und über den Rücklauf rückgeführter Wärme- bzw Kälteleistung. Dabei ist von besonderem Vorteil nicht nur bezüglich der verfahrensmäßigen Auslegung der Erfindung, sondern auch bezüglich der Implementierung für diese, daß sich aufgrund der Konzeption der Erfindung diese Situation der Anlieferung der Rückmeldegröße in mit einer Zusatzinformation versehenem Zustand ohne weiteres Zutun aus dem Regelungssystem selbst heraus ergibt.

Der weitere für die Erfindung bedeutsame Schritt der Wahl eines Sollwert-Bandes mit einer oberen und einer unteren Grenze desselben ermöglicht es in vorteilhafter Weise, zusätzlich zu allen bereits beschriebenen Vorteilen das Regelungssystem im informationstechnischen Sinne mit einer Art "Sprache" auszustatten, indem nämlich durch die untere Grenze des Sollwert-Bandes der Schwankungsbreite der Verbraucherleistung zwar willkürlich, jedoch zweckmäßig ein als "Nullnormal" und durch die ebenso willkürlich wählbare obere Grenze des Sollwert-Bandes der Schwankungsbreite der Verbraucherleistung ein als "Einsnormal" zu bezeichnender Informationswert eines binären Informationssystems geschaffen wird, der sich bequem in bekannter Weise durch entsprechende vorzugsweise elektrische Impulse über geeignete Logiken weiterverarbeiten läßt. Das bedeutet entsprechend dem Konzept der Erfindung wiederum, daß damit eine Sprache zwischen dem Wärme- bzw. Kälteerzeuger und dem wie auch immer gearteten Verbraucher vereinbart ist, die es ermöglicht, daß die jeweilige Verbraucherleistung nur noch durch Abfragen von Informationsimpulsen der Form "größer Einsnormal" und/oder "kleiner Nullnormal" zum Generieren der erforderlichen in den Heizungs- bzw. Kühlmittelvorlauf einzuspeisenden Wärme- bzw. Kälteleistung herangezogen zu werden braucht, während in dem Bereich zwischen Einsnormal und Nullnormal, das heißt "kleiner oder gleich Einsnormal" und "größer oder gleich Nullnormal" das Regelungssystem sich selbst überlassen bleibt. Das hat überdies den Vorteil, daß hierdurch ein Höchstmaß an Stabilität bei gleichzeitiger Vermeidung eines häufigen Eingreifens in das Regelsystem erbracht wird. Dies führt zu einer erwünschten Beruhigung der Regelstrecke. Abgesehen davon, daß diese Vorteile für alle Heizungs- bzw. Kühlsysteme mit kontinuierlicher Zuführung der Wärme- bzw. Kälteleistung zum Heizungs- bzw. Kühlmittelvorlauf gelten, ist für im Ein-Aus-Betrieb arbeitende Heizungs- bzw. Kühlsysteme eine Zwei-Punkt-Regelung zwar systembedingt unerläßlich, bildet jedoch eine solcherart erfindungsgemäß gestaltete binäre Logik gleichzeitig eine ideale Zwei-Punkt-Regelung mit höchst einfacher Implementierung und praktisch allen für im kontinuierlichen Betrieb arbeitende Regelungen beschriebenen Vorteilen auch hier. Dabei ist die Anwendung des Konzeptes nach der Erfindung auf diskontinuierlich arbeitende Regelungssysteme deswegen so ideal, weil im Gegensatz zur herkömmlichen Regelung für im Ein-Aus-Betrieb arbeitende Heizungs- bzw. Kühlanlagen nicht mehr das Maß bzw. der größenmäßige Wert der jeweiligen physikalischen Größe abgefragt zu werden braucht, sondern lediglich noch die Tatsache, ob ein Signal als "Nullnormal" oder "Einsnormal" definierter Art überhaupt ansteht.

Ein weiterer Vorteil der erfindungsgemäßen Konzeption unter Nutzung eines Sollwert-Bandes für die Schwankungsbreite der Verbraucherleistung als Führungsgröße für die Regelung ist darin zu sehen, daß hierdurch ein bisher nicht für möglich gehaltener Weg für weitere Energieeinsparungen eröffnet wird. Die Erfindung hat nämlich erkannt, daß sich ein minimaler Energieverlust bei der Durchführung der gattungsgemäßen Regelung immer dann ergibt, wenn nur eine besonders geringe Zahl von Regelungseingriffen erforderlich ist, somit sich die Regelungsstrecke quasi-stationär verhält, das heißt keiner besonderen Dynamik unterliegt. Bezogen auf das aus den vorstehend geschilderten Gründen zwar mit Leistungsgrößen, dabei aber mit der Schwankung der Verbraucherleistung arbeitende Regelungssystem nach der Erfindung ergibt sich eine solche Minimierung von Energieverlusten auch dann, wenn das Maß der Schwankung der Verbraucherleistung sehr klein bis zu praktisch deren Verschwindwert gewählt werden kann.

Würde man nämlich nur mit einem Sollwert der Schwankungsbreite als Führungsgröße arbeiten, dann müßte der Wert derselben eindeutig verifizierbar sein, mit anderen Worten müßte er sich deutlich vom Verschwindwert unterscheiden. Durch die erfindungsgemäße Wahl eines Sollwert-Bandes für die Schwankungsbreite der Verbraucherleistung mit oberer und unterer Grenze desselben kann aber immerhin die untere Grenze ganz in die Nähe des Verschwindwertes gelegt werden, wohingegen nur der obere Grenzwert deutlich von diesem verschieden sein muß. Dies führt dazu, daß das System zumindest im Bereich zwischen oberer und unterer Grenze des Sollwert-Bandes vergleichsweise energieoptimaler betrieben werden kann, weil Regeleingriffe nur und erst dann erfolgen, wenn das System über eine vorbestimmte Zeitdauer eine Schwankungsbreite der Verbraucherleistung aufweist, die unterhalb der unteren Grenze von deren Sollwert-Band liegt. Die hierdurch erzielbaren Energieeinsparungen haben sich als recht beträchtlich erwiesen. Hier ordnet sich auch die zweckmäßige Fortbildung der Erfindung ein, daß eine Abweichung der Schwankung der Verbraucherleistung über die obere Grenze des vorgegebenen Sollwert-Bandes hinaus durch Verringerung der in den Heizungs- bzw. Kühlmittelvorlauf eingespeisten Wärme- bzw. Kälteleistung und eine Abweichung der Schwankung der Verbraucherleistung unter die untere Grenze des vorgegebenen Sollwert-Bandes durch Vergrößerung der in den Heizungs- bzw. Kühlmittelvorlauf eingespeisten Wärme- bzw. Kälteleistung eliminiert wird.

Eine weitere Verbesserung im Sinne der der Erfindung zugrundeliegenden Aufgabe erbringt ein anderer untergeordneter Erfindungsgedanke, gemäß dem eine Abweichung der Schwankung der Verbraucherleistung über die obere Grenze des vorgegebenen Sollwert-Bandes hinaus durch Verringerung der in den Heizungs- bzw. Kühlmittelvorlauf eingespeisten Wärme- bzw. Kälteleistung und/oder eine Abweichung der Schwankung der Verbraucherleistung unter die untere Grenze des vorgegebenen Sollwert-Bandes durch Vergrößerung der in den Heizungs- bzw. Kühlmittelvorlauf eingespeisten Wärme- bzw. Kälteleistung jeweils nur nach Bestehen während einer vorbestimmten Zeitspanne eliminiert wird, wobei diese Zeitspannen vorzugsweise unterschiedlich lang gewählt werden können, dabei mit Vorzug die der Abweichung über die obere Grenze des vorgegebenen Sollwert-Bandes zugeordnete Zeitspanne kürzer als die der Abweichung unter die untere Grenze des vorgegebenen Sollwert-Bandes entsprechende Zeitspanne gewählt werden kann. Hierdurch nämlich werden einerseits die Abweichungssignale der Schwankung der Verbraucherleistung über die obere Grenze und unter die untere Grenze ihres Sollwert-Bandes eindeutig verifiziert und wird andererseits erst dann eingegriffen, wenn eine solche Verifizierung überhaupt vorgenommen werden konnte. Es stellt sich nämlich insbesondere bezüglich der unteren Grenze des Sollwert-Bandes, die - wie vorstehend dargelegt - aus Energieeinsparungsgründen möglichst nahe an den Verschwindwert herangelegt werden sollte, das Problem, zu unterscheiden, ob unter diesen Umständen noch ein Unterschreiten der unteren Grenze des Sollwert-Bandes vorliegt oder aber schon ein völliges Verschwinden der Abweichung. Die erstere Information wäre als für die erfindungsgemäße Regelung bestimmende Information erwünscht, während die letztere Information praktisch keine bzw. allenfalls die Aussagekraft hätte, daß das System bereits unterversorgt ist. Hier wird gemäß diesem untergeordneten Erfindungsgedanken eine Kontrollzeitspanne eingeführt, um diese beiden Möglichkeiten bezüglich einer Abweichung von der unteren Grenze des Sollwert-Bandes voneinander selektieren zu können. Bezüglich einer Abweichung über die obere Grenze des Sollwert-Bandes hinaus ist zwar eine solche Selektierung nicht unbedingt erforderlich, kann sich aber unter gewissen Umständen durchaus als zweckmäßig erweisen.

Die Erfindung kann zweckmäßig durch einen weiteren untergeordneten Erfindungsgedanken vervollkommnet werden, gemäß dem für zumindest die Dauer einer vorgegebenen Zeitspanne eine Mehrzahl von Bestimmungen der Verbraucherleistung vorgenommen und jeweils das Ergebnis der letzten Bestimmung mit dem jeder der vorangegangenen Bestimmungen verglichen und bei Ermittlung eines die obere Grenze des Sollwert-Bandes für die zulässige Größe der Schwankungsbreite der Verbraucherleistung überschreitenden Unterschiedes zweier solcher Ergebnisse diese Abweichung der Schwankung der Verbraucherleistung durch Verringerung der in den Heizungs- bzw. Kühlmittelvorlauf eingespeisten Wärme- bzw. Kälteleistung und/oder bei Ermittlung eines die untere Grenze des Sollwert-Bandes für die zulässige Größe der Schwankungsbreite der Verbraucherleistung unterschreitenden Unterschiedes zweier solcher Ergebnisse und dessen Bestehens während einer vorbestimmten Zeitdauer diese Abweichung der Schwankung der Verbraucherleistung durch Vergrößerung der in den Heizungs- bzw. Kühlmittelvorlauf eingespeisten Wärme- bzw. Kälteleistung eliminiert wird. Der Vorteil dieses Vorgehens besteht darin, daß die Bestimmung der Schwankungsbreite weder den Absolutwert der Verbraucherleistung noch die Richtungsänderung zum Positiven oder Negativen hin benötigt. Die Schwankungsbreite wird lediglich auf ein vorzeichenloses und sich damit positiv auswirkendes Maß zurückgeführt. Ein solches Maß läßt sich in sehr einfacher Weise gegen ein wie auch immer definiertes Nullnormal oder Einsnormal vergleichen, und die Entscheidung, ob das Maß größer als dieses Einsnormal oder kleiner als dieses Nullnormal ist, läßt sich damit auf einfachste elementare Entscheidungslogiken zurückführen. Implementierungstechnisch hat das weiterhin den Vorteil, daß hier lediglich einfachste Entscheidungslogiken erforderlich sind, die es dennoch erlauben, jede wie auch immer sich funktionsmäßig im Laufe der Zeit darstellende Verbraucherleistung völlig unabhängig von ihrer Charakteristik hinsichtlich ihrer Schwankung zu erfassen bzw. zu selektieren.

Gemäß einer zweckmäßigen Weiterbildung dieses untergeordneten Erfindungsgedankens läßt sich höchst einfach eine Schärfung des gesamten Scanning-Verfahrens gemäß diesem untergeordneten Erfindungsgedanken erzielen, wenn die vorgegebene Zeitspanne, in der eine Mehrzahl von Bestimmungen der Verbraucherleistung vorgenommen wird, gleich der für das Bestehen eines Unterschiedes zwischen einem letztermittelten Ergebnis und dem bzw. einem der vorangegangenen Ergebnis(se) der Bestimmung der Verbraucherleistung vorbestimmten Zeitdauer gewählt wird. Überdies wird durch die Wahl der die "Meßwert"-Folge der Verbraucherleistung bestimmenden Zeitspanne mit einem auf die für die Dauer des "Schweigens" gewählte Zeitdauer verkürzten Wert eine weitere nicht unerhebliche Energieeinsparung möglich.

Grundsätzlich wäre es möglich, die erfindungsgemäße Regelung im Wege des Scanning-Verfahrens (Raster-Vergleichsverfahren eines Wertes, beispielsweise eines "Meß"-Wertes der Verbraucherleistung, gegenüber jedem der vorangegangenen gleichartigen "Meß"-Werte) mit Vergleich gegenüber dem allerersten dieser ermittelten Werte der Verbraucherleistung durchzuführen. Es hat sich jedoch gezeigt, daß sich sowohl implementierungstechnisch als auch aus dem Gesichtspunkt weiterer Einsparung von Wärme- bzw. Kälte- bzw. Betriebsenergie bei der Durchführung des Verfahrens nach der Erfindung vorteilhafte Weiterbildungsmöglichkeiten eröffnen, wenn nach einer Eliminierung einer Abweichung der Schwankung der Verbraucherleistung von einer der Grenzen des vorgegebenen Sollwert-Bandes für zumindest die Dauer einer vorgegebenen Zeitspanne die Vornahme einer Mehrzahl von Bestimmungen der Verbraucherleistung und der Vergleich jeweils des Ergebnisses der letzten Bestimmung mit dem jeder der vorangegangenen dieser Mehrzahl von Bestimmungen sowie der Vergleich dieser Unterschiede dieser Ergebnisse mit der oberen und unteren Grenze des Sollwert-Bandes nebst Eliminierung der Abweichung der Schwankung der Verbraucherleistung bei etwaiger Ermittlung eines die obere Grenze ces Sollwert-Bandes überschreitenden oder eines die untere Grenze ces Sollwert-Bandes unterschreitenden Unterschiedes dieser Ergebnisse wiederholt wird. Implementierungstechnisch kann hierfür Zweckmäßig vorgesehen sein, daß die Regeleinrichtung eine über jeweils eine Impulsleitung mit einerseits der Speichereinrichtung und andererseits der Zeitprogrammgabeeinrichtung und/oder der Schwankungsvergleichseinrichtung und/oder der Folgesteuereinrichtung sowie mit dem Stellbefehlgeber verbundene Quittier- und Löscheinrichtung aufweist, mittels derer nach einem Tätigwerden des Stellbefehlgebers zur Eliminierung einer Abweichung der Schwankung der Verbraucherleistung von einer der Grenzen des vorgegebenen Sollwert-Bandes ihrer Schwankungsbreite die Speichereinrichtung im Sinne einer Löschung der in ihr gespeicherten Momentanwerte der Verbraucherleistung mit Ausnahme eines vorbestimmten Wertes derselben als Referenzwertes und für zumindest die Dauer einer vorgegebenen Zeitspanne die Zeitprogrammgabeeinrichtung und/oder die Schwankungsvergleichseinrichtung und/oder die Folgesteuereinrichtung im Sinne der Durchführung einer weiteren Folge von Ermittlungen von Momentanwerten der Verbraucherleistung und daraus der Ermittlung mindestens einer, vorzugsweise einer Folge von Schwankung(en) derselben und bei Auftreten einer die obere Grenze des Sollwert-Bandes der Schwankungsbreite der Verbraucherleistung überschreitenden oder einer die untere Grenze dieses Sollwert-Bandes unterschreitenden Abweichung der Schwankung der Verbraucherleistung der Stellbefehlgeber im Sinne einer Eliminierung dieser Abweichung betätigbar ist.

In weiterer vorteilhafter Fortbildung der Erfindung kann eine Abweichung der Schwankung der Verbraucherleistung über die obere Grenze des vorgegebenen Sollwert-Bandes hinaus durch Vergrößerung der in den Heizungs- bzw. Kühlmittelvorlauf eingespeisten Wärme- bzw. Kälteleistung entsprechend dem Maß dieser Abweichung und eine Abweichung der Schwankung der Verbraucherleistung unter die untere Grenze des vorgegebenen Sollwert-Bandes durch Verringerung der in den Heizungs- bzw. Kühlmittelvorlauf eingespeisten Wärme- bzw. Kälteleistung entsprechend dem Maß dieser Abweichung eliminiert werden. Entsprechend kann die Regeleinrichtung einen einerseits über eine Impulsleitung mit der Schwankungsvergleichseinrichtung und andererseits über eine weitere Impulsleitung mit dem Stellbefehlgeber verbundenen Proportionalregler aufweisen. Es hat sich nämlich überraschend herausgestellt, daß entgegen einem in der Fachwelt bestehenden Vorurteil, daß mit reinem Proportionalregler Heizungsregelungen nicht zweckgerecht zu verwirklichen seien, bei der Erfindung durchaus handelsübliche reine Proportionalregler verwendbar sind, um jedes ungünstige Schwingungsverhalten der Regevorrichtung nach der Erfindung, das bei dieser ohnehin nicht zu erwarten ist, zuverlässig auszuschalten.

Zur Verbesserung der Genauigkeit der Regelung kann in weiterer zweckmäßiger Ausgestaltung der Erfindung das Gesamtmaß der Abweichung der Schwankung der Verbraucherleistung über die obere Grenze des vorgegebenen Sollwert-Bandes hinaus im Verlauf der Zeit ermittelt und eine Abweichung der Schwankung der Verbraucherleistung über die obere Grenze dieses Sollwert-Bandes hinaus durch Verringerung der in den Heizungs- bzw. Kühlmittelvorlauf eingespeisten Wärme- bzw. Kälteleistung entsprechend diesem Maß dieser Abweichung eliminiert und/oder das Gesamtmaß der Abweichung der Schwankung der Verbraucherleistung unter die untere Grenze des vorgegebenen Sollwert-Bandes im Verlauf der Zeit ermittelt und eine Abweichung der Schwankung der Verbraucherleistung unter die untere Grenze dieses Sollwert-Bandes durch Vergrößerung der in den Heizungs- bzw. Kühlmittelvorlauf eingespeisten Wärme- bzw. Kälteleistung entsprechend diesem Gesamtmaß der Abweichung der Schwankung der Verbraucherleistung eliminiert werden. Entsprechend kann die Regeleinrichtung einen über Impulsleitungen mit der Schwankungsvergleichseinrichtung und dem Proportionalregler sowie mit dem Stellbefehlgeber verbundenen Integralregler mit zeitabhängigem Integrierwerk für die Abweichung der Schwankung der Verbraucherleistung über die obere Grenze des Sollwert-Bandes ihrer Schwankungsbreite hinaus und/oder zeitabhängigem Integrierwerk für die Abweichung der Schwankung der Verbraucherleistung unter die untere Grenze des Sollwert-Bandes ihrer Schwankungsbreite aufweisen. Hierdurch werden sämtliche Regelabweichungen der Schwankung der Verbraucherleistung von dem die Führungsgröße bildenden Sollwert-Band, die überhaupt aufgetreten sind, über die Zeit integriert und je nach Größe des Integrals Stellbefehle ausgeführt, was über die Zeit eine besonders genaue Einregulierung in die Sollgröße mit guter Dämpfung bzw. gutem Einschwingverhalten ermöglicht.

Weiterhin sieht eine andere zweckmäßige Fortbildung gemäß einem untergeordneten Erfindungsgedanken zwecks Erzielung nicht unbeträchtlicher Energieeinsparungen vor, daß das Maß der zeitlichen Änderung einer Abweichung der Schwankung der Verbraucherleistung über die obere Grenze des vorgegebenen Sollwert-Bandes hinaus und/oder der zeitlichen Änderung dieses Maßes zeitlicher Änderung der Abweichung der Schwankung der Verbraucherleistung ermittelt und diese Abweichung der Schwankung der Verbraucherleistung durch Verringerung der in den Heizungs- bzw. Kühlmittelvorlauf eingespeisten Wärme- bzw. Kälteleistung entsprechend diesem Maß der zeitlichen Änderung der Abweichung der Schwankung der Verbraucherleistung bzw. diesem Maß zeitlicher Änderung dieses Maßes zeitlicher Änderung der Abweichung der Schwankung der Verbraucherleistung eliminiert und/oder das Maß der zeitlichen Änderung einer Abweichung der Schwankung der Verbraucherleistung unter die untere Grenze des vorgegebenen Sollwert-Bandes und/oder der zeitlichen Änderung dieses Maßes zeitlicher Änderung der Abweichung der Schwankung der Verbraucherleistung ermittelt und diese Abweichung der Schwankung der Verbraucherleistung durch Vergrößerung dar in den den Heizungs- bzw. Kühlmittelvorlauf eingespeisten Wärme- bzw. Kälteleistung entsprechend diesem Maß der zeitlichen Änderung der Abweichung der Schwankung der Verbraucherleistung bzw. diesem Maß der zeitlichen Änderung dieses Maßes zeitlicher Änderung der Abweichung der Schwankung der Verbraucherleistung eliminiert wird. Entsprechend kann zweckmäßig die Regeleinrichtung einen über Impulsleitungen mit der Schwankungsvergleichseinrichtung und dem Proportionalregler und/oder gegebenenfalls dem Integralregler sowie mit dem Stellbefehlgeber verbundenen Differentialregler mit einer Einrichtung zur Bestimmung des Maßes der zeitlichen Änderung der Abweichung der Schwankung der Verbraucherleistung über die obere Grenze des vorgegebenen Sollwert-Bandes ihrer Schwankungsbreite hinaus und/oder einer Einrichtung zur Bestimmung des Maßes der zeitlichen Änderung einer Abweichung der Schwankung der Verbraucherleistung unter die untere Grenze des vorgegebenen Sollwert-Bandes ihrer Schwankungsbreite und/oder einer Einrichtung zur Bestimmung der zeitlichen Änderung des Maßes der zeitlichen Änderung einer Abweichung der Schwankung der Verbraucherleistung über die obere Grenze des Sollwert-Bandes ihrer Schwankungsbreite hinaus und/oder einer Einrichtung zur Bestimmung der zeitlichen Änderung des Maßes der zeitlichen Änderung einer Abweichung der Schwankung der Verbraucherleistung unter die untere Grenze dieses Sollwert-Bandes aufweisen.

Gemäß einem anderen untergeordneten Erfindungsgedanken kann in weiterer zweckmäßiger Fortbildung der mit einem Integral-Anteil arbeitenden Regelung nach der Erfindung das Gesamtmaß der Schwankungsbreite der Verbraucherleistung und das Gesamtmaß der der oberen oder der der unteren Grenze des Sollwert-Bandes entsprechenden Schwankungsbreite der Verbraucherleistung im Verlauf der Zeit ermittelt und als Maß für die Optimierung der Verstärkung und/oder der Nachstellzeit und/oder der Vorhaltzeit der Eliminierung der Abweichung der Verbraucherleistung über die obere bzw. unter die untere Grenze ihres Sollwert-Bandes das Verhältnis dieser beiden Gesamtmaße oder dessen Reziprokwert gewählt werden. Hierfür kann mit Vorzug implementierungstechnisch der Integralregler ein zeitabhängiges Integrierwerk für die Schwankung der Verbraucherleistung und jeweils ein weiteres zeitabhängiges Integrierwerk für die der als Bezugsgröße für die jeweilige Abweichung der Schwankung der Verbraucherleistung dienenden oberen oder unteren Grenze des Sollwert-Bandes ihrer Schwankungsbreite entsprechende Schwankungsbreite und die Regeleinrichtung eine jeweils über Impulsleitungen mit beiden Integrierwerken verbundene Einrichtung zur Bildung des Verhältnisses zeitgleicher Ergebnisse beider Integrierwerke oder dessen Reziprokwertes aufweisen.

Hierdurch läßt sich ungeachtet der beschriebenen Möglichkeiten, entweder das Gesamtmaß der Schwankungsbreite der Verbraucherleistung über der Zeit ins Verhältnis zu dem Gesamtmaß der dieser oberen Grenze des Sollwert-Bandes entsprechenden Schwankungsbreite der Verbraucherleistung im Verlauf der Zeit zu setzen oder durch umgekehrte Verhältnisbildung den Reziprokwert dieses Verhältnisses zu ermitteln, eine etwaige Überversorgung der Heizungs- bzw. Kühlanlage zur Normversorgung feststellen. Somit lassen sich höchst einfach und bequem mit kostengünstigen Implementierungsmitteln Energiebilanzen ziehen, darstellen und sogar unmittelbar oder mittelbar nutzen. Insbesondere lassen sich auch zulässige Energieüber- oder -unterversorgungen vorgeben. Das aber bedeutet eine Möglichkeit für die Optimierung der Regelvorrichtung im Sinne einer Schärfung der Empfindlichkeit derselben.

Eine weitere Feinschärfung in dieser Richtung läßt sich dadurch erreichen, daß das Gesamtmaß der Abweichung der Schwankung der Verbraucherleistung über die obere oder unter die untere Grenze des vorgegebenen Sollwert-Bandes ihrer Schwankungsbreite und das Gesamtmaß der der Differenz von oberer und unterer Grenze des SollwertBandes entsprechenden Schwankungsbreite der Verbraucherleistung im Verlauf der Zeit ermittelt und beide Gesamtmaße miteinander addiert und als Maß für die Optimierung der Verstärkung und/oder der Nachstellzeit und/oder der Vorhaltzeit der Eliminierung der Abweichung der Schwankung der Verbraucherleistung über die obere bzw. unter die untere Grenze des Sollwert-Bandes ihrer Schwankungsbreite das Verhältnis dieser Summe zum Gesamtmaß der der Differenz von oberer und unterer Grenze des Sollwert-Bandes entsprechenden Schwankungsbreite der Verbraucherleistung oder der Reziprokwert dieses Verhältnisses gewählt wird. Hierfür kann vorrichtungsseitig zweckmäßig der Integralregler außer einem ersten zeitabhängigen Integrierwerk für die Abweichung der Schwankung der Verbraucherleistung über die obere Grenze des Sollwert-Bandes ihrer Schwankungsbreite und/oder einem ersten zeitabhängigen Integrierwerk für die Abweichung der Schwankung der Verbraucherleistung unter die untere Grenze des Sollwert-Bandes ihrer Schwankungsbreite ein weiteres zeitabhängiges Integrierwerk für die der Differenz von oberer und unterer Grenze des Sollwert-Bandes entsprechende Schwankungsbreite der Verbraucherleistung sowie eine über Impulsleitungen mit beiden Integrierwerken verbundene Summiereinrichtung zur Bildung der Summe zeitgleicher Ergebnisse beider Integrierwerke und die Regeleinrichtung eine jeweils über Impulsleitungen einerseits mit dieser und andererseits mit zumindest dem zeitabhängigen Integrierwerk für die der Differenz von oberer und unterer Grenze des Sollwert-Bandes entsprechende Schwankungsbreite der Verbraucherleistung verbundene Einrichtung zur Bildung des Verhältnisses zeitgleicher Ergebnisse dieses Integrierwerkes und der Summiereinrichtung oder des Reziprokwertes dieses Verhältnisses aufweisen. Ersichtlich ergibt sich hierdurch eine besondere Verbesserung der Regelungsschärfe, weil das Integralverhältnis, nämlich das Verhältnis der genannten Gesamtmaße im Verlauf der Zeit, vergleichsweise größer wird.

In weiterer erfinderischer Fortbildung dieses untergeordneten Erfindungsgedankens kann die Verstärkung und/oder die Nachstellzeit und/oder die Vorhaltzeit der Eliminierung der Abweichung der Schwankung der Verbraucherleistung über die obere bzw. unter die untere Grenze des Sollwert-Bandes ihrer Schwankungsbreite verändert werden, wenn das Verhältnis der beiden Gesamtmaße einen vorbestimmten Wert überschreitet. Hierfür kann zweckmäßig die Einrichtung zur Bildung des Verhältnisses zeitgleicher Ergebnisse beider Integrierwerke bzw. des ersten zeitabhängigen Integrierwerkes und der Summiereinrichtung oder des Reziprokwertes dieser Verhältnisse eine einstellbare Impulssperreinrichtung aufweisen, mittels derer die Impulsleitung(en) zu der bzw. den Einrichtung-(en) zur Veränderung der Verstärkung des Proportionalreglers und/oder der Nachstellzeit des Integralreglers und/oder der Vorhaltzeit des Differentialreglers erst bei Vorhandensein eines vorbestimmten Wertes des Verhältnisses zeitgleicher Ergebnisse beider Integrierwerke bzw. des ersten zeitabhängigen Integrierwerkes und der Summiereinrichtung oder des Reziprokwertes dieser Verhältnisse freigebbar ist bzw. sind. Dies bedeutet die Vorgabe zulässiger Werte für Verstärkung und/oder Nachstellzeit und/oder Vorhaltzeit der auf Eliminierung der Abweichung der Differenz von Vorlauf- und Rücklauftemperatur des Wärmeträgermediums von einer vorbestimmten zugeordneten Grenze ihres Sollwert-Bandes arbeitenden Regelvorrichtung nach der Erfindung. Dies wiederum erbringt erstmals die Möglichkeit einer Art von Selbstlernen der Regelvorrichtung nach der Erfindung, indem sich diese ihre eigenen Regelkonstanten selbst nachstellt. Entsprechend der diesem untergeordneten Erfindungsgedanken zugrundeliegenden untergeordneten weiteren Aufgabenstellung bringt dieser die vorteilhafte Möglichkeit mit sich, daß jeder beliebige Reglertyp für die der Erfindung zugrundeliegende Aufgabe eingesetzt werden und sogar hinsichtlich seiner Regelungskonstanten beliebig, das heißt auch ungünstig, eingestellt werden kann, da gemäß diesem untergeordnetem Erfindungsgedanken dafür gesorgt ist, daß er nach einiger Zeit sich selbst auf das zweckmäßigste Arbeitsfeld eingestellt hat, weil er seine Regelungskonstanten gemäß den Energieversorgungskriterien selbst nachstellt.

Gleiches kann im übrigen durch eine Alternative erreicht werden, gemäß derer die Verstärkung und/oder die Nachstellzeit und/oder die Vorhaltzeit der Eliminierung der Abweichung der Schwankung der Verbraucherleistung über die obere bzw. unter die untere Grenze des Sollwert-Bandes ihrer Schwankungsbreite so verändert wird, daß das Verhältnis der beiden Gesamtmaße einen vorbestimmten Wert nicht überschreitet. Hierfür kann zweckmäßig die Einrichtung zur Veränderung der Verstärkung des Proportionalreglers und/oder die Einrichtung zur Veränderung der Nachstellzeit des Integralreglers und/oder die Einrichtung zur Veränderung der Vorhaltzeit des Differentialreglers jeweils eine über eine Impulsleitung mit der Einrichtung zur Bildung des Verhältnisses zeitgleicher Ergebnisse beider Integrierwerke bzw. des ersten zeitabhängigen Integrierwerkes und der Summiereinrichtung oder des Reziprokwertes dieser Verhältnisse verbundene Einstelleinrichtung aufweisen, mittels derer die zugeordnete Veränderungseinrichtung im Sinne einer Vermeidung des Überschreitens eines vorbestimmten Wertes der Verhältnisses zeitgleicher Ergebnisse beider Integrierwerke bzw. des ersten zeitabhängigen Integrierwerkes und der Summiereinrichtung oder des Reziprokwertes dieser Verhältnisse nachstellbar ist. Auch diese Variante der Erfindung verwirklicht erstmalig eine Regelung mit Selbstlernen mit den für die vorstehend beschriebene Alternative bereits erläuterten Vorteilen. In beiden Fällen läßt sich der Selbstlernvorgang der Regelung bezüglich der Anpassung ihrer Regelungskonstanten an die jeweiligen Eigentümlichkeiten der Heizungs- bzw. Kühlanlage und/oder der mit dieser zu klimatisierenden Räume im Hinblick auf Betriebsparameter und/oder lage- und/oder klimaspezifische oder benutzereigentümliche Eigenheiten dadurch verbessern, daß die obere und/oder die untere Grenze des Sollwert-Bandes der Abweichung der Verbraucherleistung bereits herstellerseitig leistungsfähigkeitsbedingt und/oder nutzerbedüfnisbezogen gewählt wird. Dies bedeutet die zweckmäßige Möglichkeit einer werkseitigen Vorwahl von für eine bestimmte Heizungs- bzw. Kühlanlage und/oder die Kombination derselben mit einem bestimmten Typ einer Regelungsvorrichtung nach der Erfindung für zweckmäßig erachteten Werten für Verstärkung und/oder Nachstellzeit und/oder Vorhaltzeit, wobei es dann der in letztbeschriebener Weise nach der einen oder anderen Variante derselben ausgebildeten Regelungsvorrichtung nach der Erfindung überlassen bleibt, im Wege des Selbstlernens den Regelvorgang an die genannten Eigentümlichkeiten optimierend anzupassen. Dies bedeutet eine Verbesserung dieser automatischen Optimierung der Regelungsvorrichtung nach der Erfindung insoweit, als durch diese hersteller- bzw. werkseitige Vorgabe einer oder mehrerer Regelungskonstanten die für die Selbstoptimierung der Regelungsvorrichtung erforderliche Zeitspanne besonders kurz gehalten und die damit verbundenen Energieverluste minimiert werden können.

Ersichtlich kann in weiterer Fortbildung der Erfindung mit Vorteil als Wärmeerzeuger ein brennstoffbefeuerter oder mit elektrischer Energie gespeister Kessel und/oder ein primärseitig mit Primärwärmeträgermedium beaufschlagter Wärmetauscher, beispielsweise ein Rauchgaskühler oder eine Fernwärmeübergabestation oder ein Ausgangswärmetauscher einer Wärmepumpe und/oder eine Elektrokompressionswärmepumpe und/oder eine gas- oder dieselmotorisch betriebene Wärmepumpe oder Sorptionswärmepumpe bzw. als Kälteerzeuger eine Elektrokompressionskältemaschine und/oder eine gas- oder dieselmotorisch betriebene Kältemaschine oder Sorptionskältemaschine und als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Einrichtung zur Beeinflussung der Zufuhr der Betriebsenergie zum Wärme- bzw. Kälteerzeuger vorgesehen sein. Die mit der Erfindung erzielbare Universalität auch in dieser Richtung ist offenbar.

Für diskontinuierlich, also im Ein-Aus-Betrieb arbeitende Heizungs-bzw. Kühlanlagen, bei denen also die Veränderung der dem im Heizungs- bzw. Kühlmittelvorlauf befindlichen Wärmeträgermedium zu-geführten Wärme- bzw. Kälteleistung durch Ein- und Ausschaltung der Zufuhr der Betriebsenergie zum Wärme- bzw. Kälteerzeuger erfolgt, sieht ein spezieller untergeordneter Erfindungsgedanke zweckmäßig vor, daß bei Auftreten einer Abweichung der Schwankung der Verbraucherleistung über die obere Grenze des vorgegebenen Sollwert-Bandes ihrer Schwankungsbreite hinaus entweder die Zufuhr von Betriebsenergie zum Wärme- bzw. Kälteerzeuger ganz beendet, oder das Zeitverhältnis der Ein- zur Aussschaltung derselben verringert wird und bei während einer vorbestimmten Zeitdauer auftretender Abweichung der Schwankung der Verbraucherleistung unter die untere Grenze des vorgegebenen Sollwert-Bandes ihrer Schwankungsbreite entweder die Zufuhr von Betriebsenergie zum Wärme- bzw. Kälteerzeuger wieder aufgenommen oder das Zeitverhältnis der Ein- zur Ausschaltung derselben erhöht wird. Vorrichtungstechnisch sieht die Erfindung hierfür vor, daß der Wärme- bzw. Kälteerzeuger diskontinuierlich mit Betriebsenergie versorgbar ist und daß die Regeleinrichtung einen getaktete Stellbefehle abgebenden Stellbefehlgeber aufweist, mittels dessen der Einrichtung zur Beeinflussung der Zufuhr der Betriebsenergie zum Wärme- bzw. Kälteerzeuger die Stellbefehle als Ein-Aus-Befehle oder veränderbare Zeitverhältnisse der Ein- zur Ausschaltung der Zufuhr von Betriebsenergie zum Wärme- bzw. Kälteerzeuger zuführbar sind, wobei jeweils bei Ermittlung einer Abweichung der Schwankung der Verbraucherleistung über die obere Grenze ihres vorgegebenen Sollwert-Bandes hinaus durch einen Aus-Befehl bzw. durch ein kleineres Zeitverhältnis der Ein- zur Ausschaltung der Zufuhr von Betriebsenergie zum Wärme- bzw. Kälteerzeuger die Zufuhr von Betriebsenergie zum Wärme- bzw. Kälteerzeuger sperrbar bzw. verringerbar und bei während einer vorbestimmten Zeitdauer auftretender Abweichung der Schwankung der Verbraucherleistung unter die untere Grenze ihres vorgegebenen Sollwert-Bandes durch einen Ein-Befehl bzw. ein größeres Zeitverhältnis der Ein- zur Ausschaltung der Zufuhr von Betriebsenergie zum Wärme- bzw. Kälteerzeuger die Zufuhr von Betriebsenergie zum Wärme- bzw. Kälteerzeuger freigebbar bzw. erhöhbar ist.

Hier zeigt sich in höchst überraschender Einfachheit, daß bei einem diskontinuierlich arbeitenden Heizungs- bzw. Kühlsystem die Überschreitung der oberen Grenze des Sollwert-Bandes der Schwankungsbreite bzw. das Unterschreiten der unteren Grenze desselben zu einer verbrauchergerechten Ein- und Ausschaltung des Wärme- bzw. Kälteerzeugers bzw. zu einer Erhöhung oder Verringerung des Zeitverhältnisses der Ein- zur Ausschaltung der Zufuhr von Betriebsenergie zum Wärme- bzw. Kälteerzeuger führt. Wie schon dargelegt, bedeutet nämlich große Schwankung der Verbraucherleistung Überversorgung und kleine Schwankung der Verbraucherleistung beginnende Unterversorgung. Diese Erkenntnis wird unmittelbar in eine Regelungsbeeinflussung der Zufuhr der Wärme- bzw. Kälteleistung zum Heizungs- bzw. Kühlmittelvorlauf beispielsweise durch unmittelbare Steuerung eines etwa vorhandenen Brenners des Wärme- bzw. Kälteerzeugers umgesetzt. Hierdurch wird recht eindrucksvoll klar, daß keinerlei bezüglich des Heizungs- bzw. Kühlsystems äußere Größe willkürlich herangezogen wird, sondern die Beeinflussung der Zufuhr der Wärme- bzw. Kalteleistung direkt aus der wärme- bzw. kälteseitigen Verbraucheranforderung abgeleitet wird.

Eine zweckmäßige Weiterführung dieses untergeordneten Erfindungsgedankens befaßt sich gemäß einer sich der der Erfindung zugrundeliegenden Aufgabe unterordnenden Aufgabe mit der Ermittlung der für eine bestimmte Heizungs- bzw. Kühlanlage solcher spezieller Ausführung aufgrund der Gesamtheit der Einflussgrößen, denen sie unterliegt, optimalen Führungsgröße. Hierfür sieht dieser untergeordnete Erfindungsgedanke vor, daß bei Inbetriebnahme des Verfahrens für Heizbetrieb oder für Kühlbetrieb die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximal möglichen Verbraucherleistung (Inbetriebnahmeverbraucherleistung) und der kleinere Sollwert der Schwankungsbreite der Verbraucherleistung entsprechend einem im Vergleich zu diesem Bruchteil kleineren Bruchteil dieser maximal möglichen Verbraucherleistung (Inbetriebnahmeverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, gewählt wird. Diese Verfahrensweise kann mit Vorzug bei der als "Jungfernfahrt" zu bezeichnenden erstmaligen Inbetriebnahme einer mit der Erfindung ausgerüsteten Heizungs- bzw. Kühlanlage verwirklicht werden und erbringt dann die tatsächlich maximal mögliche Verbraucherleistung, die sich zu dem Zeitpunkt bestimmt, zu dem nach einer Zeitspanne mit praktisch konstantem Wert der Verbraucherleistung erstmalig eine Verringerung derselben auftritt, als die einzige relevante Größe, in der alle auf die Heizungs- bzw. Kühlanlage wirkenden Einflußgrößen enthalten sind, ohne daß diese im einzelnen bestimmt oder gemessen zu werden bräuchten.

Eine zweckmäßige Ausgestaltung der Erfindung gemäß einem anderen untergeordneten Erfindungsgedanken kennzeichnet sich dadurch, daß bei Heizbetrieb für Aufheizen nach einer Abkühlung bzw. bei Kühlbetrieb für Abkühlen nach einer Erwärmung und/oder bei jeder Wiederaufnahme der Zufuhr von Betriebsenergie zum Wärme- bzw. Kälteerzeuger nach einer Beendigung derselben die Verbraucherleistung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung auftritt, ermittelt und der größere Sollwert der Schwankungsbreite der Verbraucherleistung entsprechend einem Bruchteil dieser maximalen Verbraucherleistung (Anfahrverbraucherleistung) und der kleinere Sollwert der Schwankungsbreite der Verbraucherleistung entsprechend einem im Vergleich zu diesem Bruchteil kleineren Bruchteil dieser maximalen Verbraucherleistung (Anfahrverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, gewählt wird.

Es hat sich nämlich überraschend herausgestellt, daß bei sämtlichen Inbetriebnahme- oder Anfahrvorgängen von erfindungsgemäß ausgebildeten Heizungs- bzw. Kühlanlagen sich relativ schnell und für eine ganz bestimmte Zeitdauer die maximale Verbraucherleistung einstellt, die je nach den Umständen zwar eine kürzere oder längere Zeit nahezu konstant bleibt, jedoch in jedem Fall bei gattungsgemäßen Systemen mit automatischen Drosseleinrichtungen ein signifikantes Abknicken derselben zu kleineren Werten hin ermittelt wird, so daß gerade dieses Verhalten von Heizungs- bzw. Kühlsystemen eine Bestimmung und Normierung der als Inbetriebnahmeverbraucherleistung bezeichneten maximal möglichen Verbraucherleistung bzw. der als Anfahrverbraucherleistung bezeichneten maximalen Verbraucherleistung gewährleistet ist. Durch diese Eigenschaft läßt sich überraschend in durch die Nutzung dieser beiden untergeordneten Erfindungsgedanken sehr einfacher Weise die obere und die untere Grenze des Sollwert-Bandes der Schwankungsbreite der Verbraucherleistung als Bruchteil der normierten Inbetriebnahme- oder Anfahrverbraucherleistung ermitteln. Der Vorteil dieses Vorgehens liegt ferner darin, daß man sich nicht nur auf eine einmal ermittelte Systemleistung in Form der sich bei "Jungfernfahrt" (erstmaliger Inbetriebnahme) einstellenden Inbetriebnahmeverbraucherleistung oder der sich beispielsweise bei Tagesanfahrt einstellenden Anfahrverbraucherleistung, die im übrigen bei einer neu installierten Heizungs- bzw. Kühlanlage nach der Erfindung für eine nicht unbeträchtliche Betriebszeitdauer der Inbetriebnahmeverbraucherleistung zu entsprechen pflegt, festlegen muß, sondern die Heizungs- bzw. Kühlanlage nach der Erfindung im beispielsweise täglichen Betrieb (z. B. Tagesanfahrbetrieb) immer wieder ihr Eichnormal automatisch findet.

Vorrichtungsseitig wird die Erfindung diesen untergeordneten Erfindungsgedanken dadurch gerecht, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebes bei Abkühlen nach einer Erwärmung und/oder bei jeder Wiederaufnahme der Zufuhr von Betriebsenergie zum Wärme- bzw. Kälteerzeuger nach einer Beendigung derselben als maximale Verbraucherleistung (Anfahrverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Schwankungsbreite der Verbraucherleistung auf sowohl bei Heizbetrieb als auch bei Kühlbetrieb einen Bruchteil dieser maximal möglichen Verbraucherleistung (Inbetriebnahmeverbraucherleistung) bzw. dieser maximalen Verbraucherleistung (Anfahrverbraucherleistung) und der zugeordneten unteren Grenze des Sollwert-Bandes der Schwankungsbreite der Verbraucherleistung auf einen willkürlich wählbaren Wert aufweist, wobei dieser willkürlich wählbare Wert entsprechend einem kleineren Bruchteil der maximal möglichen Verbraucherleistung (Inbetriebnahmeverbraucherleistung) bzw.

der maximalen Verbraucherleistung (Anfahrverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, wählbar ist.

Ein anderer untergeordneter Erfindungsgedanke befaßt sich mit der Lösung einer sich der der Erfindung zugrundeliegenden Aufgabe unterordnenden Teilaufgabe damit, für diskontinuierlich betriebene Heizungs- bzw. Kühlsysteme die Wahl des Sollwert-Bandes der Schwankungsbreite der Verbraucherleistung besonders zu optimieren. Hierfür sieht dieser untergeordnete Erfindungsgedanke vor, daß als obere Grenze für den größeren Sollwert der Schwankungsbreite der Verbraucherleistung die maximal mögliche Verbraucherleistung (Inbetriebnahmeverbraucherleistung) oder die maximale Verbraucherleistung (Anfahrverbraucherleistung) und als untere Grenze für den kleineren Sollwert der Schwankungsbreite der Verschwindwert der Verbraucherleistung gewählt wird. In weiterer zweckmäßiger Fortbildung kann dabei die Zufuhr von Betriebsenergie zum Wärme- bzw. Kälteerzeuger beendet werden, wenn die Schwankung der Verbraucherleistung einen der um den größeren Sollwert der Schwankungsbreite der Verbraucherleistung verminderten maximal möglichen Verbraucherleistung (Inbetriebnahmeverbraucherleistung) oder maximalen Verbraucherleistung (Anfahrverbraucherleistung) entsprechenden Wert unterschreitet, und aufgenommen werden, wenn die Schwankung der Verbraucherleistung einen dem um den kleineren Sollwert der Schwankungsbreite der Verbraucherleistung vergrößerten Verschwindwert entsprechenden Wert während einer vorbestimmten Zeitdauer nicht überschreitet. Bei solchen diskontinuierlich arbeitenden Heizungs- bzw. Kühlsystemen läßt sich somit ein Maß für die obere und die untere Grenze der Schwankungsbreite der Verbraucherleistung sogar auf reine Abfrage nach jeweils einem einzigen Wert reduzieren, was gemäß dieser untergeordneten Aufgabe den von der Fachwelt bezüglich Lösungen nach dem Stande nach Technik nicht für möglich gehaltenen Vorteil mit sich bringt, sogar die Verbraucherleistung als Funktion der Zeit hinsichtlich ihrer Dynamik jeweils nur auf zwei Werte derselben vergleichen und in Abhängigkeit davon bereits den jeweiligen Stellbefehl auslösen zu können. Diese Werte können sogar unabhängig von jeglicher äußeren oder systemimmanenten Einflußgröße und für alle Betriebsarten werkseitig fest vorgegeben oder aber auch nach Belieben vom Benutzer eingestellt werden, da sie aus der Inbetriebnahmeverbraucherleistung bzw. der Anfahrverbraucherleistung und dem Verschwindwert der Verbraucherleistung gebildet werden, und zwar dies lediglich additiv oder subtraktiv.

Diese Art der Verfahrensführung nebst zugehöriger Implementierung ist nicht nur besonders einfach, sondern auch und speziell für solche Heizungs- bzw. Kühlanlagen prädestiniert, die als gesamte Anlage von einem Hersteller inklusive der Wärme- bzw. Kälte-Erzeugungs-und - Verteilungseinheiten erstellt werden. Für solche Anlagen pflegt das gesamte Leistungskennfeld vorzuliegen, wodurch schon herstellerseitig die Inbetriebnahme- und/oder Anfahrverbraucherleistung und der Verschwindwert der Verbraucherleistung bekannt sind und mithin das für die Angabe des oberen und des unteren Grenzwertes der Schwankungsbreite der Verbraucherleistung notwendige Quadrupel sich auf ein Tupel reduzieren läßt. Implementierungstechnisch bedeutet das, daß die Abfrage von vier Werten (Vier-PunktRegler) auf nunmehr zwei Werte (Zwei-Punkt-Regler) reduziert werden kann. Allerdings läßt sich das Verfahren gemäß diesem Erfindungsgedanken durchaus auch mit einem Vier-Punkt-Regler fahren, der dann allerdings nicht voll ausgenutzt wäre.

Für den Fall, daß man völlig unabhängig bleiben will von der Vorbestimmung oder der Ermittlung irgendwelcher Grenzen für die Schwankungsbreite der Verbraucherleistung, was insbesondere für den Fall einer Nachrüstung von bereits bestehenden Heizungs- bzw. Kühlanlagen nach dem Stande der Technik auf die Erfindung von besonderem Vorteil sein kann, eignet sich besonders eine zweckmäßige Weiterbildung gemäß einem alternativen untergeordneten Erfindungsgedanken derselben, gemäß dem für jedes Ergebnis einer Mehrzahl von Bestimmungen der Verbraucherleistung der Unterschied zwischen ihm und dem vorangegangenen Ergebnis dieser Mehrzahl von Bestimmungen der Verbraucherleistung betragsmäßig ermittelt und bei Auftreten einer vorbestimmten Anzahl von monoton fallenden Ergebnissen einer Mehrzahl von Ermittlungen dieses Unterschiedes vorzugsweise mit Überschreiten der oberen Grenze des Sollwert-Bandes der Schwankungsbreite der Verbraucherleistung während der Zufuhr von Betriebsenergie zum Wärme- bzw. Kälteerzeuger diese beendet und bei Auftreten einer vorbestimmten Anzahl vom monoton fallenden oder praktisch gleichbleibenden Ergebnissen einer Mehrzahl von Ermittlungen dieses Unterschiedes vorzugsweise mit Unterschreiten der unteren Grenze des Sollwert-Bandes der Schwankungsbreite der Verbraucherleistung während des Aussetzens der Zufuhr von Betriebsenergie zum Wärme- bzw. Kälteerzeuger diese aufgenommen wird. Vorrichtungsseitig wird die Erfindung dieser Verfahrensführung dadurch gerecht, daß die Regeleinrichtung entweder eine über eine Impulsleitung mit der Multipliziereinrichtung verbundene Betragsvergleichseinrichtung zur Bestimmung des Unterschiedes zwischen jeweils letztem und vorletztem Momentanwert der Verbraucherleistung oder eine über eine Impulsleitung mit der Leistungsvergleichseinrichtung verbundene Momentanwert-Abweichungs-Speichereinrichtung zur Speicherung der Unterschiede zwischen jeweils letztem und vorletztem Momentanwert der Verbraucherleistung aufweist, wobei die Betragsvergleichseinrichtung bzw. die Momentanwert-Abweichungs-Speichereinrichtung jeweils über eine Impulsleitung mit einer Tendenzvergleichseinrichtung zur Bestimmung der Tendenz der Veränderung der Unterschiede zwischen jeweils letztem und vorletztem Momentanwert der Verbraucherleistung verbunden ist, die ihrerseits über jeweils eine Impulsleitung einerseits mit einer Zahlvorgabeeinrichtung zur willkürlichen Vorgabe einer als Auslöseschwelle für die Betätigung des Stellbefehlgebers wirkenden Anzahl solcher Unterschiede zwischen jeweils letztem und vorletztem Momentanwert der Verbraucherleistung und andererseits über ein Zählwerk für diese Unterschiede zwischen jeweils letztem und vorletztem Momentanwert der Verbraucherleistung mit dem Stellbefehlgeber und mit einer Stellungsanzeigeeinrichtung zur Rückmeldung des Betriebszustandes des Stellbefehlgebers verbunden ist.

Eine vorteilhafte Weiterbildung dieses untergeordneten Erfindungsgedankens kennzeichnet sich dadurch, daß für jedes Ergebnis einer Mehrzahl von Bestimmungen der Verbraucherleistung der Unterschied zwischen ihm und der maximal möglichen Verbraucherleistung (Inbetriebnahmeverbraucherleistung) oder der maximalen Verbraucherleistung (Anfahrverbraucherleistung) betragsmäßig ermittelt und bei Auftreten einer vorbestimmten Anzahl von monton steigenden Ergebnissen einer Mehrzahl von Ermittlungen dieses Unterschiedes vorzugsweise mit Überschreiten der oberen Grenze des Sollwert-Bandes der Schwankungsbreite der Verbraucherleistung die Zufuhr von Betriebsenergie zum Wärme- bzw. Kälteerzeuger beendet und für jedes Ergebnis einer Mehrzahl von Bestimmungen der Verbraucherleistung der Unterschied zwischen ihm und dem Verschwindwert der Verbraucherleistung betragsmäßig ermittelt und bei Auftreten einer vorbestimmten Anzahl von monton fallenden oder praktisch gleichbleibenden Ergebnissen einer Mehrzahl von Ermittlungen dieses Unterschiedes vorzugsweise mit Unterschreiten der unteren Grenze des Sollwert-Bandes der Schwankungsbreite der Verbraucherleistung die Zufuhr von Betriebsenergie zum Wärme- bzw. Kälteerzeuger aufgenommen wird. Implementierungstechnisch kann hierfür zweckmäßig vorgesehen sein, daß bei einer Vorrichtung nach der Erfindung mit Detektoreinrichtung zur Ermittlung der im Verlauf der Inbetriebnahme der Vorrichtung für Heizbetrieb oder für Kühlbetrieb als maximal mögliche Verbraucherleistung (Inbetriebnahmeverbraucherleistung) und/oder bei jeder Wiederaufnahme der Zufuhr von Betriebsenergie zum Wärme- bzw. Kälteerzeuger nach einer Beendigung derselben als maximale Verbraucherleistung (Anfahrverbraucherleistung) auftretenden Verbraucherleistung die Regeleinrichtung eine über eine Impulsleitung mit der Multipliziereinrichtung verbundene Speichereinrichtung zur Speicherung der ermittelten Werte der Verbraucherleistung und eine über jeweils eine Impulsleitung mit dieser und mit der Detektoreinrichtung verbundene Abweichungsvergleichseinrichtung zur Bestimmung des Unterschiedes des jeweiligen ermittelten Wertes der Verbraucherleistung von der maximal möglichen Verbraucherleistung (Inbetriebnahmeverbroucherleistung) und/oder der maximalen Verbraucherleistung (Anfahrverbraucherleistung) aufweist, welche über eine Impulsleitung mit einer Tendenzvergleichseinrichtung zur Bestimmung der Tendenz der Veränderung der Unterschiede zwischen jeweils einem ermittelten Wert der Verbraucherleistung und der maximal möglichen Verbraucherleistung (Inbetriebnahmeverbraucherleistung) und/oder der maximalen Verbraucherleistung (Anfahrverbraucherleistung) verbunden ist, die ihrerseits über jeweils eine Impulsleitung einerseits mit einer Zahlvorgabeeinrichtung zur willkürlichen Vorgabe einer als Auslöseschwelle für die Betätigung des Stellbefehlgebers wirkenden Anzahl solcher Unterschiede zwischen jeweils einem ermittelten Wert der Verbraucherleistung und der maximal möglichen Verbraucherleistung (Inbetriebnahmeverbraucherleistung) und/oder der maximalen Verbraucherleistung (Anfahrverbraucherleistung) und andererseits über eine Zählwerk für diese Unterschiede zwischen jeweils einem ermittelten Wert der Verbraucherleistung und der maximal möglichen Verbraucherleistung (Inbetriebnahmeverbraucherleistung) und/oder der maximalen Verbraucherleistung (Anfahrverbraucherleistung) mit dem Stellbefehlgeber und mit einer Stellungsanzeigeeinrichtung zur Rückmeldung des Betriebszustandes des Stellbefehlgebers verbunden ist.

Diese Fortbildung der Regelung nach der Erfindung bringt die Möglichkeit für eine weitere Vereinfachung derselben ohne Verluste an vorstehend dargelegten Vorteilen insoweit mit sich, als hierbei grundsätzlich Vorgabe der oberen und/oder der unteren Grenze des Sollwert-Bandes der Schwankungsbreite der Verbraucherleistung mit entsprechenden Möglichkeiten für implementierungstechnische Vereinfachungen dadurch ersetzt werden kann, daß monoton fallende Ergebnisse der Verbraucherleistung selbst oder betragsmäßig monoton steigender Unterschiede aufeinander folgender "Meß"-Werte derselben und/oder gleichbleibende oder monoton fallende Ergebnisse von Bestimmungen der Verbraucherleistung selbst oder von betragsmäßigen Unterschieden aufeinander folgender "Meß"- Werte bereits unabhängig von einer Über- oder Unterschreitung einer Grenze des Sollwert-Bandes der Schwankungsbreite zur Auslösung eines Regeleingriffs benutzt werden können. Dabei braucht auch nicht die Auslösung solcher Regeleingriffe bei Überschreiten einer oberen Grenze bzw. bei Unterschreiten einer unteren Grenze während einer längeren Zeitdauer un-genutzt zu bleiben, vielmehr kann hier auch ein solches Ereignis zusätzlich als Auslöseschwelle dienen. Der Vorteil ist in jedem Fall, daß mit dieser universellen Scanning-Methode (Raster-Messungs-Methode) jedes Heizungs- bzw. Kühlsystem mit jedwedem Wärme- bzw. Kälteerzeuger durch Ausstattung mit einer solchen erfindungsgemäßen Regelung für jedes beliebige Verbrauchersystem ohne jede Vorkenntnis desselben (beispielsweise hinsichtlich klimatischer Umgebung, Jahreszeit, Räumlichkeiten, Größe, Speichermasse, Aufnahmevermögen für Wärmeträgermedium etc.) so betrieben werden kann, ,daß es sich seine erforderlichen Regelinformationen automatisch aus sich selbst heraus besorgt.

Bei der sich mit dem Betrieb für Heizungs- und Kühlanlagen mit Wärme- bzw. Kälteerzeuger mit kontinuierlicher Zufuhr der Betriebsenergie zu ihm befassenden Ausführungsform der Erfindung, bei der somit die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, wird bei Auftreten einer Abweichung der Schwankung der Verbraucherleistung über die obere Grenze des vorgegebenen Sollwert-Bandes ihrer Schwankungsbreite hinaus die Zufuhr von Betriebsenergie zum Wärme- bzw. Kälteerzeuger verringert und bei während einer vorbestimmten Zeitdauer auftretender Abweichung der Schwankung der Verbraucherleistung unter die untere Grenze des vorgegebenen Sollwert-Bandes ihrer Schwankungsbreite die Zufuhr von Betriebsenergie zum Wärme- bzw. Kälteerzeuger erhöht. Die diesem untergeordneten Erfindungsgedanken entsprechende vorrichtungsmäßige Ausgestaltung der Erfindung wird dabei so getroffen, daß der Wärme- bzw. Kälteerzeuger kontinuierlich mit Betriebsenergie versorgbar ist und daß die Regeleinrichtung einen einen während der Betriebsdauer des Wärme- bzw. Kälteerzeugers ständig vorhandenen modulierten Stellbefehl abgebenden Stellbefehlgeber aufweist, mittels dessen der Einrichtung zur Beeinflussung der Zufuhr der Betriebsenergie zum Wärme- bzw. Kälteerzeuger die Stellbefehle als betragsmäßige Modulationsunterschiede eines während der Betriebsdauer ständig vorhandenen Betriebsbefehls zuführbar sind, wobei jeweils bei Ermittlung einer Abweichung der Schwankung der Verbraucherleistung über die obere Grenze ihres vorgegebenen Sollwert-Bandes hinaus die Zufuhr von Betriebsenergie zum Wärme- bzw. Kälteerzeuger in Abhängigkeit von dieser Abweichung verringerbar und bei Ermittlung einer Abweichung der Schwankung der Verbraucherleistung unter die untere Grenze ihres vorgegebenen Sollwert-Bandes die Zufuhr von Betriebsenergie zum Wärme- bzw. Kälteerzeuger in Abhängigkeit von dieser Abweichung erhöhbar ist.

Vergleicht man Heizungs- bzw. Kühlsysteme mit kontinuierlicher und diskontinuierlicher Zufuhr der Betriebsenergie zu ihrem Wärme- bzw. Kälteerzeuger, so ist festzustellen, daß das Maß der Schwankungsbreite beim diskontinuierlich betriebenen System höchst einfach für das Ein- und Ausschalten der Zufuhr der Betriebsenergie genutzt werden konnte, bei kontinuierlich betriebenen Systemen sich darüber hinaus jedes ungewünschte Maß einer Schwankung der Verbraucherleistung, das heißt entweder eine zu große oder eine zu kleine oder gar nicht mehr vorhandene Schwankung der Verbraucherleistung, direkt unmittelbar sofort dauerhaft korrigieren läßt. Dies geschieht dadurch, daß eine zu große Schwankung unmittelbar durch Verringerung der Zufuhr der Betriebsenergie zum Wärme- bzw. Kälteerzeuger auf das richtige Maß verringert und eine zu kleine oder überhaupt nicht mehr vorhandene Schwankung der Verbraucherleistung durch Erhöhung der Zufuhr der Betriebsenergie zum Wärme- bzw. Kälteerzeuger generiert werden kann. Ersichtlich wird hierdurch der energieoptimalste Betrieb eines Heizungs- bzw. Kühlsystems unabhängig von jedweder Verbraucheranforderung ständig und kontinuierlich zuverlässig gewährleistet.

Auch bei dieser Variante der Erfindung ist es gemäß einem untergeordneten Erfindungsgedanken derselben möglich, zur Wahrnehmung einer entsprechenden untergeordneten Aufgabe in zweckmäßiger Weise den für eine bestimmte Heizungs- bzw. Kühlanlage der hier angesprochenen Art mit kontinuierlicher Betriebsweise aufgrund der Gesamtheit der Einflußgrößen, denen sie unterliegt, optimalen Wert der Führungsgröße zu ermitteln. Hierfür sieht dieser untergeordnete Erfindungsgedanke vor, daß bei Inbetriebnahme des Verfahrens für Heizbetrieb und für Kühlbetrieb bei Vollast die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximal möglichen Verbraucherleistung (Inbetriebnahmeverbraucherleistung) und der kleinere Sollwert der Schwankungsbreite der Verbraucherleistung entsprechend einem im Vergleich zu diesem Bruchteil kleineren Bruchteil dieser maximal möglichen Verbraucherleistung (Inbetriebnahmeverbraucherleistung), vorzugsweise gemäß einem im Bereich zwischen etwa einem Zehntel und der Hälfte liegenden Bruchteil des dem größeren Sollwert der Schwankungsbreite der Verbraucherleistung entsprechenden Wertes derselben, gewählt wird. Auch hier empfiehlt sich diese Verfahrensweise mit Vorzug für die als "Jungfernfahrt" zu bezeichnende erstmalige Inbetriebnahme einer mit der Erfindung ausge-rüsteten Heizungs- bzw. Kühlanlage, zumal sie dann die für diese tatsächlich mögliche maximale Schwankung der Verbraucherleistung als die einzige relevante Größe, in der alle auf die Heizungs- bzw. Kühlanlage wirkenden Einflußgrößen enthalten sind, erbringt, ohne daß diese im einzelnen bestimmt oder gemessen zu werden bräuchten.

Ferner ist auch hier die Möglichkeit einer zweckmäßigen Fortbildung dieses untergeordneten Erfindungsgedankens dadurch gegeben, daß bei Heizbetrieb für Aufheizen nach einer Abkühlung bzw. bei Kühlbetrieb für Abkühlen nach einer Erwärmung bei Vollast die Verbraucherleistung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximalen Verbraucherleistung (Anfahrverbraucherleistung) und der kleinere Sollwert der Schwankungsbreite der Verbraucherleistung entsprechend einem im Vergleich zu diesem Bruchteil kleineren Bruchteil dieser maximalen Verbraucherleistung (Anfahrverbraucherleistung), vorzugsweise gemäß einem im Bereich zwischen etwa einem Zehntel und der Hälfte liegenden Bruchteil des dem größeren Sollwert der Schwankungsbreite der Verbraucherleistung entsprechenden Wertes derselben, gewählt wird.

Vorrichtungsseitig wird die Erfindung diesen hierauf gerichteten untergeordneten Erfindungsgedanken dadurch gerecht, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebs bei Abkühlen nach einer Erwärmung als maximale Verbraucherleistung (Anfahrverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Schwankungsbreite der Verbraucherleistung auf sowohl bei Heizbetrieb als auch bei Kühlbetrieb einen Bruchteil dieser maximal möglichen Verbraucherleistung (Inbetriebnahmeverbraucherleistung) bzw. dieser maximalen Verbraucherleistung (Anfahrverbraucherleistung) und der zugeordneten unteren Grenze des Sollwert-Bandes der Schwankungsbreite der Verbraucherleistung auf einen willkürlich wählbaren Wert aufweist, wobei dieser willkürlich wählbare Wert entsprechend einem kleineren Bruchteil der maximal möglichen Verbraucherleistung (Inbetriebnahmeverbraucherleistung) bzw. der maximalen Verbraucherleistung (Anfahrverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, wählbar ist. Auch hier kann wie bei den vorstehend beschriebenen diskontinuierlichen Betrieb des Wärme- bzw. Kälteerzeugers einer mit der Erfindung ausgerüsteten Heizungs- bzw. Kühlanlage betreffenden Varianten der Erfindung die Bestimmungsfunktion der ursprünglichen Inbetriebnahmeverbraucherleistung bzw. deren Schwankung für die Festlegung der Führungsgröße der Regelung in Form des erfindungsgemäßen Sollwert-Bandes von der Anfahrverbraucherleistung bzw. deren Schwankung mit allen bereits erläuterten Vorteilen übernommen werden.

Die sich mit dem Betrieb von gemäß der Erfindung ausgestatteten Heizungs- bzw. Kühlanlagen mit kontinuierlich arbeitendem Wärme- bzw. Kälteerzeuger befassende Variante der Erfindung bietet gemäß einem diese zweckmäßig weiterbildenden untergeordneten Erfindungsgedanken aber auch noch eine andere vorteilhafte Möglichkeit, die erfindungsgemäß durch die Bandbreite des Sollwert-Bandes der Schwankungsbreite der Verbraucherleistung bestimmte Führungsgröße für die erfindungsgemäße Regelung so zu bestimmen, daß der Vorgabewert für diese Führungsgröße besonders schnell zur Verfügung steht. Gemäß diesem untergeordneten Erfindungsgedanken kann nämlich zweckmäßig bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei Vollast die Länge der Zeitspanne, während derer erstmalig die Verbraucherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung der Verbraucherleistung nach dem Zeitpunkt, zu dem nach dieser Zeitspanne mit praktisch konstantem Wert dieser Verbraucherleistung erstmalig eine Verringerung derselben auftritt, ermittelt und entsprechend dem Maß der Länge dieser Zeitspanne und/oder dem Maß der zeitlichen Änderung dieser Verbraucherleistung der größere und der kleinere vorgegebene Sollwert der Schwankungsbreite der Verbraucherleistung verändert werden, indem bei größerer Länge dieser Zeitspanne und/oder kleinerem Maß der zeitlichen Änderung dieser Verbraucherleistung beide vorgegebenen Sollwerte der Schwankungsbreite der Verbraucherleistung um einen geringeren Betrag und bei kleinerer Länge dieser Zeitspanne und/oder größerem Maß der zeitlichen Änderung dieser Verbraucherleistung beide vorgegebenen Sollwerte der Schwankungsbreite der Verbraucherleistung um einen größeren Betrag verringert werden. Vorrichtungsmäßig kann hierfür zweckmäßig vorgesehen sein, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb jeweils bei Vollast als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebes bei Abkühlen nach einer Erwärmung jeweils bei Vollast als maximale Verbraucherleistung (Anfahrverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung, ferner eine über eine Impulsleitung mit der Multipliziereinrichtung oder mit einer ihrerseits über eine Impulsleitung mit der Leistungsvergleichseinrichtung verbundenen Momentanwert-Abweichungs-Speichereinrichtung verbundene Betragsvergleichseinrichtung zur Ermittlung des Beginns und des Endes einer Zeitspanne mit praktisch konstantem Wert der Verbraucherleistung durch Bestimmung des Unterschiedes zwischen jeweils letztem und vorletztem Momentanwert der Verbraucherleistung und eine über eine Impulsleitung mit der Detektoreinrichtung verbundene Zeitspannen-Messeinrichtung zur Ermittlung der Länge der Zeitspanne mit praktisch konstantem Wert der Verbraucherleistung mit einer mit ihr über eine Impulsleitung verbundenen Zeitspannenvorgabe- und -Vergleichseinrichtung und mit einer Einschalt- und einer Ausschalteinrichtung, die ihrerseits jeweils über Impulsleitungen mit der Betragsvergleichseinrichtung verbunden sind, wobei zumindest die Ausschalteinrichtung vorzugsweise auch mit der Detektoreinrichtung über eine Impulsleitung verbunden ist, und/oder einer jeweils über eine Impulsleitung einerseits entweder mit der Betragsvergleichseinrichtung oder mit der Multipliziereinrichtung und andererseits mit einer Einrichtung zur Abgabe von Zeitspannen entsprechenden Impulsen verbundene Dividiereinrichtung zur Ermittlung des zeitlichen Gradienten der Verringerung der Verbraucherleistung nach Beendigung der Zeitspanne mit praktisch konstantem Wert derselben, die jeweils über eine Impulsleitung mit einer Gradienten-Vorgabe- und -Vergleichseinrichtung mit einer vom Zeitpunkt des Endes der Zeitspanne mit praktisch konstantem Wert der Verbraucherleistung abhängigen Einschalt-und/oder Ausschalteinrichtung, vorzugsweise mit zumindest der Ausschalteinrichtung einer Zeitspannen-Messeinrichtung zur Ermittlung der Länge der Zeitspanne mit praktisch konstantem Wert der Verbraucherleistung, verbunden ist, aufweist, wobei die bzw. jede der Sollwert-Bildungseinrichtung(en) über jeweils eine Impulsleitung einerseits mit der Detektoreinrichtung und andererseits mit der Zeitspannen-Messeinrichtung unmittelbar oder über deren Zeitspannen-Vorgabe-und -Vergleichseinrichtung bzw. mit der Dividiereinrichtung unmittelbar oder über deren Gradienten-Vorgabe- und -Vergleichseinrichtung sowie in jedem Fall mit dem Stellbefehlgeber verbunden ist bzw. sind. Ersichtlich ist diese Möglichkeit der Detektion des optimalen Wertes für die Führungsgröße aus der Länge der Zeitspanne, während derer die Inbetriebnahme- oder die Anfahrverbraucherleistung praktisch konstant bleibt und/oder aus dem zeitlichen Gradienten des Abfalls derselben nach Beendigung dieser Zeitspanne mit praktisch konstantem Verlauf der Inbetriebnahme- bzw. Anfahrverbraucherleistung einerseits besonders flink, was für bestimmte Inbetriebnahme-Vorgänge von besonderem Vorteil sein kann, jedoch liegt die besondere Bedeutung der Lösung gemäß diesem untergeordneten Erfindungsgedanken mehr auf dem sogenannten "Anfahrvorgang", unter dem normalerweise das Hochfahren einer Heizungs- bzw. Kühlanlage aus deren Nachtbetrieb in deren Arbeitsbetrieb verstanden wird, da dieser Vorgang sich ständig wiederholend täglich aufzutreten pflegt und bei schneller Überprüfung und/oder gegebenenfalls Nachkorrektur der Führungsgröße zu besonderen Energieeinsparungen zu führen vermag.

Je nach Ausgestaltung der gemäß der Erfindung zu regelnden Heizungs-bzw. Kühlanlage kann es zweckmäßig sein, wenn gemäß einer Weiterbildung das Niveau, auf dem bzw.um das der durch eine Schwankungsbreite der Verbraucherleistung bestimmte obere und/oder untere Sollwert der Schwankungsbreite der Verbraucherleistung schwanken darf, gezielt festgelegt wird. Diese Verbraucherleistungs-Niveau-Festlegung kann zweckmäßig dadurch erfolgen, daß als Bezugsgröße für den größeren und für den kleineren Sollwert der Schwankungsbreite der Verbraucherleistung jeweils ein willkürlich vorgegebener Wert der Verbraucherleistung gewählt wird, wobei dieser als Bezugsgröße dienende willkürlich vorgegebene Wert hier und im folgenden als "Betriebsverbraucherleistung" bezeichnet wird. Es ist ersichtlich, daß bei dieser Ausgestaltung der Erfindung voneinander unterschiedliche Bezugsgrößen für die den oberen Grenzwert und die den unteren Grenzwert des Sollwert-Bandes bildende Schwankung der Verbraucherleistung gewählt werden. Alternativ hierzu ist es aber durchaus auch nicht nur möglich, sondern kann geradezu sinnvoll sein, wenn als gemeinsame Bezugsgröße für den größeren und den kleineren Sollwert der Schwankungsbreite der Verbraucherleistung ein willkürlich vorgegebener Wert der Verbraucherleistung gewählt wird, wobei auch hier dieser Bezugsgrößenwert als Betriebsverbraucherleistung bezeichnet wird. Hier haben ersichtlich oberer und unterer Grenzwert des Sollwert-Bandes der Verbraucherleistung eine gemeinsame Bezugsgröße, wobei diese allerdings so gewählt sein kann, daß die der oberen Grenze des Sollwert-Bandes entsprechende und gleichzeitig auch die der unteren Grenze des Sollwert-Bandes entsprechende Schwankung der Verbraucherleistung um dieses als Bezugsgröße dienende gemeinsame Verbraucherleistungs-Niveau herum stattfindet, also diese Bezugsgröße bezüglich beider Grenzen des Sollwert-Bandes zentrisch liegt, wohingegen auch eine solche Alternative zweckmäßig sein und verwirklicht werden kann, bei der beide diesen beiden Grenzen des Sollwert-Bandes entsprechenden Schwankungen sich in einer Richtung von einer gemeinsamen Bezugsgröße vollziehen, diese also bezüglich der beiden Grenzen des Sollwert-Bandes entsprechenden Schwankungen der Verbraucherleistung tangential liegt.

Vorrichtungsmäßig sieht die Erfindung hierfür vor, daß der bzw. jeder der Sollwert-Bildungseinrichtung(en) jeweils eine mit dieser bzw. diesen über je eine Impulsleitung verbundene Niveaugabeeinrichtung vor- oder nachgeschaltet ist, mittels derer als Bezugsgröße für den größeren und für den kleineren Sollwert der Schwankungsbreite der Verbraucherleistung jeweils ein willkürlich gewählter Wert der Verbraucherleistung vorgebbar ist.

Es ist aber im Rahmen der Erfindung durchaus ebenso sinnvoll und zweckmäßig, die Betriebsverbraucherleistung als Bezugsgröße für das Leistungsniveau, auf dem die jeweilige der oberen oder unteren Grenze des Sollwert-Bandes der Verbraucherleistung entsprechende Schwankung derselben liegen soll, nicht willkürlich zu wählen, sondern in geeigneter Weise aus einer Betriebsgröße der mit der Erfindung ausgestatteten Heizungs- bzw. Kühlanlage abzuleiten. Hierfür kann gemäß einer Fortbildung der Erfindung bei Inbetriebnahme des Verfahrens für Heizbetrieb oder für Kühlbetrieb bei Vollast die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein Bruchteil dieser maximal möglichen Verbraucherleistung (Inbetriebnahmeverbraucherleistung) und als Bezugsgröße für den kleineren Sollwert ein vergleichsweise kleinerer Bruchteil dieser maximal möglichen Verbraucherleistung (Inbetriebnahmeverbraucherleistung) bzw. bei für den größeren und den kleineren Sollwert der Schwankungsbreite der Verbraucherleistung gemeinsamer Bezugsgröße als Bezugsgröße für diese beiden Sollwerte ein Bruchteil dieser maximal möglichen Verbraucherleistung (Inbetriebnahmeverbraucherleistung), vorzugsweise ein im Bereich zwischen etwa dem 0,4- bis 0,8-fachen derselben liegender Wert, gewählt werden. Hier wird also das Anfahrverhalten bei erstmaliger Inbetriebnahme, der sogenannten "Jungfernfahrt", zweckmäßig ausgenutzt. Insbesondere nach längerer Betriebsdauer kann es jedoch besonders zweckmäßig sein, wenn statt dessen gemäß einer Alternative hierzu das tägliche Hochfahrverhalten der Heizungs- bzw. Kühlanlage ausgenutzt wird, indem bei Heizbetrieb für Aufheizen nach einer Abkühlung bzw. bei Kühlbetrieb für Abkühlen nach einer Erwärmung bei Vollast die Verbraucherleistung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein Bruchteil dieser maximalen Verbraucherleistung (Anfahrverbraucherleistung) und als Bezugsgröße für den kleineren Sollwert ein vergleichsweise kleinerer Bruchteil dieser maximalen Verbraucherleistung (Anfahrverbraucherleistung) bzw. bei für den größeren und den kleineren Sollwert der Schwankungsbreite der Verbraucherleistung gemeinsamer Bezugsgröße als Bezugsgröße für diese beiden Sollwerte ein Bruchteil dieser maximalen Verbraucherleistung (Anfahrverbraucherleistung), vorzugsweise ein im Bereich zwischen etwa dem 0,4- bis 0,8-fachen derselben liegender Wert, gewählt wird.

Ein noch besseres Maß für die Festlegung der Betriebsverbraucherleistung als Bezugsgröße für die der oberen und der unteren Grenze des Sollwert-Bandes entsprechenden Schwankungen der Verbraucherleistung kann man in vielen Fällen dadurch gewinnen, daß bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei Vollast die Länge der Zeitspanne, während derer erstmalig die Verbrau-

27

cherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung der Verbraucherleistung nach dem Zeitpunkt, zu dem nach dieser Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein gemäß größerer Länge dieser Zeitspanne und/oder kleinerem Maß der zeitlichen Änderung der Verbraucherleistung großer und gemäß kleinerer Länge dieser Zeitspanne und/oder größerem Maß der zeitlichen Änderung der Verbraucherleistung kleiner Bruchteil der maximal möglichen Verbraucherleistung (Inbetriebnahmeverbraucherleistung) bzw. der maximalen Verbraucherleistung (Anfahrverbraucherleistung) und als kleinerer Sollwert jeweils ein gegenüber diesem Bruchteil vergleichsweise geringerer Bruchteil der maximal möglichen Verbraucherleistung (Inbetriebnahmeverbraucherleistung) bzw. der maximalen Verbraucherleistung (Anfahrverbraucherleistung) bzw. bei für den größeren und den kleineren Sollwert der Schwankungsbreite der Verbraucherleistung gemeinsamer Bezugsgröße als solche ein gemäß größerer Länge dieser Zeitspanne und/oder kleinerem Maß der zeitlichen Änderung der Verbraucherleistung großer Bruchteil der maximal möglichen Verbraucherleistung (Inbetriebnahmeverbraucherleistung) bzw. der maximalen Verbraucherleistung (Anfahrverbraucherleistung) und gemäß kleinerer Länge dieser Zeitspanne und/oder größerem Maß der zeitlichen Änderung der Verbraucherleistung kleiner Bruchteil der maximal möglichen Verbraucherleistung (Inbetriebnahmeverbraucherleistung) bzw. der maximalen Verbraucherleistung (Anfahrverbraucherleistung) gewählt wird. Hierbei wirken sich überraschend die für die Festlegung der der oberen und der unteren Grenze des Sollwert-Bandesentsprechenden Schwankungsbreiten gemäß der gemessenen Länge der Zeitspanne mit praktisch konstant bleibender Verbraucherleistung und/oder gemäß dem Gradienten des Abfalles derselben nach Beendigung dieser Zeitspanne bereits beschriebenen Vorteile auch und besonders für die Festlegung des als Bezugsgröße(n) für die obere bzw. untere Grenze des Sollwert-Bandes der Schwankungsbreite der Verbraucherleistung dienende Leistungsniveau aus.

Man kann sich die Erkenntnis gemäß diesem untergeordneten Erfindungsgedanken auch noch dafür mit Vorteil nutzbar machen, nicht nur sporadisch zu willkürlichen Zeiten die Bezugsgröße in der beschriebenen Weise zu ermitteln, sondern für jeden Hochfahrbetrieb der Heizungs- bzw. Kühlanlage beispielsweise zu einer bestimmten Tageszeit, wie etwa dem Morgen, eine Überprüfung der Bezugsgröße(n) und eine etwa für erforderlich erachtete Korrektur in Richtung eines energieverlustminimalen Betriebes der Anlage vorzunehmen, indem bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei Vollast die Länge der Zeitspanne, während derer erstmalig die Verbraucherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung der Verbraucherleistung nach dem Zeitpunkt, zu dem nach dieser Zeitspanne mit praktisch konstantem Wert der Verbraucherleistung erstmalig eine Verringerung derselben auftritt, ermittelt und entsprechend dem Maß der Länge dieser Zeitspanne und/oder dem Maß der zeitlichen Änderung der Verbraucherleistung die Bezugsgröße(n) für den größeren und für den kleineren Sollwert der Schwankungsbreite der Verbraucherleistung verändert werden bzw. wird, vorzugsweise indem bei jeweils einer Bezugsgröße für den größeren und für den kleineren Sollwert der Schwankungsbreite der Verbraucherleistung gemäß größerer Länge dieser Zeitspanne und/oder kleinerem Maß der zeitlichen Änderung der Verbraucherleistung die Bezugsgröße für den größeren Sollwert um einen geringeren Betrag und die Bezugsgröße für den kleineren Sollwert um einen gegenüber diesem Betrag verhältnismäßig größeren Betrag und gemäß kleinerer Länge dieser Zeitspanne und/oder größerem Maß der zeitlichen Änderung der Verbraucherleistung die Bezugsgröße für den größeren Sollwert um einen größeren Betrag und die Bezugsgröße für den kleineren Sollwert um einen gegenüber diesem Betrag verhältnismäßig geringeren Betrag bzw. bei für den größeren und den kleineren Sollwert der Schwankungsbreite der Verbraucherleistung gemeinsamer Bezugsgröße gemäß größerer Länge dieser Zeitspanne und/oder kleinerem Maß der zeitlichen Änderung der Verbraucherleistung diese gemeinsame Bezugsgröße um einen geringeren Betrag und gemäß kleinerer Länge dieser Zeitspanne und/oder größerem Maß der zeitlichen Änderung der Verbraucherleistung diese Bezugsgröße um einen größeren Betrag verringert werden bzw. wird. Es hat sich nämlich herausgestellt, daß zweckmäßig sogar eine Proportionalitätsbeziehung zwischen der Länge der Zeitspanne mit praktisch konstanter Verbraucherleistung und/oder der Größe des Gradienten des Abfalls derselben nach Beendigung dieser Zeitspanne einerseits und der als Bezugsgröße dienenden und als Betriebsleistung bezeichneten Verbraucherleistung herstellbar ist. Entsprechend läßt sich zweckmäßig durch die Vorrichtung nach der Erfindung selbst aufgrund von ihr selbst gewonnener eigener Meßwertinformationen eine automatische Nachstellung dieser Bezugsgröße(n) durchführen. Die Lösung gemäß diesem untergeordneten Erfindungsgedanken stellt somit eine Art Selbstlernverhalten sicher.

Vorrichtungsseitig sieht die Erfindung für die Aufbereitung der für die Betriebsverbraucherleistung als Bezugsgröße bestimmenden Informationen und die Wahl dieser Bezugsgröße vor, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze ihres Sollwert-Bandes verbundenen Detektoreinrichtung zur Ermittlung der im Verlauf der Inbetriebnahme der Vorrichtung für Heizbetrieb oder für Kühlbetrieb jeweils bei Vollast als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebes bei Abkühlen nach einer Erwärmung jeweils bei Vollast als maximale Verbraucherleistung (Anfahrverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Schwankungsbreite der Verbraucherleistung auf sowohl bei Heizbetrieb als auch bei Kühlbetrieb einen Bruchteil dieser maximal möglichen Verbraucherleistung (Inbetriebnahmeverbraucherleistung) bzw. dieser maximalen Verbraucherleistung (Anfahrverbraucherleistung) und der zugeordneten unteren Grenze des Sollwert-Bandes der Schwankungsbreite der Verbraucherleistung auf einen willkürlich wählbaren Wert oder eine über eine Impulsleitung mit der Multipliziereinrichtung oder mit einer ihrerseits über eine Impulsleitung mit der Leistungsvergleichseinrichtung verbundenen Momentanwert-Abweichungs-Speichereinrichtung verbundene Betragsvergleichseinrichtung zur Ermittlung des Beginns und des Endes einer Zeitspanne mit praktisch konstantem Wert der Verbraucherleistung durch Bestimmung des Unterschiedes zwischen jeweilsletztem und vorletztem Momentanwert der Verbraucherleistung nebst einer über eine Impulsleitung mit der Detektoreinrichtung verbundenen Zeitspannen-Messeinrichtung zur Ermittlung der Länge der Zeitspanne mit praktisch konstantem Wert der Verbraucherleistung mit einer mit ihr über eine Impulsleitung verbundenen Zeitspannen-Vorgabe-und -Vergleichseinrichtung und einer Einschalt- und/oder Ausschalteinrichtung und/oder einer jeweils über eine Impulsleitung einerseits entweder mit der Betragsvergleichseinrichtung oder mit der Multipliziereinrichtung und andererseits mit einer Einrichtung zur Abgabe von Zeitspannen entsprechenden Impulsen verbundene Dividiereinrichtung zur Ermittlung des zeitlichen Gradienten der Verringerung der Verbraucherleistung nach Beendigung der Zeitspanne mit praktisch konstantem Wert derselben, die jeweils über eine Impulsleitung mit einer Gradienten-Vorgabe- und -Vergleichseinrichtung und einer vom Zeitpunkt des Endes der Zeitspanne mit praktisch konstantem Wert der Verbraucherleistung abhängigen Einschalt- und/oder Ausschalteinrichtung, vorzugsweise mit zumindest der Ausschalteinrichtung einer Zeitspannen-Messeinrichtung zur Ermittlung der Länge der Zeitspanne mit praktisch konstantem Wert der Verbraucherleistung, verbunden ist, und in allen Fällen eine oder je eine über jeweils eine Impulsleitung mit der bzw. einer der ihrerseits über jeweils eine Impulsleitung mit der bzw. einer der Sollwert-Bildungseinrichtung(en) verbundenen Niveaugabe-Einrichtung(en) verbundene Einrichtung zur automatischen Verstellung der zugeordneten Niveaugabe-Einrichtung im Sinne einer vom jeweils ermittelten Wert der maximal möglichen Verbraucherleistung (Inbetriebnahmeverbraucherleistung) und/oder der maximalen Verbraucherleistung (Anfahrverbraucherleistung) und/oder der Länge der Zeitspanne mit praktisch konstantem Wert der Verbraucherleistung und/oder des zeitlichen Gradienten der Verringerung der Verbraucherleistung nach Beendigung der Zeitspanne mit praktisch konstantem Wert der Verbraucherleistung abhängigen Erhöhung bzw. Verringerung des als Bezugsgröße für dieobere und/oder die untere Grenze des Sollwert-Bandes der Schwankungsbreite der Verbraucherleistung (Betriebsverbraucherleistung) dienenden jeweiligen Bruchteils der maximal möglichen Verbraucherleistung (Inbetriebnahmeverbraucherleistung) bzw. maximalen Verbraucherleistung (Anfahrverbraucherleistung) aufweist.

Durch die Festlegung bzw. Bestimmung der Betriebsverbraucherleistung als Bezugsgröße für die der oberen und die der unteren Grenze des Sollwert-Bandes der Schwankungsbreite der Verbraucherleistung entsprechende Schwankungsbreite derselben und zusätzlich hierzu auch der Schwankungsbreite für die Verbraucherleistung selbst kann gemäß einem die Erfindung in nicht naheliegender Weise fortbildenden untergeordneten Erfindungsgedanken sogar auch für kontinuierlich betriebene Heizungs- bzw. Kühlsysteme die Auswertung im Sinne einer Überprüfung, ob die der oberen oder unteren Grenze des Sollwert-Bandes entsprechende Schwankungsbreite der Verbraucherleistung über- bzw. unterschritten ist, auf einen arithmetischen Wertevergleich einer zweckmäßig vorgegebenen Anzahl solcher Werte reduziert werden. Für Verfahrensweisen, die gemäß einem oder mehreren der vorstehend erläuterten untergeordneten Erfindungsgedanken mit unterschiedlichen Bezugsgrößen für die die obere und die die untere Grenze des Sollwert-Bandes bestimmende Schwankungsbreite der Verbraucherleistung arbeiten, kann gemäß einem weiterbildenden untergeordneten Erfindungsgedanken die Zufuhr von Betriebsenergie zum Wärme- bzw. Kälteerzeuger verringert werden, wenn ein der um einen Bruchteil des größeren Sollwertes der Schwankungsbreite der Verbraucherleistung verringerten Bezugsgröße für diesen größeren Sollwert entsprechender Wert überschritten oder ein der um den Restbetrag des größeren Sollwertes der Schwankungsbreite der Verbraucherleistung verminderten Bezugsgröße für diesen größeren Sollwert entsprechender Wert unterschritten wird, und vergrößert werden, wenn wahrend einer vorbestimmten Zeitdauer ein der um einen Bruchteil des kleineren Sollwertes der Schwankungsbreite der Verbraucherleistung vermehrten Bezugsgröße für diesen kleineren Sollwert entsprechender Wert nicht überschritten und ein der um den Restbetrag des kleineren Sollwertes der Schwankungsbreite der Verbraucherleistung verminderten Bezugsgröße für diesen kleineren Sollwert entsprechender Wert nicht unterschritten wird. Hier hat sich eine Fortbildung bewährt, gemäß welcher nach einer Veränderung der Zufuhr von Betriebsenergie zum Wärme- bzw. Kälteerzeuger, die als eine von mehreren möglichen Arten von Regelvorgängen zu bezeichnen ist, als neue bezugsgrößen für den größeren und für den kleineren Sollwert der Schwankungsbreite der Verbraucherleistung jeweils den im Verhältnis der sich unmittelbar danach oder nach einer vorbestimmten Zeitspanne einstellenden Verbraucherleistung zur vorangegangenen Verbraucherleistung verminderten bzw. vergrößerten Bezugsgrößen für den größeren und für den kleineren Sollwert entsprechende Werte gewählt werden. Hierdurch ergibt sich eine Art Selbstlernvorgang für die Führungsgröße des Regelungsverfahrens nach der Erfindung. Sollte diese nämlich aus irgendwelchen Gründen nicht spezifisch auf die äußeren und insbesondere inneren anlagenspezifischen und/oder aufgrund von Klimazone und/oder Lage und/oder Wärmedämmung oder dergleichen verbrauchereigenen und/oder die nutzerbezogenen Eigenschaften der jeweiligen Heizungs- bzw. Kühlanlage von vornherein abgestimmt sein können, wie das selbst dann nicht zu erwarten ist, wenn herstellerseitig oder seitens des Installateurs der Anlage ein im allgemeinen als durchschnittlichen Bedürfnissen gerecht werdender Vorgabewert der durch die Schwankungsbreite der Verbraucherleistung bestimmten Führungsgröße für die erfindungsgemäße Regelung eingestellt wird, so liefert dieser Aspekt der Erfindung eine bei in diskontinuierlichem Betrieb arbeitenden Systemen nicht zu realisierende Automatik, die es ermöglicht, unabhängig von jedweder Voreinstellung und/oder Justierung durch den Heizungsbauer über eine einen schnellen Zugriff ermöglichende Betriebsgröße in Form der Zufuhr von Betriebsenergie zum Wärme- bzw. Kälteerzeuger die optimale Führungsgröße zu generieren. Für Verfahrensformen, die gemäß einem oder mehreren vorstehend bereits beschriebenen untergeordneten Erfindungsgedanken mit für die der oberen Grenze und die der unteren Grenze des Sollwert-Bandes entsprechende Schwankungsbreite gemeinsamer zentrischer Bezugsgröße arbeiten, sieht eine alternative Fortbildung der Erfindung vor, daß die Zufuhr von Betriebsenergie zum Wärme- bzw. Kälteerzeuger verringert wird, wenn ein der um die Hälfte des größeren Sollwertes der Schwankungsbreite der Verbraucherleistung vermehrten Bezugsgröße entsprechender Wert überschritten oder ein der um die Hälfte des größeren Sollwertes der Schwankungsbreite der Verbraucherleistung verminderten Bezugsgröße entsprechender Wert unterschritten wird, und vergrößert wird, wenn während einer vorbestimmten Zeitdauer ein der um die Hälfte des kleineren Sollwertes der Schwankungsbreite der Verbraucherleistung vermehrten Bezugsgröße entsprechender Wert nicht überschritten und ein der um die Hälfte des kleineren Sollwertes der Schwankungsbreite der Verbraucherleistung verminderten Bezugsgröße entsprechender Wert nicht unterschritten wird. Hierbei ist zu bemerken, daß es sich um einen Sonderfall handelt, bei dem sowohl die der oberen Grenze des Sollwert-Bandes entsprechende Schwankungsbreite der Verbraucherleistung als auch die der unteren Grenze des Sollwert-Bandes derselben entsprechende Schwankungsbreite jeweils symmetrisch zum als Bezugsgröße dienenden und als Betriebsverbraucherleistung bezeichneten Leistungsniveau liegen. Es ist aber im Rahmen dieses untergeordneten Erfindungsgedankens durchaus auch möglich, wenn eine oder beide dieser die obere bzw. untere Grenze des Sollwert-Bandes bestimmenden Schwankungsbreite(n) asymmetrisch zu der gemeinsamen Bezugsgröße liegen.

Für den weiteren bei der Erfindung in vorstehend bereits beschriebener Weise möglichen Sonderfall tangential zueinander liegender der oberen Grenze bzw. der unteren Grenze entsprechender Schwankungsbreiten der Verbraucherleistung wird gemäß einem hierauf gerichteten untergeordneten Erfindungsgedanken die Zufuhr von Betriebsenergie zum Wärme- bzw. Kälteerzeuger verringert, wenn ein der Bezugsgröße oder ein der um den größeren Sollwert vermehrten Bezugsgröße, entsprechender Wert überschritten oder ein der um den größeren Sollwert verminderten Bezugsgröße oder ein dieser selbst entsprechender Wert unterschritten wird, und vergrößert, wenn während einer vorbestimmten Zeitdauer ein der Bezugsgröße oder ein der um den kleineren Sollwert vermehrten Bezugsgröße entsprechender Wert nicht überschritten und ein der um den kleineren Sollwert verminderten Bezugsgröße oder ein dieser selbst entsprechender Wert nicht unterschritten wird.

Auch für die Varianten der Erfindung mit Verfahrensführung, bei der die Bezugsgröße für die der oberen bzw. der unteren Grenze des Sollwert-Bandes entsprechenden Schwankungsbreiten der Verbraucherleistung sich auf eine gemeinsame Bezugsgröße beziehen, läßt sich der für die Varianten der Erfindung, die hier mit für beide Grenzen des Sollwert-Bandes unterschiedlichen Bezugsgrößen arbeiten, beschriebene Selbstlernautomatik verwirklichen, wenn gemäß einem entsprechenden untergeordneten Erfindungsgedanken nach einer Veränderung der Zufuhr von Betriebsenergie zum Wärme- bzw. Kälteerzeuger die sich unmittelbar danach oder nach einer vorbestimmten Zeitspanne einstellende Verbraucherleistung als neue Bezugsgröße für den der oberen und den der unteren Grenze des Sollwert-Bandes der Schwankungsbreite der Verbraucherleistung entsprechenden Wert derselben gewählt wird. Dabei stellen sich auch hier die im Zusammenhang mit den erfindungsgemäßen Verfahrensführungen mit für beide Grenzen des Sollwert-Bandes der Schwankungsbreite der Verbraucherleistung unterschiedlichen Bezugsgrößen beschriebenen Vorteile gleichermaßen ein, so daß sich eine wiederholende Darstellung derselben erübrigt.

Für die verfahrensmäßige Durchführung aller dieser mit verfahrensmäßiger und/oder implementierungstechnischer Selbstlernautomatik arbeitenden Varianten hat es sich ungeachtet dessen, wie die Bezugsgröße(n) für die Grenzen des Sollwert-Bandes der Schwankungsbreite der Verbraucherleistung gelegt werden bzw. wird, weiterhin als zweckmäßig erwiesen, wenn der der oberen und/oder der der unteren Grenze des Sollwert-Bandes der Schwankungsbreite der Verbraucherleistung entsprechende Wert derselben jeweils entsprechend der Änderung seiner Bezugsgröße verändert wird, indem er bei Vergrößerung seiner Bezugsgröße vergrößert und bei Verringerung seiner Bezugsgröße verringert wird. Vorrichtungstechnisch kann hierfür zweckmäßig vorgesehen sein, daß die Regeleinrichtung jeweils eine über eine Impulsgabeeinrichtung mit der bzw. jeder der Niveaugabe-Einrichtung(en) verbundene Rückmeldeeinrichtung zur Rückmeldung des als Bezugsgröße für die obere und/oder die untere Grenze der Schwankungsbreite der Verbraucherleistung dienenden Wertes derselben aufweist, die jeweils über je eine Impulsleitung entweder mit der bzw. einer der Einrichtung(en) zur automatischen Betätigung der bzw. einer der Sollwert-Bildungseinrichtung(en) oder über je eine Impulsleitung einerseits mit der bzw. jeweils einer der Sollwert-Bildungseinrichtung-(en) und andererseit mit dem bzw. einem der jeweils zugeordneten Sollwertgeber(n) verbunden ist.

Durch die in Vervollkommnung der Erfindung vorgenommene Einführung der Betriebsverbraucherleistung als Bezugsgröße für die obere und/oder die untere Grenze des Sollwert-Bandes der Schwankungsbreite der Verbraucherleistung gelingt es also überraschend, nicht nur zwei Maße eines der oberen und der unteren Grenze dieses Sollwert-Bandes entsprechenden Wertes der Schwankungsbreite im Verlauf der Zeit ständig auf ihre Zulässigkeit überprüfen zu müssen, was im Prinzip nur durch ständige Beobachtung der Verbraucherleistung im Sinne einer Überwachung derselben gelingt, sondern statt dessen die Verbraucherleistung als Funktion der Zeit wertmäßig auf vier oder drei Grenzwerte abzufragen, wodurch sich für alle auf ein entsprechendes Selbstlernverhalten gerichteten verfahrensmäßigen ebenso wie vorrichtungstechnischen Varianten der Erfindung die Lösung der zugrundeliegenden Aufgabe implementierungstechnisch auf die Realisierung eines Vier- oder Drei-Punkt-Reglers reduzieren läßt. Die implementierungsmäßigen ebenso wie die verfahrensführungsmäßigen Vorteile liegen nicht zuletzt in der sich ergebenden Möglichkeit für vielfältige Vereinfachungen und entsprechende Senkungen des Gestehungspreises einer die Erfindung beinhaltenden Vorrichtung ebenso wie der Betriebskosten derselben insbesondere im Hinblick auf weitestgehende Vermeidung von Energieverlusten und insgesamt somit in einer ausgezeichneten Wirtschaftlichkeit.

Es ist eine sich in Vervollkommnung der Erfindung stellende untergeordnete Aufgabe, trotz der nicht zu übersehenden Vorteile der Lösung der regeltechnischen Aufgabe ohne Zeitbetrachtung der Führungsgröße für kontinuierlich betriebene Heizungs- bzw. Kühlsysteme eine entsprechende Lösung in eleganter und universeller Weise auch unter Einbezug des Zeitverhaltens der Führungsgröße vornehmen zu können. Sie wird gemäß einem untergeordneten Erfindungsgedanken dadurch gelöst, daß für jedes Ergebnis einer Mehrzahl von Bestimmungen der Verbraucherleistung der Unterschied zwischen ihm und dem vorangegangenen Ergebnis dieser Mehrzahl von Bestimmungen der Verbraucherleistung als Schwankung derselben betragsmäßig ermittelt und bei Auftreten einer vorbestimmten Anzahl von monoton steigenden Ergebnissen einer Mehrzahl von Ermittlungen der Schwankung der Verbraucherleistung vorzugsweise mit Überschreiten der oberen Grenze des Sollwert-Bandes der Schwankungsbreite der Verbraucherleistung die Zufuhr von Betriebsenergie zum Wärme- bzw. Kälteerzeuger verringert und bei Auftreten einer vorbestimmten Anzahl von monoton fallenden oder praktisch gleichbleibenden Ergebnissen einer Mehrzahl von Ermittlungen der Schwankung der Verbraucherleistung mit Unterschreiten der unteren Grenze des Sollwert-Bandes der Schwankungsbreite der Verbraucherleistung die Zufuhr von Betriebsenergie zum Wärme- bzw. Kälteerzeuger vergrößert wird. Vorrichtungsseitig wird dann in Vervollkommnung der Erfindung hierfür vorgesehen, daß die Regeleinrichtung entweder eine über eine Impulsleitung mit der Multipliziereinrichtung verbundene Betragsvergleichseinrichtung zur Bestimmung des Unterschiedes zwischen jeweils letztem und vorletztem Momentanwert der Verbraucherleistung oder eine über eine Impulsleitung mit der Leistungsvergleichseinrichtung verbundene Momentanwert-Abweichungs-Speichereinrichtung zur Speicherung der Unterschiede zwischen jeweils letztem und vorletztem Momentanwert der Verbraucherleistung aufweist, wobei die Betragsvergleichseinrichtung bzw. die Momentanwert-Abweichungs-Speichereinrichtung jeweils über eine Impulsleitung mit einer Tendenzvergleichseinrichtung zur Bestimmung der Tendenz der Veränderung der Unterschiede zwischen jeweils letztem und vorletztem Momentanwert der Verbraucherleistung verbunden ist, die ihrerseits über jeweils eine Impulsleitung einerseits mit einer Zahlvorgabeeinrichtung zur willkürlichen Vorgabe einer als Auslöseschwelle für die Betätigung des Stellbefehlgebers wirkenden Anzahl solcher Unterschiede zwischen jeweils letztem und vorletztem Momentanwert der Verbraucherleistung und andererseits über ein Zählwerk für diese Unterschiede zwischen jeweils letztem und vorletztem Momentanwert der Verbraucherleistung mit dem Stellbefehlgeber und mit einer Stellungsanzeigeeinrichtung zur Rückmeldung des Betriebszustandes des Stellbefehlgebers verbunden ist.

Ersichtlich bringt die Maßnahme, einen sogenannten "Scanner", also eine Betragsvergleichseinrichtung zur Bestimmung des Unterschiedes zwischen jeweils letztem und vorletztem Momentanwert der Verbraucherleistung oder eine Momentanwert-Abweichungs-Speichereinrichtung zur Speicherung der Unterschiede zwischen jeweils letztem und vorletztem Momentanwert der Verbraucherleistung jeweils in Verbindung mit einer Tendenzvergleichseinrichtung zur Bestimmung der Tendenz der Veränderung der Unterschiede zwischen jeweils letztem und vorletztem Momentanwert der Verbraucherleistung mit entsprechenden peripheren Informationszuführungseinrichtungen vorzusehen, einen überlegenen Aspekt mit sich, indem nämlich durch diese erfinderische Weiterbildung sowohl des Verfahrens als auch der Vorrichtung nach der Erfindung bereits aus dem Verlauf der "Meß"-Ergebnisse gewisse Tendenzen abzuleiten und schon dann Stellbefehle auszulösen sind, wenn und obgleich die als "Meß"-Ergebnisse tatsächlich ermittelten Werte der Schwankungsbreite der Verbraucherleistung noch keineswegs die eine oder andere Grenze ihres Sollwert-Bandes passiert zu haben brauchen.

Gemäß einem anderen untergeordneten Gedanken ermöglicht die Erfindung erstmalig eine echte Regelung einer mit einer Mehrwege-Mischeinrichtung arbeitenden Heizungs- bzw. Kühlanlage, indem bei dieser erfindungsgemäßen Regelung erstmalig nicht von einer gemessenen Ist-Größe her Veränderungseinfluß auf den bestimmenden Sollwert genommen wird, also bereits vom Prinzip her jede Möglichkeit für ein Mitkopplungsverhalten und damit unkontrollierte Regelschwingungen ausgeschlossen ist, zumal auch in einem solchen Einsatzfall der Erfindung diese unabhängig ist von der Verwendung irgendwelcher Verknüpfungsalgorithmen für irgendwelche für das Betriebsverhalten der Heizungs- bzw. Kühlanlage für relevant gehaltene physikalische Größen nach Art der herkömmlichen Steuerungsarten. Für einen solchen Fall, bei dem die Veränderung der dem im Heizungs-bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, sieht dieser untergeordnete Erfindungsgedanken vor, daß bei Auftreten einer Abweichung der Schwankung der Verbraucherleistung über die obere oder unter die untere Grenze des vorgegebenen Sollwert-Bandes ihrer Schwankungsbreite die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert und die sich unmittelbar danach oder nach einer vorgegebenen Zeitspanne einstellende Verbraucherleistung und die Differenz zwischen dieser und der Verbraucherleistung, deren Schwankungsbreite für die vorangegangene Abweichung bestimmend war, ermittelt und mit dieser Differenz als der Grenze des Sollwert-Bandes der Schwankungsbreite der Verbraucherleistung, die für die vorangegangene Abweichung bestimmend war, entsprechender neuer Grenze dieses Sollwert-Bandes diese Veränderung der Zufuhr von Wärme- bzw. Kälteleistung zum im Heizungs- bzw. Kühlmittelvorlauf befindlichen Wärmeträgermedium wiederholt wird, sobald wiederum eine Abweichung der Schwankung der Verbraucherleistung über die obere oder unter die untere Grenze dieses durch diese neue Grenze bestimmten Sollwert-Bandes ihrer Schwankungsbreite auftritt. In zweckmäßiger Fortbildung dieses untergeordneten Erfindungsgedankens kann dabei der Anteil des vom Wärme- bzw. Kälteerzeuger her in den Heizungs-bzw. Kühlmittelvorlauf eingespeisten Massenstroms zum Gesamtmassenstrom bei Auftreten einer Abweichung der Schwankung der Verbraucherleistung über die obere Grenze des vorgegebenen Sollwert-Bandes ihrer Schwankungsbreite hinaus verringert und bei Auftreten einer Abweichung der Schwankung der Verbraucherleistung unter die untere Grenze des vorgegebenen Sollwert-Bandes ihrer Schwankungsbreite vergrößert werden. Vorrichtungsmäßig wird entsprechend vorgesehen, daß als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Mehrwege-Mischeinrichtung, beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs-bzw. Kühlmittelrücklauf kommenden Beimischleitung für Wärmeträgermedium verbindender Drei-Wege-Mischer oder ein den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen ist und daß die Regeleinrichtung einen einen während der Betriebsdauer der Vorrichtung ständig vorhandenen modulierten Stellbefehl abgebenden Stellbefehlgeber, mittels dessen dem Antrieb der Mehrwege-Mischeinrichtung die Stellbefehle als betragsmäßige Modulationsunterschiede eines während der Betriebsdauer der Vorrichtung ständig anstehenden Betriebsbefehls zuführbar sind, wobei jeweils bei Ermittlung einer Abweichung der Schwankung der Verbraucherleistung über die obere oder unter die untere Grenze des vorgegebenen Sollwert-Bandes ihrer Schwankungsbreite hinaus die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs-bzw. Kühlmittelvorlauf eingespeisten Massenstroms zum Gesamtmassenstrom und/oder der Stellung des dieses Verhältnis bestimmenden Organs der Mehrwege-Mischeinrichtung veränderbar ist, und eine über jeweils eine Impulsleitung einerseits mit der Zeitprogrammgabeeinrichtung zur Einleitung kontinuierlicher oder in vorgegebenen Zeitabständen stattfindender Gewinnung zeitgleicher Messwerte von Vorlauf-und Rücklauftemperatur sowie mit der Messeinrichtung für den Gesamtmassenstrom des Wärmeträgermediums und andererseits mit der Multipliziereinrichtung zur kontinuierlichen oder in vorgegebenen Zeitabständen stattfindender Gewinnung von Momentanwerten der Verbraucherleistung verbundene Abweichungsvergleichseinrichtung aufweist, die ihrerseits über Impulsleitungen mit einer Einrichtung zur automatischen Verstellung eines oder beider Sollwertgeber(s) oder mit jeweils einer einem jeden Sollwertgeber zugeordneten Einrichtung zur automatischen Verstellung desselben verbunden ist.

Dieser untergeordnete Erfindungsgedanken bietet aber auch eine Alternative für den Betrieb einer Heizungs- bzw. Kühlanlage, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, indem bei Auftreten einer Abweichung der Schwankung der Verbraucherleistung über die obere Grenze des vorgegebenen Sollwert-Bandes ihrer Schwankungsbreite hinaus die dem im Heizungs- bzw. Kühlmittelvorlauf befindlichen Wärmeträgermedium zugeführte Wärme- bzw. Kälteleistung dadurch verringert wird, daß der Sollwert der Vorlauftemperatur des Wärmeträgermediums bei Heizbetrieb verringert und bei Kühlbetrieb erhöht wird, und bei während einer vorbestimmten Zeitdauer auftretender Abweichung der Schwankung der Verbraucherleistung unter die untere Grenze des vorgegebenen Sollwert-Bandes ihrer Schwankungsbreite die dem im Heizungs- bzw. Kühlmittelvorlauf befindlichen Wärmeträgermedium zugeführte Wärme- bzw. Kälteleistung dadurch vergrößert wird, daß der Sollwert der Vorlauftemperatur des Wärmeträgermediums bei Heizbetrieb erhöht und bei Kühlbetrieb verringert wird. Die diesem untergeordneten Erfindungsgedanken entsprechende vorrichtungsmäßige Ausgestaltung der Erfindung wird dabei so getroffen, daß als über die Steuerleitung mit der Regeleinrichtung verbundene Einrichtung zur Beeinflussung der in den Heizungs- bzw. Kühlmittelvorlauf eingespeisten Wärme- bzw. Kälteleistung eine Mehrwege-Mischeinrichtung, beispielsweise ein den jeweiligen Wärmeträgermediumsausgang des Wärme- bzw. Kälteerzeugers einerseits mit dem Heizungs- bzw. Kühlmittelvorlauf und andererseits einer vom Heizungs- bzw. Kühlmittelrücklauf kommenden Beimischleitung für Wärmeträgermedium verbindender Drei-Wege-Mischer oder ein den Wärmeträgermediumsausgang des Wärme- bzw. Kälteerzeugers und/oder den Heizungs- bzw. Kühlmittelrücklauf jeweils mit dem Heizungs- bzw. Kühlmittelvorlauf sowie den Wärmeträgermediumsausgang des Wärme- bzw. Kälteerzeugers und/oder den Heizungs- bzw. Kühlmittelrücklauf mit einer an den Wärmeträgermediumseingang des Wärme- bzw. Kälteerzeugers angeschlossenen Rückführleitung verbindender Vier-Wege-Mischer, vorgesehen ist und daß die Regeleinrichtung einen einen während der Betriebsdauer der Vorrichtung ständig vorhandenen modulierten Stellbefehl abgebenden Stellbefehlgeber mittels dessen dem Antrieb der Mehrwege-Mischeinrichtung die Stellbefehle als betragsmäßige Modulationsunterschiede eines während der Betriebsdauer der Vorrichtung ständig anstehenden Betriebsbefehls zuführbar sind, wobei die Zufuhr von Wärme- bzw. Kälteleistung zum im Heizungs- bzw. Kühlmittelvorlauf befindlichen Wärmeträgermedium jeweils bei Ermittlung einer Abweichung der Schwankung der Verbraucherleistung über die obere Grenze des vorgegebenen Sollwert-Bandes ihrer Schwankungsbreite hinaus durch bei Heizbetrieb Verringerung und bei Kühlbetrieb Erhöhung des Sollwertes der Vorlauftemperatur des Wärmeträgermediums verringerbar und jeweils bei Ermittlung einer Abweichung der Schwankung der Verbraucherleistung während einer vorbestimmten Zeitdauer unter die untere Grenze des vorgegebenen Sollwert-Bandes ihrer Schwankungsbreite durch bei Heizbetrieb Erhöhung und bei Kühlbetrieb Verringerung des Sollwertes der Vorlauftemperatur des Wärmeträgermediums vergrößerbar ist.

Bei beiden Varianten dieses Erfindungsgedankens ist es ebenso wie bei den sich mit diskontinuierlicher oder kontinuierlicher Zufuhr der Wärme- bzw. Kälteleistung zum im Heizungs- bzw. Kühlmittelvorlauf befindlichen Wärmeträgermedium über diskontinuierliche oder kontinuierliche Beeinflussung der Zufuhr von Betriebsenergie zum Wärme- bzw. Kälteerzeuger befassenden Erfindungsgedanken möglich, zur Lösung einer entsprechenden untergeordneten Aufgabe in zweckmäßiger Weise die für eine bestimmte Heizungs- bzw. Kühlanlage der hier angesprochenen Art mit von der Art diskontinuierlichen oder kontinuierlichen Betriebs des Wärme- bzw. Kälteerzeugers unabhängiger, über die eingesetzte Mehrwege-Mischeinrichtung kontinuierlich geregelter Betriebsweise der Anlage aufgrund der Gesamtheit der Einflußgrößen, denen sie unterliegt, optimale Führungsgröße zu ermitteln. Hierfür sieht ein die Erfindung entsprechend weiterbildender Aspekt derselben vor, daß bei Inbetriebnahme des Verfahrens für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximal möglichen Verbraucherleistung (Inbetriebnahmeverbraucherleistung) und der kleinere Sollwert der Schwankungsbreite der Verbraucherleistung entsprechend einem im Vergleich zu diesem Bruchteil kleineren Bruchteil dieser maximal möglichen Verbraucherleistung (Inbetriebnahmeverbraucherleistung), vorzugsweise einem im Bereich zwischen etwa einem Zehntel und der Hälfte liegenden Bruchteil des dem größeren Sollwert der Schwankungsbreite der Verbraucherleistung entsprechenden Wertes derselben, gewählt wird. Auch hier empfiehlt sich diese Verfahrensweise mit Vorzug für die als "Jungfernfahrt" zu bezeichnende erstmalige Inbetriebnahme einer mit der Erfindung ausgerüsteten Heizungs- bzw. Kühlanlage, zumal sie dann die für diese tatsächlich mögliche maximale Schwankungsbreite der Verbraucherleistung bei für maximale Zuspeisung von Wärmeträgermedium vom Wärme- bzw. Kälteerzeuger her voller Offenstellung der Mehrwege-Mischeinrichtung und vorzugsweise auch voller Öffnung aller Drosseleinrichtungen als die einzige relevante Größe, in der alle auf die Heizungs- bzw. Kühlanlage wirkenden Einflußgrößen enthalten sind, erbringt, ohne daß diese im einzelnen bestimmt oder gemessen zu werden bräuchten.

Gleichermaßen sieht hier eine zweckmäßige Weiterbildung dieses untergeordneten Erfindungsgedankens vor, daß bei Heizbetrieb für Aufheizen nach einer Abkühlung bzw. bei Kühlbetrieb für Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximalen Verbraucherleistung (Anfahrverbraucherleistung) und der kleinere Sollwert der Schwankungsbreite der Verbraucherleistung entsprechend einem im Vergleich zu diesem Bruchteil kleineren Bruchteil dieser maximalen Verbraucherleistung (Anfahrverbraucherleistung), vorzugsweise einem im Bereich zwischen etwa einem Zehntel und der Hälfte liegenden Bruchteil des dem größeren Sollwert der Schwankungsbreite der Verbraucherleistung entsprechenden Wertes derselben, gewählt wird.

Vorrichtungsseitig erreicht dies die Erfindung dadurch, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze des Sollwert-Bandes ihrer Schwankungsbreite verbundenen Detektoreinrichtung zur Ermittlung der im Verlauf der Inbetriebnahme der Vorrichtung für Heizbetrieb oder für Kühlbetrieb jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebs bei Abkühlen nach einer Erwärmung bei dem Heizungs- bzw. Kühlmittelvorlauf vom Wärme- bzw.

Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Schwankungsbreite der Verbraucherleistung auf sowohl bei Heizbetrieb als auch bei Kühlbetrieb einen Bruchteil dieser maximal möglichen Verbraucherleistung (Inbetriebnahmeverbraucherleistung) bzw. dieser maximalen Verbraucherleistung (Anfahrverbraucherleistung) und der zugeordneten unteren Grenze des Sollwert-Bandes der Schwankungsbreite der Verbraucherleistung auf einen willkürlich wählbaren Wert aufweist, wobei dieser willkürlich wählbare Wert entsprechend einem kleineren Bruchteil der maximal möglichen Verbraucherleistung (Inbetriebnahmeverbraucherleistung) bzw. der maximalen Verbraucherleistung (Anfahrverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, wählbar ist. Es ist evident, daß erstmalig für eine Regelung einer Heizungs- bzw. Kühlanlage mit von der Art kontinuierlichen oder diskontinuierlichen, vorzugsweise aber diskontinuierlichen Betriebes des Wärme- bzw. Kälteerzeugers über kontinuierliche Regelverstellung einer Mehrwege-Mischeinrichtung unabhängigem kontinuierlichem Betrieb derselben nicht nur die Bestimmungsfunktion der ursprünglichen Inbetriebnahmeverbraucherleistung für die Festlegung der Führungsgröße der Regelung in Form des erfindungsgemäßen Sollwert-Bandes nutzbar gemacht werden, sondern diese Bestimmungsfunktion auch mit allen bereits für alle sich mit anderen Betriebsarten von Heizungs- bzw. Kühlanlagen mit diskontinuierlichem oder kontinuierlichem Betrieb ihres Wärme- bzw. Kälteerzeugers über diskontinuierliche oder kontinuierliche Zufuhr der Betriebsenergie für diesen erläuterten Vorteilen von der Anfahrverbraucherleistung übernommen werden kann.

Die sich mit dem Betrieb von mit einer Mehrwege-Mischeinrichtung arbeitenden Heizungs- bzw. Kühlanlagen befassende Variante der Erfindung bietet gemäß einem diese zweckmäßig weiterbildenden untergeordneten Erfindungsgedanken in gleicher Weise wie die entsprechende Weiterbildung der sich mit dem Betrieb von mit der Erfindung ausgestatteten Heizungs- bzw. Kühlanlagen mit kontinuierlich arbeitendem Wärme- bzw. Kälteerzeuger befassende Variante auch noch eine andere vorteilhafte Möglichkeit, die erfindungsgemäß durch die Bandbreite des Sollwert-Bandes der Schwankungsbreite der Verbraucherleistung bestimmte Führungsgröße für die erfindungsgemäße Regelung so zu bestimmen, daß der Vorgabewert für diese Führungsgröße besonders schnell zur Verfügung steht. Es kann nämlich gemäß diesem hierfür vorgesehenen Erfindungsgedanken mit Vorteil bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Länge der Zeitspanne, während derer erstmalig die Verbraucherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung der Verbraucherleistung nach dem Zeitpunkt, zu dem nach dieser Zeitspanne mit praktisch konstantem Wert der Verbraucherleistung erstmalig eine Verringerung derselben auftritt, ermittelt und entsprechend dem Maß der Länge dieser Zeitspanne und/oder dem Maß der zeitlichen Änderung dieser Verbraucherleistung der größere und der kleinere vorgegebene Sollwert der Schwankungsbreite der Verbraucherleistung verändert werden, indem bei größerer Länge dieser Zeitspanne und/oder kleinerem Maß der zeitlichen Änderung dieser Verbraucherleistung beide vorgegebenen Sollwerte der Schwankungsbreite der Verbraucherleistung um einen geringeren Betrag und bei kleinerer Länge dieser Zeitspanne und/oder größerem Maß der zeitlichen Änderung dieser Verbraucherleistung beide vorgegebenen Sollwerte der Schwankungsbreite der Verbraucherleistung um einen größeren Betrag verringert werden. Dem wird vorrichtungsmäßig die Erfindung dadurch gerecht, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und/oder unter die untere Grenze des Sollwert-Bandes ihrer Schwankungsbreite verbundenen Detektoreinrichtung zur Ermittlung der im Verlauf der Inbetriebnahme der Vorrichtung für Heizbetrieb oder für Kühlbetrieb jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebs bei Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinichtung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung, ferner eine über eine Impulsleitung mit der Multipliziereinrichtung oder mit einer ihrerseits über eine Impulsleitung mit der Leistungsvergleichseinrichtung verbundenen Momentanwert-Abweichungs-Speichereinrichtung verbundene Betragsvergleichseinrichtung zur Ermittlung des Beginns und des Endes einer Zeitspanne mit praktisch konstantem Wert der Verbraucherleistung durch Bestimmung des Unterschiedes zwischen jeweils letztem und vorletztem Momentanwert der Verbraucherleistung und eine über eine Impulsleitung mit der Detektoreinrichtung verbundene Zeitspannen-Messeinrichtung zur Ermittlung der Länge der Zeitspanne mit praktisch konstantem Wert der Verbraucherleistung mit einer mit ihr über eine Impulsleitung verbundenen Zeitspannen-Vorgabe- und -Vergleichseinrichtung und mit einer Einschalt- und einer Ausschalteinrichtung, die ihrerseits über eine Impulsleitung mit der Betragsvergleichseinrichtung verbunden sind, wobei zumindest die Ausschalteinrichtung vorzugsweise auch mit der Detektoreinrichtung über eine Impulsleitung verbunden ist, und/oder jeweils über eine Impulsleitung einerseits entweder mit der Betragsvergleichseinrichtung oder mit der Multipliziereinrichtung und andererseits mit einer Einrichtung zur Abgabe von Zeitspannen entsprechenden Impulsen verbundene Dividiereinrichtung zur Ermittlung des zeitlichen Gradienten der Verringerung der Verbraucherleistung nach Beendigung der Zeitspanne mit praktisch konstantem Wert derselben, die jeweils über eine Impulsleitung mit einer Gradienten-Vorgabe-und -Vergleichseinrichtung mit einer vom Zeitpunkt des Endes der Zeitspanne mit praktisch konstantem Wert der Verbraucherleistung abhängigen Einschalt- und/oder Ausschalteinrichtung, vorzugsweise mit zumindest der Ausschalteinrichtung einer Zeitspannen-Messeinrichtung zur Ermittlung der Länge der Zeitspanne mit praktisch konstantem Wert der Verbraucherleistung, verbunden ist, aufweist, wobei die bzw. jede der Sollwert-Bildungseinrichtung(en) über jeweils eine Impulsleitung einerseits mit der Detektoreinrichtung und andererseits mit der Zeitspannen-Messeinrichtung unmittelbar oder über deren Zeitspannen-Vorgabe- und -Vergleichseinrichtung bzw. mit der Dividiereinrichtung unmittelbar oder über deren Gradienten-Vorgabe- und -Vergleichseinrichtung sowie in jedem Fall mit dem Stellbefehlgeber verbunden ist bzw. sind. In bezug auf die Flinkheit der Detektion des optimalen Wertes für die Führungsgröße aus der Länge der Zeitspanne mit praktisch konstant bleibender Verbraucherleistung und/oder aus dem zeitlichen Gradienten des Abfalls der Verbraucherleistung nach dem Ende dieser Zeitspanne sind hier die gleichen Vorteile gegeben, wie bei der mit kontinuierlicher Beeinflussung der Zufuhr von Betriebsenergie zum Wärme- bzw. Kälteerzeuger zwecks kontinuierlicher Änderung der Zufuhr von Wärme- bzw. Kälteleistung zum im Heizungs- bzw. Kühlmittelvorlauf befindlichen Wärmeträgermedium arbeitenden Ausführungsvariante der Erfindung. Gleichermaßen hat die letztbeschriebene Ausführung auch im Vergleich zur Erst-Inbetriebnahme der Anlage wesentlichere Bedeutung für das Hochfahren derselben aus beispielsweise deren Nachtbetrieb in deren Arbeitsbetrieb, da dieser sogenannte "Anfahrvorgang" sich praktisch von Tag zu Tag wiederholt und bei schneller Überprüfung und/oder gegebenenfalls Nachkorrektur der Führungsgröße zu besonderen Energieeinsparungen zu führen vermag.

Auch bei in beschriebener Weise mit einer Mehrwege-Mischeinrichtung arbeitenden Heizungs- bzw. Kühlanlagen läßt bzw. lassen sich eine oder zwei zugeordnete Bezugsgrößen definieren, wobei diese auch hier als Betriebsverbraucherleistung zu bezeichnen sind. Für den Fall je einer eigenen der oberen und der unteren Grenze des Sollwert-Bandes zugeordneten Bezugsgröße (Betriebsverbraucherleistung) wird hier gemäß dem entsprechenden untergeordneten Erfindungsgedanken als solche Bezugsgröße für den größeren und den kleineren Sollwert der Schwankungsbreite der Verbraucherleistung jeweils ein willkürlich vorgegebener Wert der Verbraucherleistung (Betriebsverbraucherleistung) gewählt, während es auch bei mit einer Mehrwege-Mischeinrichtung arbeitenden Heizungs- bzw. Kühlanlagen gemäß einem hierzu alternativen untergeordneten Erfindungsgedanken möglich ist, als gemeinsame Bezugsgröße für den größeren und den kleineren Sollwert der Schwankungsbreite der Verbraucherleistung einen willkürlich vorgegebenen Wert der Verbraucherleistung (Betriebsverbraucherleistung) zu wählen. Dem wird der zugeordnete vorrichtungsmäßige Aspekt der Erfindung dadurch gerecht, daß der bzw. Jeder der Sollwert-Bildungseinrichtung(en) jeweils eine mit dieser bzw. diesen über je eine Impulsleitung verbundene Niveaugabeeinrichtung vor- oder nachgeschaltet ist, mittels derer als Bezugsgröße für den größeren und für den kleineren Sollwert der Schwankungsbreite der Verbraucherleistung jeweils ein willkürlich gewählter Wert der Verbraucherleistung vorgebbar ist. Es stellen sich hier die gleichen Vorteile ein, wie diese Im Zusammenhang mit den entsprechenden Ausführungen der Erfindung mit in kontinuierlichem Betrieb arbeitendem Wärme- bzw. Kälteerzeuger bereits erläutert sind.

Gleiches gilt auch für die flinke Festlegung der Bezugsgröße(n) aus der Erst-Inbetriebnahme der Anlage ("Jungfernfahrt") bzw. dem sich täglich wiederholenden Anfahrvorgang auch bei mit Mehrwege-Mischeinrichtung arbeitenden Heizungs- bzw. Kühlanlagen. Für den ersteren Fall sieht der betreffende untergeordnete Erfindungsgedanke vor, daß bei Inbetriebnahme des Verfahrens für Heizbetrieb oder für Kühlbetrieb bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein Bruchteil dieser maximal möglichen Verbraucherleistung (Inbetriebnahmeverbraucherleistung) und als Bezugsgröße für den kleineren Sollwert ein vergleichsweise kleinerer Bruchteil dieser maximal möglichen Verbraucherleistung (Inbetriebnahmeverbraucherleistung) bzw. bei für den größeren und den kleineren Sollwert der Schwankungsbreite der Verbraucherleistung gemeinsamer Bezugsgröße als Bezugsgröße für diese beiden Sollwerte ein Bruchteil dieser maximal möglichen Verbraucherleistung (Inbetriebnahmeverbraucherleistung), vorzugsweise ein im Bereich zwischen etwa dem 0,4- bis 0,8-fachen derselben liegender Wert, gewählt wird, während für den letzteren Fall bei Heizbetrieb für Aufheizen nach einer Abkühlung bzw. bei Kühlbetrieb für Abkühlen nach einer Erwärmung bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein Bruchteil dieser maximalen Verbraucherleistung (Anfahrverbraucherleistung) und als Bezugsgröße für den kleineren Sollwert ein vergleichsweise kleinerer Bruchteil dieser maximalen Verbraucherleistung (Anfahrverbraucherleistung) bzw. bei für den größeren und den kleineren Sollwert der Schwankungsbreite der Verbraucherleistung gemeinsamer Bezugsgröße als Bezugsgröße für diese beiden Sollwerte ein Bruchteil dieser maximalen Verbraucherleistung (Anfahrverbraucherleistung), vorzugsweise ein im Bereich zwischen etwa dem 0,4- bis 0,8-fachen derselben liegender Wert, gewählt wird. Bezüglich der sich einstellenden Vorteile kann auf die Erläuterungen zu den mit kontinuierlich betriebenem Wärme- bzw. Kälteerzeuger arbeitenden entsprechenden Ausführungen verwiesen werden.

Auch bei Ausführungen der Erfindung mit Mehrwege-Mischeinrichtung gibt es den im Zusammenhang mit Heizungs- bzw. Kühlanlagen mit kontinuierlich betriebenem Wärme- bzw. Kälteerzeuger bereits beschriebenen Ausführungen mit extrem flinker Ermittlung der Bezugsgröße(n) für die Grenze(n) des Sollwert-Bandes der Schwankungsbreite der Verbraucherleistung aus der Länge der Zeitspanne, während derer die Verbraucherleistung auf einem praktisch konstanten Wert verbleibt, und/oder dem Gradienten des Abfalls der Verbraucherleistung nach Beendigung dieser Zeitspanne bzw. mit Veränderung des die Bezugsgröße bildenden Verbraucherleistungsniveaus gemäß der Länge dieser Zeitspanne und/oder dem Maß dieses Gradienten entsprechende Ausführungen, wobei im ersteren Fall bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Länge der Zeitspanne, während derer erstmalig die Verbraucherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung der Verbraucherleistung nach dem Zeitpunkt, zu dem nach dieser Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein gemäß größerer Länge dieser Zeitspanne und/oder kleinerem Maß der zeitlichen Änderung der Verbraucherleistung großer und gemäß kleinerer Länge dieser Zeitspanne und/oder größerem Maß der zeitlichen Änderung der Verbraucherleistung kleiner Bruchteil der maximal möglichen Verbraucherleistung (Inbetriebnahmeverbraucherleistung) bzw. der maximalen Verbraucherleistung (Anfahrverbraucherleistung) und als kleinerer Sollwert ein gegenüber diesem Bruchteil vergleichsweise geringerer Bruchteil der maximal möglichen Verbraucherleistung (Inbetriebnahmeverbraucherleistung) bzw. der maximalen Verbraucherleistung (Anfahrverbraucherleistung) bzw. bei für den größeren und den kleineren Sollwert der Schwankungsbreite der Verbraucherleistung gemeinsamer Bezugsgröße als solche ein gemäß größerer Länge dieser Zeitspanne und/oder kleinerem Maß der zeitlichen Änderung der Verbraucherleistung großer Bruchteil der maximal möglichen Verbraucherleistung (Inbetriebnahmeverbraucherleistung) bzw. der maximalen Verbraucherleistung (Anfahrverbraucherleistung) und gemäß kleinerer Länge dieser Zeitspanne und/oder größerem Maß der zeitlichen Änderung der Verbraucherleistung kleiner Bruchteil der maximal möglichen Verbraucherleistung (Inbetriebnahmeverbraucherleistung) bzw. der maximalen Verbraucherleistung (Anfahrverbraucherleistung) gewählt wird, und im letzteren Fall bei Inbetriebnahme des Verfahrens für Heizbetrieb oder für Kühlbetrieb oder bei Heizbetrieb für Aufheizen nach einer Abkühlung bzw. bei Kühlbetrieb für Abkühlen nach einer Erwärmung jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Länge der Zeitspanne, während derer erstmalig die Verbraucherleistung als maximal mögliche Verbraucherleistung (Inbetriebnahmeverbraucherleistung) bzw. als maximale Verbraucherleistung (Anfahrverbraucherleistung) mit praktisch konstantem Wert auftritt, und/oder die zeitliche Änderung dieser Verbraucherleistung nach dem Zeitpunkt, zu dem nach dieser Zeitspanne mit praktisch konstantem Wert der Verbraucherleistung erstmalig eine Verringerung derselben auftritt, ermittelt und entsprechend dem Maß der Länge dieser Zeitspanne und/oder dem Maß der zeitlichen Änderung der Verbraucherleistung die Bezugsgröße(n) für den größeren und für den kleineren Sollwert der Schwankungsbreite der Verbraucherleistung verändert werden bzw. wird, vorzugsweise indem bei jeweils einer Bezugsgröße für den größeren und für den kleineren Sollwert der Schwankungsbreite der Verbraucherleistung gemäß größerer Länge dieser Zeitspanne und/oder kleinerem Maß der zeitlichen Änderung der Verbraucherleistung die Bezugsgröße für den größeren Sollwert um einen gringeren Betrag und die Bezugsgröße für den kleineren Sollwert um einen gegenüber diesem Betrag verhältnismäßig größeren Betrag und gemäß kleinerer Länge dieser Zeitspanne und/oder größerem Maß der zeitlichen Änderung der Verbraucherleistung die Bezugsgröße für den größeren Sollwert um einen größeren Betrag und die Bezugsgröße für den kleineren Sollwert um einen gegenüber diesem Betrag verhältnismäßig geringeren Betrag bzw. bei für den größeren und den kleineren Sollwert der Schwankungsbreite der Verbraucherleistung gemeinsamer Bezugsgröße gemäß größerer Länge dieser Zeitspanne und/oder kleinerem Maß der zeitlichen Änderung der Verbraucherleistung diese gemeinsame Bezugsgröße um einen geringeren Betrag und gemäß kleinerer Länge dieser Zeitspanne und/oder größerem Maß der zeitlichen Änderung der Verbraucherleistung diese Bezugsgröße um einen größeren Betrag verringert werden bzw. wird. Vorrichtungsmäßig sieht die Erfindung hierfür vor, daß die Regeleinrichtung eine Sollwert-Wahleinrichtung mit einer über eine Impulsleitung mit der Leistungsvergleichseinrichtung zur Ermittlung der Schwankung(en) der Verbraucherleistung und/oder über eine Impulsleitung mit der Schwankungsvergleichseinrichtung zur Bestimmung der Abweichung dieser Schwankung(en) der Verbraucherleistung über die obere und oder unter die untere Grenze des Sollwert-Bandes ihrer Schwankungsbreite verbundenen Detektoreinrichtung zur Ermittlung der im Verlauf der Inbetriebnahme der Vorrichtung für Heizbetrieb oder für Kühlbetrieb jeweils bei dem Heizungs-bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximal mögliche Verbraucherleistung (Inbetriebnahmeverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und oder der im Verlauf des Heizbetriebes bei Aufheizen nach einer Abkühlung bzw. im Verlauf des Kühlbetriebes bei Abkühlen nach einer Erwärmung jeweils bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximale Verbraucherleistung (Anfahrverbraucherleistung) zu dem Zeitpunkt, zu dem nach einer Zeitspanne mit praktisch konstantem Wert dieser Verbraucherleistung erstmalig eine Verringerung derselben auftritt, auftretenden Verbraucherleistung und einer oder je einer über eine Impulsleitung mit dieser verbundenen einstellbaren Verhältnisgabeeinrichtung als Sollwert-Bildungseinrichtung für die obere bzw. die untere Grenze des Sollwert-Bandes der Schwankungsbreite der Verbraucherleistung sowie eine oder jeweils eine über Impulsleitungen einerseits mit der zugeordneten Sollwert-Bildungseinrichtung der Sollwert-Wahleinrichtung und andererseits mit dem zugeordneten Sollwertgeber bzw. den Sollwertgebern verbundene Einrichtung zur automatischen Verstellung desselben bzw. derselben im Sinne einer Ersteinstellung bzw. einer Veränderung eines eingestellten Wertes der zugeordneten oberen Grenze des Sollwert-Bandes der Schwankungsbreite der Verbraucherleistung auf sowohl bei Heizbetrieb als auch bei Kühlbetrieb einen Bruchteil dieser maximal möglichen Verbraucherleistung (Inbetriebnahmeverbraucherleistung) bzw. dieser maximalen Verbraucherleistung (Anfahrverbraucherleistung) und der zugeordneten unteren Grenze des Sollwert-Bandes der Schwankungsbreite der Verbraucherleistung auf einen willkürlich wählbaren Wert oder eine über eine Impulsleitung mit der Multipliziereinrichtung oder mit einer ihrerseits über eine Impulsleitung mit der Leistungsvergleichseinrichtung verbundenen Momentanwert-Abweichungs-Speichereinrichtung verbundene Betragsvergleichseinrichtung zur Ermittlung des Beginns und des Endes einer Zeitspanne mit praktisch konstantem Wert der Verbraucherleistung durch Bestimmung des Unterschiedes zwischen jeweils letztem und vorletztem Momentanwert der Verbraucherleistung nebst einer über eine Impulsleitung mit der Detektoreinrichtung verbundenen Zeitspannen-Messeinrichtung zur Ermittlung der Länge der Zeitspanne mit praktisch konstantem Wert der Verbraucherleistung mit einer mit ihr über eine Impulsleitung verbundenen Zeitspannen-Vorgabe- und -Vergleichseinrichtung und einer Einschalt- und einer Ausschalteinrichtung und/oder einer jeweils über eine Impulsleitung einerseits entweder mit der Betragsvergleichseinrichtung oder mit der Multipliziereinrichtung und andererseits mit einer Einrichtung zur Abgabe von Zeitspannen entsprechenden Impulsen verbundenen Dividiereinrichtung zur Ermittlung des zeitlichen Gradienten der Verringerung der Verbraucherleistung nach Beendigung der Zeitspanne mit praktisch konstantem Wert derselben, die jeweils über eine Impulsleitung mit einer Gradienten-Vorgabe- und -Vergleichseinrichtung und einer zum Zeitpunkt des Endes der Zeitspanne mit praktisch konstantem Wert der Verbraucherleistung abhängigen Einschalt- und/oder Ausschalteinrichtung, vorzugsweise mit zumindest der Ausschalteinrichtung einer Zeitspannen-Messeinrichtung zur Ermittlung der Länge der Zeitspanne mit praktisch konstantem Wert der Verbraucherleistung, verbunden ist, und in allen Fällen eine oder je eine über jeweils eine Impulsleitung mit der bzw. einer der ihrerseits über jeweils eine Impulsleitung mit der bzw. einer der Sollwert-Bildungseinrichtung(en) verbundenen Niveaugabe-Einrichtung(en) verbundene Einrichtung zur automatischen Verstellung der zugeordneten Niveaugabe-Einrichtung im Sinne einer vom jeweils ermittelten Wert der maximal möglichen Verbraucherleistung (Inbetriebnahmeverbraucherleistung) und/oder der maximalen Verbraucherleistung (Anfahrverbraucherleistung) und/oder der Länge der Zeitspanne mit praktisch konstantem Wert der Verbraucherleistung und/oder des zeitlichen Gradienten der Verringerung der Verbraucherleistung nach Beendigung dieser Zeitspanne mit praktisch konstantem Wert der Verbraucherleistung abhängigen Erhöhung bzw. Verringerung des als Bezugsgröße für die obere und/oder die untere Grenze des Sollwert-Bandes der Schwankungsbreite der Verbraucherleistung (Betriebsverbraucherleistung) dienenden jeweiligen Bruchteils der maximal möglichen Verbraucherleistung (Inbetriebnahmeverbraucherleistung) bzw. maximalen Verbraucherleistung (Anfahrverbraucherleistung) aufweist. Auch bezüglich der weiterem Vorteile ist festzustellen, daß sich diese in gleicher Weise auch hier einstellen, wie für mit kontinuierlich betriebenem Wärme- bzw. Kälteerzeuger arbeitende Heizungs- bzw. Kühlanlagen bereits beschrieben.

Weiterhin gestalten sich die zu den im Zusammenhang mit Heizungs-bzw. Kühlanlagen mit kontinuierlich betriebenem Wärme- bzw. Kälteerzeuger bereits beschriebenen Ausführungen analogen mit Mehrwege-Mischeinrichtung arbeitenden Ausführungen der Erfindung konform, indem nämlich bei jeweils einer Bezugsgröße für den größeren und für den kleineren Sollwert der Schwankungsbreite der Verbraucherleistung durch Veränderung der Stellung des das Verhältnis von vom Wärme- bzw. Kälteerzeuger her zugespeisten Massenstroms zum Gesamtmassenstrom des Wärmeträgermediums bestimmenden Organs der Mehrwege-Mischeinrichtung dieses Massenstromverhältnis verringert wird, wenn ein der um einen Bruchteil des größeren Sollwertes der Schwankungsbreite der Verbraucherleistung vermehrten Bezugsgröße für diesen größeren Sollwert entsprechender Wert überschritten oder ein der um den Restbetrag des größeren Sollwertes der Schwankungsbreite der Verbraucherleistung verminderten Bezugsgröße für diesen größeren Sollwert entsprechender Wert unterschritten wird, und vergrößert wird, wenn während einer vorbestimmten Zeitdauer ein der um einen Bruchteil des kleineren Sollwertes der Schwankungsbreite der Verbraucherleistung vermehrten Bezugsgröße für diesen kleineren Sollwert entsprechender Wert nicht überschritten und ein der um den Restbetrag des kleineren Sollwertes der Schwankungsbreite der Verbraucherleistung verminderten Bezugsgröße für diesen kleineren Sollwert entsprechender Wert nicht unterschritten wird, und in weiterer zweckmäßiger Ausgestaltung dieses untergeordneten Erfindungsgedankens nach einer Veränderung des Verhältnisses des vom Wärme- bzw. Kälteerzeuger her zugespeisten Massenstroms zum Gesamtmassenstrom des Wärmeträgermediums bzw. einer Veränderung der Stellung des diese bewirkenden Organs der Mehrwege-Mischeinrichtung (Regelvorgang) als neue Bezugsgrößen für den größeren und für den kleineren Sollwert der Schwankungsbreite der Verbraucherleistung jeweils den im Verhältnis der sich unmittelbar danach oder nach einer vorbestimmten Zeitspanne einstellenden Verbraucherleistung zur vorangegangenen Verbraucherleistung verminderten bzw. vergrößerten Bezugsgrößen für den größeren und für den kleineren Sollwert entsprechende Werte gewählt werden, wohingegen bei gemeinsamer zentrisch liegender Bezugs-größe für die obere und die untere Grenze des Sollwert-Bandes durch Veränderung der Stellung des das Verhältnis des vom Wärme- bzw. Kälteerzeuger her zugespeisten Massenstroms zum Gesamtmassenstrom des Wärmeträgermediums bestimmenden Organs der Mehrwege-Miseheinrichtung dieses Massenstromverhältnis verringert wird, wenn ein der um die Hälfte des größeren Sollwertes der Schwankungsbreite der Verbraucherleistung vermehrten Bezugsgröße entsprechender Wert überschritten oder ein der um die Hälfte des größeren Sollwertes der Schwankungsbreite der Verbraucherleistung verminderten Bezugsgröße entsprechender Wert unterschritten wird, und vergrößert wird, wenn während einer vorbestimmten Zeitdauer ein der um die Hälfte des kleineren Sollwertes der Schwankungsbreite der Verbraucherleistung vermehrten Bezugsgröße entsprechender Wert nicht überschritten und ein der um die Hälfte des kleineren Sollwertes der Schwankungsbreite der Verbraucherleistung verminderten Bezugsgröße entsprechender Wert nicht unterschritten wird, und für gemeinsame, jedoch tangential sowohl zur die obere Grenze des Sollwert-Bandes der Schwankungsbreite der Verbraucherleistung als auch zur die untere Grenze dieses Sollwert-Bandes bestimmenden Schwankungsbreite liegende Bezugsgröße in Form eines entsprechenden Verbraucherleistungsniveaus durch Veränderung der Stellung des das Verhältnis des vom Wärme- bzw. Kälteerzeuger her zugespeisten Massenstroms zum Gesamtmassenstrom des Wärmeträgermediums bestimmenden Organs der Mehrwege-Mischeinrichtung dieses Massenstromverhältnis verringert wird, wenn ein der Bezugsgröße oder ein der um den größeren Sollwert vermehrten Bezugsgröße entsprechender Wert überschritten oder ein der um den größeren Sollwert verminderten Bezugsgröße oder ein dieser selbst entsprechender Wert unterschritten wird, und vergrößert wird, wenn während einer vorbestimmten Zeitdauer ein der Bezugsgröße oder ein der um den kleineren Sollwert verminderten Bezugsgröße entsprechender Wert nicht überschritten und ein der um den kleineren Sollwert verminderten Bezugsgröße oder ein dieser selbst entsprechender Wert nicht unterschritten wird.

Auch bei einer von der Wärme- bzw. Kälteerzeugerseite her sogar dlskontinuierlich gefahrenen, jedoch über kontinuierlichen Betrieb einer Mehrwege-Mischeinrichtung kontinuierlich wirkenden Heizungs-bzw. Kühlanlage ist es ebenso wie bei mit kontinuierlicher Zuführung der Betriebsenergie zum Wärme- bzw. Kälteerzeuger arbeitenden Ausführungen der Erfindung nicht nur möglich, sondern geradezu zweckmäßig, wenn gemäß einem weiteren untergeordneten Erfindungsgedanken nach einer Veränderung des Verhältnisses des vom Wärme- bzw. Kälteerzeuger her zugespeisten Massenstroms zum Gesamtmassenstrom des Wärmeträgermediums bzw. einer Veränderung der Stellung des diese bewirkenden Organs der Mehrwege-Mischeinrichtung (Regelvorgang) die sich unmittelbar danach oder nach einer vorbestimmten Zeitspanne einstellende Verbraucherleistung als neue Bezugsgroße für den der oberen und den der unteren Grenze des Sollwert-Bandes der Schwankungsbreite der Verbraucherleistung entsprechenden Wert derselben gewählt wird. Hierdurch ergibt sich auch hier eine Art Selbstlernvorgang für die Führungsgröße des Regelungsverfahrens nach der Erfindung. In Fällen, in denen diese nämlich aus irgendwelchen Gründen nicht spezifisch auf die äußeren und insbesondere inneren anlagenspezifischen und/oder aufgrund von Klimazonen und/oder Lage und/oder Wärmedämmung oder dergleichen verbrauchereigenen und/oder die nutzerbezogenen Eigenschaften der jeweiligen Heizungs- bzw. Kühlanlage von vornherein abgestimmt sein kann, wird ebenso wie bei mit kontinuierlicher Zufuhr der Betriebsenergie zum Wärme- bzw. Kälteerzeuger und mit dem gleichen im Zusammenhang mit einer über einen im kontinuierlichen Betrieb arbeitenden Wärme- bzw. Kälteerzeuger betriebenen Heizungs- bzw. Kühlanlage beschriebenen Vorteilen eine Automatik realisierbar, die unabhängig von jedweder Voreinstellung und/oder Justierung durch den Heizungsbauer über eine einfache, schnelle und bequeme Verstellung einer einen schnellen Zugriff ermöglichenden Betriebsgröße in Form geeigneter Veränderung des Verhältnisses von über dem wärme- bzw. kälteerzeugerseitigen Zulaufzweig der Mehrwege-Mischeinrichtung zugespeistem Massenstrom zum Gesamtmassenstrom des Wärmeträgermediums bzw. eine geeignete Veränderung der Stellung des dieses Massenstrom-Verhältnis bestimmenden Organs derselben die optimale Führungsgröße generiert.

Für die verfahrensmäßige Durchführung aller dieser mit verfahrensmäßiger und/oder implementierungstechnischer Selbstlernautomatik arbeitenden Varianten hat es sich auch bei mit einer Mehrwege-Mischeinrichtung arbeitenden Ausführungen der Erfindung ungeachtet dessen, wie die Größe(n) für die Grenzen des Sollwert-Bandes der Schwankungsbreite der Verbraucherleistung gelegt werden bzw. wird, weiterhin als zweckmäßig erwiesen, wenn der der oberen und/oder der der unteren Grenze des Sollwert-Bandes der Schwankungsbreite der Verbraucherleistung entsprechende Wert derselben jeweils entsprechend der Änderung seiner Bezugsgröße verändert wird, indem er bei Vergrößerung seiner Bezugsgröße vergrößert und bei Verringerung seiner Bezugsgröße verringert wird. Vorrichtungstechnisch kann hierfür zweckmäßig vorgesehen sein, daß die Regeleinrichtung jeweils eine über eine Impulsgabeeinrichtung mit der bzw. jeder der Niveaugabe-Einrichtung(en) verbundene Rückmeldeeinrichtung zur Rückmeldung des als Bezugsgröße für die obere und/oder die untere Grenze des Sollwert-Bandes der Schwankungsbreite der Verbraucherleistung dienenden Wertes derselben aufweist, die jeweils über je eine Impulsleitung entweder mit der bzw. einer der Einrichtung(en) zur automatischen Betätigung der bzw. einer der Sollwert-Bildungseinrichtung(en) oder über je eine Impulsleitung einerseits mit der bzw. jeweils einer der Sollwert-Bildungseinrichtung(en) und andererseits mit dem bzw. einem der jeweils zugeordneten Sollwertgeber verbunden ist.

Durch die in Vervollkommnung der Erfindung vorgenommene Einführung der Betriebsverbraucherleistung als Bezugsgröße für die obere und/oder die untere Grenze des Sollwert-Bandes der Schwankungsbreite der Verbraucherleistung gelingt es auch bei mit einer Mehrwege-Mischeinrichtung arbeitenden Ausführungen der Erfindung, nicht mehr nur zwei Maße in Form eines der oberen und eines der unteren Grenze dieses Sollwert-Bandes entsprechenden Wertes der Schwankungsbreite im Verlauf der Zeit ständig auf ihre Zulässigkeit überprüfen zu müssen, was im Prinzip nur durch ständige Beobachtung der Verbraucherleistung im Sinne einer Überwachung derselben gelingt, sondern statt dessen die Verbraucherleistung als Funktion der Zeit wertmäßig auf vier oder drei Grenzwerte abzufragen, wodurch sich für alle auf ein entsprechendes Selbstlernverhalten gerichteten verfahrensmäßigen ebenso wie vorrichtungstechnischen Varianten der Erfindung auch bei mit einer Mehrwege-Mischeinrichtung arbeitenden Ausführungen derselben die Lösung der zugrundeliegenden Aufgabe implementierungstechnisch auf die Realisierung eines Vier- oder Drei-Punkt-Reglers reduzieren läßt. Die implementierungsmäßigen ebenso wie die verfahrensführungsmäßigen Vorteile liegen nicht zuletzt in der sich ergebenden Möglichkeit für vielfältige Vereinfachungen und entsprechende Senkungen des Gestehungspreises einer die Erfindung beinhaltenden Vorrichtung mit Mehrwege-Mischeinrichtung ebenso wie der Betriebskosten derselben insbesondere im Hinblick auf weitestgehende Vermeidung von Energieverlusten und Insgesamt somit in eins< ausgezeichneten Wirtschaftlichkeit.

Trotz der nicht zu übersehenden Vorteile der Lösung der regeltechnischen Aufgabe ohne Zeitbetrachtung der Führungsgröße für ungeachtet eines kontinuierlich oder diskontinuierlich betriebenen Wärme- bzw. Kälteerzeugers die Wärme- bzw. Kälteleistung über eine entsprechende verstellbare Mehrwege-Mischeinrichtung kontinuierlich in den Heizungs- bzw. Kühlmittelvorlauf einspeisende Heizungs- bzw. Kühlsysteme eine entsprechende Lösung in eleganter und universeller Weise auch unter Einbezug des Zeitverhaltens der Führungsgröße vor-nehmen zu können, ist eine sich in Vervollkommnung der Erfindung stellende untergeordnete Aufgabe. Sie wird gemäß einem untergeordneten Erfindungsgedanken dadurch gelöst, daß für jedes Ergebnis einer Mehrzahl von Bestimmungen der Verbraucherleistung der Unterschied zwischen ihm und dem vorangegangenen Ergebnis dieser Mehrzahl von Bestimmungen der Verbraucherleistung als Schwankung derselben betragsmäßig ermittelt und bei Auftreten einer vorbestimmten Anzahl von monoton steigenden Ergebnissen einer Mehrzahl von Ermittlungen der Schwankung der Verbraucherleistung vorzugsweise mit Überschreiten der oberen Grenze des Sollwert-Bandes der Schwankungsbreite der Verbraucherleistung durch Veränderung der Stellung des das Verhältnis des vom Wärme- bzw. Kälteerzeuger her zugespeisten Massenstroms zum Gesamtmassenstrom des Wärmeträgermediums bestimmenden Organs der Mehrwege-Mischeinrichtung dieses Massenstromverhältnis verringert und bei Auftreten einer vorbestimmten Anzahl von monoton fallenden oder praktisch gleichbleibenden Ergebnissen einer Mehrzahl von Ermittlungen der Schwankung der Verbraucherleistung mit Unterschreiten der unteren Grenze des Sollwert-Bandes der Schwankungsbreite der Verbraucherleistung durch Veränderung der Stellung des das Verhältnis des vom Wärme- bzw. Kälteerzeuger her zugespeisten Massenstroms zum Gesamtmassenstrom des Wärmeträgermediums bestimmenden Organs der Mehrwege-Mischeinrichtung dieses Massenstromverhältnis vergrößert wird. Vorrichtungsseitig wird dann in Vervollkommnung der Erfindung hierfür vorgesehen, daß die Regeleinrichtung entweder eine über eine Impulsleitung mit der Multipliziereinrichtung verbundene Betragsvergleichseinrichtung zur Bestimmung des Unterschiedes zwischen jeweils letztem und vorletztem Momentanwert der Verbraucherleistung oder eine über eine Impulsleitung mit der Leistungsvergleichseinrichtung verbundene Momentanwert-Abweichungs-Speichereinrichtung zur Speicherung der Unterschiede zwischen jeweils letztem und vorletztem Momentanwert der Verbraucherleistung aufweist, wobei die Betragsvergleichseinrichtung bzw. die Momentanwert-Abweichungs-Speichereinrichtung jeweils über eine Impulsleitung mit einer Tendenzvergleichseinrichtung zur Bestimmung der Tendenz der Veränderung der Unterschiede zwischen jeweils letztem und vorletztem Momentanwert der Verbraucherleistung verbunden ist, die ihrerseits über jeweils eine Impulsleitung einerseits mit einer Zahlvorgabeeinrichtung zur willkürlichen Vorgabe einer als Auslöseschwelle für die Betätigung des Stellbefehlgebers wirkenden Anzahl solcher Unterschiede zwischen jeweils letztem und vorletztem Momentanwert der Verbraucherleistung und andererseits über ein Zählwerk für diese Unterschiede zwischen jeweils letztem und vorletztem Momentanwert der Verbraucherleistung mit dem Stellbefehlgeber und mit einer Stellungsanzeigeeinrichtung zur Rückmeldung des Betriebszustandes des Stellbefehlgebers verbunden ist.

Ersichtlich bringt die Maßnahme, einen sogenannten "Scanner", also eine Betragsvergleichseinrichtung zur Bestimmung des Unterschiedes zwischen jeweils letztem und vorletztem Momentanwert der Verbraucherleistung oder eine Momentanwert-Abweichungs-Speichereinrichtung zur Speicherung der Unterschiede zwischen jeweils letztem und vorletztem Momentanwert der Verbraucherleistung jeweils in Verbindung mit einer Tendenzvergleichseinrichtung zur Bestimmung der Tendenz der Veränderung der Unterschiede zwischen jeweils letztem und vorletztem Momentanwert der Verbraucherleistung mit entsprechenden peripheren Informationszuführungseinrichtungen vorzusehen, auch bei mit einer Mehrwege-Mischeinrichtung arbeitenden Ausführungen der Erfindung einen überlegenen Aspekt mit sich, indem nämlich durch diese erfinderische Weiterbildung sowohl des Verfahrens als auch der Vorrichtung nach der Erfindung bereits aus dem Verlauf der "Meß"-Ergebnisse gewisse Tendenzen abzuleiten und schon dann Stellbefehle auszulösen sind, wenn und obgleich die als "Meß"-Ergebnisse ermittelten Werte der Schwankungsbreite der Verbraucherleistung noch keineswegs die eine oder andere Grenze ihres Sollwert-Bandes passiert zu haben brauchen.

Weiterhin zeichnet sich die Erfindung gegenüber dem Stand der Technik dadurch aus, daß dem Nutzer derselben durch diese erstmalig die Möglichkeit an die Hand gegeben ist, mit ein und derselben Regelungsvorrichtung nach der Erfindung nach seiner eigenen Wahl und Bestimmung unterschiedliche Betriebsarten zu ihm genehmen Zeiten einstellen zu können, indem für Komfortbetrieb, bei dem für mindestens einen zu temperierenden Raum eine im Vergleich zu dem bzw. den anderen zu temperierenden Raum bzw. Räumen vergleichsweise besonders hohe bzw. niedrige Raumtemperatur aufrechtzuerhalten ist, der größere Sollwert der Schwankungsbreite der Verbraucherleistung entsprechend einem großen Bruchteil der maximal möglichen Verbraucherleistung (Inbetriebnahmeverbaucherleistung) oder der maximalen Verbraucherleistung (Anfahrverbraucherleistung), vorzugsweise zwischen etwa dem 0,25- bis 0,5-fachen derselben, und der kleinere Sollwert der Schwankungsbreite der Verbraucherleistung entsprechend einem vergleichsweise kleineren Bruchteil dieser maximal möglichen Verbraucherleistung (Inbetriebnahmeverbraucherleistung) oder maximalen Verbraucherleistung (Anfahrverbraucherleistung), vorzugsweise zwischen etwa dem 0.4- bis 0,6-fachen dieses großen Bruchteils, und/oder für Normalbetrieb, bei dem für alle zu temperierenden Räume eine etwa gleiche Raumtemperatur von für gutes Behaglichkeitsgefühl ausreichender Höhe aufrechtzuerhalten ist, der größere Sollwert der Schwankungsbreite der Verbraucherleistung entsprechend einem mittleren Bruchteil der maximal möglichen Verbraucherleistung (Inbetriebnahmeverbraucherleistung) oder der maximalen Verbraucherleistung (Anfahrverbraucherleistung), vorzugsweise zwischen etwa dem 0,1- bis 0,25-fachen derselben, und der kleinere Sollwert der Schwankungsbreite der Verbraucherleistung entsprechend einem vergleichsweise kleineren Bruchteil dieser maximal möglichen Verbraucherleistung (Inbetriebnahmeverbraucherleistung) oder maximalen Verbraucherleistung (Anfahrverbraucherleistung), vorzugsweise zwischen etwa dem 0.3- bis 0,4-fachen dieses mittleren Bruchteils, und/oder für Nachtabsenkungsbzw. Sparbetrieb, bei dem für alle zu temperierenden Räume eine etwa gleiche Raumtemperatur von für Aufenthalt von Menschen, Tieren oder Gütern noch ausreichender Höhe aufrechtzuerhalten ist, der größere Sollwert der Schwankungsbreite der Verbraucherleistung entsprechend einem vergleichsweise kleinen Bruchteil der maximal möglichen Verbraucherleistung (Inbetriebnahmeverbraucherleistung) oder der maximalen Verbraucherleistung (Anfahrverbraucherleistung), vorzugsweise zwischen etwa dem 0,05- bis 0.1-fachen derselben, und der kleinere Sollwert der Schwankungsbreite der Verbraucherleistung entsprechend einem vergleichsweise kleineren Bruchteil dieser maximal möglichen Verbraucherleistung (Inbetriebnahmeverbraucherleistung) oder maximalen Verbraucherleistung (Anfahrverbraucherleistung), vorzugsweise zwischen etwa dem 0,2- bis 0,3-fachen dieses kleinen Bruchteils, und/oder speziell für Beheizung von Räumen für Frostschutzbetrieb, bei dem für alle zu beheizenden Räume lediglich eine ein Einfrieren des Wärmeträgermediums in den Heizkörpern und/oder dem dieses führenden Leitungssystem verhindernde Raumtemperatur aufrechtzuerhalten ist, der größere Sollwert der Schwankungsbreite der Verbraucherleistung mit nur geringem Unterschied zum kleineren Sollwert der Verbraucherleistung, vorzugsweise praktisch gleich diesem, und der kleinere Sollwert der Schwankungsbreite der Verbraucherleistung entsprechend einem nahe dem Verschwindwert dieser Schwankungsbreite liegenden Wert gewählt wird. Entsprechend kann vorrichtungstechnisch die Regeleinrichtung eine Speichereinrichtung, in der mindestens zwei, vorzugsweise mehr, bevorzugte Paarungen von Ober- und Untergrenzen des Sollwert-Bandes der Schwankungsbreite der Verbraucherleistung, wie beispielsweise für Komfort- , Normal- , Spar- , Nachtabsenkungs- oder Frostschutzbetrieb gespeichert sind, und eine über zumindest eine Impulsleitung mit dieser verbundene Umschalteinrichtung zur Ausschaltung der Wirkung einer und Einschaltung der Wirkung einer anderen dieser bevorzugten Paarungen aufweisen, die über jeweils eine Impulsleitung mit zumindest einer der etwa vorhandenen Sollwert-Bildungseinrichtungen für die obere bzw. untere Grenze des Sollwert-Bandes der Schwankungsbreite der Verbraucherleistung oder mit der oder zumindest einer der etwa vorhandenen Programmspeichereinrichtung(en) für die Beeinflussung des Sollwert-Bandes der Schwankungsbreite der Verbraucherleistung oder mit zumindest einer etwa vorhandenen Verstelleinrichtung für diese oder mit zumindest einem Sollwertgeber verbunden ist. Zweckmäßig können dabei in der Speichereinrichtung die bevorzugten Paarungen von Ober- und Untergrenzen des Sollwert-Bandes der Schwankungsbreite der Verbraucherleistung mit in Richtung zunehmender Werte der Verbraucherleistung vorzugsweise proportional größer werdendem Unterschied und/oder Verhältnis von jeweiliger oberer und unterer Grenze der Schwankungsbreite der Verbraucherleistung gespeichert sein. Durch diese Möglichkeit der Wahl der Bänder wird dem Nutzer der Erfindung bzw. dem Betreiber der mit dieser ausgerüsteten Heizungs- bzw. Kühlanlage die Möglichkeit gegeben, diese einerseits mit lokal unterschiedlich verteilten Wärme- bzw. Kältelasten zu fahren, beispielsweise im Heizbetrieb bei Nutzung des Komfort-Bandes, das er im übrigen nicht über das gesamte Jahr zu benutzen braucht, sondern nur nach Wunsch bzw. Bedürfnis, dabei aber eine besondere Wirtschaftlichkeit trotz Offenhaltung aller Möglichkeiten für die Aufrechterhaltung praktisch beliebig hoher Raumtemperaturen in einem Teil der zu beheizenden Räume dadurch erreichen können, daß er zu Zeiten geringeren Wärmebedarfs ein ökonomischerem Betrieb entsprechendes Sollwert-Band, beispielsweise ein Normal- oder Sparband, den Regelungsbetrieb bestimmen läßt, bei dem alle anderen Räume mit vergleichsweise viel niedrigeren Wärmelasten bzw. Raumtemperaturen bedient werden. Entsprechendes gilt natürlich auch für Kühlbetrieb. Dabei liegt die besondere Wirtschaftlichkeit darin, daß nicht immer mit der größten Lastspitze gefahren werden muß, sondern man sich für die Zeiten geringerer Wärme- bzw. Kältelast, wie etwa bei Heizbetrieb beispielsweise jahreszeitlich bedingt im Sommerbetrieb und/oder nutzerbezogen bei Nachtabsenkung, mit einem günstigeren Sollwert-Band der Schwankungsbreite der Verbraucherleistung zufrieden geben kann. Dies ist bei herkömmlichen Regelungsarten nicht möglich. Hier muß für einen bestimmten zeitlich nur begrenzt auftretenden Bedarfsfall für das ganze Jahr oder auch über die gesamte Tageszeit ausreichend Wärme- bzw. Kälteleistung vorgehalten werden, das heißt, daß in den Zeiten ohne diesen Bedarfsfall sehr unwirtschaftlich gefahren wird, oder der Betreiber einer solchen Heizungs- bzw. Kühlanlage muß für jeden Bedarfsfall ständig seine Heizkurve umstellen.

Somit erbringt die Erfindung die Möglichkeit, jederzeit wunschgemäß von einer Betriebsart mit Aufrechterhaltung einer bei Heizbetrieb extrem hohen bzw. bei Kühlbetrieb extrem tiefen Temperatur in einem Teilbereich der mit der betreffenden Heizungs- bzw. Kühlanlage zu bedienenden Räume auf eine andere Betriebsart mit bei Heizbetrieb niedrigerer bzw. bei Kühlbetrieb höherer benötigter Raumtemperatur in dem betreffenden Teilbereich der mit der Heizungs- bzw. Kühlanlage zu bedienenden Räume umschalten zu können, was natürlich die vorteilhafte Folge hat, daß bei solcher Betriebsarten-Umschaltung in dieser Richtung die zu verkraftenden Wärmeverluste sowohl durch Wärme- bzw. Kälteableitung als auch durch Wärme- bzw. Kälteabstrahlung (Wärmeeinstrahlung) geringer werden, wobei erfindungsgemäß weder der Zahl solcher Umschaltvorgänge noch der Art der Umschaltung eine Grenze gesetzt ist, indem nämlich diese Umschaltung von einer Betriebsart auf die andere und wieder zurück auch kontinuierlich erfolgen kann.

Noch feinere Differenzierungsmöglichkeiten für die vom Benutzer der Heizungs- bzw. Kühlanlage nach der Erfindung frei wählbaren Betriebsarten nebst der Möglichkeit noch größerer Energieeinsparung bei jeder derselben und einer feineren Einstellbarkeit beispielsweise durch den Benutzer ergibt sich, wenn in weiterer zweckmäßiger Fortbildung der Erfindung die Schwankung der Verbraucherleistung jeweils während einer vorbestimmten Zeitdauer auf Abweichung unter ihren kleineren Sollwert überwacht wird. Vorrichtungstechnisch kann hierfür zweckmäßig vorgesehen sein, daß die Regeleinrichtung eine über eine Impulsleitung mit der Schwankungsvergleichseinrichtung zur Bestimmung der Abweichung der Verbraucherleistung unter die untere Grenze des Sollwert-Bandes ihrer Schwankungsbreite verbundene Zeitgabeeinrichtung aufweist, mittels derer die Zeitdauer für die von der Schwankungsvergleichseinrichtung vorzunehmende Überwachung der Abweichung der Verbraucherleistung unter die untere Grenze des Sollwert-Bandes ihrer Schwankungsbreite vorgebbar ist.

Dadurch wird es weiterhin möglich, die vorbestimmte Zeitdauer der Überwachung bei Normalbetrieb länger als die der Überwachung bei Komfortbetrieb bzw. die vorbestimmte Zeitdauer der Überwachung bei Nachtabsenkungs- bzw Sparbetrieb länger als die der Überwachungen bei Normalbetrieb und bei Komfortbetrieb bzw. die vorbestimmte Zeitdauer der Überwachung bei Frostschutzbetrieb länger als die der Überwachungen bei Nachtabsenkungs- bzw. Sparbetrieb und bei Normalbetrieb sowie bei Komfortbetrieb zu wählen. Hierfür kann zweckmäßig die Zeitgabeeinrichtung der Regeleinrichtung einen Zeitspannen-Programmspeicher aufweisen, in dem für bevorzugte Paarungen von Ober- und Untergrenzen des Sollwert-Bandes der Schwankungsbreite der Verbraucherleistung, wie beispielsweise für Komfort- , Normal- , Spar- , Nachtabsenkungs- oder Frostschutzbetrieb, unterschiedliche Werte der Länge der Zeitdauer für die Überwachung der Abweichung der Verbraucherleistung unter die untere Grenze des Sollwert-Bandes ihrer Schwankungsbreite gespeichert sind, wobei die gespeicherte Zeitdauer für die Überwachung von Normalbetrieb länger als die der Überwachung bei Komfortbetrieb und die gespeicherte Zeitdauer der Überwachung bei Nachtabsenkungs- bzw. Sparbetrieb länger als die der Überwachung bei Normalbetrieb und bei Komfortbetrieb und die gespeicherte Zeitdauer der Überwachung bei Frostschutzbetrieb länger als die der Überwachung bei Nachtabsenkungs- bzw. Sparbetrieb und bei Normalbetrieb sowie bei Komfortbetrieb gewählt ist.

Hiermit gewinnt man also neben den bereits beschriebenen Möglichkeiten der zeitgerechten Einstellung der Schwankungsbreite der Verbraucherleistung der einzelnen Betriebsarten auch noch einen weiteren Wertbereich von einstellbaren Parametern in Form der Zeitdauer der Abweichung der Schwankungsbreite der Verbraucherleistung von ihrer dem kleineren Sollwert entsprechenden unteren Grenze des Sollwert-Bandes.

Die Tatsache, daß bei der Erfindung grundsätzlich bereits eine Bestimmung der Verbraucherleistung selbst aus geeigneten Messwerten, nämlich der Differenz von Vorlauf- und Rücklauftemperatur des Wärmeträgermediums und des Gesamtmassenstroms, gegeben ist, macht sich ein weiterer untergeordneter Erfindungsgedanke zu einem anderen Zweck zunutze, nämlich um insbesondere bei Heizungsanlagen unter bestimmten Umständen Energieeinsparungen sogar gravierenden Ausmaßes erreichen zu können. Insbesondere bei solchen Anlagen kommt es nämlich erfahrungsgemäß häufig vor, daß der Benutzer derselben über längere Zeiträume von den mit der Anlage zu beheizenden Räumen abwesend ist, wie beispielsweise wegen Urlaubs oder dergleichen. Durch geeignete regelungsseitige Maßnahmen läßt sich gerade während solcher Abwesenheitszeiten besonders viel Energie und damit Kostenaufwand sparen, wenn man dafür sorgen könnte, daß zwar ein Frostschutzbetrieb mit entsprechend auf jede Änderung der beispielsweise klimatischen Außenbedingungen reagierender ausreichender, dabei jedoch auf einem Minimum gehaltener Zufuhr von Wärmeleistung zum Heizungsvorlauf gewährleistet ist. Diese Aufgabe stellt sich gleichermaßen für Heizungsanlagen mit in diskontinuierlichem Betrieb wie mit in kontinuierlichem Betrieb arbeitendem Wärmeerzeuger als auch unabhängig von der Art des Betriebes desselben mit einer kontinuierliche Zufuhr der Wärmeleistung zum Heizungsvorlauf bewirkenden Mehrwege-Mischeinrichtung. Obgleich sich diese Probleme wesentlich häufiger und mit in größerem Ausmaß zu erwartenden nachteiligen Folgen bei Heizungsanlagen stellen dürften, sind sie auch bei Kühlanlagen keineswegs ausgeschlossen, wenn es bei diesen gilt, einen Kühlbetrieb mit einer gerade noch für die Erhaltung eines Kühlgutes ausreichender, jedoch möglicherweise wesentlich über dem normalen Kühlbetrieb liegender Temperatur aufrechtzuerhalten.

Für Ausführungen der Erfindung mit Veränderung der dem im Heizungs-bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger kann dies zweckmäßig dadurch erreicht werden, daß das Verhältnis der Dauer der Zuführung von Betriebsenergie zum Wärme- bzw. Kälteerzeuger zur Dauer des Aussetzens der Zufuhr von Betriebsenergie zum Wärme-bzw Kälteerzeuger im Bereich zwischen etwa 1 zu 5 bis 1 zu 20 gewählt wird. Für diese automatische Auszeit-Anpassung an eine geregelte Einzeit wird für solche mit in diskontinuierlichem Betrieb arbeitendem Wärme- bzw. Kälteerzeuger betriebene Ausführungen der Erfindung vorrichtungsseitig vorgesehen, daß die Regeleinrichtung eine über eine Impulsleitung mit dem Stellbefehlgeber verbundene Zeitgabeeinrichtung mit einstellbarem Zeitspannen-Programmspeicher für die beispielsweise bei Frostschutzbetrieb erwünschte Dauer des Aussetzens der Zuführung von Betriebsenergie zum Wärme-bzw. Kälteerzeuger aufweist, mittels derer der Stellbefehlgeber im Sinne der Einhaltung eines Verhältnisses der Dauer der Zuführung von Betriebsenergie zum Wärme- bzw. Kälteerzeuger zur Dauer des Aussetzens derselben im Bereich zwischen etwa 1 zu 5 bis 1 zu 20 betätigbar ist, wobei vorzugsweise die Zeitgabeeinrichtung über eine Impulsleitung mit einer Stellungsanzeigeeinrichtung zur Rückmeldung des der Zufuhr von Betriebsenergie zum Wärme- bzw. Kälteerzeuger und/oder des dem Aussetzen der Zufuhr von Betriebsenergie zum Wärme- bzw. Kälteerzeuger entsprechenden Betriebszustandes des Stellbefehlgebers verbunden ist.

Die sich mit Ausführungen der Erfindung mit Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälterzeuger befassende Alternative dieses untergeordneten Erfindungsgedankens kennzeichnet sich dadurch, daß dem Wärme- bzw. Kälteerzeuger Betriebsenergie in für Aufrechterhaltung eines im Bereich zwischen etwa dem 0,2- bis 0,05-fachen der maximal möglichen Verbraucherleistung (Inbetriebnahmeverbraucherleistung) oder der maximalen Verbraucherleistung (Anfahrverbraucherleistung) oder der Betriebsverbraucherleistung oder der Bezugsgröße für deren zulässige Schwankungsbreite liegenden Bruchteils dieser Verbraucherleistung ausreichendem Maß zugeführt wird. Für diese Nutzung einer Rest-Zufuhrleistung wird bei solchen mit in kontinuierlichem Betrieb arbeitendem Wärme- bzw. Kälteerzeuger betriebenen Ausführungen der Erfindung vorrichtungsseitig vorgesehen, daß die Regeleinrichtung eine über eine Impulsleitung mit dem Stellbefehlgeber verbundene Leistungsbegrenzungseinrichtung mit einstellbarem Leistungs-Programmspeicher für das beispielsweise bei Frostschutzbetrieb erwünschte Maß der dem Wärme- bzw. Kälteerzeuger zuzuführenden Betriebsenergie aufweist, mittels derer der Stellbefehlgeber im Sinne der Aufrechterhaltung eines im Bereich zwischen etwa dem 0,2- bis 0,05-fachen der Inbetriebnahmeverbraucherleistung oder der Anfahrverbraucherleistung oder der Betriebsverbraucherleistung oder der Bezugsgröße für die zulässige Schwankungsbreite dieser Verbraucherleistung liegenden Bruchteils derselben betätigbar ist, wobei vorzugsweise die Leistungsbegrenzungseinrichtung für eine Impulsleitung mit einer Stellungsanzeigeeinrichtung zur Rückmeldung des Betriebszustandes des Stellbefehlgebers verbunden ist.

Für die diese Nutzung einer Rest-Zufuhrleistung bei mit einer Mehrwege-Mischeinrichtung arbeitenden Ausführungen der Erfindung sieht die entsprechende Alternative dieses untergeordneten Erfindungsgedankens vor, daß dem Heizungs- bzw. Kühlmittelvorlauf Wärmeträgermedium in einem für Aufrechterhaltung eines im Bereich zwischen etwa dem 0,2- bis 0,05-fachen der maximal möglichen Verbraucherleistung (Inbetriebnahmeverbraucherleistung) oder der maximalen Verbraucherleistung (Anfahrverbraucherleistung) oder der Betriebsverbraucherleistung oder der Bezugsgröße für deren zulässige Schwankungsbreite liegenden Bruchteils dieser Verbraucherleistung ausreichenden Verhältnis des vom Wärme- bzw. Kälteerzeuger her zugespeisten Massenstroms zum Gesamtmassenstrom des Wärmeträgermediums zugeführt wird. Vorrichtungstechnisch kann hierfür vorteilhaft vorgesehen sein, daß die Regeleinrichtung eine über eine Impulsleitung mit dem Stellbefehlgeber verbundene Massenstrombegrenzungseinrichtung mit einstellbarem Massenstrom-Programmgeber für den beispielsweise bei Frostschutzbetrieb erwünschten in den Heizungs- bzw. Kühlmittelvorlauf einzuspeisenden Massenstrom des Wärmeträgermediums aufweist, mittels derer der Stellbefehlgeber im Sinne der Aufrechterhaltung eines für die Beibehaltung eines im Bereich zwischen etwa dem 0,2- bis 0,05-fachen der Inbetriebnahmeverbraucherleistung oder der Anfahrverbraucherleistung oder der Betriebsverbraucherleistung oder der Bezugsgröße für die zulässige Schwankungsbreite dieser Verbraucherleistung liegenden Bruchteils derselben ausreichenden Verhältnisses des vom Wärme- bzw. Kälteerzeuger her zugespeisten Massenstroms zum Gesamtmassenstrom des Wärmeträgermediums betätigbar ist, wobei vorzugsweise die Massenstrombegrenzungseinrichtung über eine Impulsleitung mit einer Stellungsanzeigeeinrichtung zur Rückmeldung des Betriebszustandes des Stellbefehlgebers verbunden ist.

Zusammenfassend ist für alle Varianten dieses untergeordneten Erfindungsgedankens festzustellen, daß die Benutzung der Zeitdauer an sich und insbesondere in ihrer informationsmäßigen Aufbereitung beispielsweise als Zeitverhältnis, wie beispielsweise bei Ausführungen mit in diskontinuierlichem Betrieb arbeitendem Wärme- bzw. Kälteerzeuger, es erstmalig und zudem auch noch in überraschend einfacher und kostengünstiger Weise ermöglicht, den verfolgten Zweck der Durchführung eines die Anlage sichernden Frostschutzbetriebes mit einem Minimum an Energieaufwand zu gewährleisten, wobei für die Ausführungen mit in kontinuierlichem Betrieb arbeitendem Wärme- bzw. Kälteerzeuger oder mit Mehrwege-Mischeinrichtung vorteilhaft noch hinzukommt, daß man die Leistung direkt einstellen kann.

Wie bereits dargelegt, kann es im Laufe der Betriebsdauer einer Heizungs-bzw. Kühlanlage auftreten, daß die regelmäßig zu bestimmten Zeiten, wie beispielsweise bei dem täglichen Anfahrvorgang der Anlage, ermittelte Verbraucherleistung vom ursprünglichen maximal möglichen Wert, nämlich der Inbetriebnahmeverbraucherleistung, zu immer geringeren Werten driftet. Solange dies nicht zu Niedrigwerten der in den Heizungs- bzw. Kühlmittelvorlauf eingespeisten Wärme- bzw. Kälteleistung führt, die aufgrund der erfindungsgemäßen Regelung der Verbraucherleistung entspricht und als solche ermittelt wird, braucht man an sich keine Befürchtung bezüglich der Betriebsfähigkeit der Heizungs- bzw. Kühlanlage zu hegen. Allerdings wäre bei einem solchen Driften je nach Führung des Verfahrens nach der Erfindung bzw. Auslegung der betreffenden Vorrichtung dann, wenn man hierauf nicht in geeigneter Weise reagieren würde, nicht auszuschließen, daß dies zu steigenden Energieverlusten führen kann. Es würde nämlich für einen solchen Fall die obere und/oder untere Grenze des Sollwert-Bandes der Schwankungsbreite der Verbraucherleistung als Führungsgröße zu groß gewählt sein können, so daß das System sich mit seinen zulässigen Schwankungen über Zeiträume selbst überlassen bleibt, in denen aufgrund der Leistungsbilanz-Situation durchaus bereits häufigere Regeleingriffe angezeigt wären. Um diesem Übelstand zu begegnen, sieht ein anderer untergeordneter Erfindungsgedanke vor, daß bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximal mögliche Verbraucherleistung (Inbetriebnahmeverbraucherleistung) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zum Gesamtmassenstrom bestimmenden Organs der Mehrwege-Mischeinrichtung die Verbraucherleistung als maximale Verbraucherleistung (Anfahrverbraucherleistung) ermittelt und bei Auftreten einer Abweichung der maximalen Verbraucherleistung (Anfahrverbraucherleistung) von der maximal möglichen Verbraucherleistung (Inbetriebnahmeverbraucherleistung) das vorgegebene Sollwert-Band der Schwankungsbreite der Verbraucherleistung in Abhängigkeit vom Verhältnis maximaler zu maximal möglicher Verbraucherleistung verändert wird. Vorrichtungstechnisch kann hierfür mit Vorteil vorgesehen sein, daß die Regeleinrichtung eine Sollwert-Wahleinrichtung mit einer oder je einer entweder einerseits vorzugsweise jeweils über eine Messwertleitung mit den Messeinrichtungen für die Vorlauf- und die Rücklauftemperatur des Wärmeträgermediums oder über eine Impulsleitung mit der Einrichtung zur Ermittlung der Differenz zeitgleicher Messwerte dieser beiden Temperaturen des Wärmeträgermediums und andererseits vorzugsweise über eine Messwertleitung mit der Messeinrichtung für den Gesamtmassenstrom des Wärmeträgermediums oder über eine Impulsleitung mit der Multipliziereinrichtung zur kontinuierlichen oder in vorgegebenen Zeitabständen erfolgenden Bestimmung von Momentanwerten der Verbraucherleistung verbundenen Detektoreinrichtung zur Ermittlung der im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstromdes Wärmeträgermediums zuspeisender Stellung des das Verhältnis von eingespeistem Massenstrom zu Gesamtmassenstrom bestimmenden Organs der Mehrwege-Mischeinrichtung als maixmal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebs bei Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, auftretenden Verbraucherleistung und eine Messwert-Speichereinrichtung für die maximal mögliche Verbraucherleistung (Inbetriebnahmeverbraucherleistung) sowie eine einerseits über eine Impulsleitung mit dieser und andererseits über jeweils eine Messwertleitung mit den Messeinrichtungen für die Vorlauf- und die Rücklauftemperatur des Wärmeträgermediums oder über eine Impulsleitung mit der Einrichtung zur Ermittlung der Differenz zeitgleicher Messwerte dieser beiden Temperaturen des Wärmeträgermediums und dabei jeweils vorzugsweise über eine Messwertleitung mit der Messeinrichtung für den Gesamtmassenstrom des Wärmeträgermediums oder über jeweils eine Impulsleitung mit der Multipliziereinrichtung oder mit der Detektoreinrichtung verbundene Vergleichseinrichtung zur Ermittlung von Abweichungen der maximalen Verbraucherleistung (Anfahrverbraucherleistung) von der maximal möglichen Verbraucherleistung (Inbetriebnahmeverbraucherleistung) und eine über eine Impulsleitung mit dieser verbundene Verhältnisbildungseinrichtung aufweist, die über jeweils eine Impulsleitung mit zumindest einer der Sollwert-Bildungseinrichtungen für die obere bzw. die untere Grenze des Sollwert-Bandes der Schwankungsbreite der Verbraucherleistung oder mitder oder zumindest einer der Programmspeichereinrichtung(en) für die Beeinflussung des Sollwert-Bandes der Schwankungsbreite der Verbraucherleistung oder mit zumindest einer Verstelleinrichtung für diese oder mit zumindest einem Sollwertgeber verbunden und mittels derer die betreffende Sollwert-Bildungseinrichtung bzw. Programmspeichereinrichtung bzw. Verstelleinrichtung bzw. der betreffende Sollwertgeber im Sinne einer Änderung des vorgegebenen Sollwert-Bandes der Schwankungsbreite der Verbraucherleistung in Abhängigkeit vom Verhältnis von maximaler Verbraucherleistung (Anfahrverbraucherleistung) zu maximal möglicher Verbraucherleistung (Inbtriebnahmeverbraucherleistung) verstellbar ist.

Im übrigen kann eine solche Drift zweckmäßig auch noch anderweitig ausgenützt werden, indem in weiterer Fortbildung der Erfindung gemäß einem anderen untergeordneten Gedanken derselben bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisendor Stellung des das Verhältnis von eingespeistem Massenstrom zu Gesamtmassenstrom bestimmenden Organs der Mehrwege-Mischeinrichtung die Verbraucherleistung als maximal mögliche Verbraucherleistung (Inbetriebnahmeverbraucherleistung) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung die Verbraucherleistung als maximale Verbraucherleistung (Anfahrverbraucherleistung) ermittelt und bei Auftreten einer vorbestimmten Abweichung der maximalen Verbraucherleistung (Anfahrverbraucherleistung) von der maximal möglichen Verbraucherleistung (Inbetriebnahmeverbraucherleistung) diese Unregelmäßigkeit optisch und/oder akustisch wahrnehmbar gemacht wird. Hierfür kann zweckmäßig mindestens eine Meldeeinrichtung zur Abgabe einer optisch und/oder akustisch wahrnehmbaren Information vorgesehen sein, wobei die Regeleinrichtung eine Sollwert-Wahleinrichtung mit einer oder je einer entweder einerseits vorzugsweise jeweils über eine Messwertleitung mit den Messeinrichtungen für die Vorlauf- und die Rücklauftemperatur des Wärmeträgermediums oder über eine Impulsleitung mit der Einrichtung zur Ermittlung der Differenz zeitgleicher Messwerte dieser beiden Temperaturen des Wärmeträgermediums und andererseits vorzugsweise über eine Messwertleitung mit der Messeinrichtung für den Gesamtmassenstrom des Wärmeträgermediums oder über eine Impulsleitung mit der Multipliziereinrichtung zur kontinuierlichen oder in vorgegebenen Zeitabständen erfolgenden Bestimmung von Momentanwerten der Verbraucherleistung verbundenen Leistungs-Detektoreinrichtung zur Ermittlung der im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximal mögliche Verbraucherleistung (Inbetriebnahmeverbraucherleistung) zu dem Zeitpunkt, zu dem nach einer Zeitspanne mit paktisch konstantem Wert der Verbraucherleitung erstmalig eine Verringerung derselben auftritt, auftretenden Verbraucherleistung und/oder der im Verlauf des Heizbetriebes bei Aufheizen nach einer Abkühlung bzw. im Verlauf des Kühlbetriebes bei Abkühlen nach einer Erwärmung bei Vollast bzw. bei dem Heizungs-bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximale Verbraucherleistung (Anfahrverbraucherleistung) zu dem Zeitpunkt, zu dem nach einer Zeitspanne mit praktisch konstantem Wert der Verbraucherleistung erstmalig eine Verringerung derselben auftritt, auftretenden Verbraucherleistung und eine Messwert-Speichereinrichtung für die maximal mögliche Verbraucherleistung (Inbetriebnahmeverbraucherleistung) sowie eine einerseits über eine Impulsleitung mit dieser und andererseits über jeweils eine Messwertleitung mit den Messeinrichtungen für die Vorlauf- und die Rücklauftemperatur des Wärmeträgermediums oder über eine Impulsleitung mit der Einrichtung zur Ermittlung der Differenz zeitgleicher Messwerte dieser beiden Temperaturen des Wärmeträgermediums und dabei jeweils vorzugsweise über eine Messwertleitung mit der Messeinrichtung für den Gesamtmassenstrom des Wärmeträgermediums oder über jeweils eine Impulsleitung mit der Multipliziereinrichtung oder mit der Leistungs-Detektoreinrichtung verbundene Vergleichseinrichtung zur Ermittlung von Abweichungen der maximalen Verbraucherleistung (Anfahrverbraucherleistung) von der maximal möglichen Verbraucherleistung (Inbetriebnahmeverbraucherleistung) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer dem Über- oder Unterschreiten eines vorbestimmten Wertes einer solchen Abweichung entsprechenden Unregelmäßigkeit aktivierbar ist bzw. sind. Der Vorteil dieses Erfindungsgedankens ist, daß er in höchst einfacher Weise eine Detektions-Information darüber ermöglicht, ob bzw. daß gegebenenfalls ein Defekt im Energiezuführungszug des Wärme- bzw. Kälteerzeugers zum Wärmeträgermedium vorliegt, der sich je nach Ausgestaltung des Wärme- bzw. Kälteerzeugers beispielsweise als Brennerdefekt oder aber als Beeinträchtigung der Energiezufuhr zum Wärmeträgermedium im Wärmetauscher des Wärme- bzw. Kälteerzeugers auf der Rauchgas- und/oder der Wärmeträgermediumsseite beispielsweise in Form einer Verrußung bzw. Verkalkung dieses Wärmetauschers darstellt.

Auch eine weiter spezifizierte Detektion von Betriebs- oder Anlagenfehlern ist in weiterer zweckmäßiger Fortbildung der Erfindung möglich, wenn bei Inbetriebnahme des Verfahrens für Heizbetrieb oder für Kühlbetrieb bei voller Öffnung aller Drosseleinrichtungen der Gesamtmassenstrom als maximal möglicher Gesamtmassenstrom (Inbetriebnahmegesamtmassenstrom) und bei Heizbetrieb für Aufheizen nach einer Abkühlung bzw. bei Kühlbetrieb für Abkühlen nach einer Erwärmung bei voller Öffnung aller Drosseleinrichtungen der Gesamtmassenstrom als maximaler Gesamtmassenstrom (Anfahrgesamtmassenstrom) ermittelt und bei Auftreten einer vorbestimmten Abweichung des maximalen Gesamtmassenstroms (Anfahrgesamtmassenstroms) vom maximal möglichen Gesamtmassenstrom (Inbetriebnahmegesamtmassenstrom) diese Unregelmäßigkeit optisch und/oder akustisch wahrnehmbar gemacht wird. Hierfür kann zweckmäßig vorrichtungsseitig vorgesehen sein, daß mindestens eine Meldeeinrichtung zur Abgabe einer optisch und/oder akustisch wahrnehmbaren Information vorgesehen ist und daß die Regeleinrichtung eine Sollwert-Wahleinrichtung mit einer oder je einer vorzugsweise über eine Messwertleitung mit der Messeinrichtung für den Gesamtmassenstrom verbundenen Massenstrom-Detektoreinrichtung zur Ermittlung des im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximal möglicher Gesamtmassenstrom (Inbetriebnahmegesamtmassenstrom) zu dem Zeitpunkt, zu dem nach einer Zeitspanne mit praktisch konstantem Wert der Verbraucherleistung erstmalig eine Verringerung derselben auftritt, auftretenden Gesamtmassenstroms und oder des im Verlauf des Heizbetriebs bei Aufheizen nach einer Abkühlung bzw. im Verlauf des Kühlbetriebes bei Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als maximaler Gesamtmassenstrom (Anfahrgesamtmassenstrom) zu dem Zeitpunkt, zu dem nach einer Zeitspanne mit praktisch konstantem Wert der Verbraucherleistung erstmalig eine Verringerung derselben auftritt, auftretenden Gesamtmassenstroms und eine Messwertspeichereinrichtung für den maximal möglichen Gesamtmassenstrom (Inbetriebnahmegesamtmassenstrom) sowie eine einerseits über eine Impulsleitung mit dieser und andererseits über eine Messwertleitung mit der Messeinrichtung für den Gesamtmassenstrom oder über eine Impulsleitung mit der Massenstrom-Detektoreinrichtung verbundene Massenstrom-Vergleichseinrichtung zur Ermittlung von Abweichungen des maximalen Gesamtmassenstroms (Anfahrgesamtmassenstroms) vom maximal möglichen Gesamtmassenstrom (Inbetriebnahmegesamtmassenstrom) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer dem Über- oder Unterschreiten eines vorbestimmten Wertes einer solchen Abweichung entsprechenden Unregelmäßigkeit aktivierbar ist bzw. sind. Diese spezielle Ausführungsform der Erfindung hat den spezifischen Vorteil, daß sie implementierungstechnisch praktisch keine Schwierigkeiten macht, weil für die Messungen der betreffenden Massenstromwerte die Messeinrichtung ohnehin vorhanden und in sachgerechter Weise angeschlossen ist, auf Seiten der Regeleinrichtung im übrigen die Aufbereitung der Massenstrom-Messwerten zu der gewünschten Detektionsinformation auch keinerlei Schwierigkeiten bereitet. Durch diese Informationen bezüglich dieser Massenstromwerte lassen sich eindeutige Aussagen über die Gesamthydraulik der Heizungs- bzw. Kühlanlage insbesondere im Hinblick auf die Verfassung der Umwälzpumpe und des das Wärmeträgermedium führenden Leitungssystems einschließlich der zugehörigen Wärmetauscher und Heizkörper bzw. Kühleinrichtungen jeweils auf deren Wärmeträgermediumsseite, und zwar dies insbesondere im Hinblick auf Verkalkungen und/oder schadhafte Drosseleinrichtungen oder Leckagen an Wärmeträgermedium, ableiten.

Eine weitere Möglichkeit der Verfeinerung der Selektierung ergibt sich, wenn gemäß einem anderen untergeordneten Erfindungsgedanken bei Inbetriebnahme des Verfahrens für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimal mögliche Temperaturdifferenz (Inbetriebnahmetemperaturdifferenz) und bei Heizbetrieb für Aufheizen nach einer Abkühlung bzw. bei Kühlbetrieb für Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung sowie jeweils voller Öffnung aller Drosseleinrichtungen die Differenz von Vorlauf- und Rücklauftemperatur des Wärmeträgermediums als minimale Temperaturdifferenz (Anfahrtemperaturdifferenz) ermittelt und bei Auftreten einer vorbestimmten Abweichung der minimalen Temperaturdifferenz (Anfahrtemperaturdifferenz) von der minimal möglichen Temperaturdifferenz (Inbetriebnahmetemperaturdifferenz) diese Unregelmäßigkeit optisch und/oder akustisch wahrnehmbar gemacht wird. Vorrichtungsseitig kann hierfür zweckmäßig mindestens eine Meldeeinrichtung zur Abgabe einer optisch und/oder akustisch wahrnehmbaren Information vorgesehen sein, wobei die Regeleinrichtung eine Sollwert-Wahleinrichtung mit einer oder je einer vorzugsweise über eine Messwertleitung mit den Messeinrichtungen für die Vorlauf- und die Rücklauftemperatur des Wärmeträgermediums oder über jeweils eine Impulsleitung mit der Einrichtung zur Ermittlung der Differenz zeitgleicher Messwerte von Vorlauf- und Rücklauftemperatur verbundenen Temperaturdifferenz-Detektoreinrichtung zur Ermittlung der im Verlauf der Inbetriebnahme der Vorrichtung für Heizbetrieb oder für Kühlbetrieb bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als minimal mögliche Differenz von Vorlauf- und Rücklauftemperatur des Wärmeträgermediums (Inbetriebnahmetemperaturdifferenz) zu dem Zeitpunkt, zu dem nach einer Zeitspanne mit praktisch konstantem Wert der Verbraucherleistung erstmalig eine Verringerung derselben auftritt, auftretenden Differenz von Vorlauf- und Rücklauftemperatur des Wärmeträgermediums und/oder der im Verlauf des Heizbetriebes bei Aufheizen nach einer Abkühlung bzw. im Verlauf des Kühlbetriebes bei Abkühlen nach einer Erwärmung bei Vollast bzw. bei dem Heizungs- bzw. Kühlmittelvorlauf vom Wärme- bzw. Kälteerzeuger her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung als minimale Differenz von Vorlauf- und Rücklauftemperatur (Anfahrtemperaturdifferenz) zu dem Zeitpunkt, zu dem nach einer Zeitspanne mit praktisch konstantem Wert der Verbraucherleistung erstmalig eine Verringerung derselben auftritt, auftretenden Differenz von Vorlauf- und Rücklauftemperatur des Wärmeträgermediums und eine Messwertspeichereinrichtung für die minimal mögliche Differenz von Vorlauf- und Rücklauftemperatur (Inbetriebnahmetemperaturdifferenz) sowie eine einerseits über eine Impulsleitung mit dieser und andererseits über jeweils eine Messwertleitung mit den Messeinrichtungen für die Vorlauf- und die Rücklauftemperatur des Wärmeträgermediums oder über eine Impulsleitung mit der Einrichtung zur Ermittlung der Differenz zeitgleicher Messwerte von Vorlauf- und Rücklauftemperatur oder über eine Impulsleitung mit der Temperaturdifferenz-Detektoreinrichtung verbundene Vergleichseinrichtung zur Ermittlung von Abweichungen der minimalen Differenz von Vorlauf- und Rücklauftemperatur (Anfahrtemperaturdifferenz) von der minimal möglichen Differenz von Vorlauf- und Rücklauftemperatur (Inbetriebnahmetemperaturdifferenz) mit einer Grenzdetektoreinrichtung aufweist, die über jeweils eine Impulsleitung mit der bzw. den Meldeeinrichtung(en) verbunden ist und mittels derer diese zur Wahrnehmbarmachung einer einem dem Über- oder Unterschreiten eines vorbestimmten Wertes einer solchen Abweichung entsprechenden Unregelmäßigkeit aktivierbar ist bzw. sind. Die Detektions-Information bezüglich der Differenz von Vorlauf- und Rücklauftemperatur des Wärmeträgermediums läßt nämlich bei Kenntnis des Massenstroms im System und/oder der Verbraucherleistung eindeutig eine Aussage darüber zu, ob es sich bei einem Abfalldriften der Verbraucherleistung um einen Defekt auf der Rauchgasseite oder aber auf der Wärmeträgermediumsseite des Wärmetauschers des Wärme- bzw. Kälteerzeugers als Ursache hierfür handelt. Diese Art der Detektion ist immer dann von besonderer Bedeutung, wenn es aufgrund der Eigenheiten der betreffenden Anlageninstallation nicht möglich ist, die Rauchgastemperatur eines mit fossilem Brennstoff befeuerten Wärme- bzw. Kälteerzeugers zu messen. Hervorzuheben ist in diesem Zusammenhang, daß unter einem mit fossilem Brennstoff befeuerten Wärme- bzw. Kälteerzeuger hier auch eine Kompressionswärmepumpe oder eine Kompressionskältemaschine mit gas- oder dieselmotorisch angetriebenem Kompressor oder eine Sorptionswärmepumpe oder Sorptionskältemaschine zu verstehen ist. Handelt es sich um eine mit einer Elektrokompressionswärmepumpe oder Elektrokompressionskältemaschine arbeitende Anlage, dann erbringt dieser untergeordnete Erfindungsgedanke jedenfalls die Information, daß ein Leistungsabfall des Kompressors oder der gesamten den Wärme- bzw. Kälteerzeuger darstellenden Wärmepumpen- bzw. Kältemaschinenanlage vorliegt, sofern Messung des Gesamtmassenstroms keine komplementäre Drift erkennen läßt.

Noch bedeutungsvoller als die Detektion von Anlagendefekten, die normalerweise bis auf Extremfälle sich nicht sofort und in gravierenden Energieverlusten auswirken, ist die Möglichkeit, vom Verbraucher unbeabsichtigten und entsprechend unerwünschten Energieverlusten, wie zum Beispiel langandauernden Verlusten durch Wärme- bzw. Kälteleistungsabgabe, bei einer Heizungs- oder gar Kühlanlage beispielsweise durch offenstehende Fenster, zu begegnen. Hierfür sieht eine nicht naheliegende Weiterbildung der Erfindung für mit Veränderung der dem im Heizungs- bzw. Kühlmittelvorlauf befindlichen Wärmeträgermedium zugeführten Wärme- bzw. Kälteleistung durch Ein- und Ausschaltung der Zufuhr vom Betriebsenergie zum Wärme- bzw. Kälteerzeuger arbeitende Ausführungen der Erfindung vor, daß bei Fehlen einer Abweichung der Schwankung der Verbraucherleistung über die obere Grenze des Sollwert-Bandes ihrer Schwankungsbreite hinaus überhaupt und/oder bei Fehlen einer Abweichung der Schwankung der Verbraucherleistung über die obere Grenze des Sollwert-Bandes ihrer Schwankungsbreite hinaus innerhalb einer vorgegebenen Zeitspanne diese Unregelmäßigkeit optisch und/oder akustisch wahrnehmbar gemacht wird. Hierfür kann vorrichtungsseitig zweckmäßig mindestens eine Meldeeinrichtung zur Abgabe einer optisch und/oder akustisch wahrnehmbaren Information vorgesehen sein, die über eine Impulsleitung an eine Auslöseeinrichtung, die ihrerseits über eine Impulsleitung mit der Leistungsvergleichseinrichtung der Regeleinrichtung zur Bestimmung der Abweichung der Schwankung der Verbraucherleistung über die obere und/oder unter die untere Grenze des Sollwert-Bandes ihrer Schwankungsbreite und/oder mit einer Messwertspeichereinrichtung verbunden ist, die über eine Impulsleitung mit dieser Leistungsvergleichseinrichtung und/oder mit einer über jeweils eine Messwertleitung an die Messeinrichtungen für die Vorlauf- und die Rücklauftemperatur und für den Gesamtmassenstrom des Wärmeträgermediums und/oder an eine über eine Impulsleitung mit der Multipliziereinrichtung zur Ermittlung von Momentanwerten der Verbraucherleistung angeschlossenen Zeitsteuereinrichtung zur Durchführung einer Mehrzahl zeitgleicher Messungen jeweils von Vorlauf- und Rücklauftemperatur und Gesamtmassenstrom des Wärmeträgermediums und/oder einer Mehrzahl von Ermittlungen von Momentanwerten der Verbraucherleistung und/oder einer Mehrzahl von Ermittlungen der Differenz jeweils des letzten ermittelten Momentanwertes der Verbraucherleistung und des vorangegangenen Wertes derselben und/oder zur Aufnahme und/oder zum Abruf eines oder mehrerer Werte(s) der ermittelten Differenz dieser Momentanwerte der Verbraucherleistung oder mit einer jeweils über Impulsleitungen an die Messeinrichtungen für die Vorlauf- und die Rücklauftemperatur und für den Gesamtmassenstrom des Wärmeträgermediums und/oder über eine Impulsleitung an die Multipliziereinrichtung zur Ermittlung von Momentanwerten der Verbraucherleistung angeschlossenen Zeitsteuereinrichtung zur Aufnahme und/oder Abgabe eines ermittelten Momentanwertes der Verbraucherleistung oder einer Mehrzahl von von der Multipliziereinrichtung gelieferten Momentanwerten der Verbraucherleistung während einer vorgegebenen Zeitspanne verbunden ist, angeschlossen und von dieser bei Fehlen einer Abweichung der Schwankung der Verbraucherleistung über die obere Grenze des Sollwert-Bandes ihrer Schwankungsbreite hinaus überhaupt und/oder bei Fehlen einer Abweichung der Schwankung der Verbraucherleistung über die obere Grenze des Sollwert-Bandes ihrer Schwankungsbreite hinaus innerhalb einer vorgegebenen Zeitspanne zur Wahrnehmbarmachung dieser Unregelmäßigkeit aktivierbar ist bzw. sind.

Für mit Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger sieht die entsprechende Alternative dieses untergeordneten Erfindungsgedankens vor, daß bei Fehlen einer Abweichung der Schwankung der Verbraucherleistung über die obere Grenze des Sollwert-Bandes ihrer Schwankungsbreite hinaus und/oder bei Fehlen einer Abweichung der Schwankung der Verbraucherleistung über die obere Grenze des Sollwert-Bandes ihrer Schwankungsbreite hinaus innerhalb einer vorgegebenen Zeitspanne die dem Wärme- bzw. Kälteerzeuger zugeführte Betriebsenergie um ein für Aufrechterhaltung einer um einen vorbestimmten Wert erhöhten Verbraucherleistung ausreichendes Maß erhöht und bei weiterem Fehlen einer Abweichung der Schwankung der Verbraucherleistung über die obere Grenze des Sollwert-Bandes ihrer Schwankungsbreite hinaus innerhalb einer weiteren vorgegebenen Zeitspanne vorzugsweise bei andauerndem Fehlen einer Abweichung der Schwankung der Verbraucherleistung über die obere Grenze des Sollwert-Bandes ihrer Schwankungsbreite hinaus innerhalb einer nochmaligen vorgegebenen Zeitspanne trotz nochmaliger Erhöhung der Zufuhr von Betriebsenergie zum Wärme- bzw. Kälteerzeuger um ein für Aufrechterhaltung einer um einen weiteren vorbestimmten Wert nochmals erhöhten Verbraucherleistung ausreichendes Maß diese Unregelmäßigkeit optisch und/oder akustisch wahrnehmbar gemacht wird. Vorrichtungsseitig kann hierfür zweckmäßig mindestens eine Meldeeinrichtung zur Abgabe einer optisch und/oder akustisch wahrnehmbaren Information vorgesehen sein, die über eine Impulsleitung an eine Auslöseeinrichtung, die ihrerseits über eine Impulsleitung mit der Leistungsvergleichseinrichtung der Regeleinrichtung zur Bestimmung der Abweichung der Schwankung der Verbraucherleistung über die obere und/oder unter die untere Grenze des Sollwert-Bandes ihrer Schwankungsbreite und/oder mit einer Messwertspeichereinrichtung, die über eine Impulsleitung mit dieser Leistungsvergleichseinrichtung und/oder mit einer über jeweils eine Messwertleitung an die Messeinrichtungen für die Vorlauf- und die Rücklauftemperatur und für den Gesamtmassenstrom des Wärmeträgermediums und/oder an eine über eine Impulsleitung mit der Multipliziereinrichtung zur Ermittlung von Momentanwerten der Verbraucherleistung angeschlossenen Zeitsteuereinrichtung zur Durchführung einer Mehrzahl zeitgleicher Messungen jeweils von Vorlauf- und Rücklauftemperatur und Gesamtmassenstrom des Wärmeträgermediums und/oder einer Mehrzahl von Ermittlungen von Momentanwerten der Verbraucherleistung und/oder einer Mehrzahl von Ermittlungen der Differenz jeweils des letzten ermittelten Momentanwertes der Verbraucherleistung und des vorangegangenen Wertes derselben und/oder zur Aufnahme und/der zum Abruf eines oder mehrerer Werte(s) der ermittelten Differenz dieser Momentanwerte der Verbraucherleistung oder mit einer jeweils über Impulsleitungen an die Messeinrichtungen für die Vorlauf- und die Rücklauftemperatur und für den Gesamtmassenstrom des Wärmeträgermediums und/oder über eine Impulsleitung an die Multipliziereinrichtung zur Ermittlung von Momentanwerten der Verbraucherleistung angeschlossenen Zeitsteuereinrichtung zur Aufnahme und/oder Abgabe eines ermittelten Momentanwertes der Verbraucherleistung oder einer Mehrzahl von von der Multipliziereinrichtung gelieferten Momentanwerten der Verbraucherleistung während einer vorgegebenen Zeitspanne verbunden ist, sowie ferner mit einer über eine Impulsleitung mit einer ihrerseits über eine Impulsleitung einerseits mit der Leistungsvergleichseinrichtung und andererseits mit dem Stellbefehlgeber verbundenen vorzugsweise einstellbaren Zeitprogrammspeichereinrichtung zur Vorgabe einer vorbestimmten Anzahl von Zeitspannen vorgegebener Länge, während derer nach jeweiliger Erhöhung der Zufuhr von Betriebsenergie zum Wärme- bzw. Kälteerzeuger um ein für Aufrechterhaltung einer um einen vorbestimmten Wert erhöhten Verbraucherleistung ausreichendes Maß die Abweichung der Schwankung der Verbraucherleistung über die obere Grenze des Sollwert-Bandes ihrer Schwankungsbreite hinaus bestimmbar ist, verbunden ist, angeschlossen und von dieser bei Fehlen einer Abweichung der Schwankung der Verbraucherleistung über die obere Grenze des Sollwert-Bandes ihrer Schwankungsbreite hinaus der Stellbefehlgeber im Sinne einer Erhöhung der Zufuhr von Betriebsenergie zum Wärme- bzw. Kälteerzeuger um ein für Aufrechterhaltung einer um einen vorbestimmten Wert erhöhten Verbraucherleistung ausreichendes Maß betätigbar ist und bei weiterem Fehlen einer Abweichung der Schwankung der Verbraucherleistung über die obere Grenze des Sollwert-Bandes ihrer Schwankungsbreite hinaus innerhalb einer weiteren vorgegebenen Zeitspanne vorzugsweise bei andauerndem Fehlen einer Abweichung der Schwankung der Verbraucherleistung über die obere Grenze des Sollwert-Bandes ihrer Schwankungsbreite hinaus innerhalb einer nochmaligen vorgegebenen Zeitspanne trotz nochmaliger Erhöhung der Zufuhr von Betriebsenergie zum Wärme- bzw. Kälteerzeuger um ein für Aufrechterhaltung einer um einen weiteren vorbestimmten Wert nochmals erhöhten Verbraucherleistung ausreichendes Maß durch entsprechende nochmalige Betätigung des Stellbefehlgebers die Meldeeinrichtung(en) zur Wahrnehmbarmachung dieser Unregelmäßigkeit aktivierbar ist bzw. sind.

Und für mit einer Mehrwege-Mischeinrichtung arbeitende Ausführungen der Erfindung sieht die entsprechende Alternative dieses untergeordneten Erfindungsgedankens vor, daß bei Fehlen einer Abweichung der Schwankung der Verbraucherleistung über die obere Grenze des Sollwert-Bandes ihrer Schwankungsbreite hinaus überhaupt und/oder bei Fehlen einer Abweichung der Schwankung der Verbraucherleistung über die obere Grenze des Sollwert-Bandes ihrer Schwankungsbreite hinaus innerhalb einer vorgegebenen Zeitspanne das Verhältnis des vom Wärme- bzw. Kälteerzeuger her in den Heizungs- bzw. Kühlmittelvorlauf eingespeisten Massenstroms zum Gesamtmassenstrom oder der Sollwert der Vorlauftemperatur des Wärmeträgermediums um ein für Aufrechterhaltung einer um einen vorbestimmten Wert erhöhten Verbraucherleistung ausreichendes Maß erhöht und bei weiterem Fehlen einer Abweichung der Schwankung der Verbraucherleistung über die obere Grenze des Sollwert-Bandes ihrer Schwankungsbreite hinaus innerhalb einer weiteren vorgegebenen Zeitspanne vorzugsweise bei andauerndem Fehlen einer Abweichung der Schwankung der Verbraucherleistung über die obere Grenze des Sollwert-Bandes ihrer Schwankungsbreite hinaus innerhalb einer nochmaligen vorgegebenen Zeitspanne trotz nochmaliger Erhöhung des Verhältnisses des vom Wärme- bzw. Kälteerzeuger her in den Heizungs- bzw. Kühlmittelvorlauf eingespeisten Massenstroms zum Gesamtmassenstrom oder des Sollwertes der Vorlauftemperatur des Wärmeträgermediums um ein für Aufrechterhaltung einer um einen weiteren vorbestimmten Wert nochmals erhöhten Verbraucherleistung diese Unregelmäßigkeit optisch und/oder akustisch wahrnehmbar gemacht wird. Vorrichtungstechnisch kann hierfür mindestens eine Meldeeinrichtung zur Abgabe einer optisch und/oder akustisch wahrnehmbaren Information vorgesehen sein, die über eine Impulsleitung an eine Auslöseeinrichtung, die ihrerseits über eine Impulsleitung mit der Leistungsvergleichseinrichtung der Regeleinrichtung zur Bestimmung der Abweichung der Schwankung der Verbraucherleistung über die obere und/oder unter die untere Grenze des Sollwert-Bandes ihrer Schwankungsbreite und/oder mit einer Messwertspeichereinrichtung, die über eine Impulsleitung mit dieser Leistungsvergleichseinrichtung und/oder mit einer über jeweils eine Messwertleitung an die Messeinrichtungen für die Vorlauf- und die Rücklauftemperatur und für den Gesamtmassenstrom des Wärmeträgermediums und/oder an eine über eine Impulsleitung mit der Multipliziereinrichtung zur Ermittlung von Momentanwerten der Verbraucherleistung angeschlossenen Zeitsteuereinrichtung zur Durchführung einer Mehrzahl zeitgleicher Messungen jeweils von Vorlauf- und Rücklauftemperatur und Gesamtmassenstrom des Wärmeträgermediums und/oder einer Mehrzahl von Ermittlungen von Momentanwerten der Verbraucherleistung und/oder einer Mehrzahl von Ermittlungen der Differenz jeweils des letzten ermittelten Momentanwertes der Verbraucherleistung und des vorangegangenen Wertes derselben und/oder zur Aufnahme und/oder zum Abruf eines oder mehrerer Werte(s) der ermittelten Differenz dieser Momentanwerte der Verbraucherleistung oder mit einer jeweils über Impulsleitungen an die Messeinrichtungen für die Vorlauf- und die Rücklauftemperatur und für den Gesamtmassenstrom des Wärmeträgermediums und, oder über eine Impulsleitung an die Multipliziereinrichtung zur Ermittlung von Momentanwerten der Verbraucherleistung angeschlossenen Zeitsteuereinrichtung zur Aufnahme und/oder Abgabe eines ermittelten Momentanwertes der Verbraucherleistung oder einer Mehrzahl von von der Multipliziereinrichtung gelieferten Momentanwerten der Verbraucherleistung während einer vorgegebenen Zeitspanne verbunden ist, sowie ferner mit einer über eine Impulsleitung mit einer ihrerseits über eine Impulsleitung einerseits mit der Leistungsvergleichseinrichtung und andererseits mit dem Stellbefehlgeber verbundenen vorzugsweise einstellbaren Zeitprogrammspeichereinrichtung zur Vorgabe einer vorbestimmten Anzahl von Zeitspannen vorgegebener Länge. während derer nach jeweiliger Erhöhung des Verhältnisses des vom Wärme- bzw. Kälteerzeuger her in den Heizungs- bzw. Kühlmittelvorlauf eingespeisten Massenstroms zum Gesamtmassenstrom oder des Sollwertes der Vorlauftemperatur des Wärmeträgermediums um ein für Aufrechterhaltung einer um einen vorbestimmten Wert erhöhten Verbraucherleistung ausreichendes Maß die Abweichung der Schwankung der Verbraucherleistung über die obere Grenze des Sollwert-Bandes ihrer Schwankungsbreite hinaus bestimmbar ist, verbunden ist. angeschlossen und von dieser bei Fehlen einer Abweichung der Schwankung der Verbraucherleistung über die obere Grenze des Sollwert-Bandes ihrer Schwankungsbreite hinaus der Stellbefehlgeber im Sinne einer Erhöhung des Verhältnisses des vom Wärme- bzw. Kälteerzeuger her in den Heizungsbzw. Kühlmittelvorlauf eingespeisten Massenstroms zum Gesamtmassenstrom oder des Sollwertes der Vorlauftemperatur des Wärmeträgermediums um ein für Aufrechterhaltung einer um einen vorbestimmten Wert erhöhten Verbraucherleistung ausreichendes Maß betätigbar ist und bei weiterem Fehlen einer Abweichung der Schwankung der Verbraucherleistung über die obere Grenze des Sollwert-Bandes ihrer Schwankungsbreite hinaus innerhalb einer weiteren vorgegebenen Zeitspanne vorzugsweise bei andauerndem Fehlen einer Abweichung der Schwankung der Verbraucherleistung über die obere Grenze des Sollwert-Bandes ihrer Schwankungsbreite hinaus innerhalb einer nochmaligen vorgegebenen Zeitspanne trotz nochmaliger Erhöhung des Verhältnisses des vom Wärme- bzw. Kälteerzeuger in den Heizungs- bzw. Kühlmittelvorlauf eingespeisten Massenstroms zum Gesamtmassenstrom oder des Sollwertes der Vorlauftemperatur des Wärmeträgermediums um ein für Aufrechterhaltung einer um einen weiteren vorbestimmten Wert nochmals erhöhten Verbraucherleistung ausreichendes Maß durch entsprechende nochmalige Betätigung des Stellbefehlgebers die Meldeeinrichtung(en) zur Wahrnehmbarmachung dieser Unregelmäßigkeit aktivierbar ist bzw. sind.

Die überragende Bedeutung der Verwendung spezifisch der Schwankungsbreite der Verbraucherleistung als betriebsintern, das heißt aus dem Prozessgeschehen heraus, gewonnene Führungsgröße wird gerade hier dadurch besonders deutlich, daß der Benutzer der Heizungs- bzw. Kühlanlage in seinem Verhalten in das Geschehen insbesondere hinsichtlich schädlichen Energieverbrauchs eingebunden ist. Keine wie auch immer ausgeprägte externe, das heißt wärme- bzw. kältelastseitige physikalische Größe kann als Führungsgröße in der Lage sein, ein solches meist auf Unkenntnis des Benutzers beruhendes und damit unbeabsichtigtes Fehlverhalten der Anlage zu detektieren. Bei Verwendung der intern gewonnenen Führungsgröße in Form der Schwankungsbreite der Verbraucherleistung ist dies jedoch jederzeit möglich. Die jeweils über eine vorbestimmte Zeitspanne erfolgende Beobachtung der für die Bestimmung der Führungsgröße maßgeblichen physikalischen Größe auf Irregularitäten erlaubt in höchst einfacher Weise eine Detektion einer solchen unerwünschten und gegebenenfalls bisher gar nicht einmal anderweitig festgestellten Energievergeudung durch ein offenstehendes Fenster oder eine andere unbeabsichtigte Energieabgabe. Der Prozess der Detektion kann bei kontinuierlich arbeitenden Heizungs- bzw. Kühlanlagen mit moduliert betriebener Steuerung der Zufuhr der Betriebsenergie zum Wärme- bzw. Kälteerzeuger beispielsweise über eine geeignete Brennersteuerung bzw. mit kontinuierlich betriebener Mischersteuerung derart verfeinert werden, daß derartige Irregularitäten eindeutig von auf externen Einflußgrößen beruhenden, beispielsweise durch klimatische oder wetterbedingte Veränderungen bei einer Heizungsanlage zurückzuführenden Energieverlusten unterschieden werden können. Es hat sich gezeigt, daß die somit erzielbaren Energieeinsparungen beträchtlich sein können und daß überdies die Zeitspannen der Detektion auch noch hersteller- bzw. benutzerseitig eingestellt und/oder angepaßt werden können, was zu einer weiteren Feinschärfung im Sinne eines energiegerechten Betriebsverhaltens führt.

Unabhängig von jeder Wahl der die Führungsgröße für die erfindungsgemäße Regelung bestimmenden Werte der Schwankungsbreite der Verbraucherleistung können diese gemäß einem anderen untergeordneten Erfindungsgedanken vorteilhaft so überwacht werden, daß sichergestellt ist, daß keine unnötig häufigen Regelvorgänge mit den damit verbundenen Energieverlusten bzw. zu wenige oder gar keine ausgelöst werden. Dies wird verfahrensmäßig dadurch erreicht, daß über eine vorbestimmte Zeitspanne die Anzahl der im Betrieb auftretenden Abweichungen der Schwankung der Verbraucherleistung über die obere und/oder unter die

die untere Grenze des Sollwert-Bandes ihrer Schwankungsbreite und/oder die Anzahl der im Betrieb auftretenden Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums gemessen und entsprechend der Abweichung dieser Anzahl von einer vorgegebenen Zahl solcher Abweichungen der Schwankung der Verbraucherleistung über die Grenze des Sollwert-Bandes bzw. solcher Veränderungen dieser Wärme- bzw. Kälteleistungszufuhr bzw. der des Sollwertes der Vorlauftemperatur das Sollwert-Band der Schwankungsbreite der Verbraucherleistung verändert wird. Vorrichtungsseitig kann hierfür zweckmäßig die Regeleinrichtung eine vorzugsweise über jeweils eine Meßwertleitung mit den Messeinrichtungen für die Vorlauf- und die Rücklauftemperatur und für den Gesamtmassenstrom des Wärmeträgermediums und/oder mit einer über eine Impulsleitung mit der Multipliziereinrichtung zur Ermittlung von Momentanwerten der Verbraucherleistung verbundene Zeitsteuereinrichtung zur Durchführung einer Mehrzahl zeitgleicher Messungen jeweils von Vorlauf- und Rücklauftemperatur und Gesamtmassenstrom des Wärmeträgermediums und/oder einer Mehrzahl von Ermittlungen von Momentanwerten der Verbraucherleistung und/oder einer Mehrzahl von Ermittlungen der Differenz jeweils des letzten ermittelten Momentanwertes der Verbraucherleistung und des vorangegangenen Wertes derselben und/oder zur Aufnahme und/oder zum Abruf eines oder mehrerer Werte(s) der ermittelten Differenz dieser Momentanwerte der Verbraucherleistung oder eine jeweils über Impulsleitungen mit den Messeinrichtungen für die Vorlauf- und die Rücklauftemperatur und für den Gesamtmassenstrom des Wärmeträgermediums und/oder über eine Impulsleitung mit der Multipliziereinrichtung zur Ermittlung von Momentanwerten der Verbraucherleistung verbundene Zeitsteuereinrichtung zur Aufnahme und/oder Abgabe eines ermittelten Momentanwertes der Verbraucherleistung oder einer Mehrzahl von von der Multipliziereinrichtung gelieferten Momentanwerten der Verbraucherleistung während einer vorgegebenen Zeitspanne, eine Abweichungs-Vergleichseinrichtung zur Ermittlung der Größe und/oder Richtung einer etwaigen Abweichung der Schwankung der Verbraucherleistung über die obere und/oder unter die untere Grenze des vorgegebenen Sollwert-Bandes der Schwankungsbreite der Verbraucherleistung, eine Zähleinrichtung für die während dieser vorgegebenen Zeitspanne etwa aufgetretenen Abweichungen der Schwankung der Verbraucherleistung über die obere und/oder unter die untere Grenze des vorgegebenen Sollwert-Bandes ihrer Schwankungsbreite, eine Programmspeichereinrichtung für eine vorgegebene während dieser vorgegebenen Zeitspanne zulässige Zahl von im Betrieb auftretenden Abweichungen der Schwankung der Verbraucherleistung über die obere und/oder unter die untere Grenze des Sollwert-Bandes ihrer Schwankungsbreite und eine Detektoreinrichtung zur Ermittlung einer etwaigen Abweichung der von der Zähleinrichtung ermittelten Anzahl während dieser vorgegebenen Zeitspanne etwa aufgetretener Abweichungen der Schwankung der Verbraucherleistung über die obere und/oder unter die untere Grenze des Sollwert-Bandes ihrer Schwankungsbreite von der durch die Programmspeichereinrichtung vorgegebenenfür diese vorgegebene Zeitspanne zulässigen Zahl von Abweichungen der Schwankung der Verbraucherleistung über die obere und/oder unter die untere Grenze des Sollwert-Bandes ihrer Schwankungsbreite sowie eine über eine Impulsleitung mit zumindest einem der Sollwertgeber verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Abweichungen der Schwankung der Verbraucherleistung über die obere und/oder unter die untere Grenze des Sollwert-Bandes ihrer Schwankungsbreite von der zulässigen Zahl derselben aufweisen.

Eine besondere Vereinfachung dieses Verfahrens ergibt sich dadurch, daß bei Messung einer gegenüber der vorgegebenen Zahl von Abweichungen der Schwankung der Verbraucherleistung über die obere und/oder unter die untere Grenze des Sollwert-Bandes ihrer Schwankungsbreite und/oder der Anzahl der Veränderungen der Zufuhr von Wärme- bzw. Kälteleistung zum im Heizungs- bzw. Kühlmittelvorlauf befindlichen Wärmeträgermedium bzw. der im Betrieb auftretenden Veränderungen des Sollwertes der Vorlauftemperatur des Wärmeträgermediums größeren Anzahl solcher Abweichungen der Schwankung der Verbraucherleistung bzw. Veränderungen dieser Wärme- bzw. Kälteleistungszufuhr bzw. der im Betrieb auftretenden Veränderungen des Sollwertes der Vorlauftemperatur des Wärmeträgermediums die obere und/oder die untere Grenze des Sollwert-Bandes der Schwankungsbreite der Verbraucherleistung in Richtung einer Vergrößerung der Differenz dieser beiden Grenzen verändert und bei Messung einer gegenüber der vorgegebenen Zahl von Abweichungen der Schwankung der Verbraucherleistung über die obere und/oder unter die untere Grenze des Sollwert-Bandes ihrer Schwankungsbreite und/oder der Anzahl der Veränderungen der Zufuhr von Wärme- bzw. Kälteleistung zum im Heizungs-bzw.

Kühlmittelvorlauf befindlichen Wärmeträgermedium bzw. der im Betrieb auftretenden Veränderungen des Sollwertes der Vorlauftemperatur des Wärmeträgermediums geringeren Anzahl solcher Abweichungen der Schwankung der Verbraucherleistung bzw. Veränderungen dieser Wärme- bzw. Kälteleistungszufuhr bzw. Veränderungen des Sollwertes der Vorlauftemperatur des Wärmeträgermediums die obere und/oder die untere Grenze des Sollwert-Bandes der Schwankungsbreite der Verbraucherleistung in Richtung einer Verringerung der Differenz dieser beiden Grenzen verändert wird, Vorrichtungsseitig kann hierfür zweckmäßig die Regeleinrichtung eine Zähleinrichtung zur Ermittlung der Zahl der während einer vorgegebenen Zeitspanne im Betrieb auftretenden Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärmeträgermedium bzw. Veränderungen des Sollwertes der Vorlauftemperatur des Wärmeträgermediums mit Zählwerk für diese Veränderungen, eine Programmspeichereinrichtung für eine vorgegebene während dieser vorgegebenen Zeitspanne zulässige Zahl solcher Veränderungen und eine Detektoreinrichtung zur Ermittlung einer etwaigen Abweichung der vom Zählwerk der Zähleinrichtung ermittelten Anzahl solcher während dieser vorgegebenen Zeitspanne etwa aufgetretener Veränderungen von der durch die Programmspeichereinrichtung vorgegebenen für diese vorgegebene Zeitspanne zulässigen Zahl solcher Veränderungen sowie eine über eine Impulsleitung mit zumindest einem der Sollwertgeber bzw. den Sollwertgebern verbundene Einrichtung zur automatischen Veränderung des Sollwert-Bandes bzw. zumindest einer seiner Grenzen in Abhängigkeit von dieser durch die Detektoreinrichtung ermittelten Abweichung der Anzahl aufgetretener Veränderungen von der zulässigen Zahl derselben aufweisen. Eine weitere vorteilhafte Vervollkommnung dieser Implementierung kennzeichnet sich durch einen durch die Einrichtung zur automatischen Veränderung des Sollwert-Bandes der Schwankungsbreite der Verbraucherleistung bei Ermittlung einer gegenüber einer vorgegebenen Zahl von Abweichungen der Schwankung der Verbraucherleistung über die obere und oder unter die untere Grenze des Sollwert-Bandes ihrer Schwankungsbreite bzw. einer gegenüber einer vorgegebenen Zahl von Veränderungen in Form von Aufnahmen und/oder Beendigungen bzw. Verringerungen und/oder Erhöhungen der Zufuhr von Wärme- bzw. Kälteleistung zum im Heizungs- bzw. Kühlmittelvorlauf befindlichen Wärme-trägermedium bzw. Veränderungen des Sollwertes der Vorlauftemperatur des Wärmeträgermediums größeren Anzahl solcher Abweichungen der Differenz von Vorlauf- und Rücklauftemperatur des Wärmeträgermediums bzw. solcher Veränderungen dieser Wärme- bzw. Kälteleistungszufuhr bzw. Veränderungen des Sollwertes der Vorlauftemperatur des Wärmeträgermediums im Sinne einer Vergrößerung der Differenz der beiden Grenzen dieses Sollwert-Bandes und bei Ermittlung einer gegenüber einer vorgegebenen Zahl solcher Abweichungen der Schwankung der Verbraucherleistung über die obere und/oder unter die untere Grenze des Sollwert-Bandes ihrer Schwankungsbreite bzw. einer gegenüber einer vorgegebenen Zahl solcher Veränderungen dieser Wärme- bzw. Kälteleistungszufuhr bzw. einer gegenüber einer vorgegebenen Zahl solcher Veränderungen des Sollwertes der Vorlauftemperatur des Wärmeträgermediums geringeren Anzahl solcher Abweichungen der Schwankung der Verbraucherleistung über die obere und/oder unter die untere Grenze des Sollwert-Bandes ihrer Schwankungsbreite bzw. solcher Veränderungen dieser Wärme- bzw. Kälteleistungszufuhr bzw. solcher Veränderungen des Sollwertes der Vorlauftemperatur des Wärmeträgermediums im Sinne einer Verringerung der Differenz der beiden Grenzen dieses Sollwert-Bandes verstellbaren Sollwertgeber.

Weiterhin hat sich herausgestellt, daß ein besonderer Vorteil der Überwachung der Anzahl von durch die Wahl des Sollwert-Bandes der Schwankungsbreite der Verbraucherleistung bedingten Regelvorgängen darin liegen kann, daß man den Sollwert so abändern kann, daß ein Optimum in bezug auf Energieeinsparung und anlagenschonenden Betrieb realisiert werden kann. Von weiterem besonderem Vorteil ist ferner, daß damit auch Auflagen seitens Energieversorgungsunternehmen, Behörden, Technischem Überwachungsverein oder dergleichen in bezug auf die zulässige Zahl der Regelschaltspiele, im speziellen 3 pro Stunde z. B. für Elektrokompressionswärmepumpen, ohne jeden weiteren Implementierungsaufwand bereits durch die Ausgestaltung der Erfindung gemäß diesem untergeordneten Erfindungsgedanken realisiert werden kann, was zu nicht unbeträchtlichen Einsparungen an Gestehungskosten der für die Lösung dieser untergeordneten Aufgabe einzusetzenden Vorrichtungsausführung führt.

Der der Erfindung zugrunde liegenden Teilaufgabe der möglichst weitgehenden Einsparung von Energieverbrauch widmet sich eine andere erstmalig durch die Erfindung mögliche erfinderische Fortbildung, gemäß derer für den Beginn einer Abkühlung und/oder für den Beginn einer Erwärmung ein Sollwert-Band der Schwankungsbreite der Verbraucherleistung mit einem bei einer nur einen Bruchteil der für Tagesbetrieb zur Wirkung kommenden Verbraucherleistung mit geringstmöglichem Unterschied zwischen der oberen und der unteren Grenze des Sollwert-Bandes der Schwankungsbreite der Verbraucherleistung mit einer zeitlichen Toleranzschwelle vorgegeben wird. Vorrichtungsmäßig kann hierfür zweckmäßig vorgesehen sein, daß die Regeleinrichtung für den Beginn einer Abkühlung und/oder für den Beginn einer Erwärmung auf den minimal möglichen Unterschied zwischen oberer und unterer Grenze des Sollwert-Bandes der Schwankungsbreite der Verbraucherleistung eingestellte Sollwertgeber und eine Zeitgabeeinrichtung aufweist, mittels derer bei Heizbetrieb eine Abkühlung um eine vorbestimmte Zeitspanne beschleunigt und/oder eine Aufheizung um eine vorbestimmte Zeitspanne verzögert bzw. bei Kühlbetrieb eine Erwärmung um eine vorbestimmte Zeitspanne beschleunigt und/oder eine Abkühlung um eine vorbestimmte Zeitspanne verzögert einleitbar ist.

Es ist ersichtlich, daß bei einer Heizungsanlage dann, wenn gemäß der Erfindung von Tagbetrieb, wie immer dieser als Komfort- oder Normal- oder auch Sparbetrieb gewählt sein mag, auf Nachtbetrieb von einem Sollwert-Band mit größerer Schwankungsbreite auf ein solches sehr geringer Schwankungsbreite als Grenzen für dieses als Führungsgröße für den Nachtabsenkbetrieb umgeschaltet wird, sich aufgabengemäß eine Energieeinsparung im Nachtabsenkungsbetrieb ergibt. Dieser kann mit Vorzug über eine Zeitgabeeinrichtung mit Zeitschaltwerk eingeleitet und beendet werden. Im Zuge der Einleitung muß der Ist-Wert der Schwankung der Verbraucherleistung, der sich ordnungsgemäß innerhalb beider Grenzen seines Sollwert-Bandes oder aber oberhalb der oberen oder auch unterhalb der unteren Grenze desselben befinden mag, auf einen dem Sollwert-Band für Nachtabsenkbetrieb entsprechenden Wert gebracht werden. Wird jetzt durch die spezifisch hierfür vorgesehenen Einrichtungen der Regeleinrichtung für den Ist-Wert der Schwankungsbreite der Verbraucherleistung festgestellt, daß dieser beispielsweise bereits eine Zeitspanne vor dem programmierten Umschaltzeitpunkt im Fallen begriffen ist, so ist es als erwünscht anzusehen, wenn dieses Fallen auf den dem Nachtabsenkbetrieb entsprechenden Wert bereits jetzt freigegeben und vermieden werden könnte, daß der Wärmeerzeuger noch einmal Wärmeleistung in das das Wärmeträgermedium führende Leitungssystem einschiebt, obgleich aufgrund der individuellen Betriebsverhältnisse zu diesem Zeitpunkt die Regelung eigentlich hierfür zu sorgen hätte. Hier wird gemäß diesem untergeordneten Erfindungsgedanken derart eingegriffen, daß dem vorprogrammierten oder vom Betreiber der Heizungsanlage individuell gewählten Umschaltzeitpunkt eine zeitliche Toleranzschwelle vorgeschaltet wird, so daß solche unnötigen Energiezuführungsmaßnahmen bereits zu Beginn dieser zeitlichen Toleranzschwelle vermieden werden. Gleiches gilt natürlich auch dann, wenn zu dem programmierten oder vom Betreiber der Anlage individuell eingestellten Zeitpunkt, beispielsweise zum Morgen des kommenden Tages, die Schwankungsbreite der Verbraucherleistung aus ihrem SollwertBand für Nachtabsenkbetrieb wieder in einen vorprogrammierten oder auch seitens des Betreibers der Anlage individuell eingestellten Tagesbetrieb mit entsprechendem Sollwert-Band als Führungsgröße zu überführen ist. Hier kann es nämlich von Vorteil sein, wenn der Aufheizzeitpunkt aufgrund einer gemäß diesem untergeordneten Erfindungsgedanken eingesetzten zeitlichen Toleranzschwelle gegenüber dem vorprogrammierten bzw. der Vorrichtung nach der Erfindung betreiberseitig vorgegebenen Zeitpunkt nachverlegt wird. Auch in solchen Fällen ergeben sich wertvolle Energieeinsparungen, denn es wird zufolge der Ist-Wert-überwachung der Schwankungsbreite der Verbraucherleistung durch die Erfindung der im Nachtabsenkbetrieb arbeitenden Heizungsanlage auch nach dem vorprogrammierten bzw. betreiberseitig eingestellten Zeitpunkt des Rückkehrens auf Tagbetrieb dann noch die Möglichkeit belassen, für die diesem Zeitpunkt nachgeschaltete zeitliche Toleranzschwelle unter Einfluß der Regelung für Nachtabsenkbetrieb zu verbleiben, wenn sich der Ist-Wert der Schwankungsbreite der Verbraucherleistung innerhalb des Sollwert-Bandes für Nachtabsenkbetrieb in Richtung der oberen Grenze, das heißt in Richtung auf Zufuhr höherer Wärmeleistung, bewegt, um dann innerhalb der für diesen Umschaltvorgang vorgesehenen zeitlichen Toleranzschwelle oder nach Ablauf derselben zwangsweise auf Tagesbetrieb umgeschaltet zu werden, was nunmehr die Zufuhr einer entsprechend größeren Wärmeleistung zum das Wärmeträgermedium führenden Leitungssystem bedeutet.

Ähnlich, nur mit erheblich größerem Energiespareffekt kann dieser untergeordnete Erfindungsgedanke für Kühlbetrieb nutzbar gemacht werden. Während aber bei Heizbetrieb eine Abkühlung um eine vorbestimmte Zeitspanne beschleunigt (Umschaltung auf Nachtabsenkbetrieb) und/oder eine Aufheizung um eine vorbestimmte Zeitspanne verzögert (Rückumschaltung auf Tagesbetrieb) erfolgt, wird bei Kühlbetrieb eine Erwärmung um eine vorbestimmte Zeitspanne beschleunigt (Umschaltung auf Nachtbetrieb) und/oder eine Abkühlung um eine vorbestimmte Zeitspanne verzögert eingeleitet (Rückumschaltung auf Tagesbetrieb). In sämtlichen Fällen jedoch wird gemäß diesem untergeordneten Erfindungsgedanken in Abhängigkeit vom jeweiligen Regelungsverhalten der betreffenden Heizungs- bzw. Kühlanlage so Einfluß auf den vorprogramierten bzw. voreingestellten Umschaltzeitpunkt von Tagesbetrieb auf Nachtabsenkbetrieb und/oder umgekehrt genommen, daß Energieverluste an Wärme- bzw. Kälteenergie in jedem Falle auf ein Minimum gebracht werden. Auch insoweit liegt bei einer Ausführung der Erfindung gemäß diesem untergeordneten Gedanken derselben eine Art Selbstlernfunktion vor.

Und schließlich befasst sich ein wiederum anderer untergeordneter Erfindungsgedanke gleichfalls mit einer untergeordneten Teilaufgabe zur der Erfindung zugrundeliegenden Gesamtaufgabe, indem nämlich ohne besondere Zusatzinvestitionen und ferner auch ohne arbeits- und schmutzintensiven Montageaufwand dem Betreiber einer Heizungs- bzw. Kühlanlage als Verbraucher eine Betriebskostenanzeige an die Hand gegeben werden können soll. Hierfür sieht die Erfindung vor, daß kontinuierlich oder in vorbestimmten Zeitabständen der im Heizungs-bzw. Kühlmittel-Vorlauf bzw. -Rücklauf fließende Gesamtmassenstrom des Wärmeträgermediums gemessen und gewünschtenfalls optisch und/oder akustisch wahrnehmbar gemacht wird. Gleichermaßen zweckmäßig und vorteilhaft kann es aber auch sein, wenn zusätzlich auch noch kontinuierlich oder in vorbestimmten Zeitabständen aus dem aus den Messwerten von Vorlauf- und Rücklauftemperatur ermittelten Differenzwert dieser beiden Temperaturen des Wärmeträgermediums und dem zeitgleich ermittelten Messwert des im Heizungs- bzw. Kühlmittelvorlauf bzw. -rücklauf fließenden Gesamtmassenstroms desselben ein Messwert der in den Heizungs- bzw. Kühlmittelvorlauf eingespeisten Wärme- bzw. Kälteleistung gebildet und dieser gewünschtenfalls optisch und/oder akustisch wahrnehmbar gemacht wird.

Für beide Fälle kann vorrichtungsseitig zweckmäßig eine vorzugsweise über eine Messwertleitung mit der Messeinrichtung für den Gesamtmassenstrom des Wärmeträgermediums verbundene Einrichtung zur optischen und/oder akustischen Anzeige kontinuierlich oder in vorbestimmten Zeitabständen gewonnener Messwerte des Gesamtmassenstroms und/oder eine über eine Impulsleitung mit der Einrichtung zur Ermittlung der Differenz zeitgleicher Messwerte von Vorlauf- und Rücklauftemperatur des Wärmeträgermediums verbundene Einrichtung zur optischen und/oder akustischen Anzeige kontinuierlich oder in vorbestimmten Zeitabständen gewonnener Werte der Differenz von Vorlauf-und Rücklauftemperatur des Wärmeträgermediums und/oder eine über eine Impulsleitung mit der Multipliziereinrichtung zur Ermittlung von Momentanwerten der Verbraucherleistung verbundene Einrichtung zur optischen und/oder akustischen Anzeige von kontinuierlich oder in vorbestimmten Zeitabständen gewonnenen Messwerten der in den Heizungs- bzw. Kühlmittelvorlauf eingespeisten Wärme- bzw. Kälteleistung entsprechenden Ergebnissen der Multipliziereinrichtung vorgesehen sein.

Es ist ersichtlich, daß hierdurch insbesondere aufgrund der Tatsache, daß die erforderlichen Messeinrichtungen für Vorlauf- und Rücklauf-Temperatur des Wärmeträgermediums und Gesamtmassenstrom ohnehin vorhanden sind und die Implementierung für die zusätzliche Bewältigung dieser weiteren Teilaufgaben keinerlei Schwierigkeiten bereitet, mit höchst einfachen und kostengünstigen Mitteln der Verbraucher automatisch über seinen Wärme- bzw. Kälteverbrauch informiert werden kann. Dies führt dazu, daß der Verbraucher jederzeit sein Energiebewußtsein kontrollieren und ändern kann, weil ihm ständig vor Augen geführt wird, wieviel Energie insbesondere aufgrund seiner eigenen selbstgewählten Einstellung einer Betriebsart verbraucht wird. Die Wahrnehmbarmachung kann dabei so vorgenommen werden, daß durch geeignete Wahl entsprechender Anzeigeeinrichtungen der Verbrauch in kW/h und/oder in Währungs- /Zeiteinheit, beispielsweise DM pro Stunde, Tag, Monat oder Jahr, angezeigt wird. Dem Betreiber der Anlage wird insbesondere über die Möglichkeit, Komfort-, Normal- und Sparbetrieb wählen zu können, vermittelt, daß Komfort "eben seinen Preis hat".

Im übrigen hat es sich als höchst nützlich herausgestellt, wenn in weiterer zweckmäßiger Fortbildung der Erfindung die Regeleinrichtung in zwei miteinander verbundene Funktionsgruppen gegliedert ist, deren eine die Einrichtungen für diejenigen Funktionen umfaßt, die während der Heiz- bzw. Kühlperiode in der Regel nicht oder nur selten verändert werden und vorzugsweise in der Nähe des Wärme- bzw. Kälteerzeugers und/oder eines etwaigen Drei- oder Vier-Wege-Mischers angeordnet ist, während die andere die Einrichtungen für die vom Benutzer einstellbaren Funktionen umfaßt und als Raumschaltstation in bequemer Nähe des Benutzers angeordnet ist. Die sich hieraus ergebenden Vorteile insbesondere bezüglich der speziellen Benutzerfreundlichkeit durch äußerste Bequemlichkeit der Handhabung der Erfindung bzw. der mit dieser ausgerüsteten Heizungs- bzw. Kühlanlage liegen auf der Hand.

Zusammenfassend ist festzustellen, daß die Erfindung nicht nur erstmalig die Möglichkeit schafft, je nach Wahl Heizungs- oder Kühlanlagen mit kontinuierlich oder im Ein-Aus-Betrieb erfolgender Zufuhr der Wärme- bzw. Kälteleistung ungeachtet der Art und Ausgestaltung des Wärme- bzw. Kälteerzeugers mit gerätemäßig gleichen Mitteln mit den entsprechenden Vorteilen bezüglich Lagerhaltung, Gestehungspreis, Montageaufwand etc. erstellen und/oder betreiben, sondern in allen Fällen auch noch in bisher nicht erreichbarer Weise energieverbrauchsmäßig optimiert fahren zu können, wobei im übrigen die Regelung nach der Erfindung in vielfältiger Weise sich selbst auch noch Selbstlernvorgängen im Sinne einer von einer Einflußnahme durch den Anlagenbetreiber unabhängigen automatischen Optimierung unterziehen kann. Die günstige Folge hiervon ist insbesondere auch eine besonders weitgehende Vermeidung von Stillstandsverlusten des Wärme- bzw. Kälteerzeugers und der sonstigen Teile der Anlage und insbesondere bei diskontinuierlich arbeitenden Systemen die Vermeidung eines häufigen Taktens, wobei die Regelung nach der Erfindung es überflüssig macht, Simulationen einzelner oder aller Räume des durch die betreffende Heizungs- bzw. Kühlanlage erfindungsgemäß zu beheizenden bzw. zu kühlenden Verbrauchers vorzunehmen oder spezielle dynamische Lastberechnungen mit im Einzelfall ohnehin nicht bekannten und allenfalls nur mühselig und aufwendig zu bestimmenden Wärmeleitungs- bzw. -durchgangswerten durchzuführen, Himmelsrichtungsbetrachtungen anzustellen, Klimazonen zu berücksichtigen und dergleichen.

Im übrigen ist darauf zu verweisen, daß, wenn vorstehend oder nachfolgend von Kesseln als Wärmeerzeugern gesprochen wird, dieser Begriff auch als gas- oder ölbefeuerte Durchlauferhitzer, sogenannte Thermen oder Geyser, arbeitende Geräte mitumfaßt, indem diese sich von den gemeinhin als Kessel bezeichneten Geräten grundsätzlich nur dadurch unterscheiden, daß sie im allgemeinen mit geringerer Vorlage an Wärmeträgermedium arbeiten und entsprechend eine kleinere Wärmespeicherkapazität aufweisen.

Weiterhin umfaßt hier und im folgenden der Begriff "Heizkörper" ganz allgemein jede beliebige Art von Heizungseinrichtung, die mit Wärmeträgermedium gespeist wird, und zwar dies ungeachtet ihrer speziellen Ausbildung beispielsweise als Radiator oder Konvektor oder als Mischform beider jeweils mit oder ohne Gebläse für Verbesserung der Wärmeabgabe. Generell gesagt ist der benutzte Begriff "Heizkörper" vom Heizungssystem her gesehen als dessen bzw. einer von dessen Wärmeenergieverbraucher(n) zu verstehen, wobei es auf die spezielle Ausgestaltung der Wärmeabgabe ebensowenig ankommt wie auf den Einsatz einer solchen als "Heizkörper" bezeichneten Heizeinrichtung im Wohn- oder Gewerbe- oder Industriebereich beispielsweise auch als Industriehallen-Luftheizgerät.

Im folgenden wird die Erfindung anhand einiger bevorzugter Ausführungsbeispiele, die in den Zeichnungen lediglich schematisch dargestellt sind, rein beispielsweise näher erläutert. Dabei zeigen:

Fig. 1    eine schematische Darstellung einer die Erfindung verkörpernde Heizungsanlage in Einstrang-Bauweise mit in zwei Funktionsgruppen gegliederter Regeleinrichtung,

Fig. 2 in der Darstellung gemäß Fig. 1 entsprechender Darstellung eine andere Ausführungsform der Erfindung in Form einer Heizungsanlage in Zweistrang-Bauweise mit einem Vier-Wege-Mischer als Mehrwege-Mischeinrichtung und einer nicht aufgegliederten Regeleinrichtung, und

Fig. 3 einen Ausschnitt aus der der Ausführungsform gemäß Fig. 2 entsprechenden Ausführung der Erfindung, bei der jedoch ein Drei-Wege-Mischer als Mehrwege-Mischeinrichtung eingesetzt ist.

Gleiche Bezugszeichen bezeichnen dabei jeweils gleiche Einzelheiten der Ausführungsbeispiele.

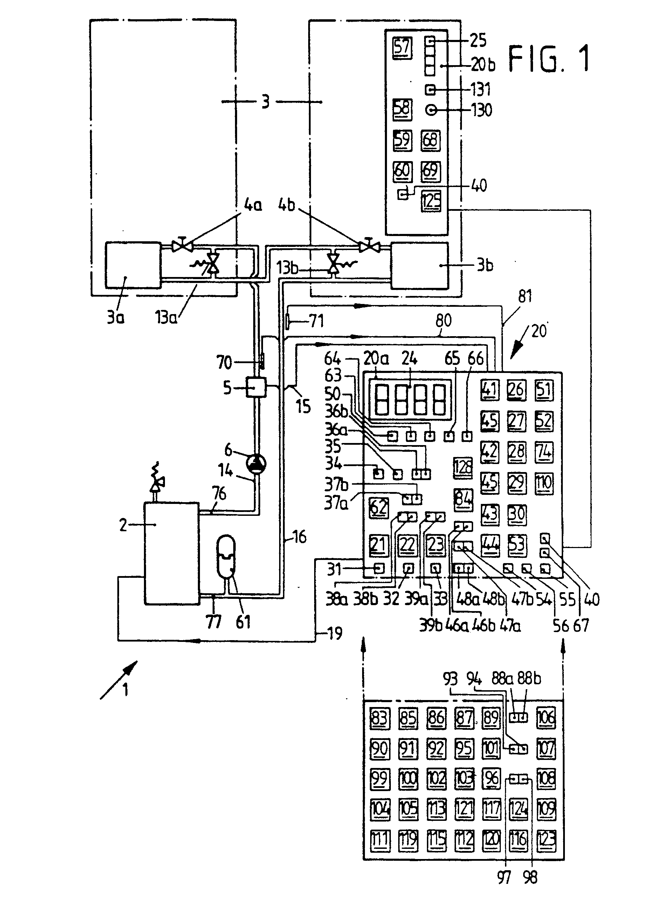

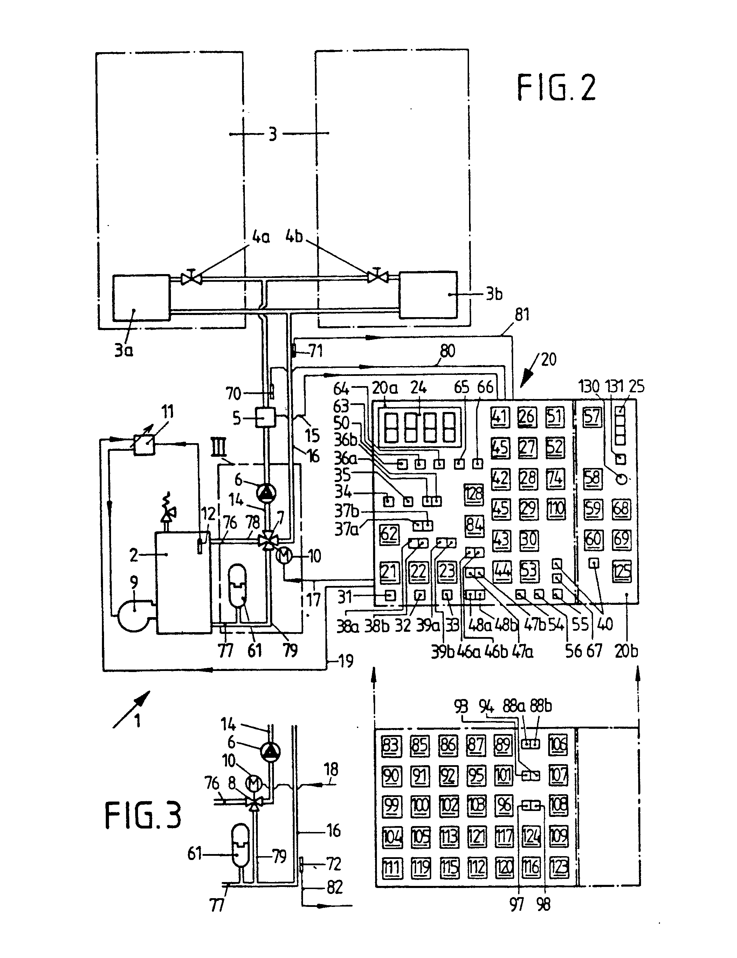

Die als Ganzes mit 1 bezeichnete Heizungsvorrichtung nach der Erfindung weist beim Ausführungsbeispiel gemäß Fig. 1 einen Wärmeerzeuger 2 auf, der als Wärmepumpe in Kompressions- oder Sorptionsbauweise mit einem sekundärseitig in das das Wärmeträgermedium führende Rohrleitungssystem eingeschalteten Wärmetauscher oder als vom Wärmeträgermedium durch- oder umspülter Wärmetauscher eines Rauchgaskühlers oder aber als sekundärseitig das Wärmeträgermedium führender und primärseitig mit Primärwärmeträgermedium beaufschlagter Wärmetauscher einer Fernwärme-Übergabestation ausgebildet sein kann. Statt der dargestellten Ausführung könnte auch ein elektrisch beheizter oder aber ein brennstoffbefeuerter Heizkessel eingesetzt sein, wie letzterer in Fig. 2 rein beispielsweise dargestellt ist. Die Darstellung des Wärmeerzeugers in Fig. 1 soll demgemäß nur beispielhaft eine von vielen möglichen Ausführungsformen eines Wärmeerzeugers symbolisieren.

Der Wärmeerzeuger 2 ist mit seinem Wärmeträgermediumsausgang 76 an die Vorlaufleitung 14 des das Wärmeträgermedium führenden Leitungssystems angeschlossen, das seinerseits - wie aus Fig. 1 ersichtlich - als Einstrang-System ausgebildet ist, indem nämlich der Heizungsvorlauf 14, in den eine Umwälzpumpe 6 beliebiger Ausführung bzw. Bauweise eingeschaltet ist, über eine automatische Drosseleinrichtung 4a zu einem Heizkörper 3a eines von mehreren, im dargestellten Ausführungsbeispiel zwei Räumen, führt, von dem dann eine Weiterführungsleitung zu einer weiteren automatischen Drosseleinrichtung 4b eines einem anderen Raum des als Ganzes mit 3 bezeichneten, mehrere Räume aufweisenden Wärmeverbrauchers zugeordneten weiteren Heizkörpers 3b führt. Dieser letzte Heizkörper der in Einstrang-Bauweise ausgeführten Heizungsvorrichtung 1 ist über eine Heizungsrücklaufleitung 16 an den Wärmeträgermediumseingang 77 des Wärmeerzeugers 2 angeschlossen. Die Zuläufe und Abläufe zu bzw. von den einzelnen Heizkörpern 3a bzw. 3b sind jeweils durch eine Überströmleitung kurzgeschlossen, in welche jeweils ein druckeinstellbares Überströmventil 13a bzw. 13b eingeschaltet ist. Am Wärmeträgermediumsrücklauf 16 ist im Bereich des Wärmeträgermediumseinganges 77 des Wärmeerzeugers 2 ein Ausdehnungsgemäß 61 für das Wärmeträgermedium angeschlossen.

In den Wärmeträgermediumsvorlauf 14 ist vorzugsweise stromabwärts von der Umwälzpumpe 6 eine Messeinrichtung 5 für den Gesamtmassenstrom angeordnet, die über eine Messwertleitung 15 mit einer als Ganzes mit 20 bezeichneten Regeleinrichtung in Verbindung steht. Diese Regeleinrichtung wiederum steht über eine Steuerleitung 19 mit dem nicht im einzelnen dargestellten und auch nicht näher bezeichneten Stellglied des Wärmeerzeugers 2 in Verbindung, das je nach Ausbildung desselben das Brennstoffregulierungsventil eines Brenners bei flammenbefeuertem Kessel oder das Gas- bzw. Ölregulierungsventil für die Zuführung von Treibstoff zum Dieselmotor oder Vergaser eines verbrennungsmotorbetriebenen Kompressors einer Kompressionswärmepumpe oder aber das Drosselventil der heißes Primärwärmeträgermedium führenden Primärleitung eines Wärmetauschers einer Fernwärme-übergabestation oder eine Rauchgas-By-pass-Klappe eines als Rauchgaskühler eingesetzten Wärmetauschers oder dergleichen sein kann. Die zugehörige Regeleinrichtung 20, die beim Ausführungsbeispiel gemäß Fig. 1 aus zwei Funktionsgruppen 20a und 20b besteht, wird im folgenden im Zusammenhang mit dem Ausführungsbeispiel gemäß Fig. 2 näher erläutert.

Der Aufbau der wiederum als Ganzes mit 1 bezeichneten Heizungsvorrichtung nach der Erfindung gemäß Fig. 2 ist im wesentlichen der gleiche wie der gemäß Fig. 1. Auch hier ist der Wärmeerzeuger mit 2 bezeichnet, jedoch als brennerbetriebener Kessel dargestellt, dessen Brenner 9 als Einrichtung zur Beeinflussung der Betriebsenergie für den Wärmeerzeuger 2 über eine herkömmliche Regeleinrichtung mit einer Messeinrichtung 12 für die Temperatur des Wärmeträgermediums im Wärmeerzeuger 2 (Kesselthermometer) und einer Einrichtung 11 zur Beeinflussung der Zufuhr von Betriebsenergie zum Wärmeerzeuger 2 derart gefahren werden kann, daß die Temperatur des Wärmeträgermediums, beispielsweise des Kesselwassers, im Wärmeerzeuger einen vorgegebenen Wert nicht übersteigt. Dargestellt ist ferner, daß der Wärmeträgermediumsausgang 76 des Wärmeerzeugers 2 über eine Beimischleitung 78 an den einen Eingangsstutzen eines Vier-Wege-Mischers 7 und der Wärmeträgermediumseingang 77 des Wärmeerzeugers 2, an den im übrigen in der gleichen Weise, wie im Zusammenhang mit dem Ausführungsbeispiel gemäß Fig. 1 bereits erläutert, ein Ausdehnungsgefäß 61 für Wärmeträgermedium angeschlossen ist, an den einen Ausgangsstutzen des Vier-Wege-Mischers 7 über eine Rückführleitung 79 angeschlossen ist. Der andere Ausgangsstutzen des Vier-Wege-Mischers 7 ist über die Wärmeträgermediums-Vorlauf-Leitung 14 mit einer Leitungsverzweigung verbunden, die so viele Wärmeträgermediums-Abgänge aufweist, wie zu bedienende Heizkörper der Heizungsvorrichtung 1 vorhanden sind, es sei denn, es würden mehrere Leitungsverzweigungen hintereinandergeschaltet angeordnet werden, was in Einzelfällen zu bevorzugen sein kann, beispielsweise wenn die Zahl der Heizkörper besonders groß ist.

An die genannte Leitungsverzweigung, die vom Heizungsvorlauf 14 angespeist wird, sind im in Fig. 2 dargestellten Ausführungsbeispiel zwei Heizkörper 3a bzw. 3b jeweils über eine vorgeschaltete automatisch wirkende Drosseleinrichtung 4a bzw. 4b angeschlossen, wobei auch hier der hier allerdings nur aus zwei Heizkörpern 3a, 3b bestehende Wärmeverbraucher als Ganzes mit 3 bezeichnet ist. Die beiden Heizkörper 3a, 3b (und bei mehr vorhandenen Heizkörpern auch diese) sind mit ihren Wärmeträgermediums-Ausgängen jeweils mit einer weiteren zwar dargestellten, jedoch nicht näher bezeichneten Leitungsverzweigung verbunden, von der das Wärmeträgermedium über die mit dieser in Verbindung stehende Rücklaufleitung 16 zum Vier-Wege-Mischer 7 zurückströmt, indem der Heizungsrücklauf 16 an den anderen Eingangsstutzen des Vier-Wege-Mischers 7 angeschlossen ist.

Es ist ersichtlich, daß auf diese Weise eine Heizungsanlage in Zweistrang-Bauweise gebildet ist, wobei diese außerdem auch noch eine Mehrwege-Mischeinrichtung in Form eines Vier-Wege-Mischers 7 aufweist. Diesem ist im Heizungsvorlauf 14 eine Umwälzpumpe 6 nachgeschaltet, vorzugsweise stromabwärts von der eine Messeinrichtung 5 für den Gesamtmassenstrom angeordnet ist. Diese ist in der gleichen Weise, wie in Verbindung mit dem Ausführungsbeispiel gemäß Fig. 1 beschrieben, über eine Messwertleitung 15 an eine als Ganzes mit 20 bezeichnete Regeleinrichtung angeschlossen. Diese weist einen Stellbefehlgeber 62 auf, der über eine Steuerleitung 17 mit dem Antrieb 10 der Mehrwege-Mischeinrichtung 7 verbunden ist.

In Fig. 3 ist dargestellt, daß die beim Ausführungsbeispiel gemäß Fig. 2 in Form eines Vier-Wege-Mischers 7 ausgebildete Mehrwege-Mischeinrichtung auch als Drei-Wege-Mischer 8 ausgeführt sein kann, wenn die Rohrleitungsführung für das Wärmeträgermediums entsprechend getroffen ist. Ohne daß in Fig. 3 der Wärmeerzeuger dargestellt wäre, was nichts anderes besagen soll, als daß dieser in beliebiger Weise ausgebildet sein kann, beispielsweise nach Art des Wärmeerzeugers gemäß Fig. 1 oder nach Art des Wärmeerzeugers gemäß Fig. 2, die vorstehend bereits beschrieben sind, ist der Warmeträgermediums-Ausgang 76 desselben an den einen Strömungseingang des Drei-Wege-Mischers 8 angeschlossen, während an seinen Strömungsausgang der Heizungsvorlauf 14 angeschlossen ist, dessen weitere Leitungsführung die gleiche ist, wie im Zusammenhang mit dem Ausführungsbeispiel gemäß Fig. 2 bereits beschrieben. Der Heizungsrücklauf 16 ist an den Wärmeträgermediums-Eingang 77 des nicht dargestellten Wärmeerzeugers 2 angeschlossen, der seinerseits in bereits beschriebener Weise mit einem Ausdehnungsgefäß 61 für das Wärmeträgermedium in Verbindung steht. Strömungsaufwärts vom Ausdehnungsgefäß 61 ist der Heizungsrücklauf 16 über eine hier als Bemischleitung dienende Leitung 79 an den zweiten Eingang des Drei-Wege-Mischers 8 angeschlossen. In den Heizungsvorlauf 14 ist in bereits im Zusammenhang mit den Ausführungsbeispielen gemäß Fig. 1 und 2 beschriebener Weise eine Umwälzpumpe 6 eingeschaltet. Der Antrieb 10 der hier als Drei-Wege-Mischers 8 ausgebildeten Mehrwege-Mischeinrichtung ist über eine hier mit 18 bezeichnete Steuerleitung mit dem Stellbefehlgeber 62 der Regeleinrichtung 20 verbunden.

Die erfindungsgemäße Regelungseinrichtung 20 weist einzelne Aggregate bzw. Einrichtungen auf, deren impulsleitungsmäßige Verknüpfung vorstehend bereits erläutert worden ist und sich im übrigen aus den Ansprüchen und deren Erläuterung ergibt. Aus diesem Grunde werden die einzelnen Einrichtungen im folgenden lediglich hinsichtlich ihres Aufgabengebietes bzw. Einsatzzweckes beschrieben, da ihre Ausgestaltung dem Fachmann im einzelnen geläufig ist.

Mittels einer der Vorlaufleitung 14 für das Wärmeträgermedium, beispielsweise Heißwasser, zugeordneten Messeinrichtung 70 für dessen Vorlauftemperatur, die beispielsweise als Temperaturfühlermanschette ausgebildet sein kann, wird kontinuierlich oder in vorgegebenen Zeitabständen nacheinander ein Messwert bzw. eine Folge von Messwerten der Vorlauftemperatur bestimmt, und mittels einer der Rücklaufleitung 16 für das Wärmeträgermedium zugeordneten Messeinrichtung 71 gemäß Fig. 1 bzw. einer der die einzelnen Heizkörper 3a, 3b durchströmenden Einzelmassenströme zusammenfassenden Rücklaufleitung 16 gemäß Fig. 3, wie dargestellt, oder statt dessen der Rücklaufleitung 16 gemäß Fig. 2, wie dargestellt, oder der das Wärmeträgermedium von der Mehrwege-Mischeinrichtung 8 zum Wärmeträgermediumseingang 77 des Wärmeerzeugers 2 rückführenden Rückführleitung 79 gemäß Fig. 2 (nicht dargestellt) zugeordneten Messeinrichtung 72, die jeweils gleichfalls als Temperaturfühlermanschette ausgeführt sein können, wird gleichfalls kontinuierlich oder in vorgegebenen Zeitabständen, jedoch zeitgleich mit der Messung der Vorlauftemperatur die Rücklauftemperatur des Wärmeträgermediums gemessen. Weiterhin wird mittels einer in der Vorlaufleitung 14 strömungsabwärts von der Umwälzpumpe 6 angeordneten Messeinrichtung 5 kontinuierlich oder in vorgegebenen Zeitabständen, auf jeden Fall aber zeitgleich mit der Messung von Vorlauf- und Rücklauftemperatur des Wärmeträgermediums, der Gesamtmassenstrom desselben gemessen. Die jeweiligen Messwerte der Vorlauftemperatur werden über eine deren Messeinrichtung 70 mit der Regeleinrichtung 20 verbindende Messwertleitung 80 und die der Rücklauftemperatur über eine deren Messeinrichtung 71 mit der Regeleinrichtung 20 verbindende Messwertleitung 81 oder über eine deren Messeinrichtung 72 mit der Regleinrichtung 20 verbindende Messwertleitung 82 einer Einrichtung 74 zur

Ermittlung der Differenz zeitgleicher Messwerte von Vorlauf- und Rücklauftemperatur sowie die des Gesamtmassenstroms des Wärmeträgermediums über eine dessen Messeinrichtung 5 mit der Regeleinrichtung 20 verbindene Messwertleitung 15 einer Multipliziereinrichtung 50 dieser Regeleinrichtung zugeführt. Zur Steuerung der Durchführung bzw. des Ablaufs der Gewinnung zeitgleicher Messwerte von Vorlauf-und Rücklauftemperatur einerseits und Gesamtmassenstrom andererseits weist die Regeleinrichtung 20 eine Zeitprogrammgabeeinrichtung 83 auf. Die Multipliziereinrichtung 50 erhält außer den Messwerten des Gesamtmassenstroms auch die Ergebnisse der Differenz zeitgleich zum jeweiligen Messwert des Gesamtmassenstroms gewonnener Messwerte von Vorlauf- und Rücklauftemperatur des Wärmeträgermediums zugeführt und bildet durch Multiplikation beider dem jeweiligen Momentanwert der verbrauchten Wärmeleistung in Form der Differenz zwischen der in den Heizungsvorlauf 14 eingespeisten und der dem Wärmeerzeuger 2 über den Rücklauf 16 rückgespeisten Wärmeleistung oder der durch die das Wärmeträgermedium von der Mehrwege-Mischeinrichtung 7 zum Wärmeerzeuger 2 rückführende Rückführleitung 79 (vergleiche z. B. Fig. 2) rückgespeisten Wärmeleistung, die vorstehend und im folgenden stets kurz als Verbraucherleistung bezeichnet wird, entsprechende Impulse. Die Regeleinrichtung 20 weist ferner eine Speichereinrichtung 85 auf, mittels derer mindestens ein, vorzugsweise zwei oder oder mehr der von der Multipliziereinrichtung 50 ermittelten Momentanwerte der Verbraucherleistung zur Weiterverarbeitung im Zuge der dem Verfahren nach der Erfindung zugrundeliegenden Logik gespeichert werden kann bzw. können. Diese Weiterverarbeitung geschiet derart, daß mittels einer Leistungsvergleichseinrichtung 63 der Regeleinrichtung 20, die über eine Folgesteuereinrichtung 86 so betätigbar ist, daß sie eine Folge von Vergleichen jeweils des letztermittelten Momentanwertes der Verbraucherleistung mit jedem der in der Speichereinrichtung 85 gespeicherten früher ermittelten Momentanwerte der Verbraucherleistung vornimmt, mindestens eine Schwankung, vorzugsweise eine Folge von Schwankungen der Verbraucherleistung, ermittelt und ein entsprechender Impuls bzw. eine Folge entsprechender Impulse generiert wird, der bzw. die einer Schwankungsvergleichseinrichtung 27 zugeführt wird bzw. werden, von der das Maß ermittelt wird, um das sich jeweils die ermittelte Schwankung von einem vorgegebenen Sollwert unterscheidet. Das Vergleichsnormal für die Schwankungsvergleichseinrichtung 27 wird in Form eines der oberen Grenze eines Sollwert-Bandes der Schwankungsbreite der Verbraucherleistung entsprechenden Impulses von einem einstellbaren Sollwertgeber 41 und in Form eines der unteren Grenze dieses Sollwert-Bandes entsprechenden Impulses von einem weiteren einstellbaren Sollwertgeber 42 geliefert.

Solange die von der Leistungsvergleichseinrichtung 63 ermittelten Werte der Abweichung der Verbraucherleistung nicht den oberen Sollwert ihres Sollwert-Bandes überschreiten oder den unteren Sollwert desselben unterschreiten, werden diese Schwankungen als dem Verfahren nach der Erfindung entsprechend regelungsgerecht erwünscht betrachtet und von der Regeleinrichtung hingenommen, ohne daß ein Regeleingriff erfolgt. Sobald aber eine Abweichung der Verbraucherleistung über die obere und oder eine Abweichung derselben unter die untere Grenze dieses Sollwert-Bandes ermittelt wird, wird über die Schwankungsvergleichseinrichtung 27 der Stellbefehlgeber 62 der Regeleinrichtung 20 so angesteuert, daß er den erforderlichen Stellbefehl an die in der Heizungsanlage hierfür vorgesehene Einrichtung 9 bzw. 8 bzw. 7 zur Beeinflussung der in den Heizungsvorlauf 14 eingespeisten Wärmeleistung über die zugeordnete Steuerleitung 19 bzw. 18 bzw. 17 abgibt, und zwar dies so, daß die in den Heizungsvorlauf 14 eingespeiste Wärmeleistung über die obere Grenze ihres Sollwert-Bandes hinaus verringert und bei Vorliegen einer Abweichung der Verbraucherleistung unter die untere Grenze ihres Sollwert-Bandes vergrößert wird. Dabei kann das Reagieren der Regeleinrichtung sowohl bezüglich eines Überschreitens der oberen Grenze dieses Sollwert-Bandes als auch bezüglich eines Unterschreitens der unteren Grenze desselben vom Bestehen der betreffenden Abweichung der Verbraucherleistung während einer vorbestimmten Zeitspanne abhängig gemacht werden, wobei mit Vorzug die der oberen Grenze zugeordnete Zeitspanne kürzer als die der unteren Grenze zugeordnete Zeitspanne gewählt sein kann.

Beide Zeitspannen können dabei so gewählt werden, daß während ihrer Dauer eine Mehrzahl von Bestimmungen von Momentanwerten der Verbraucherleistung durch die Multipliziereinrichtung 50 bzw. von Unterschieden eines Momentanwertes zum vorangegangenen Momentanwert der Verbraucherleistung durch die Leistungsvergleichseinrichtung 63 vorgenommen werden kann. Dies ermöglicht die Selbstkontrolle danach, ob es sich bei einem einmal ermittelten Ausscheren der Schwankung der Verbraucherleistung über eine der Grenzen ihres Sollwert-Bandes um ein einmaliges Ereignis, das möglicherweise auch durch beispielsweise einen Messfehler bedingt sein könnte, oder um einen zumindest für eine innerhalb der vorbestimmten Zeitspanne liegende Dauer bestehenden Zustand handelt, der zum Reagieren der Regeleinrichtung durch Vornahme des erforderlichen Regeleingriffs zwingt. Die Länge der Zeitspanne(n) wird vom Fachmann je nach den Gegebenheiten der betreffenden Heizungsvorrichtung 1 bzw. -anlage und den Erfordernissen des jeweils gewünschten bzw. notwendigen Betriebes gewählt werden. Ist ein solcher Regeleingriff erfolgt, dann ist es meist zweckmäßig, jetzt die Ermittlung der Verbraucherleistung und ihrer Schwankungen so zu führen, daß nicht mehr mit dem Referenzwert der vorangegangenen Folge von Momentanwerten der Verbraucherleistung, die bis zu diesem Regeleingriff bestanden hat, sondern für diese weiteren Ermittlungen mit einem neuen Referenzwert verglichen wird. Dies kann ein willkürlich gewählter Wert, beispielsweise der letzte vor dem Auftreten einer Abweichung der Schwankung der Verbraucherleistung über die obere oder unter die untere Grenze des Sollwert-Bandes ihrer Schwankungsbreite ermittelte Schwankungswert der Verbraucherleistung, sein. Hierfür weist die Regeleinrichtung eine einerseits von der Speichereinrichtung 85 und andererseits von der Zeitprogrammgabeeinrichtung 83 und/oder der Schwankungsvergleichseinrichtung 27 und/oder der Folgesteuereinrichtung 86 ansteuerbare Quittier- und Löscheinrichtung 87 auf, mittels derer nach einem Tätigwerden des Stellbefehlgebers 62 zwecks Vornahme eines Regeleingriffs die in der Speichereinrichtung 85 gespeicherten Momentanwerte der Verbraucherleistung mit Ausnahme jenes Referenzwertes gelöscht werden und der Anlaufimpuls für die Vornahme einer weiteren Folge solcher Ermittlungen von Momentanwerten der Verbraucherleistung und der Schwankung derselben sowie der Abweichung dieser Schwankungswerte über die obere und/oder unter die untere Grenze ihres Sollwert-Bandes gegeben werden kann.

Dargestellt ist ferner, daß die Regeleinrichtung 20 einen Proportionalregler 21 mit einer Einrichtung 31 zur Veränderung seiner Verstärkung, einen Integralregler 22 mit einer Einrichtung 32 zur Veränderung seiner Nachstellzeit und einen Differentialregler 23 mit einer Einrichtung 33 zu Veränderung der Vorhaltzeit desselben aufweisen kann. Dem Integralregler 22 ist dabei ein zeitabhängiges Integrierwerk 36a für die Aweichung der Schwankungsbreite der Verbraucherleistung über die obere Grenze ihres Sollwert-Bandes hinaus und ein zeitabhängiges Integrierwerkt 36b für die Abweichung der Schwankungsbreite der Verbraucherleistung unter die untere Grenze ihres Sollwert-Bandes zugeordnet. Um die Verstärkung und/oder die Nachstellzeit und/oder die Vorhaltzeit der Regeleinrichtung 20 optimieren zu können, je nachdem wie diese mit Proportional- und/oder Integral- und/oder Differentialregler ausgestattet ist, kann ferner ein zeitabhängiges Integrierwerk 88a bzw. 88b für die Schwankung der Verbraucherleistung und jeweils ein weiteres zeitabhängiges Integrierwerk 37a für die der als Bezugsgröße für die jeweilige Abweichung der Schwankung der Verbraucherleistung dienenden oberen oder unteren Grenze des Sollwert-Bandes derselben entsprechende Schwankungsbreite und eine mit beiden Integrierwerken verbundene Einrichtung 34 zur Bildung des Verhältnisses zeitgleicher Ergebnisse beider Integrierwerke oder dessen Reziprokwertes vorgesehen sein. Soll die Verstärkung und/oder die Nachstellzeit und/oder die Vorhaltzeit der Eliminierung der Abweichung der Schwankung der Verbraucherleistung über die obere bzw. unter die untere Grenze ihres Sollwert-Bandes verändert werden, wenn das Verhältnis der beiden Gesamtmaße bzw. zeitlichen Integralwerte einen vorbestimmten Wert überschreitet, so weist für diesen Zweck die Regeleinrichtung 20 ferner ein weiteres zeitabhängiges Integrierwerk 37b für die der Differenz von oberer und unterer Grenze des Sollwert-Bandes der Schwankungsbreite der Verbraucherleistung entsprechende Schwankungsbreite der Verbraucherleistung sowie eine über Impulsleitungen mit beiden Integrierwerken 36a bzw. 36b bzw. 88a bzw. 88b und 37a bzw. 37b verbundene Summiereinrichtung 84 zur Bildung der Summe zeitgleicher Ergebnisse beider Integrierwerke auf, wobei weiterhin eine Einrichtung 35 zur Bildung des Verhältnisses zeitgleicher Ergebnisse des Integrierwerkes 37a bzw. 37b und der Summiereinrichtung 84 oder des Reziprokwertes dieses Verhältnisses vorgesehen ist. Für den Fall, daß die Verstärkung und/oder die Nachstellzeit und/oder die Vorhaltzeit der Eliminierung der Abweichung der Schwankung der Verbraucherleistung über die obere bzw. unter die untere Grenze ihres Sollwert-Bandes so verändert werden können soll, daß das Verhältnis der beiden Gesamtmaße bzw. Integralwerte einen vorbestimmten Wert nicht überschreitet, weist die Einrichtung 35 zur Bildung des Verhältnisses zeitgleicher Ergebnisse beider Integrierwerke 36a bzw. 36b oder 88a bzw. 88b und 37a bzw. 37b eine einstellbare Impulssperreinrichtung 65 auf, mittels derer die Impulsleitung bzw. Impulsleitungen zu der bzw. den Einrichtung(en) 31 bzw. 32 bzw. 33 zur Veränderung der Verstärkung des Proportionalreglers 21 bzw. der Nachstellzeit des Integralreglers 22 bzw. der Vorhaltzeit des Differentialreglers 23 erst bei Vorhandensein eines vorbestimmten Wertes des Verhältnisses zeitgleicher Ergebnisse beider Integrierwerke 37a bzw. 37b oder 88a bzw. 88b und 37a bzw. 37b für Impulsdurchgang freigebbar ist bzw. sind.

Dem Differentialregler 23 zugeordnet weist die Regeleinrichtung 20 ferner eine Einrichtung 38a zur Bestimmung des Maßes der zeitlichen Änderung einer Abweichung der Schwankung der Verbraucherleistung über die obere Grenze ihres vorgegebenen Sollwert-Bandes hinaus und eine Einrichtung 38b zur Bestimmung des Maßes der zeitlichen Änderung einer Abweichung der Schwankung der Verbraucherleistung unter die untere Grenze ihres vorgegebenen Sollwert-Bandes sowie bevorzugt auch eine Einrichtung 39a zur Bestimmung der zeitlichen Änderung des Maßes der zeitlichen Änderung einer Abweichung der Schwankung der Verbraucherleistung über die obere Grenze dieses Sollwert-Bandes hinaus sowie eine Einrichtung 39b zur Bestimmung der zeitlichen Änderung des Maßes der zeitlichen Änderung einer Abweichung der Schwankung der Verbraucherleistung unter die untere Grenze dieses Sollwert-Bandes auf. Die Einrichtungen 39a und 39b sind somit Einrichtungen zur Ermittlung der Änderungsbeschleunigung der betreffenden Abweichung der Schwankung der Verbraucherleistung von der einen bzw. anderen Grenze ihres Sollwert-Bandes, während die Einrichtungen 38a und 39b jeweils Einrichtungen zur Bestimmung der Änderungsgeschwindigkeit dieser Abweichungen sind.

Wie dargestellt, kann ferner zweckmäßig eine Einstelleinrichtung 66 für die Einrichtung 31 zur Veränderung der Verstärkung des Proportionalreglers 21 und die Einrichtung 32 zur Veränderung der Nachstellzeit des Integralreglers 22 und die Einrichtung 33 zur Veränderung der Vorhaltzeit des Differentialreglers 23 oder jeweils eine Einstelleinrichtung 66 für jede der genannten Veränderungseinrichtungen, soweit vorhanden, vorgesehen sein, durch welche die jeweils zugeordnete(n) Veränderungseinrichtung(en) 31 bzw. 32 bzw. 33 im Sinne einer Vermeidung des Überschreitens eines vorbestimmten Wertes des Verhältnisses zeitgleicher Ergebnisse beider Integrierwerke 36a bzw. 36b oder 88a bzw. 88b und 37a bzw. 37b nachstellbar ist bzw. sind.

Weiterhin kann die Regeleinrichtung 20 eine Sollwert-Wahleinrichtung 43 mit einer Detektoreinrichtung 29 zur Ermittlung der im Verlauf der Inbetriebnahme der Vorrichtung 1 als maximal mögliche Verbraucherleistung zu dem Zeitpunkt, zu dem nach einer Zeitspanne mit praktisch konstantem Wert der Verbraucherleistung erstmalig eine Verringerung derselben auftritt, auftretenden Verbraucherleistung, die als Inbetriebnahmeverbraucherleistung bezeichnet wird, und/oder der im Verlauf des Heizbetriebes bei Aufheizen nach einer Abkühlung und/oder bei jeder Wiederaufnahme bzw. Vergrößerung der Zufuhr von Betriebsenergie zum Wärmeerzeuger 2 als maximale Verbraucherleistung, die als Anfahrverbraucherleistung bezeichnet wird, und je einer einstellbaren Verhältnisgabeeinrichtung 46a, 46b als Sollwert-Bildungseinrichtung für die obere bzw. untere Grenze des Sollwert-Bandes der Schwankungsbreite der Verbraucherleistung sowie jeweils eine mit dem zugeordneten Sollwertgeber 41 bzw. 42 verbundene Einrichtung 45 zur automatischen Verstellung desselben im Sinne einer Ersteinstellung bzw. einer Veränderung eines eingestellten Wertes der zugeordneten oberen bzw. unteren Grenze des Sollwert-Bandes der Schwankungsbreite der Verbraucherleistung aufweisen. Dargestellt ist, daß dem Sollwertgeber 41 ebenso wie dem Sollwertgeber 42 jeweils eine eigene automatische Verstelleinrichtung 45 zugeordnet ist.

Weiterhin kann die Sollwert-Wahleinrichtung 43, wie dargestellt, eine Programmspeichereinrichtung 47a, 47b aufweisen, die eine Verstelleinrichtung 48a für die Sollwert-Bildungseinrichtung 46a für die obere Grenze des Sollwert-Bandes der Schwankungsbreite der Verbraucherleistung und/oder eine Verstelleinrichtung 48b zur Verstellung der Sollwert-Bildungseinrichtung 46b für die untere Grenze dieses Sollwert-Bandes aufweist. Andererseits kann aber auch eine Programmspeichereinrichtung 47a für die obere Grenze des Sollwert-Bandes und eine eigene Programmspeichereinrichtung 47b für die untere Grenze dieses Sollwert-Bandes vorgesehen sein. In beiden Ausführungsfällen ist durch zumindest eine der Verstelleinrichtungen 48a bzw. 48b entsprechend einer in der bzw. den Programmspeichereinrichtung(en) 47a, 47b bzw. 47a bzw. 47b gespeicherten Abhängigkeit das in der zugeordneten Sollwert-Bildungseinrichtung 46a, 46b bzw. 46a bzw. 46b gebildete Verhältnis in dem Sinne veränderbar, daß einem abnehmenden Wert der oberen oder unteren Grenze des Sollwert-Bandes der Schwankungsbreite der Verbraucherleistung eine zunehmend größere Differenz zwischen diesen beiden Grenzwerten und/oder ein zunehmend größeres Verhältnis derselben entspricht.

Für Ausführungsformen der Erfindung mit Mischer kann eine Möglichkeit für die im Selbstlernverfahren ablaufende automatische Adaptierung der optimalen Bandbreite des Sollwert-Bandes der Schwankungsbreite der Verbraucherleistung dadurch vorgesehen sein, daß die Regeleinrichtung 20 eine mit der Multipliziereinrichtung 50 in ihr die von dieser gewonnenen Momentanwerte der Verbraucherleistung zuführender Impulsleitungsverbindung stehende Abweichungsvergleichseinrichtung 64 und eine oder für jede Grenze dieses Sollwert-Bandes jeweils eine Einrichtung zur automatischen Verstellung eines oder beider Sollwertgeber 41 bzw. 42 aufweist, deren Funktion im übrigen auch von der bereits beschriebenen Einrichtung 45 mitübernommen werden kann. Die Abweichungsvergleichseinrichtung 64 sorgt dabei dafür, daß immer dann, wenn nach einem Regelvorgang, der durch ein Ausscheren der ermittelten Schwankungsbreite der Verbraucherleistung über die eine oder andere Grenze des Sollwert-Bandes derselben ausgelöst wird, die sich unmittelbar danach oder nach einer vorgegebenen Zeitspanne einstellende Verbraucherleistung und die Differenz zwischen dieser und der Verbraucherleistung, deren Schwankungsbreite für die vorangegangene Abweichung bestimmend und den vorangegangenen Regelvorgang auslösend war, ermittelt und über die Einrichtung(en) 45 zur automatischen Verstellung des bzw. der Sollwertgeber(s) 41 bzw. 42 der Sollwertgeber 41 bzw. 42, welcher für die den vorangegangenen Regelvorgang bestimmende Grenze dieses Sollwert-Bandes maßgeblich war, weil sie über- bzw. unterschritten worden ist, entsprechend dieser von der Abweichungsvergleichseinrichtung 64 ermittelten Verbraucherleistungsdifferenz verstellt wird bzw. werden, so daß die Regelung nunmehr mit einer durch Nachziehen iterativ optimiert neu eingestellten Grenze des Sollwert-Bandes der Schwankung der Verbraucherleistung abläuft.

Die Regeleinrichtung 20 weist auch eine von der Multipliziereinrichtung 50 ansteuerbare Betragsvergleichseinrichtung 89, mittels derer jeweils der Unterschied zwischen einem letzten und einem unmittelbar vorher ermittelten Momentanwert der Verbraucherleistung bestimmbar ist, oder eine mit der Leistungsvergleichseinrichtung 63 in Impulszuführungsverbindung stehende Momentanwert-Abweichungs-Speichereinrichtung 90 auf, mittels derer der Unterschied zwischen jeweils letztem und vorletztem Momentanwert der Verbraucherleistung für spätere Nutzung gespeichert werden kann, wobei die Betragsvergleichseinrichtung 89 bzw. die Momentanwert-Abweichungs-Speichereinrichtung 90 jeweils an eine Tendenzvergleichseinrichtung 91 angeschlossen ist, mittels derer die Tendenz der Veränderung der Unterschiede zwischen letztem und vorletztem Momentanwert der Verbraucherleistung bestimmt werden kann. Weiterhin ist eine Zahlvorgabeeinrichtung 92 zur willkürlichen Vorgabe einer als Auslöseschwelle für das Wirksamwerden des Stellbefehlgebers 62 wirkenden Anzahl solcher Unterschiede zwischen jeweils letztem und vorletztem Momentanwert der Verbraucherleistung und auch ein Zählwerk 93 für diese Unterschiede dieser beiden letzten Momentanwerte vorgesehen. Dem Stellbefehlgeber 62 ist eine Stellungsanzeigeeinrichtung 94 zugeordnet, mittels derer dessen Betriebszustand rückgemeldet wird. Durch diese Art der Ermittlung der Tendenz der Änderung der tatsächlich auftretenden Schwankungen der Verbraucherleistung und deren Nutzung zur Vorbereitung und/oder unmittelbaren Durchführung durch Einleitung von Regeleingriffen kann der Regeleinrichtung 20 ein sehr schnelles Reaktionsvermögen vermittelt werden.

Gleiches ist auch möglich, wenn bei einer eine Detektoreinrichtung 29 aufweisenden Regeleinrichtung 20, wie dargestellt, eine mit der Multipliziereinrichtung 50 in Impulszuführungsverbindung stehende Speichereinrichtung 85 zur Speicherung der ermittelten Werte der Verbraucherleistung und eine mit der Detektoreinrichtung 29 in Impulszuführungsverbindung stehende Abweichungsvergleichseinrichtung 95 vorgesehen ist, mittels derer der Unterschied des jeweiligen ermittelten Wertes der Verbraucherleistung von der maximal möglichen Verbraucherleistung (Inbetriebnahmeverbraucherleistung) und/oder der maximalen Verbraucherleistung (Anfahrverbraucherleistung) bestimmbar ist, wobei auch diese Abweichungsvergleichseinrichtung 95 zur Bestimmung der Tendenz der Veränderung der Unterschiede zwischen jeweils einem ermittelten Wert der Verbraucherleistung und der maximal möglichen Verbraucherleistung (Inbetriebnahmeverbraucherleistung) und/oder der maximalen Verbraucherleistung (Anfahrverbraucherleistung) in Wirkverbindung steht, die ihrerseits mit einer Zahlvorgabeeinrichtung 92 zur willkürlichen Vorgabe einer als Auslöseschwelle für das Tätigwerden des Stellbefehlgebers 62 wirkenden Anzahl solcher Unterschiede dieser aus zeitgleichen Messwerten der Vorlauf- und der Rücklauftemperatur des Wärmeträgermediums und des Gesamtmassenstroms ermittelten und daher auch als "Messwerte" zu bezeichnenden Werte der Verbraucherleistung zur maximal möglichen Verbraucherleistung (Inbetriebnahmeverbraucherleistung) und/oder zur maximalen Verbraucherleistung (Anfahrverbraucherleistung) und über ein Zählwerk 93 für diese Unterschiede mit dem Stellbefehlgeber 62 und mit einer Stellungsanzeigeeinrichtung 94 zur Rückmeldung des Betriebszustandes desselben zusammenwirkt.

Die von der Leistungsvergleichseinrichtung 63 mit "Messwerten" der Verbraucherleistung oder von der Abweichungsvergleichseinrichtung 27 mit Werten der Abweichung dieser "Messwerte" der Verbraucherleistung über die obere und/oder unter die untere Grenze ihres SollwertBandes versorgte Momentanwert-Abweichungs-Speichereinrichtung 90 kann auch dazu herangezogen werden, Beginn und Ende der Zeitspanne mit praktisch konstantem Wert der Verbraucherleistung durch Bestimmung des Unterschiedes zwischen jeweils letztem und vorletztem Momentanwert der Verbraucherleistung zu ermitteln. die Regeleinrichtung 20 kann dann zweckmäßig auch noch eine Zeitspannen-Messeinrichtung 96 zur Ermittlung der Länge der Zeitspanne mit praktisch konstantem Wert der Verbraucherleistung mit einer Zeitspannenvorgabe- und -vergleichseinrichtung 57 und einer Einschalt- und einer Ausschalteinrichtung 97 bzw. 98 aufweisen, die mit der Betragsvergleichseinrichtung 89 in Wirkverbindung steht, wobei mit Vorzug zumindest die Ausschalteinrichtung 98 auch mit der Detektoreinrichtung 29 in Impulszuführungsverbindung steht. Außerdem kann eine Dividiereinrichtung 67 vorgesehen sein, die einerseits entweder mit der Betragsvergleichseinrichtung 89 oder mit der Multipliziereinrichtung 50 und andererseits mit einer Einrichtung 99 zur Abgabe von Zeitspannen entsprechenden Impulsen in Wirkverbindung steht. Durch die Dividiereinrichtung 67 wird der zeitliche Gradient der Verringerung der Verbraucherleistung nach Beendigung der Zeitspanne mit praktisch konstantem Wert der Verbraucherleistung ermittelt, nachdem der Beendigungszeitpunkt mit Vorzug durch die Betragsvergleichseinrichtung 89 festgestellt worden ist. Dieser kann aber auch durch die Dividiereinrichtung 67 selbst ermittelt werden, indem nämlich die plötzliche Abfallsteilheit des Verlaufs der Verbraucherleistung das Ende der Aufheizperiode der Heizungsanlage signalisiert. Der Dividiereinrichtung 67 zugeordnet ist ferner eine Gradienten-Vorgabe- und -Vergleichseinrichtung 100 mit einer vom Zeitpunkt des Endes der Zeitspanne mit praktisch konstantem Wert der Verbraucherleistung abhängigen Einschalt- und/oder Ausschalteinrichtung 97, 98, wobei als letztere auch die Ausschalteinrichtung 98 einer Zeitspannenmesseinrichtung 96 zur Ermittlung der Länge der Zeitspanne mit praktisch konstantem Wert der Verbraucherleistung mitausgenutzt werden kann. Die bzw. jede der Sollwert-Bildungseinrichtung(en) 46a bzw. 46b steht bzw. stehen einerseits mit der Detektoreinrichtung 29 und andererseits mit der Zeitspannen-Messeinrichtung 96 unmittelbar oder über deren Zeitspannen-Vorgabe- und -Vergleichseinrichtung 57 bzw. mit der Dividiereinrichtung 67 unmittelbar oder über deren Gradienten-Vorgabe-und -Vergleichseinrichtung 100 sowie in jedem Fall mit dem Stellbefehlgeber 62 in Wirkverbindung.

Der bzw. jeder der Sollwert-Bildungseinrichtung(en) 46a bzw. 46b kann jeweils eine sie ansteuernde Niveaugabeeinrichtung 101 vor- oder nachgeschaltet sein, mittels derer als Bezugsgröße für den größeren und für den kleineren Sollwert der Schwankungsbreite der Verbraucherleistung bzw. als obere und als untere Grenze des Sollwert-Bandes derselben jeweils ein willkürlich gewählter Wert der Verbraucherleistung vorgebbar ist. Diese Bezugsgröße wird als Betriebsverbraucherleistung bezeichnet und kann zwar willkürlich, jedoch auf ermittelte Parameter der erfindungsgemäßen Verfahrensführung gestützt vorgenommen werden, was den Vorteil erbringt. daß dann Zeitspannen, die die Regeleinrichtung bei Auslegung mit Selbstlernvermögen zum Einfahren in den optimalen Wert dieser Betriebsverbraucherleistung benötigen würde, wesentlich verkürzt werden können. Die verschiedenen Arten bevorzugter Festlegung der Betriebsverbraucherleistung und des der oberen Grenze des Sollwert-Bandes der Schwankungsbreite der Verbraucherleistung entsprechenden Schwankungsbreitenbandes und oder des der unteren Grenze dieses Sollwert-Bandes entsprechenden Schwankungsbreitenbandes sind eingangs im Zusammenhang mit der Erläuterung der Ansprüche ausführlich dargelegt worden. Zweckmäßig kann hierfür die Regeleinrichtung 20 eine von der Dividiereinrichtung 67 angesteuerte Gradienten-Vorgabe- und -Vergleichseinrichtung 100 und eine vorzugsweise gleichfalls von der Dividiereinrichtung 67 angesteuerte vom Zeitpunkt des Endes der Zeitspanne mit praktisch konstantem Wert der Verbraucherleistung abhängige Einschalt- und/oder Ausschalteinrichtung 102 aufweisen, deren Funktion auch durch die Einschalt- bzw. Ausschalteinrichtung 97, 98 mitübernommen werden kann. Außerdem ist dann eine Einrichtung 103 zur automatischen Verstellung der zugeordneten Niveaugabe-Einrichtung(en) 101 im Sinne einer vom jeweils ermittelten Wert der maximal möglichen Verbraucherleistung (Inbetriebnahmeverbraucherleistung) und/oder der maximalen Verbraucherleistung (Anfahrverbraucherleistung) und/oder der Länge der Zeitspanne mit praktisch konstantem Wert der Verbraucherleistung und/oder des zeitlichen Gradienten der Verringerung der Verbraucherleistung nach Beendigung der Zeitspanne mit praktisch konstantem Wert der Verbraucherleistung abhängigen Erhöhung bzw. Verringerung des als Bezugsgröße für die obere und/oder die untere Grenze des Sollwert-Bandes der Schwankungsbreite der Verbraucherleistung (Betriebsverbraucherleistung) dienenden jeweiligen Wertes der maximal möglichen bzw. der maximalen Verbraucherleistung vorgesehen. Auf diese Weise läßt sich nach jedem durch eine Veränderung der Zufuhr von Betriebsenergie zum Wärmeerzeuger 2 gekennzeichneten Regelvorgang die sich unmittelbar danach oder nach einer vorbestimmten Zeitspanne einstellende Verbraucherleistung als neue Bezugsgröße für den der oberen und den der unteren Grenze des Sollwert-Bandes der Schwankungsbreite der Verbraucherleistung entsprechenden Wert derselben automatisch vorgeben.

Wenn beabsichtigt ist, den der oberen und/oder den der unteren Grenze des Sollwert-Bandes der Schwankungsbreite der Verbraucherleistung entsprechenden Wert derselben jeweils entsprechend der Änderung seiner Bezugsgröße zu verändern, also die Schwankungsbreite für die obere und/oder die untere Grenze dieses Sollwert-Bandes jeder Änderung der Bezugsgröße in Form der Betriebsverbraucherleistung so nachzuführen, daß die obere und/oder die untere Grenze dieses Sollwert-Bandes bei Vergrößerung dieser Bezugsgröße vergrößert und bei Verringerung dieser Bezugsgröße verringert wird, kann, wie dargestellt, die Regeleinrichtung 20 jeweils eine über eine Impulsgabeeinrichtung 104 von der bzw. jeder der Niveaugabeeinrichtung(en) 101 ansteuerbare Rückmeldeeinrichtung 105 zur Rückmeldung des als Bezugsgröße für die obere und/oder die untere Grenze der Schwankungsbreite der Verbraucherleistung dienenden Wertes derselben aufweisen, die jeweils entweder mit der bzw. einer der Einrichtung(en) 45 zur automatischen Betätigung der bzw. einer der Sollwert-Bildungseinrichtung(en) 46a bzw. 46b oder einerseits mit der bzw. einer der Sollwert-Bildungseinrichtung(en) 46a bzw. 46b und andererseits mit dem bzw. einem der jeweils zugeordneten Sollwertgeber 41 bzw. 42 in Wirkverbindung steht.

Auch hier läßt sich im Interesse einer Steigerung der Flinkheit der Regeleinrichtung 20 auch bezüglich ihres automatischen Einfahrens in die optimale Betriebsverbraucherleistung als Bezugsgröße für die obere und/oder die untere Grenze des Sollwert-Bandes der Schwankungsbreite der Verbraucherleistung die Tendenz des monotonen Steigens bzw. Fallens der "Messwerte" einer Folge von Messungen von Schwankungen der Verbraucherleistung heranziehen. Hierfür kann zweckmäßig eine mit der Multipliziereinrichtung 50 in Impulszuführungsverbindung stehende Betragsvergleichseinrichtung 89 zur Bestimmung des Unterschiedes zwischen jeweils letztem und vorletztem Momentanwert der Verbraucherleistung oder eine mit der Leistungsvergleichseinrichtung 63 zusammenwirkende Momentanwert-Abweichungs-Speichereinrichtung 90 zur Speicherung dieser Unterschiede zwischen jeweils letztem und vorletztem Momentanwert der Verbraucherleistung vorgesehen sein, wobei die Betragsvergleichseinrichtung 89 bzw. die Momentanwert-Abweichungs-Speichereinrichtung 90 jeweils mit einer Tendenzvergleichseinrichtung 91 zur Bestimmung der Tendenz der Veränderung der Unterschiede zwischen jeweils letztem und vorletztem Momentanwert der Verbraucherleistung in Wirkverbindung steht, die ihrerseits einerseits an eine Zahlvorgabeeinrichtung 92 zur willkürlichen Vorgabe einer als Auslöseschwelle für das Tätigwerden des Stellbefehlgebers 62 wirkenden Anzahl solcher Unterschiede zwischen jeweils letztem und vorletztem Momentanwert der Verbraucherleistung und andererseits über ein Zählwerk 93 für die tatsächlich aufgetretene bzw. ermittelte Zahl solcher Unterschiede mit dem Stellbefehlgeber 62 und mit einer Stellungsanzeigeeinrichtung 94 zur Rückmeldung des Betriebszustandes desselben angeschlossen ist.

Weiterhin kann die Regeleinrichtung 20 eine Messwertspeichereinrichtung 26 für die als Inbetriebnahmeverbraucherleistung bezeichnete maximal mögliche Verbraucherleistung sowie eine Vergleichseinrichtung 117 zur Ermittlung von Abweichungen der maximalen Verbraucherleistung (Anfahrverbraucherleistung) von der maximal möglichen Verbraucherleistung (Inbetriebnahmeverbraucherleistung) und eine zugeordnete Verhältnisbildungseinrichtung 28 aufweisen, mittels derer die bzw. eine oder beide der Sollwertbildungseinrichtung(en) 46a, 46b bzw. 46a bzw. 46b bzw. die bzw. eine oder beide der Programmspeichereinrichtung(en) 47a, 47b bzw. 47a bzw. 47b bzw. die bzw. eine oder beide Verstelleinrichtung(en) 48a bzw. 48 b bzw. der eine oder beide Sollwertgeber 41 bzw. 42 im Sinne einer Änderung des vorgegebenen Sollwert-Bandes der Schwankungsbreite der Verbraucherleistung in Abhängigkeit vom Verhältnis von maximaler Verbraucherleistung (Anfahrverbraucherleistung) zu maximal möglicher Verbraucherleistung (Inbetriebnahmeverbraucherleistung) verstellbar ist.

Weiterhin ist mindestens eine Meldeeinrichtung 59 zur Abgabe einer optisch und/oder akustisch wahrnehmbaren Information vorgesehen, die über eine Grenzdetektoreinrichtung 30, mit der sie über jeweils eine Impulsleitung in Verbindung steht bzw. stehen, immer dann aktivierbar ist bzw. sind, wenn die Grenzdetektoreinrichtung 30 eine Abweichung der ihr von der Vergleichseinrichtung 117 übermittelten Abweichung der maximalen Verbraucherleistung (Anfahrverbraucherleistung) von der maximal möglichen Verbraucherleistung (Inbetriebnahmeverbraucherleistung) ermittelt, die einen vorbestimmten Wert einer solchen Abweichung über- oder unterschreitet.

Um auch extreme Wärmeverluste an irgendeiner Stelle des Gesamtwärmeverbrauchers 3 ermitteln und melden zu können, die so extreme Leistungsverluste bedingen, daß Abweichungen der Schwankung der Verbraucherleistung über die obere Grenze ihres Sollwert-Bandes entweder überhaupt nicht oder zumindest doch während einer vorgegebenen Zeitspanne nicht auftreten, wie das beispielsweise bei offenstehendem Fenster in einer besonderen Kälteperiode der Fall sein kann, wodurch der betreffende Raum stark auskühlt und das System es nicht mehr schafft, die zuzuführende Wärmeleistung so zu steigern, daß die obere Grenze des Sollwert-Bandes der Schwankungsbreite der Verbraucherleistung überschritten wird, kann zweckmäßig weiterhin eine Meldeeinrichtung 60 zur Abgabe einer optisch und/oder akustisch wahrnehmbaren Information, die über eine Impulsleitung an eine Auslöseeinrichtung 40 angeschlossen ist, die ihrerseits mit der Vergleichseinrichtung 27 der Regeleinrichtung 20 zur Bestimmung der Abweichung der Schwankung der Verbraucherleistung über die obere und/oder unter die untere Grenze ihres Sollwert-Bandes und/oder mit einer Messwertspeichereinrichtung 128 verbunden ist, und eine Zeitsteuereinrichtung 51 zur Durchführung einer Mehrzahl zeitgleicher Messungen jeweils von Vorlauf- und Rücklauftemperatur durch die Messeinrichtungen 70 und 71 bzw. 72 und des Gesamtmassenstroms durch die Messeinrichtung 5 und/oder einer Mehrzahl von Ermittlungen von Momentanwerten der Verbraucherleistung und/oder einer Mehrzahl von Ermittlungen der Differenz jeweils des letzten ermittelten Momentanwertes der Verbraucherleistung und des vorangegangenen Momentanwertes derselben und/oder zur Aufnahme und/oder zum Abruf eines oder mehrerer Messwerte(s) der ermittelten Differenz dieser Momentanwerte der Verbraucherleistung oder eine Zeitsteuereinrichtung 52 zur Aufnahme und/oder Abgabe eines ermittelten Momentanwertes der Verbraucherleistung oder einer Mehrzahl von von der Multipliziereinrichtung 50 gelieferten Momentanwerten der Verbraucherleistung während einer vorgegebenen Zeitspanne vorgesehen sein, wobei diese Meldeeinrichtung(en) 60 durch die Auslöseeinrichtung 40 immer dann aktivierbar ist bzw. sind, wenn zumindest nach einer vorgegebenen Zeitspanne keine Abweichung der Schwankung der Verbraucherleistung über die obere Grenze ihres Sollwert-Bandes zu verzeichnen ist.

Für in kontinuierlichem Betrieb arbeitende Heizungsvorrichtungen 1, bei denen also die Einflußnahme auf die in den Heizungsvorlauf 14 eingespeiste Wärmeleistung durch kontinuierliche Veränderung der Zufuhr von Betriebsenergie zum Wärmeerzeuger 2 oder durch kontinuierliche Änderung des Verhältnisses des vom Wärmeerzeuger 2 dem Heizungsvorlauf 14 zugespeisten Massenstroms zum Gesamtmassenstrom des Wärmeträgermediums mittels entsprechender Verstellung des beispielsweise als Ventilglied ausgebildeten dieses Massenstromverhältnis bestimmenden Organs einer etwa vorhandenen Mehrwege-Mischeinrichtung erfolgt, kann ferner eine Zeitprogrammspeichereinrichtung 110 zur Vorgabe einer vorbestimmten Anzahl von Zeitspannen vorgegebener Länge, während derer nach jeweiliger Erhöhung der Zufuhr von Betriebsenergie zum Wärmeerzeuger 2 bzw. nach jeweiliger Erhöhung dieses Massenstromverhältnisses oder des Sollwertes der Vorlauftemperatur des Wärmeträgermediums um ein für Aufrechterhaltung einer um einen vorbestimmten Wert erhöhten Verbraucherleistung ausreichendes Maß die Abweichung der Schwankung der Verbraucherleistung über die obere Grenze ihres Sollwert-Bandes hinaus bestimmbar ist, vorgesehen sein, die insbesondere zur Verbesserung der Anpassung an die Gegebenheiten des jeweiligen Einsatzfalles einstellbar sein sollte. Die Programmsteuerung der Auslöseeinrichtung 40 erfolgt so, daß diese die Meldeeinrichtung(en) 59 bzw. 60 erst dann aktiviert, wenn sicher ist, daß ein andauernder starker Wärmeenergieverlust zu verzeichnen ist, dem zwecks Abstellung nachzugehen ist, das heißt also, wenn bei Fehlen einer Abweichung der Schwankung der Verbraucherleistung über die obere Grenze des Sollwert-Bandes ihrer Schwankungsbreite hinaus der Stellbefehlgeber 62 im Sinne einer Erhöhung der Zufuhr von Betriebsenergie zum Wärmeerzeuger 2 bzw. einer Erhöhung des Verhältnisses des vom Wärmeerzeuger 2 her in den Heizungsvorlauf 14 eingespeisten Massenstroms zum Gesamtmassenstrom des Wärmeträgermediums oder des Sollwertes der Vorlauftemperatur des Wärmeträgermediums um ein für Aufrechterhaltung einer um einen vorbestimmten Wert erhöhten Verbraucherleistung ausreichendes Maß betätigt worden ist und dennoch auch weiterhin keine Abweichung der Schwankung der Verbraucherleistung über die obere Grenze jenes Sollwert-Bandes hinaus innerhalb einer weiteren vorgegebenen Zeitspanne und vorzugsweise ein andauerndes Fehlen einer solchen Abweichung der Schwankung der Verbraucherleistung innerhalb einer nochmaligen vorgegebenen Zeitspanne trotz nochmaliger Erhöhung der Zufuhr von Betriebsenergie zum Wärmeerzeuger 2 bzw. des Verhältnisses des vom Wärmeerzeuger 2 her in den Heizungsvorlauf 14 eingespeisten Massenstroms zum Gesamtmassenstrom des Wärmeträgermediums oder des Sollwertes der Vorlauftemperatur desselben um ein für Aufrechterhaltung einer um einen weiteren Wert nochmals erhöhten Verbraucherleistung ausreichendes Maß durch entsprechende nochmalige Betätigung des Stellbefehlgebers 62 zu verzeichnen ist.

Grundsätzlich kann im Rahmen der Erfindung das Sollwert-Band für die Schwankungsbreite der Verbraucherleistung willkürlich gewählt werden, indem seine Obergrenze und/oder seine Untergrenze hersteller-oder benutzerseitig willkürlich eingestellt wird, es hat sich aber gezeigt, daß es bezogen auf die jeweilige erfindungsgemäß ausgebildete Heizungsanlage besonders günstige Sollwert-Verhältnisse gibt, die, werden sie von vornherein als Sollwert-Band-Vorgabe eingestellt, zu einem Arbeiten der erfindungsgemäßen Regelung in ihrem Optimalbereich mit entsprechender Vermeidung von Wärmeenergieverlusten führen. Liegt eine erfindungsgemäß mit Selbstlernvermögen ausgestattete Regeleinrichtung 20 vor, so ist dadurch zwar gewährleistet, daß die Regelung nach einiger Zeit in ihren Optimalbereich einläuft, jedoch sind die während dieser Zeit aufgrund noch nicht völlig optimalen Betriebs der Heizungsanlage unvermeidlich auftretenden Wärmeenergieverluste hinzunehmen. Um auch diese weitestgehend auszuschalten, kann man nach dem Konzept der Erfindung die Sollwert-Band-Vorgabe für die Schwankungsbreite der Verbraucherleistung auch noch von einer etwaigen Abweichung der sich beispielsweise jeweils bei Tagesanfahrt ergebenden und entsprechend zu messenden maximalen Verbraucherleistung (Anfahrverbraucherleistung) von der bei "Jungfernfahrt", das heißt bei erstmaliger Inbetriebnahme der Heizungsanlage ermittelten maximal möglichen Verbraucherleistung (Inbetriebnahmeverbraucherleistung) abhängig machen. Hierfür ist in der Regeleinrichtung 20 eine Messwertspeichereinrichtung 121 für die maximal mögliche Verbraucherleistung (Inbetriebnahmeverbraucherleistung) vorgesehen, da diese als Bezugsnormal für den Tagesanfahrtsvergleich benötigt wird, um eine einerseits mit dieser und andererseits über jeweils eine Messwertleitung 80 bzw. 81 bzw. 82 mit den Messeinrichtungen 70 bzw. 71 bzw. 72 für die Vorlauf- und die Rücklauftemperatur des Wärmeträgermediums oder über eine Impulsleitung mit der Einrichtung 74 zur Ermittlung der Differenz zeitgleicher Messwerte dieser beiden Temperaturen des Wärmeträgermediums und dabei jeweils über eine Messwertleitung 15 mit der Messeinrichtung 5 für den Gesamtmassenstrom des Wärmeträgermediums oder über jeweils eine Impulsleitung mit der Multipliziereinrichtung 50 oder mit der Detektoreinrichtung 29 in Impulszuführungsverbindung stehende Vergleichseinrichtung 117, mittels derer Abweichungen der maximalen Verbraucherleistung (Anfahrverbraucherleistung) von der wert- bzw. betragsmäßig in der Messwert-Speichereinrichtung 121 gespeicherten und von dieser abrufbaren maximal möglichen Verbraucherleistung (Inbetriebnahmeverbraucherleistung) ermittelt werden können. Außerdem kann hier zweckmäßig die Verhältnisbildungseinrichtung 28 genutzt oder aber eine weitere Verhältnisbildungseinrichtung eigens vorgesehen werden, um dann, wenn eine Abweichung der maximalen Verbraucherleistung von der maximal möglichen Verbraucherleistung festgestellt worden sein sollte, einen dem Verhältnis von maximaler Verbraucherleistung zu maximal möglicher Verbraucherleistung entsprechenden Impuls zu bilden und mittels dessen zumindest eine der Sollwert-Bildungseinrichtungen 46a, 46b bzw. 46a bzw. 46b für die obere bzw. die untere Grenze des Sollwert-Bandes der Schwankungsbreite der Verbraucherleistung oder die oder zumindest eine der Programmspeichereinrichtung(en) 47a, 47b bzw. 47a bzw. 47b für die Beeinflussung dieses Sollwert-Bandes oder zumindest eine Verstelleinrichtung 48a bzw. 48b für diese oder zumindest einen Sollwertgeber 41 bzw. 42 und über diese(n) den Stellbefehlgeber 62 so anzusteuern, daß das Sollwert-Band der Schwankungsbreite der Verbraucherleistung in Abhängigkeit vom Verhältnis von maximaler Verbraucherleistung (Anfahrverbraucherleistung) zu maximal möglicher Verbraucherleistung (Inbetriebnahmeverbraucherleistung) verändert wird.

Weiterhin weist die Regeleinrichtung 20 eine Leistungs-Detektoreinrichtung 113 auf, mittels derer die maximal mögliche Verbraucherleistung (Inbetriebnahmeverbraucherleistung) ebenso wie die maximale Verbraucherleistung (Anfahrverbraucherleistung) bei Vollast bzw. bei dem Heizungsvorlauf 14 vom Wärmeerzeuger 2 her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung 7 bzw. 8, beispielsweise deren Ventilgliedes, jeweils zu dem Zeitpunkt ermittelt werden kann, zu dem nach einer Zeitspanne mit praktisch konstantem Wert der Verbraucherleistung erstmalig eine Verringerung derselben auftritt. Der durch die Leistungs-Detektoreinrichtung 113 ermittelte Wert der maximal möglichen Verbraucherleistung (Inbetriebnahmeverbraucherleistung) wird in der Messwert-Speichereinrichtung 121 für spätere Weiterverwendung gespeichert. Die Leistungs-Detektoreinrichtung 113 liefert ihre nach der Ermittlung des Messwertes der maximal möglichen Verbraucherleistung (Inbetriebnahmeverbraucherleistung) gewonnenen Messwerte der maximalen Verbraucherleistung (Anfahrverbraucherleistung) an die Vergleichseinrichtung 117, der von der Messwert-Speichereinrichtung 121 stets auch der in dieser konservierte Messwert der maximal möglichen Verbraucherleistung (Inbetriebnahmeverbraucherleistung) zugeführt wird. In dieser Vergleichseinrichtung 117 wird eine etwaige Drift der ursprünglichen maximal möglichen Verbraucherleistung zu geringeren, später als maximale Verbraucherleistung gemessenen Werten festgestellt. Nicht jede solche Abweichung ist aber Grund dafür, irgend ein Tätigwerden der Regeleinrichtung in irgend einer Richtung zu veranlassen, sondern nur eine solche Abweichung dieser Art, die einen vorbestimmten Wert überschreitet.

Hierfür ist eine Grenzdetektoreinrichtung vorgesehen, deren Funktion im übrigen auch von der Grenzdetektoreinrichtung 30 mitübernommen werden kann, mittels derer überprüft wird, ob eine von der Leistungs-Detektoreinrichtung 113 ermittelte Abweichung einen vorgegebenen Wert überschreitet, um in einem solchen Fall die Meldeeinrichtung-(en) 59 bzw. 60 zur optischen und/oder akustischen Wahrnehmbarmachung einer solchen Unregelmäßigkeit zu aktivieren. Im übrigen gestattet eine solche Ausführung der Erfindung, wie bereits eingangs ausführlich erläutert, die Detektion insbesondere eines Brennerdefektes bzw. eines Defektes der Wärmetauschereinrichtung für die Zuführung der Betriebsenergie zum Wärmeerzeuger 2 auf deren Primärenergieseite.

Eine Detektion sonstiger Defekte ist möglich, wenn die Regeleinrichtung 20 nach der Erfindung eine Massenstrom-Detektoreinrichtung 111 zur Ermittlung des im Verlauf der Inbetriebnahme der Vorrichtung 1 für Heizbetrieb als maximal möglicher Gesamtmassenstrom des Wärmeträgermediums (Inbetriebnahmegesamtmassenstrom) und/oder des im Verlauf des Heizbetriebes bei Aufheizen nach einer Abkühlung als maximaler Gesamtmassenstrom (Anfahrgesamtmassenstrom) jeweils bei Vollast bzw. dem Heizungsvorlauf 14 vom Wärmeerzeuger 2 her vollen Gesamtmassenstrom des Wärmeträgermediums zuspeisender Stellung des das Verhältnis von eingespeistem Massenstrom zu Gesamtmassenstrom jeweils zu dem Zeitpunkt, zu dem nach einer Zeitspanne mit praktisch konstantem Wert der Verbraucherleistung erstmalig eine Verringerung derselben auftritt (die im übrigen als Anfahrzeitspanne zu bezeichnen ist), auftretenden Gesamtmassenstroms und eine Messwert-Speichereinrichtung 119 für den maximal möglichen Gesamtmassenstrom (Inbetriebnahmegesamtmassenstrom) sowie eine einerseits mit dieser und andererseits über eine Messwertleitung 15 mit der Messeinrichtung 5 für den Gesamtmassenstrom oder über eine Impulsleitung mit der Massenstrom-Detektoreinrichtung 111 in Impulszuführungsverbindung stehende Massenstromvergleichseinrichtung 115 aufweist, mittels derer etwaige Abweichungen des maximalen Gesamtmassenstroms (Anfahrgesamtmassenstroms) vom wert- bzw. betragsmäßig in der Messwert-Speichereinrichtung 119 gespeicherten und von dieser abrufbaren maximal möglichen Gesamtmassenstrom (Inbetriebnahmegesamtmassenstrom) ermittelt werden können. Der Massenstromvergleichseinrichtung 115 zugeordnet ist eine Grenzdetektoreinrichtung vorgesehen, deren Funktion im übrigen auch hier von der Grenzdetektoreinrichtung 30 mitübernommen werden kann und mittels derer dann die Melddeinrichtung(en) 59 bzw. 60 in bereits beschriebener Weise zur optischen und/oder akustischen Wahrnehmbarmachung einer durch ein vorgegebenes Maß überschreitende Abweichung des maximalen Gesamtmassenstroms vom maximal möglichen Gesamtmassenstrom gebildeten Unregelmäßigkeit aktiviert werden kann bzw. können.

Andererseits können bestimmte Defekte der Heizungsanlage erfindungsgemäß auch dadurch detektiert werden, daß die Differenz von Vorlauf- und Rücklauftemperatur des Wärmeträgermediums überwacht und aus dieser Überwachung Warnsignale für den Benutzer bzw. Betreiber der Heizungsanlage abgeleitet werden. Hierfür kann, wie dargestellt, eine Temperaturdifferenz-Detektoreinrichtung 112 zur Ermittlung der im Verlauf der Inbetriebnahme der Vorrichtung 1 für Heizbetrieb als minimal mögliche Differenz von Vorlauf- und Rücklauftemperatur des Wärmeträgermediums (Inbetriebnahmetemperaturdifferen) und/oder der im Verlauf des Heizbetriebes bei Aufheizen nach einer Abkühlung als minimale Differenz von Vorlauf- und Rücklauftemperatur (Anfahrtemperaturdifferenz) jeweils bei Vollast bzw. bei dem Heizungsvorlauf 14 von Wärmeerzeuger 2 her vollen Gesamtmassenstrom des Wärmeträgermediums zuspeisender Stellung des das Verhältnis von eingespeistem Massenstrom zu Gesamtmassenstrom bestimmenden Organs der Mehrwege-Mischeinrichtung 7 bzw. 8 und jeweils zu dem Zeitpunkt, zu dem nach der als Anfahrzeitspanne zu bezeichnenden Zeitspanne mit praktisch konstantem Wert der Verbraucherleistung erstmalig eine Verringerung derselben auftritt, auftretenden Differenz von Vorlauf- und Rücklauftemperatur des Wärmeträgermediums und eine Messwertspeichereinrichtung 120 für die minimal mögliche Differenz von Vorlauf- und Rücklauftemperatur des Wärmeträgermediums (Inbetriebnahmetemperaturdifferenz) sowie eine einerseits mit dieser und andererseits über jeweils eine Messwertleitung 80 bzw. 81 bzw. 82 mit den Messeinrichtungen 70 bzw. 71 bzw. 72 für die Vorlauf- und die Rücklauftemperatur des Wärmeträgermediums oder über eine Impulsleitung mit der Einrichtung 74 zur Ermittlung der Differenz zeitgleicher Messwerte von Vorlauf- und Rücklauftemperatur oder über eine Impulsleitung mit der Temperaturdifferenz-Detektoreinrichtung 112 in Impulszuführungsverbindung stehende Temperaturdifferenz-Vergleichseinrichtung 116 vorgesehen sein, mittels derer etwaige Abweichungen der minimalen Differenz von Vorlauf- und Rücklauftemperatur (Anfahrtemperaturdifferenz) von der wert- bzw. betragsmäßig in der Messwertspeichereinrichtung 120 gespeicherten und von dieser abrufbaren minimal möglichen Differenz von Vorlauf- und Rücklauftemperatur (Inbetriebnahmetemperaturdifferenz) ermittelt werden können. Der Temperaturdifferenz-Vergleichseinrichtung 116 zugeordnet ist eine Grenzdetektoreinrichtung vorgesehen, deren Funktion im übrigen auch hier von der Grenzdetektoreinrichtung 30 mitübernommen werden kann und mittels derer dann die Meldeeinrichtung(en) 59 bzw. 60 in bereits beschriebener Weise zur optischen und/oder akustischen Wahrnehmbarmachung einer durch ein vorgegebenes Maß überschreitende Abweichung der minimalen Differenz von Vorlauf- und Rücklauftemperatur des Wärmeträgermediums gebildeten Unregelmäßigkeit aktiviert werden kann bzw. können.

Um erfindungsgemäß die unterschiedlichen Betriebsarten im Sinne von Komfort- , Normal- , Spar- , Nachtabsenkungs- oder Frostschutzbetrieb fahren zu können, weist die Regeleinrichtung 20 ferner eine Speichereinrichtung 24 auf, in der beim dargestellten Ausführungsbeispiel vier bevorzugte Paarungen von Ober- und Untergrenzen des Sollwert-Bandes der Schwankungsbreite der Verbraucherleistung gespeichert sind, nämlich für Komfort- , Spar- bzw. Nachtabsenkungsbetrieb und letztlich auch für Frostschutzbetrieb. Dieser Speichereinrichtung 24, die im übrigen hinsichtlich ihrer den Ober- und Untergrenzen des Sollwert-Bandes der Schwankungsbreite der Verbraucherleistung für die einzelnen Betriebsarten entsprechenden gespeicherten Wertepaarungen mit Vorzug einstellbar ausgeführt ist, so daß diese Wertepaarungen entweder vom Herstellerwerk oder aber vom installierenden Heizungsbauer oder aber auch Benutzer nach Wunsch eingestellt werden können, ist eine Umschalteinrichtung 25 zugeordnet, mittels derer der Benutzer der Heizungsvorrichtung 1 nunmehr je nach Wunsch bzw. Bedarf die Funktion der Regeleinrichtung 20 so umschalten kann, daß sie statt der einen Betriebsart, beispielsweise Komfortbetrieb, einer anderen gewählten Betriebsart, beispielsweise Spar- bzw. Nachtabsenkungsbetrieb, gerecht wird. Diese Umschaltung kann im übrigen auch zeitgesteuert automatisch erfolgen. Hierfür kann ein Zeitschaltwerk 131 vorgesehen sein, das in geeigneter Weise über Impulsleitungen mit der Speichereinrichtung 24 und/oder der Umschalteinrichtung 25 für diese verbunden ist. Dargestellt ist auch, daß die Regeleinrichtung eine Zähleinrichtung 54 für die während einer vorgegebenen Zeitspanne, während derer von der Zeitsteuereinrichtung 51 gesteuert eine Mehrzahl von Messungen der Vorlauf- und der Rücklauftemperatur des Wärmeträgermediums bzw. der Differenz dieser beiden Temperaturen sowie des Gesamtmassenstroms und über diese der Verbraucherleistung durchgeführt und/oder ein "Mess"-Wert oder eine Mehrzahl von von der Multipliziereinrichtung 50 oder einer Messwertspeichereinrichtung, beispielsweise der Messwertspeichereinrichtung 128, gelieferten Werten der Verbraucherleistung aufgenommen oder abgerufen wird, etwa aufgetretenen Abweichungen dieser Messwerte über die obere und/oder unter die untere Grenze des vorgegebenen Sollwert-Bandes der Schwankungsbreite der Verbraucherleistung und eine Programmspeichereinrichtung 123 für eine vorgegebene während dieser vorgegebenen Zeitspanne zulässige Zahl von im Betrieb auftretenden Abweichungen der Schwankung der Verbraucherleistung über die obere und/oder unter die untere Grenze des Sollwert-Bandes ihrer Schwankungsbreite sowie weiterhin eine mit zumindest einem der Sollwertgeber 41 bzw. 42 in Wirkverbindung stehende Einrichtung 44 zur automatischen Veränderung des Sollwert-Bandes bzw. zumindest einer seiner Grenzen in Abhängigkeit von dieser durch eine Detektoreinrichtung 124 ermittelten Abweichung der Anzahl aufgetretener Messwertabweichungen von der zulässigen Zahl derselben aufweist.

Somit kann auch über die Abweichung der gemessenen Anzahl solcher während einer vorgegebenen Zeitspanne im Betrieb aufgetretener Veränderungen von einer vorgegebenen während dieser vorgegebenen Zeitspanne zulässigen Zahl derselben im Sinne eines Selbstlernvorganges automatisch das Sollwert-Band bzw. zumindest eine seiner Grenzen nachführend verändert werden.

Weiterhin kann zweckmäßig die Regeleinrichtung 20 eine vorzugsweise einstellbare Zeitgabeeinrichtung 58 aufweisen, mittels derer die Zeitdauer für die von der Schwankungsvergleichseinrichtung 27 vorzunehmende Überwachung der Abweichung der Verbraucherleistung unter die untere Grenze des Sollwert-Bandes ihrer Schwankungsbreite vorgebbar ist. Dieser Zeitgabeeinrichtung 58 kann ein Zeitspannen-Programmspeicher zugeordnet sein, dessen Funktion auch von einem Zeitspannen-Programmspeicher 53 mitübernommen werden kann und in dem für bevorzugte Paarungen von Ober- und Untergrenzen des Sollwert-Bandes der Schwankungsbreite der Verbraucherleistung, wie beispielsweise für Komfort- , Normal- , Spar- , Nachtabsenkungs- oder Frostschutzbetrieb, unterschiedliche Werte der Länge der Zeitdauer für die Überwachung der Abweichung der Verbraucherleistung unter die untere Grenze des Sollwert-Bandes ihrer Schwankungsbreite gespeichert sind, und zwar dies so, daß jeweils den auf niedrigerem Wärmeenergie- bzw. Wärmeleistungsniveau arbeitenden Betriebsarten eine im Vergleich zu einer auf höherem Wärmeenergie- bzw. Wärmeleistungsniveau arbeitenden Betriebsart längere gespeicherte Überwachungsdauer zugeordnet ist. Zur automatischen Auszeit-Anpassung an eine geregelte Einzeit bei diskontinuierlich mit Betriebsenergie betriebenen Wärmeerzeugern 2 kann für das Fahren von Frostschutzbetrieb einerseits im Zeitspannen-Programmspeicher 53 ein speziell für diesen Betrieb erwünschtes Verhältnis der Dauer der Zuführung von Betriebsenergie zum Wärmeerzeuger 2 (Einzeit desselben) zur Dauer des Aussetzens dieser Zuführung von Betriebsenergie (Auszeit des Wärmeerzeugers 2) im Bereich zwischen etwa 1 zu 5 bis 1 zu 20 gespeichert und andererseits eine vorzugsweise mit der Zeitgabeeinrichtung 58 in Wirkverbindung stehende Stellungsanzeigeeinrichtung 105 zur Rückmeldung des der Zuführung von Betriebsenergie zum Wärmeerzeuger 2 und/oder des dem Aussetzen solcher Betriebsenergiezufuhr entsprechenden Betriebszustandes des Stellbefehlgebers 62 und/oder der die Veränderung der Zufuhr von Betriebsenergie zum Wärmeerzeuger 2 bewirkenden Einrichtung selbst vorgesehen sein.

Bei mit kontinuierlicher Zufuhr der Betriebsenergie zum Wärmeerzeuger 2 arbeitenden Heizungsanlagen kann, wie dargestellt, eine mit dem Stellbefehlgeber 62 in Wirkverbindung stehende Leistungsbegrenzungseinrichtung 106 mit einstellbarem Leistungs-Programmspeicher 107 für das bei Frostschutzbetrieb erwünschte Maß der dem Wärmeerzeuger 2 zuzuführenden Betriebsenergie vorgesehen sein, mittels derer der Stellbefehlgeber 62 im Sinne der Aufrechterhaltung eines im Bereich zwischen etwa dem 0,2- bis 0.05-fachen der Inbetriebnahmeverbraucherleistung oder der Anfahrverbraucherleistung oder der Betriebsverbraucherleistung oder der Bezugsgröße für die zulässige Schwankungsbreite der Verbraucherleistung liegenden Bruchteils derselben betätigbar ist, wobei vorzugsweise auch hier eine Stellungsanzeigeeinrichtung zur Rückmeldung des Betriebszustandes des Stellbefehlgebers 62 und/oder der die Veränderung der Zufuhr von Betriebsenergie zum Wärmeerzeuger 2 bewirkenden Einrichtung selbst vorgesehen sein kann, die mit der Leistungsbegrenzungseinrichtung 106 rückgekoppelt ist; diese Rückmeldeeinrichtung kann durch die Stellungsanzeigeeinrichtung 105 gebildet sein.

Bei mit Mehrwege-Mischeinrichtung arbeitenden Heizungsanlagen nach der Erfindung wird mit Vorzug, wie dargestellt, statt dessen eine mit dem Stellbefehlgeber 62 in Wirkverbindung stehende Massenstrombegrenzungseinrichtung 108 mit einstellbarem Massenstrom-Programmgeber 109 für die bei Frostschutzbetrieb erwünschte Menge des vom Wärmeerzeuger 2 her in den Heizungsvorlauf 14 einzuspeisenden Massenstroms des Wärmeträgermediums vorgesehen, mittels derer der Stellbefehlgeber 62 im Sinne der Aufrechterhaltung eines für die Beibehaltung eines im Bereich zwischen etwa dem 0,2- bis 0,05-fachen der Inbetriebnahmeverbraucherleistung oder der Anfahrverbraucherleistung oder der Betriebsverbraucherleistung oder der Bezugsgröße für die zulässige Schwankungsbreite der Verbraucherleistung liegenden Bruchteils derselben ausreichenden Verhältnisses des vom Wärmeerzeuger 2 her zugespeisten Massenstroms zum Gesamtmassenstrom des Wärmeträgermediums betätigbar ist. wobei vorzugsweise auch hier wiederum eine Stellungsanzeigeeinrichtung zur Rückmeldung des Betriebszustandes des Stellbefehlgebers 62 und/oder der Stellung des für die Veränderung des durch die Mehrwege-Mischeinrichtung bewirkten Massenstromverhältnisses des Wärmeträgermediums verantwortlichen Organs der Mehrwege-Mischeinrichtung 7 bzw. 8 selbst vorgesehen sein kann, die mit der Massenstrom-Begrenzungseinrichtung 108 rückgekoppelt ist; auch hier kann diese Rückmeldeeinrichtung durch die Stellungsanzeigeeinrichtung 105 gebildet sein.

Die Bandbreite des Sollwert-Bandes der Schwankungsbreite der Verbraucherleistung kann nach der Erfindung zweckmäßig auch in Abhängigkeit von einem "Scanning"-Vorgang in Form einer rastermäßigen Messwertabfrage und -überwachung optimiert werden. Hierfür weist die Regelungseinrichtung 20 eine Zähleinrichtung 55 für die Zahl der während einer vorgegebenen Zeitspanne im Betrieb tatsächlich auftretenden, sich als Veränderungen in Form von Aufnahmen und oder Beendigungen bzw. Verringerungen und/oder Erhöhungen der Zufuhr von Wärmeleistung zum im Heizungsvorlauf 14 befindlichen Wärmeträgermedium bzw. Veränderung der Stellung des das Massenstromverhältnis von dem Heizungsvorlauf 14 zugespeistem Massenstrom zum Gesamtmassenstrom bestimmenden Organs einer etwa vorhandenen Mehrwege-Mischeinrichtung 7 bzw. 8 bzw. Veränderungen des Sollwertes der Vorlauftemperatur des Wärmeträgermediums darstellenden Regeleingriffe auf, der ein Zählwerk 56 für diese Veränderungen zugeordnet ist. Weiterhin ist eine Programmspeichereinrichtung 123 für eine vorgebene während dieser vorgegebenen Zeitspanne zulässige Zahl solcher Veränderungen und eine Detektoreinrichtung 124 vorgesehen, mittels derer eine Abweichung der vom Zählwerk 56 der Zähleinrichtung 55 ermittelten Anzahl solcher während dieser vorgebenen Zeitspanne etwa aufgetretener Veränderungen von der durch die Programmspeichereinrichtung 123 vorgegebenen für diese vorgegebene Zeitspanne zulässigen Zahl solcher Veränderungen ermittelt werden und der Einrichtung 44 für die automatische Veränderung eines oder beider Sollwertgeber 41 bzw. 42 ein Anlaufimpuls vermittelt werden kann, durch den über diese(n) zumindest eine der Grenzen des Sollwert-Bandes der Schwankungsbreite der Verbraucherleistung in dem Sinne geändert wird, daß dieses in Abhängigkeit von einer durch die Detektoreinrichtung 124 ermittelten Abweichung der Anzahl aufgetretener Veränderungen (Regeleingriffe) von der zulässigen Zahl derselben gespreizt oder gestaucht wird.

Ferner kann zweckmäßig die Regeleinrichtung 20 eine vorzugsweise einstellbare Zeitgabeeinrichtung beispielsweise in Form der Zeitgabeeinrichtung 58 aufweisen, mittels derer im Sinne der Schaffung einer Toleranzschwelle bei Heizbetrieb eine Abkühlung des Wärmeträgermediums um eine vorbestimmte Zeitspanne beschleunigt und/oder eine Aufheizung des Wärmeträgermediums um eine vorbestimmte Zeitspanne verzögert eingeleitet wird.

Es ist ersichtlich, daß bei der Ausführungsform der Erfindung gemäß Fig. 1 aufgrund von durch die Multipliziereinrichtung 50 für die Verbraucherleistung ermittelten Momentanwerten derselben über die Regeleinrichtung 20 überwacht wird, ob diese ermittelten Werte die obere Grenze des über die einstellbaren Sollwertgeber 41 und 42 eingestellten Sollwert-Bandes der Schwankungsbreite der Verbraucherleistung überschreiten oder aber die untere Grenze dieses Sollwert-Bandes unterschreiten. In beiden Fällen wird durch die Regeleinrichtung 20 die betreffende Abweichung der Schwankung der Verbraucherleistung von der betreffenden Grenze des Sollwert-Bandes ihrer Schwankungsbreite ausgeregelt, indem über den Stellbefehlgeber 62 die in den Heizungsvorlauf 14 eingespeiste Wärmeleistung bei Ausscheren der Schwankung der Verbraucherleistung aus dem Sollwert-Band ihrer Schwankungsbreite über die eine oder die andere Grenze desselben heraus so beeinflußt wird, daß die Abweichung der Verbraucherleistung wieder in den Bereich zwischen den beiden Grenzen ihres Sollwert-Bandes zurückgeführt wird. Insoweit unterscheidet sich die Erfindung wesentlich vom Stande der Technik, als bei ihr nämlich einerseits in neuartiger Weise eine von der Fachwelt bisher nicht für Regelungszwecke geeignet gehalten physikalische Größe in Form einer bereichsmäßigen Schwankung, und zwar zudem auch noch einer im gleichen "physikalischen Sprachsystem" wie die Regelgröße liegenden physikalischen Größe in Form der Verbraucherleistung, und diese andererseits nicht etwa auf Konstanz geregelt wird, sondern eine Abweichung der Schwankung der Verbraucherleistung über eine obere Grenze eines vorgegebenen Sollwert-Bandes für ihre Schwankungsbreite hinweg oder unter eine untere Grenze desselben auf ihren Verschwindwert ausgeregelt wird, während beliebige Abweichungen von beiden Grenzen des Sollwert-Bandes der Schwankungsbreite der Verbraucherleistung von der Regelung toleriert werden, sofern sich diese wertmäßig nur innerhalb dieses vorgegebenen Sollwert-Bandes bewegen, wobei auch Schwankungen dieser Abweichungen der Verbraucherleistung in beliebiger Größe erfindungsgemäß ohne Einfluß auf die Regelung bleiben, sofern sie nicht zu einem Überschreiten der oberen Grenze des vorgegebenen Sollwert-Bandes oder einem Unterschreiten der unteren Grenze desselben führen. Die Vorteile dieser Regelung nach der Erfindung sind eingangs bereits detailliert erläutert worden.

Die Art, wie diese Ausregelung solcher durch Überschreiten der oberen Grenze des Sollwert-Bandes oder Unterschreiten der unteren Grenze desselben bedingten Abweichungen bewerkstelligt wird, hängt von der Art der Heizungsvorrichtung 1 im allgemeinen und der Ausgestaltung der Zuspeisung der Wärmeleistung zum Heizungsvorlauf 14 im besonderen ab. Bei der Ausführungsform der Erfindung gemäß Fig. 1 ist, wie vorstehend bereits erläutert, ein Regelungszugriff vom Stellbefehlgeber 62 der Regeleinrichtung 20 her auf eine nicht näher dargestellte und auch nicht bezeichnete Einrichtung zur Beeinflussung der Zufuhr von Betriebsenergie zum Wärmeerzeuger 2 als Stellglied vorgesehen. Dieses kann als kontinuierlich verstellbare oder im Ein-Aus-Betrieb arbeitende Einrichtung beliebiger bekannter Art ausgebildet sein. In jedem Fall erfolgt bei der Ausführungsform der Erfindung gemäß Fig. 1 die Beeinflussung der dem Heizungsvorlauf 14 zugeführten Wärmeleistung über Einwirkung auf die Zufuhr von Betriebsenergie zum Wärmeerzeuger 2. Ist dieser für kontinuierliche Zuführung von Betriebsenergie während der Betriebsdauer ausgelegt, so erfolgt die Einwirkung auf die dem Heizungsvorlauf 14 zugeführte Wärmeleistung durch Verringerung der Zufuhr der Betriebsenergie zum Wärmeerzeuger 2 dann, wenn die Regeleinrichtung 20 ein Überschreiten der oberen Grenze des Sollwert-Bandes der Schwankungsbreite der Verbraucherleistung ermittelt hat, und durch Vergrößerung der Zufuhr von Betriebsenergie zum Wärmeerzeuger 2 dann, wenn ein Unterschreiten des Sollwert-Bandes der Schwankungsbreite der Verbraucherleistung vorliegt. Handelt es sich hingegen um einen Wärmeerzeuger 2 mit diskontinuierlicher Zuführung seiner Betriebsenergie, dann erfolgt erfindungsgemäß die Einflußnahme auf diese so, daß immer dann, wenn ein Überschreiten der oberen Grenze des Sollwert-Bandes der Schwankungsbreite der Verbraucherleistung vorliegt, die Zufuhr von Betriebsenergie zum Wärmeerzeuger 2 unterbrochen bzw. abgeschaltet und dann, wenn die Regeleinrichtung 20 ein Unterschreiten der unteren Grenze des Sollwert-Bandes der Schwankungsbreite der Verbraucherleistung ermittelt. die Zufuhr von Betriebsenergie zum Wärmeerzeuger 2 aufgenommen wird.

Eine andere Betriebsart sieht vor, daß für einen Wärmeerzeuger 2 mit diskontinuierlicher Zufuhr seiner Betriebsenergie bei Überschreiten der oberen Grenze des Sollwert-Bandes das Zeitverhältnis der Ein- zur Ausschaltung der Zufuhr von Betriebsenergie zum Wärme- bzw. Kälteerzeuger erhöht wird und bei Unterschreiten der unteren Grenze selbiges Zeitverhältnis verringert wird. Bei dieser Betriebsart wird also nicht bei Überschreiten des Sollwert-Bandes jeweils die Betriebsenergie-Zufuhr veranlaßt oder unterbunden, sondern anstelle dessen das Zeitverhältnis der Ein- zur Ausschaltung der Zufuhr von Betriebsenergie zum Wärme- bzw. Kälteerzeuger bei Bandüber- oder Unterschreitung verändert.

Die Ausführungsform der Erfindung gemäß Fig. 2 und ebenso auch eine dieser dann, wenn in dieser der strich-punktiert umrandete Bereich III durch die Rohrleitungs- , Mehrwege-Mischeinrichtungs- und Umwälzpumpen-Anordnung gemäß Fig. 3 ersetzt wird, entsprechende Ausführungsform unterscheiden sich von der gemäß Fig. 1 abgesehen von der lediglich beispielhaft dargestellten Anwendung in Verbindung mit einer Zweistrang-Anlage nur darin, daß die Einflußnahme auf die Zuführung der Wärmeleistung zum Heizungsvorlauf 14 hier nicht durch irgendwie geartete Änderung der Zufuhr der Betriebsenergie zum Wärmeerzeuger 2 erfolgt, sondern durch Zugriff auf die hier jeweils vorgesehene Mehrwege-Mischeinrichtung in Form des Vier-Wege-Mischers 7 gemäß Fig. 2 oder des Drei-Wege-Mischers 8 gemäß Fig. 3. Die hier dargestellte Ausführung eines über einen gas- oder ölbefeuerten Brenner 9 mit Betriebsenergie versorgten Heizkessels als Wärmeerzeuger 2, der über die Messeinrichtung 12 für die Temperatur des Wärmeträgermediums im Kessel (Kesselthermometer) und die Einrichtung 11 zur Beeinflussung der Zufuhr von Betriebsenergie zum Brenner, die beispielsweise ein Regulierventil für das als Primärenergie dienende Gas oder Öl umfassen kann, auf eine vorbestimmte Temperatur des Wärmeträgermediums im Kessel (dargestellt durch den Einstellpfeil an der Einrichtung 11) geregelt werden kann, kann ihrerseits für kontinuierliche oder diskontinuierliche Zuführung der Betriebsenergie ausgelegt sein, je nach dem, wie der Brenner 9 ausgebildet ist. Dessen ungeachtet ist bei den Ausführungen der Erfindung gemäß Fig. 2 und Fig. 3 jedoch die Beeinflussung der dem Heizungsvorlauf 14 zugespeisten Wärmeleistung über die jeweilige Mehrwege-Mischeinrichtung 7 bzw. 8 derart vorgesehen, daß durch dieses das Verhältnis des in den Heizungsvorlauf 14 eingespeisten heißen Massenstroms des Wärmeträgermediums zum Gesamtmassenstrom und/oder die Stellung des dieses Verhältnis bestimmenden Organs der Mehrwege-Mischeinrichtung 7 bzw. 8 verändert wird, indem vom Stellbefehlgeger 62 der Regeleinrichtung 20 über die jeweilige Steuerleitung 17 bzw. 18 der Verstellantrieb 10 für die betreffende Mehrwege-Mischeinrichtung 7 bzw. 8 entsprechend betätigt wird. Diese Betätigung erfolgt dabei erfindungsgemäß so, daß immer dann, wenn die ermittelte Schwankung der Verbraucherleistung zu einer Abweichung über die obere Grenze ihres Sollwert-Bandes führt, das Verhältnis von dem Heizungsvorlauf 14 zugespeistem Massenstrom zu Gesamtmassenstrom verringert und dann, wenn ein Unterschreiten der unteren Grenze des Sollwert-Bandes der Schwankungsbreite der Verbraucherleistung vorliegt, dieses Verhältnis von dem Heizungsvorlauf 14 zugespeistem Massenstrom zum Gesamtmassenstrom vergrößert wird.

Für die Möglichkeiten der größenmäßigen Änderung dieses Verhältnisses bzw. der zugeordneten Stellung des dieses bestimmenden Organs der betreffenden Mehrwege-Mischeinrichtung 7 bzw. 8 sind vorstehend bereits detaillierte Angaben ebenso gemacht, wie für das Maß der Beeinflussung der Zuführung der Betriebsenergie zum Wärmeerzeuger 2 ungeachtet dessen, ob diese kontinuierlich oder diskontinuierlich erfolgt.

Es ist ersichtlich, daß eine Ausführung eines Wärmeerzeugers 2 als brennerbefeuerter Heizkessel auch in Fig. 1 zur Anwendung kommen kann, ebenso wie gleichermaßen eine Ausführung eines Wärmeerzeugers 2, wie diese in Verbindung mit Fig. 1 beschrieben ist, bei der Vorrichtung 1 gemäß Fig. 2 Verwendung finden kann. Gleichermaßen sind auch die Ausführungen gemäß Fig. 2 und Fig. 3 in Verbindung mit Einstrang-Anlagen gemäß Fig. 1 im Rahmen der Erfindung mit allen Vorteilen derselben verwendbar. Die dargestellten Ausführungen sollen nur beispielhaft Möglichkeiten aufzeigen, die wichtigsten Varianten der Erfindung zu verwirklichen, ohne dabei erschöpfend alle Möglichkeiten von Kombinationen von Wärmeerzeuger-Ausführungen, Arten der Veränderung der dem Heizungsvorlauf 14 zuzuspeisenden Wärmeleistung und/oder Ausführungen der Regeleinrichtung insbesondere bezüglich deren Vervollkommnung im Hinblick auf die Vielzahl der nach der Erfindung möglichen Selbstlernvorgänge bildlich darzustellen. Aus dem gleichen Grunde ist auch auf die Darstellung der impulsleitungsmäßigen Verknüpfung der einzelnen Aggregate bzw. Einrichtungen der Regeleinrichtung 20 verzichtet worden, weil diese bereits einleitend und in den betreffenden Ansprüchen detailliert erläutert sind und im Bedarfsfall der Fachmann andersartige impulsleitungsmäßige Verknüpfungen in Kenntnis der beschriebenen Verknüpfungen ohne erfinderisches Zutun einfach ermitteln kann.

Während in Fig. 2 gleichfalls lediglich beispielhaft eine Regeleinrichtung 20 dargestellt ist, die nicht in Funktionsgruppen aufgeteilt ist, obgleich diese mit 20a und 20b als solche bezeichnet sind, ist in Fig.1 schematisch dargestellt, was damit gemeint ist, wenn gemäß einem beschriebenen Erfindungsgedanken die Regeleinrichtung 20 in eine in der Nähe des Wärmeerzeugers 2 angeordnete Funktionsgruppe 20a und eine in bequemer Zugriffsnähe des Benutzers angeordnete Funktionsgruppe 20b gegliedert ist. Dabei umfaßt die Funktionsgruppe 20a die Einrichtungen für diejenigen Funktionen, die während der Heizperiode in der Regel nicht oder nur selten verändert werden, während die in bequemer Nähe des Benutzers angeordnete Funktionsgruppe 20b die Einrichtungen für die vom Benutzer einstellbaren Funktionen umfaßt und vorzugsweise als Raumschaltstation ausgebildet ist.

In Fig. 2 ist im übrigen auch noch gezeigt, daß die mit der Regeleinrichtung 20 über eine Messwertleitung 80 verbundene Einrichtung 70 zur Messung der Temperatur des Wärmeträgermediums am Eintritt 76 in den Heizungsvorlauf 14 bzw. im Heizungsvorlauf 14 selbst dafür ausgenutzt werden kann, die über den Temperaturfühler 70 gemessene Vorlauftemperatur mittels entsprechender datenlogischer Be- bzw. Verarbeitung in der Regeleinrichtung 20 beispielsweise als Temperaturbegrenzung für die Vorlauftemperatur der Anlage benutzen zu können, indem über eine Steuerleitung 19 von der Regeleinrichtung 20 ein entsprechender Informationsimpuls auf die Einrichtung 11 zur Beeinflussung der Zufuhr von Betriebsenergie zum Wärmeerzeuger 2 gegeben wird, so daß unabhängig von dem eingestellten Sollwert für die Wärmeträgermediumstemperatur (z. B. Kesselwassertemperatur) im Wärmeerzeuger 2 für die Regelung derselben der in Fig. 2 dargestellte Brenner 9 bzw. eine beliebige andere Einrichtung zur Zuführung von Betriebsenergie zum Wärmeerzeuger 2 so gefahren wird, daß ein vorgegebener Grenzwert für die Vorlauftemperatur nicht überschritten werden kann. Dabei ist diese in Fig. 2 dargestellte Ausführung weder von der Art der Ausgestaltung bzw. der Funktionsweise des Wärmeerzeugers 2 noch der Beeinflussung der Zufuhr von Wärmeleistung zum Heizungsvorlauf 14 noch der Ausführung der Heizungsvorrichtung als Einstrang- oder Zweistrang-System noch der Regeleinrichtung bezüglich deren mehr oder weniger weitgehender Vervollkommung im Hinblick auf Selbstlernvermögen abhängig.

In Fig. 1 und Fig. 2 ist im übrigen auch noch eine Einrichtung 125 zur betragsmäßigen optischen und/oder akustischen Anzeige von kontinuierlich oder in vorbestimmten Zeitabständen gewonnenen Ermittlungswerten der in den Heizungsvorlauf 14 eingespeisten Wärmeleistung, die auch als "Mess"-Werte der Verbraucherleistung zu bezeichnen sind, dargestellt. Außerdem kann, sofern diese für beispielsweise Datenüberwachungs- , -dokumentations- und/oder weiterverarbeitungszwecke oder dgl. für zweckmäßig erachtet werden sollte, eine Einrichtung 68 zur betragsmäßigen optischen und/oder akustischen Anzeige kontinuierlich oder in vorbestimmten Zeitabständen gewonnener Messwerte des Gesamtmassenstroms und/oder eine mit der Einrichtung 74 zur Ermittlung der Differenz von Vorlauf- und Rücklauftemperatur des Wärmeträgermediums im Wirkverbindung stehende Einrichtung 69 zur betragsmäßigen optischen und/oder akustischen Anzeige kontinuierlich oder in vorbestimmten Zeitabständen gewonnener Werte der Differenz von Vorlauf- und Rücklauftemperatur des Wärmeträgermediums vorgesehen sein, wie gleichfalls dargestellt.

Im übrigen ist im Verband der Regeleinrichtung 20 sowohl in Fig. 1 als auch in Fig. 2 jeweils eine Einschalteinrichtung 130 dargestellt, mittels derer entweder die gesamte Heizungsvorrichtung 1 oder aber nur deren Regeleinrichtung 20 vom Benutzer derselben funktionsmäßig in Betrieb genommen werden bzw. als ganze wieder ausgeschaltet werden kann.

Im vorstehenden ist die Erfindung zwar an dem Beispiel einer Heizungsvorrichtung beschrieben worden, jedoch gelten die Erläuterungen zu dieser auch für eine Kühlvorrichtung entsprechend. Es kann hierzu auf die detaillierten Darlegungen in Verbindung mit den jeweiligen Ansprüchen verwiesen werden. Die in den Zeichnungen dargestellten Ausführungsbeispiele gelten unverändert auch für eine solche Kühlvorrichtung 1, nur ist dann mit der Bezugsziffer 2 ein Kälteerzeuger gemeint, der in im Zusammenhang mit der beschriebenen Heizungsvorrichtung erläuterten Weise über den Kühlmittelvorlauf 14 an die Kühleinrichtungen 3a, 3b angeschlossen ist, von denen das Wärmeträgermedium über den Kühlmittelrücklauf 16 zurück zum Kälteerzeuger 2 gelangt. Dieser kann beispielsweise als gas- oder dieselmotorisch betriebene Kompressionskältemaschine oder aber als gas- oder ölbefeuerte Sorptionskältemaschine oder aber auch als Übergabewärmetauscher ausgebildet sein, dessen Sekundärseite vom Wärmeträgermediums durchströmt wird, während seine Primärseite mit Kältemittel eines an diese angeschlossenen Kältemittelkreislaufes gespeist wird. Alle übrigen Einzelheiten der in den Zeichnungen dargestellten Ausführungsbeispiele bedürfen keiner zusätzlichen Erläuterungen, sofern man berücksichtigt, daß sich Unterschiede in der Betriebsweise im Vergleich zu Heizbetrieb ergeben können. Lediglich als Beispiel hierfür sei der Betrieb mit Toleranzschwelle genannt, für den bei einer Kühleinrichtung die Zeitgabeeinrichtung 58 der Regeleinrichtung 20 bzw. 20a, 20b so ausgebildet ist, daß mittels ihrer bei Kühlbetrieb eine Erwärmung um eine vorbestimmte Zeitspanne beschleunigt und/oder eine Abkühlung um eine vorbestimmte Zeitspanne verzögert einleitbar ist. Im übrigen sind die Entsprechungen der einzelnen Verfahrensschritte ebenso wie der diese betreffenden vorrichtungsseitigen Ausgestaltungen zwischen Heizbetrieb und Kühlbetrieb den Ansprüchen bzw. deren Erläuterungen im Vorstehenden zu entnehmen. Insbesondere sind dort auch die überragenden Vorteile der Erfindung im Zusammenhang mit dem Kühlen im Vergleich zum Heizen ausführlich dargelegt.

Insgesamt gesehen ist hervorzuheben, daß die Erfindung, obgleich sie lediglich im Zusammenhang mit der Messung einerseits des Gesamtmassenstroms und andererseits der Vorlauf- und Rücklauftemperatur des Warmeträgermediums und der Bestimmung der Differenz dieser beiden Temperaturen sowie der Ermittlung der Momentanwerte der Verbraucherleistung hieraus und der Nutzung eines Sollwert-Bandes der Schwankungsbreite der Verbraucherleistung erläutert und in den Ansprüchen definiert ist, immer dann, wenn sie mit Messung des Gesamtmassenstroms des Wärmeträgermediums und regelungstechnischer Nutzung der betreffenden Messwerte derselben unmittelbar arbeitet, doch auch die Messung des Druckabfalls über der Umwälzpumpe und die Regelung einer Heizungs- bzw. Kühlvorrichtung bzw. -anlage über diesen Druckabfall mitumfaßt, indem entsprechende Ansprüche für die Verwendung dieses Druckabfalls über der Umwälzpumpe (des Arbeitsdruckes derselben) entsprechend so zu lesen sind, daß immer geringer Gesamtmassenstrom hohen Arbeitsdruck der Umwälzpumpe und großer Gesamtmassenstrom niedrigen Arbeitsdruck der Umwälzpumpe bedeutet. Obgleich die Erfindung vorstehend lediglich anhand einiger bevorzugter Ausführungsbeispiele nur beispielhaft erläutert worden ist, ist sie nicht auf diese beschränkt, vielmehr stehen dem Fachmann vielfältige Möglichkeiten offen, sie an die konstruktiven, fertigungstechnischen oder materialmäßigen Gegebenheiten im Herstellerwerk und/oder an die jeweiligen Forderungen des einzelnen Einsatzfalls sowohl planungsmäßiger als auch montagetechnischer Art durch andere Kombination ihrer Merkmale oder deren Austausch gegen gleichwirkende Mittel anzupassen, ohne dadurch den Rahmen der Erfindung zu verlassen.

## Ansprüche

1. Verfahren zur Regelung der Temperatur in Räumen, die Heiz- oder Kühleinrichtungen mit Thermostatventilen aufweisen, wobei die Heiz- oder Kühleinrichtungen von einer zentralen Wärme- oder Kältequelle gespeist werden und das von den Thermostatventilen beeinflußte Produkt aus Massenstrom und Temperaturdifferenz ermittelt und entsprechend die Wärme- oder Kältequelle gesteuert wird, dadurch gekennzeichnet, daß für die Schwankungen der Amplitude des Produktes aus Massenstrom und Temperaturdifferenz (Schwankung der Verbraucherleistung) ein Sollwert-Band angelegt ist, innerhalb dessen die zulässigen Werte der Schwankung der Verbraucherleistung liegen, und daß in den Bereichen außerhalb des Sollwert-Bandes der jeweilige Ist-Wert zum Soll-Wert hin geregelt wird.

2. Verfahren nach Anspruch 1, dadurch gekennzeichnet, daß eine Abweichung der Schwankung der Verbraucherleistung über die obere Grenze des vorgegebenen Sollwert-Bandes hinaus durch Verringerung der in den Heizungs- bzw. Kühlmittelvorlauf eingespeisten Wärme- bzw. Kälteleistung und eine Abweichung der Schwankung der Verbraucherleistung unter die untere Grenze des vorgegebenen Sollwert-Bandes durch Vergrößerung der in den Heizungs-bzw. Kühlmittelvorlauf eingespeisten Wärme- bzw. Kälteleistung eliminiert wird.

3. Verfahren nach Anspruch 1 oder 2, dadurch gekennzeichnet, daß eine Abweichung der Schwankung der Verbraucherleistung über die obere Grenze des vorgegebenen Sollwert-Bandes hinaus durch Verringerung der in den Heizungs- bzw. Kühlmittelvorlauf eingespeisten Wärme- bzw. Kälteleistung und/oder eine Abweichung der Schwankung der Verbraucherleistung unter die untere Grenze des vorgegebenen Sollwert-Bandes durch Vergrößerung der in den Heizungs-bzw. Kühlmittvorlauf eingespeisten Wärme- bzw. Kälteleistung jeweils nur nach Bestehen während einer vorbestimmten Zeitspanne eliminiert wird, wobei diese Zeitspannen vorzugweise unterschiedlich lang gewählt werden können, dabei mit Vorzug die der Abweichung über die obere Grenze des vorgegebenen Sollwert-Bandes zugeordnete Zeitspanne kürzer als die der Abweichung unter die untere Grenze des vorgegebenen Sollwert-Bandes entsprechende Zeitspanne gewählt werden kann.

4. Verfahren nach einem der vorhergehenden Ansprüche, dadurch gekennzeichnet, daß für zumindest die Dauer einer vorgegebenen Zeitspanne eine Mehrzahl von Bestimmungen der Verbraucherleistung vorgenommen und jeweils das Ergebnis der letzten Bestimmung mit dem jeder der vorangegangenen Bestimmungen verglichen und bei Ermittlung eines die obere Grenze des Sollwert-Bandes für die zulässige Größe der Schwankungsbreite der Verbraucherleistung überschreitenden Unterschiedes zweier solcher Ergebnisse diese Abweichung der Schwankung der Verbraucherleistung durch Verringerung der in den Heizungs- bzw. Kühlmittelvorlauf eingespeisten Wärme- bzw. Kälteleistung und/oder bei Ermittlung eines die untere Grenze des Sollwert-Bandes für die zulässige Größe der Schwankungsbreite der Verbraucherleistung unterschreitenden Unterschiedes zweier solcher Ergebnisse und dessen Bestehens während einer vorbestimmten Zeitdauer diese Abweichung der Schwankung der Verbraucherleistung durch Vergrößerung der in den Heizungs- bzw. Kühlmittelvorlauf eingespeisten Wärme- bzw. Kälteleistung eliminiert wird.

5. Verfahren nach Anspruch 4, dadurch gekennzeichet, daß die Zeitspanne, in der eine Mehrzahl von Bestimmungen der Verbraucherleistung vorgenommen wird, gleich der für das Bestehen eines Unterschiedes zwischen einem letztermittelten Ergebnis und dem bzw. einem der vorangegangenen Ergebnis(se) der Bestimmung der Verbraucherleistung vorbestimmten Zeitdauer gewählt wird.

6. Verfahren nach Anspruch 4 oder 5, dadurch gekennzeichnet, daß nach einer Eliminierung einer Abweichung der Schwankung der Verbraucherleistung von einer der Grenzen des vorgegebenen Sollwert-Bandes für zumindest die Dauer einer vorgegebenen Zeitspanne die Vornahme einer Mehrzahl von Bestimmungen der Verbraucherleistung und der Vergleich jeweils des Ergebnisses der letzten Bestimmung mit dem jeder der vorangegangenen dieser Mehrzahl von Bestimmungen sowie der Vergleich dieser Unterschiede dieser Ergebnisse mit der oberen und unteren Grenze des Sollwert-Bandes nebst Eliminierung der Abweichung der Schwankung der Verbraucherleistung bei etwaiger Ermittlung eines die obere Grenze des Sollwert-Bandes überschreitenden oder eines die untere Grenze des Sollwert-Bandes unterschreitenden Unterschiedes dieser Ergebnisse wiederholt wird.

7. Verfahren nach einem der vorhergehenden Ansprüche, dadurch gekennzeichnet, daß eine Abweichung der Schwankung der Verbraucherleistung über die obere Grenze des vorgegebenen Sollwert-Bandes hinaus durch Vergrößerung der in den Heizungs- bzw. Kühlmittelvorlauf eingespeisten Wärme- bzw. Kälteleistung entsprechend dem Maß dieser Abweichung und eine Abweichung der Schwankung der Verbraucherleistung unter die untere Grenze des vorgegebenen Sollwert-Bandes durch Verringerung der in den Heizungs-bzw. Kühlmittelvorlauf eingespeisten Warme- bzw. Kälteleistung entsprechend dem Maß dieser Abweichung eliminiert wird, daß das Gesamtmaß der Abweichung der Schwankung der Verbraucherleistung über die obere Grenze des vorgegebenen Sollwert-Bandes hinaus im Verlauf der Zeit ermittelt und eine Abweichung der Schwankung der Verbraucherleistung über die obere Grenze dieses Sollwert-Bandes hinaus durch Verringerung der in den Heizungs- bzw. Kühlmittelvorlauf eingespeisten Wärme- bzw. Kälteleistung entsprechend diesem Maß dieser Abweichung eliminiert und/oder das Gesamtmaß der Abweichung der Schwankung der Verbraucherleistung unter die untere Grenze des vorgegebenen Sollwert-Bandes im Verlauf der Zeit ermittelt und eine Abweichung der Schwankung der Verbraucherleistung unter die untere Grenze dieses Sollwert-Bandes durch Vergrößerung der in den Heizungs- bzw. Kühlmittelvorlauf eingespeisten Wärme- bzw. Kälteleistung entsprechend diesem Gesamtmaß der Abweichung der Schwankung der Verbraucherleistung eliminiert wird und

daß das Gesamtmaß der Schwankungsbreite der Verbraucherleistung und das Gesamtmaß der der oberen oder der der unteren Grenze des Sollwert-Bandes entsprechenden Schwankungsbreite der Verbraucherleistung im Verlauf der Zeit ermittelt und als Maß für die Optimierung der Verstärkung und/oder der Nachstellzeit und/oder der Vorhaltzeit der Eliminierung der Abweichung der Verbraucherleistung über die obere bzw. unter die untere Grenze ihres Sollwert-Bandes das Verhältnis dieser beiden Gesamtmaße oder dessen Reziprokwert gewählt wird.

8. Verfahren nach Anspruch 7, dadurch gekennzeichnet, daß die Verstärkung und/oder die Nachstellzeit und/oder die Vorhaltzeit der Eliminierung der Abweichung der Schwankung der Verbraucherleistung über die obere bzw. unter die untere Grenze des Sollwert-Bandes ihrer Schwankungsbreite verändert wird, wenn das Verhältnis der beiden Gesamtmaße einen vorbestimmten Wert überschreitet.

9. Verfahren nach einem der vorhergehenden Ansprüche, dadurch gekennzeichnet, daß die obere und/oder die untere Grenze des Sollwert-Bandes der Schwankungsbreite der Verbraucherleistung herstellerseitig leistungsfähigkeitsbedingt und/oder nutzerbedürfnisbezogen gewählt wird.

10. Verfahren nach einem der vorhergehenden Ansprüche, bei dem die Veränderung der dem im Heizungs- bzw. Kühlmittelvorlauf befindlichen Wärmeträgermedium zugeführten Wärme- bzw. Kälteleistung durch Ein- und Ausschaltung der Zufuhr der Betriebsenergie zum Wärme- bzw. Kälteerzeuger erfolgt, dadurch gekennzeichnet, daß bei Auftreten einer Abweichung der Schwankung der Verbraucherleistung über die obere Grenze des vorgegebenen Sollwert-Bandes ihrer Schwankungsbreite hinaus entweder die Zufuhr von Betriebsenergie zum Wärme- bzw. Kälteerzeuger ganz beendet, oder das Zeitverhältnis der Ein- zur Aussschaltung derselben verringert wird und bei während einer vorbestimmten Zeitdauer auftretender Abweichung der Schwankung der Verbraucherleistung unter die untere Grenze des vorgegebenen Sollwert-Bandes ihrer Schwankungsbreite entweder die Zufuhr von Betriebsenergie zum Wärme- bzw. Kälteerzeuger wieder aufgenommen oder das Zeitverhältnis der Ein- zur Ausschaltung derselben erhöht wird.

11. Verfahren nach Anspruch 10, dadurch gekennzeichnet, daß bei Inbetriebnahme des Verfahrens für Heizbetrieb oder für Kühlbetrieb die Verbraucherleistung als maximal mögliche Verbraucherleistung (Inbetriebnahemeverbraucherleistung) zu dem Zeitpunkt, zu dem nach einer Zeitspanne mit praktisch konstantem Wert der Verbraucherleistung erstmalig eine Verringerung derselben auftritt, ermittelt und der größere Sollwert der Schwankungsbreite der Verbraucherleistung entsprechend einem Bruchteil dieser maximal möglichen Verbraucherleistung (Inbetriebnahmeverbraucherleistung) und der kleinere Sollwert der Schwankungsbreite der Verbraucherleistung entsprechend einem im Vergleich zu diesem Bruchteil kleineren Bruchteil dieser maximal möglichen Verbraucherleistung (Inbetriebnahmeverbraucherleistung), vorzugsweise gemäß einem einem im Bereich zwischen etwa einem Zehntel und der Hälfte liegenden Bruchteil des dem größeren Sollwert der Schwankungsbreite der Verbraucherleistung entsprechenden Wert derselben, gewählt wird und daß als obere Grenze für den größeren Sollwert der Schwankungsbreite der Verbraucherleistung die maximal mögliche Verbraucherleistung (Inbetriebnahmeverbraucherleistung) oder die maximale Verbraucherleistung (Anfahrverbraucherleistung) und als untere Grenze für den kleineren Sollwert der Schwankungsbreite der Verschwindwert der Verbraucherleistung gewählt wird.

12. Verfahren nach einem der Ansprüche 1 bis 9, bei dem die Veränderung der dem im Heizungs- bzw. Kühlmittelvorlauf befindlichen Wärmeträgermedium zugeführten Wärme- bzw. Kälteleistung durch kontinuierliche Änderung der Zufuhr von Betriebsenergie zum Wärme- bzw. Kälteerzeuger erfolgt, dadurch gekennzeichnet, daß bei Auftreten einer Abweichung der Schwankung der Verbraucherleistung über die obere Grenze des vorgegebenen Sollwert-Bandes ihrer Schwankungsbreite hinaus die Zufuhr von Betriebsenergie zum Wärme- bzw. Kälteerzeuger verringert und bei während einer vorbestimmten Zeitdauer auftretender Abweichung der Schwankung der Verbraucherleistung unter die untere Grenze des vorgegebenen Sollwert-Bandes ihrer Schwankungsbreite die Zufuhr von Betriebsenergie zum Wärme- bzw. Kälteerzeuger erhöht wird, daß als gemeinsame Bezugsgröße für den größeren und den kleineren Sollwert der Schwankungsbreite der Verbraucherleistung ein willkürlich vorgegebener Wert der Verbraucherleistung (Betriebsverbraucherleistung) gewählt wird, daß bei Inbetriebnahme des Verfahrens für Heizbetrieb oder für Kühlbetrieb bei Vollast die Verbraucherleistung als maximal mögliche Verbraucherleistung (Inbetriebnahmeverbraucherleistung) zu dem Zeitpunkt, zu dem nach einer Zeitspanne mit praktisch konstantem Wert der Verbraucherleistung erstmalig eine Verringerung derselben auftritt, ermittelt und bei jeweils einer Bezugsgröße für den größeren und für den kleineren Sollwert der Schwankungsbreite der Verbraucherleistung als Bezugsgröße für den größeren Sollwert ein Bruchteil dieser maximal möglichen Verbraucherleistung (Inbetriebnahmeverbraucherleistung) und als Bezugsgröße für den kleineren Sollwert ein vergleichsweise kleinerer Bruchteil dieser maximal möglichen Verbraucherleistung (Inbetriebnahmeverbraucherleistung) bzw. bei für den größeren und den kleineren Sollwert der Schwankungsbreite der Verbraucherleistung gemeinsamer Bezugsgröße als Bezugsgröße für diese beiden Sollwerte ein Bruchteil dieser maximal möglichen Verbraucherleistung (Inbetriebnahmeverbraucherleistung), vorzugsweise ein im Bereich zwischen etwa dem 0.4- bis 0,8-fachen derselben liegender Wert, gewählt wird, daß die Zufuhr von Betriebsenergie zum Wärme- bzw. Kälteerzeuger verringert wird, wenn ein der um einen Bruchteil des größeren Sollwertes der Schwankungsbreite der Verbraucherleistung verringerten Bezugsgröße für diesen größeren Sollwert entsprechender Wert überschritten oder ein der um den Restbetrag des größeren Sollwertes der Schwankungsbreite der Verbraucherleistung verminderten Bezugsgröße für diesen größeren Sollwert entsprechender wert unterschritten wird, und vergrößert wird, wenn während einer vorbestimmten Zeitdauer ein der um einen Bruchteil des kleineren Sollwertes der Schwankungsbreite der Verbraucherleistung vermehrten Bezugsgröße für diesen kleineren Sollwert entsprechender Wert nicht überschritten und ein der um den Restbetrag des kleineren Sollwertes der Schwankungsbreite der Verbraucherleistung verminderten Bezugsgröße für diesen kleineren Sollwert entsprechender Wert nicht unterschritten wird, und

daß nach einer Veränderung der Zufuhr von Betriebsenergie zum Wärme- bzw. Kälteerzeuger (Regelvorgang) als neue Bezugsgrößen für den größeren und für den kleineren Sollwert der Schwankungsbreite der Verbraucherleistung jeweils den im Verhältnis der sich unmittelbar danach oder nach einer vorbestimmten Zeitspanne einstellenden Verbraucherleistung zur vorangegangenen Verbraucherleistung verminderten bzw. vergrößerten Bezugsgrößen für den größeren und für den kleineren Sollwert entsprechende Werte gewählt werden.

13. Verfahren nach einem der Ansprüche 1 bis 9, bei dem die Veränderung der dem im Heizungs- bzw. Kühlmittelvorlauf befindlichen Wärmeträgermedium zugeführten Wärme- bzw. Kälteleistung mittels einer Mehrwege-Mischeinrichtung, wie beispielsweise eines Drei- oder Vier-Wege-Mischers, erfolgt, dadurch gekennzeichnet, daß bei Auftreten einer Abweichung der Schwankung der Verbraucherleistung über die obere oder unter die untere Grenze des vorgegebenen Sollwert-Bandes ihrer Schwankungsbreite die Zufuhr von Wärme- bzw. Kälteleistung zum im Heizungs- bzw. Kühlmittelvorlauf befindlichen Wärmeträgermedium durch Veränderung des Verhältnisses des vom Wärme- bzw. Kälteerzeuger her in den Heizungs- bzw. Kühlmittelvorlauf eingespeisten Massenstroms zum Gesamtmassenstrom und/oder der Stellung des dieses Verhältnis bestimmenden Organs der Mehrwege-Mischeinrichtung verändert und die sich unmittelbar danach oder nach einer vorgegebenen Zeitspanne einstellende Verbraucherleistung und die Differenz zwischen dieser und der Verbraucherleistung, deren Schwankungsbreite für die vorangegangene Abweichung bestimmend war, ermittelt und mit dieser Differenz als der Grenze des Sollwert-Bandes der Schwankungsbreite der Verbraucherleistung, die für die vorangegangene Abweichung bestimmend war, entsprechender neuer Grenze dieses Sollwert-Bandes diese Veränderung der Zufuhr von Wärme- bzw. Kälteleistung zum im Heizungs- bzw. Kühlmittelvorlauf befindlichen Wärmeträgermedium wiederholt wird, sobald wiederum eine Abweichung der Schwankung der Verbraucherleistung über die obere oder unter die untere Grenze dieses durch diese neue Grenze bestimmten Sollwert-Bandes ihrer Schwankungsbreite auftritt, daß als Bezugsgröße für den größeren und den kleineren Sollwert der Schwankungsbreite der Verbraucherleistung jeweils ein willkürlich vorgegebener Wert der Verbraucherleistung (Betriebsverbraucherleistung) gewählt wird und daß der der oberen und/oder der der unteren Grenze des Sollwert-Bandes der Schwankungsbreite der Verbraucherleistung entsprechende Wert derselben jeweils entsprechend der Änderung seiner Bezugsgröße verändert wird, indem er bei Vergrößerung seiner Bezugsgröße vergrößert und bei Verringerung seiner Bezugsgröße verringert wird.

## Claims

1.  Temperature regulation method for spaces provided with heating and cooling devices with thermostatic valves, said heating and cooling devices being supplied from a central heat or refrigeration source, the product of mass flow by temperature difference which is controlled by the thermostatic valves being calculated, and the heat or refrigeration source being controlled accordingly, characterized in that a range of setpoint values is preset for the fluctuations of the product of mass flow by temperature difference (fluctuation of the user output), the admissible values of the fluctuation of the user output being within said preset range, and that in the ranges beyond said preset range the respective actual value is regulated towards the setpoint value.

2.  Method according to claim 1, characterized in that a deviation of the fluctuation of the user output above the upper limit of the preset range is eliminated by reducing the thermal or refrigerating input in the heating or cooling agent flow, and a deviation of the fluctuation of the user output below the lower limit of the preset range is eliminated by increasing the thermal or refrigerating input in the heating or cooling agent flow.

3.  Method according to claim 1 or 2, characterized in that a deviation of the fluctuation of the user output above the upper limit of the preset range is eliminated always only after a predetermined stretch of time by reducing the thermal or refrigerating input in the heating or cooling agent flow, and/or that a deviation of the fluctuation of the user output below the lower limit of the preset range is eliminated always only after a predetermined stretch of time by increasing the thermal or refrigerating input in the heating or cooling agent flow, said stretch of time being optionally selectable, the time assigned to the deviation above the upper limit of the preset range being preferably shorter selectable than the time corresponding to the deviation below the lower limit of the preset range.

4. Method according to one of the previous claims, characterized in that at least for the duration of a predetermined stretch of time a majority of the determinations of the user output are made, and the result of the latest determination is always compared with that of each of the previous determinations, and that upon establishment of a difference between two such results which surpasses the upper limit of the preset range for the admissible magnitude of the fluctuation of the user output said deviation of the fluctuation of the user output is eliminated by reducing the thermal or refrigerating input in the heating or cooling agent flow, and/or that upon establishment of a difference between two such results which is below the lower limit of the preset range for the admissible magnitude of the fluctuation of the user output and its duration for a predetermined stretch of time said deviation of the fluctuation of the user output is eliminated by increasing the thermal or refrigerating input in the heating or cooling agent flow.

5. Method according to claim 4, characterized in that the stretch of time during which a majority of the determinations of the user output is made, is equal to the stretch of time predetermined for the duration of a difference between the latest result established and the result, or one of the results, of the determination of the user output.

6. Method according to claim 4 or 5, characterized in that after the elimination of a deviation of the fluctuation of the user output from one of the limits of the preset range for at least the duration of a predetermined stretch of time, the performance of a majority of the determinations of the user output and the comparison of the result of the latest determination with each of the results preceding said majority of determinations, as well as the comparison of said differences between said results with the upper and lower limits of the preset range together with the elimination of the deviation of the fluctuation of the user output upon possible establishment of a difference of said results surpassing the upper limit of the preset range. or of a difference below the lower limit of the preset range, is repeated.

7. Method according to one of the previous claims, characterized in that a deviation of the fluctuation of the user output above the upper limit of the preset range is eliminated by increasing the thermal or refrigerating input in the heating or cooling agent flow according to the measure of said deviation, and a deviation of the fluctuation of the user output below the lower limit of the preset range is eliminated by reducing the thermal or refrigerating input in the heating or cooling agent flow according to the measure of said deviation,
that the total measure of the fluctuation of the user output above the upper limit of the preset range in the course of time is determined, and a deviation of the fluctuation of the user output above the upper limit of said preset range is eliminated by reducing the thermal or refrigerating input in the heating or cooling agent flow according to the measure of said deviation, and/or that the total measure of the fluctuation of the user output below the lower limit of the preset range in the course of time is determined, and a deviation of the user output below the lower limit of said preset range is eliminated by increasing the thermal or refrigerating input in the heating or cooling agent flow according to the fluctuation of the user output, and
that the total measure of the fluctuation of the user output and the total measure of the fluctuation of the user output corresponding to the upper or the lower limit of the preset range in the course of time is determined and the ratio of said two total measures or their reciprocal values is selected as measure for the optimization of the amplification and/or the integral-action time and/or the derivative action time for the elimination of the deviation of the user output above the upper, respectively. below the lower limit of its preset range.

8. Method according to claim 7, characterized in that the amplification and/or the integral-action time and/or the derivative action time of the elimination of the fluctuation of the user output above the upper, respectively, below the lower limit of the preset range of its fluctuation is changed, when the ratio of the two total measures surpasses a predetermined value.

9. Method according to one of the previous claims, characterized in that the upper and/or the lower limit of the preset range of the fluctuation of the user output is selected by the manufacturer as a function of the capacity and/or in accordance with the requirements of the user.

10. Method according to one of the previous claims, in which the thermal or refrigerating input in the heat transfer medium present in the heating or cooling flow line is varied by starting or stopping the supply of operating energy to the heat or cold generating apparatus, characterized in that upon occurrence of a deviation of the fluctuation of the user output above the upper limit of the preset range of its fluctuation, either the supply of operating energy to the heat or cold generating apparatus is completely discontinued, or else the relation between start and stoppage time of same is reduced, and in case of a predetermined duration of the deviation of the fluctuation of the user output below the lower limit of the preset range of its fluctuation, either the supply of operating energy to the heat or cold generating apparatus is resumed, or else the relation between start and stoppage time of same is increased.

11. Method according to claim 10, characterized in that during the commissioning of the system for heating operation or cooling operation the user output is determined as maximum possible user output (user commissioning output) at the moment at which after a stretch of time with practically constant user output there occurs for the first time a reduction of same, and the higher preset value of the fluctuation range is selected according to a fraction of said maximum possible user output (user commissioning output), and the lower preset value of the fluctuation range of the user output is selected according to a comparison of smaller fractions of said maximum possible user output (user commissionig output) with said fraction, preferably in accordance with a fraction comprised in a range between approximately one-tenth and one-half of the value corresponding to the higher preset value of the fluctuation of the output of the user, and that the maximum possible user output (user commissioning output) or the maximum user output (start-up user output) is chosen as upper limit for the higher preset value of the fluctuation range of the user output, or that the lower preset value of the fluctuation range of the user output is chosen as lower limit for the fluctuation range of the user output.

12. Method according to one of the claims 1 to 9, in which the thermal or refrigerating input in the heat transfer medium present in the heating or cooling agent flow line is varied by continuously varying the supply of operating energy to the heat or cold generating apparatus, characterized in that upon occurrence of a deviation of the fluctuation of the user output above the upper limit of the preset range of its fluctuation the supply of operating energy to the heat or cold generating apparatus is reduced, and in case of a predetermined duration of the deviation of the user output below the lower limit of the preset range of its fluctuation the supply of operating energy to the heat or cold generating apparatus is increased, that a randomly predetermined value of the user output (user operating output) is chosen as common reference quantity for the higher and the lower setpoints of the fluctuation range of the user output, that during the commissioning of the system for heating or cooling operation at full load the user output is determined as maximum possible user output (user commissioning output) at the moment at which after a stretch of time with practically constant user output there occurs for the first time a reduction of same, and at one reference quantity each for the higher and the lower setpoints of the fluctuation range of the user output a fraction of said maximum possible user output (user commissioning output) is chosen as reference quantity for the highest setpoint value, and a comparatively smaller fraction of said maximum possible user output (user commissioning output) is chosen as reference quantity for the lower setpoint value, respectively, at a common reference quantity for the higher and the lower setpoint values of the user output a fraction of said maximum possible user output (user commissioning output), preferably a value in a range comprised between approximately 0.4 to 0.8 times same, is chosen as reference quantity for both said setpoint values, that the supply of operating energy to the heat or cold generating apparatus is reduced when a value corresponding to the reference quantity for the higher setpoint value reduced by a fraction of said higher setpoint value of the fluctuation range of the user output is surpassed, or a value corresponding to the reference quantity for the higher setpoint value reduced by the rest amount of said higher setpoint value of the fluctuation range of the user output is not attained, and is increased when a value corresponding to the reference quantity for the lower setpoint value augmented by a fraction of said lower setpoint value of the fluctuation range of the user output is not surpassed for a predetermined duration, and a value corresponding to the reference quantity for the lower setpoint value reduced by the rest amount of said lower setpoint value is not attained, and

that after a change in the supply of operating energy to the heat or cold generating apparatus (regulation process) the values corresponding to the respective reference quantities reduced or increased by the ratio of a user output attained immediately thereafter or after a predetermined stretch of time to the previous user output are chosen as new reference quantities for the higher and the lower setpoint values of the fluctuation range of the user output.

13. Method according to one of the claims 1 to 9, in which the change in thermal or refrigerating input in the heat transfer medium present in the heating or cooling agent flow line is achieved by means of a multiple-way mixing device, e.g. a three- or four-way mixer, characterized in that upon occurrence of a fluctuation of the user output above the upper or below the lower limit of the preset range of its fluctuation the thermal or refrigerating input in the heat transfer medium present in the heating or cooling agent flow line is varied by changing the ratio of the mass flow supplied by the heat or cold generating apparatus to the heating or cooling agent flow to the total mass flow and/or by the position of the element of the multiple-way mixing device which determines said ratio, and that the user output attained immediately thereafter or after a predetermined stretch of time and the difference between same and the user output, the fluctuation of which was determining for the previous deviation, is calculated and repeated with said difference as limit of the preset range of the fluctuation of the user output, which was determining for the previous deviation for corresponding new limits of said preset range of said change in the thermal or refrigerating input in the heat transfer medium present in the heating or cooling agent flow line, as soon as a renewed deviation of the fluctuation of the user output above the upper or below the lower limit of same occurs through said preset range of its fluctuation determined by said new limit, that a randomly predetermined value of the user output (user operating output) is chosen as reference quantity for the higher and the lower setpoint values of the fluctuation range of the user output, and

that the value corresponding to the upper and/or the lower limit of the preset range of the fluctuation of the user output is always varied according to the change of its reference quantity, in that it is increased at an increase of its reference quantity, and reduced at a decrease of its reference quantity.

## Revendications

1. Procédé de régulation de température de locaux pourvus de dispositifs de chauffage et de refroidissement avec des vannes thermostatiques, dont les dispositifs de chauffage et de refroidissement sont alimentés à partir d'une source de chaleur ou de froid centralisée. et dont le produit du débit de masse et de la différence de température est déterminé et commandé conformément à la source de chaleur ou de froid, caractérisé en ce qu'une plage de valeurs théoriques. au sein de laquelle sont situées les valeurs admissibles de variation de la consommation des récepteurs existe pour les variations de l'amplitude du produit du débit de masse et de la différence de température, et que chaque valeur effective extérieure à la plage de valeurs théoriques est régulée vers la valeur théorique correspondante.

Bien que l'invention n'ait été décrite. ci-avant. que sur la base de quelques exemples de réalisation préférés. elle n'est pas limitée à ces réalisation; au contraire, l'homme de métier dispose de diverses possibilités de s'adapter aux situations de conception. de technique de fabrication ou de matériau dans l'usine du fabricant, et ou de s'adapter aux exigences afférentes aux différents cas d'application tant du point de vue de la planification que du point de vue de la technique du montage par une combinaison différente des caractéristiques de l'invention, ou par l'échange de ces caractéristiques contre d'autres moyens provoquant le même effet, sans pour autant sortir du cadre de l'invention.

2. Procédé selon la revendication 1. caractérisé en ce que toute divergence de la variation de la puissance du récepteur au-dessus de la valeur limite de la plage de valeur théorique sélectionnée est éliminée par une diminution de la puissance calorifique ou de refroidissement introduite dans l'arrivée de l'agent calorifique ou de refroidissement. cependant que toute divergence de la variation de la puissance du récepteur en dessous de la valeur limite de la plage de valeur théorique sélectionnée est éliminée par une augmentation de la puissance calorifique ou de refroidissement introduite dans l'arrivée de l'agent calorifique ou de refroidissement.

3. Procédé selon la revendication 1 ou 2, caractérisé en ce que toute divergence de la variation de la puissance du récepteur supérieure à la valeur limite de la plage de valeur théorique sélectionnée n'est éliminée par une diminution de la puissance calorifique ou de refroidissement introduite dans l'arrivée de l'agent calorifique ou de refroidissement et/ou que toute divergence de la variation de la puissance du récepteur inférieure à la valeur limite de la plage de valeur théorique sélectionnée n'est éliminée par une augmentation de la puissance calorifique ou de refroidissement introduite dans l'arrivée de l'agent calorifique ou de refroidissement qu'après son existence pendant une période prédéterminée, lesdites périodes pouvant de préférence être choisies de longueurs différentes, la période affectée à la divergence supérieure à la limite supérieure de la plage de valeur limite sélectionnée étant choisie de préférence plus courte que la période affectée à celle de la divergence inférieure à la plage de valeur limite sélectionnée.

4. Procédé selon l'une des revendications précitées, caractérisé en ce que, pour la durée d'une période prédéterminée au moins, des déterminations multiples de la puissance du récepteur sont réalisées, et que le résultat de la dernière détermination est comparé à celui de chacune des déterminations antérieures, et, en cas de détection d'une différence de deux de ces résultats dépassant la limite supérieure de la plage de valeur théorique relative à l'amplitude de variation admissible de la puissance du récepteur, cette divergence de la variation de la puissance du récepteur est éliminée par diminution de la puissance calorifique ou de refroidissement alimentée à l'arrivée de l'agent calorifique ou de refroidissement et/ou, lors de la détection d'une différence de deux de ces résultats dépassant négativement la limite inférieure de la plage de valeur théorique relative à l'amplitude de variation admissible de la puissance du récepteur, cette divergence de la variation de la puissance du récepteur est éliminée par augmentation de la puissance calorifique ou de refroidissement alimentée à l'arrivée de l'agent calorifique ou de refroidissement.

5. Procédé selon la revendication 4, caractérisé en ce que la période pendant laquelle des déterminations multiples de la puissance du récepteur sont réalisées est choisie égale à la période prédéterminée pour l'existence d'une divergence entre un résultat détecté en dernier et le(s) résultat(s) précédent(s) de la détermination de la puissance du récepteur.

6. Procédé selon la revendication 4 ou 5, caractérisé en ce que, après l'élimination d'une divergence de la variation de la puissance du récepteur de l'une des limites de la plage de valeur théorique présélectionnée, pendant la durée au moins d'une période donnée, la réalisation des déterminations multiples de la puissance du récepteur et la comparaison du résultat de la dernière détermination avec celui de chacune des déterminations multiples antérieures, tout comme la comparaison de ces divergences de ces résultats avec la limite supérieure et la limite inférieure de la plage de valeur théorique avec l'élimination de la divergence de la variation de la puissance du récepteur en cas de détection d'une différence éventuelle dépassant la valeur limite supérieure ou de la détection d'une différence dépassant négativement la limite inférieure de la plage de valeur théorique relative à l'amplitude de variation admissible de la puissance du récepteur, est répétée.

7. Procédé selon l'une des revendications antérieures, caractérisé en ce que toute variation de la puissance du récepteur supérieure à la valeur limite supérieure de la plage de valeur théorique donnée est éliminée par une augmentation de la puissance calorifique ou de refroidissement introduite dans l'arrivée de l'agent calorifique ou de refroidissement conformément à l'importance de cette divergence, et que toute divergence de la variation de la puissance du récepteur inférieure à la valeur limite inférieure de la plage de valeur théorique sélectionnée est éliminée par une diminution de la puissance calorifique ou de refroidissement introduite dans l'arrivée de l'agent calorifique ou de refroidissement conformément à l'importance de cette divergence, en ce que l'importance totale de la variation de la puissance du récepteur supérieure à la valeur limite de la plage de valeur théorique présélectionnée est déterminée au fur et à mesure de l'écoulement du temps et que toute divergence de la variation de la puissance du récepteur dépassant la valeur limite supérieure de cette plage de valeur théorique est éliminée par une diminution de la puissance calorifique ou de refroidissement introduite dans l'arrivée de l'agent calorifique ou de refroidissement conformément à l'importance totale de cette divergence, et que toute divergence de la variation de la puissance du récepteur inférieure à la valeur limite inférieure de la plage de valeur théorique présélectionnée est déterminée au fur et à mesure de l'écoulement du temps, et que toute divergence de la variation de puissance du récepteur inférieure à la limite inférieure de cette plage de valeur théorique est éliminée par une augmentation de la puissance calorifique ou de refroidissement introduite dans l'arrivée de l'agent calorifique ou de refroidissement conformément à l'importance de cette divergence, en ce que l'importance totale de l'amplitude de la variation de la puissance du récepteur et l'importance totale de l'amplitude de la variation de la puissance du récepteur et l'importance totale de l'amplitude de variation correspondant à la limite supérieure ou à la limite inférieure de la plage de valeur théorique est déterminée au fur et à mesure de l'écoulement du temps, et la relation de ces deux importances totales ou sa valeur réciproque est sélectionnée en tant que paramètre d'optimisation de l'amplification, et/ ou du temps de compensation, et/ou du temps de maintien de l'élimination de la divergence de la puissance du récepteur supérieure à la valeur limite supérieure ou inférieure à la valeur limite inférieure de leur plage de valeur théorique.

8. Procédé selon la revendication 7, caractérisé en ce que l'amplification et/ou le temps de compensation et/ou le temps de maintien de l'élimination de la divergence de la variation de la puissance du récepteur est modifiée au-dessus de la limite supérieure ou inférieure de la plage de valeur théorique de leur amplitude de variation lorsque la relation des deux paramètres totaux dépasse une valeur prédéterminée.

9. Procédé selon l'une des revendications précédentes, caractérisé en ce que la limite supérieure et/ou inférieure de la plage de valeur théorique de l'amplitude de variation de la puissance du récepteur est choisie par le fabricant conformément à la performance nécessaire et/ou ciblée sur les besoins de l'utilisateur.

10. Procédé selon l'une des revendications précédentes, pour lequel la modification de la puissance calorifique et de refroidissement fournie au fluide caloriporteur situé à l'arrivée de l'agent calorifique ou de refroidissement a lieu par enclenchement et par déclenchement de l'alimentation d'énergie de service vers le générateur de chaleur ou de froid, caractérisé en ce que, lors de l'apparition d'une divergence de la variation de la puissance du récepteur supérieure à la limite supérieure de la plage de valeur théorique déterminée de l'amplitude de sa plage de variation, l'alimentation d'énergie de service vers le générateur de chaleur ou de froid est entièrement arrêtée, ou le rapport temporel des enclenchements par rapport aux déclenchements desdits est diminué et que, lors d'une divergence de la variation de la puissance du récepteur inférieure à la limite inférieure de la plage de valeur théorique déterminée de son amplitude de variation apparaissant pendant une duré prédéterminée, l'alimentation du générateur de chaleur ou de froid en énergie de service est reprise, ou le rapport temporel des enclenchements par rapport aux déclenchements desdits est augmenté.

11. Procédé selon la revendication 10, caractérisé en ce que, lors de la mise en service du procédé pour un service de chauffage ou pour un service de refroidissement, la puissance du récepteur déterminée est la puissance maximale possible du récepteur (puissance du récepteur à la mise en service) au moment auquel intervient pour la première fois, après une période de valeur pratiquement constante de puissance de récepteur, une diminution de ladite, et que la valeur théorique la plus importante de l'amplitude de variation de la puissance du récepteur est choisie selon une fraction de cette puissance maximale possible du récepteur (puissance du récepteur à la mise en service), et la valeur théorique la plus faible de l'amplitude de variation de la puissance du récepteur est choisie selon une fraction inférieure à la fraction précitée de cette puissance maximale possible du récepteur (puissance du récepteur à la mise en service), de préférence selon une fraction située entre environ un dixième et la moitié de la valeur correspondant à la valeur théorique la plus importante de l'amplitude de variation de la puissance du récepteur de ladite amplitude, et en ce qu'est choisie, en tant que limite supérieure pour la valeur théorique la plus importante de l'amplitude de variation de la puissance du récepteur, la puissance maximale possible du récepteur (puissance du récepteur à la mise en service) ou la puissance maximale du récepteur (puissance de démarrage) et, en tant que valeur inférieure pour la valeur théorique la plus faible de l'amplitude de variation, la valeur d'évanouissement de la puissance du récepteur.

12. Procédé selon l'une des revendications 1 à 9, pour lequel la modification de la puissance calorifique et de refroidissement fournie au fluide caloriporteur situé à l'arrivée de l'agent calorifique ou de refroidissement a lieu par modification continue de l'alimentation d'énergie de service vers le générateur de chaleur ou de froid, caractérisé en ce que, lors de l'apparition d'une divergence de la variation de la puissance du récepteur supérieure à la limite supérieure de la plage de valeur théorique déterminée de l'amplitude de sa plage de variation, l'alimentation d'énergie de service vers le générateur de chaleur ou de froid est diminuée, en ce que, lors d'une divergence de la variation de la puissance du récepteur inférieure à la limite inférieure de la plage de valeur théorique déterminée de son amplitude de variation apparaissant pendant une duré prédéterminée, l'alimentation du générateur de chaleur ou de froid en énergie de service est augmentée, et en ce que le paramètre de référence commun choisi pour la valeur théorique la plus importante et la plus faible de l'amplitude de variation de la puissance du récepteur est une valeur sélectionnée arbitrairement de la puissance maximale possible du récepteur (puissance du récepteur pendant le service), et en ce que, lors de la mise en service du procédé pour un service de chauffage ou de re- froidissement à pleine charge, la puissance du récepteur est déterminée comme étant la puissance maximale possible du récepteur (puissance du récepteur à la mise en service) au moment auquel intervient pour la première fois, après une période de valeur pratiquement constante de puissance du récepteur, une diminution de ladite, et que, avec un paramètre de référence pour la valeur théorique la plus importante et un paramètre de référence pour la valeur théorique la plus faible de l'amplitude de variation de la puissance du récepteur, est choisi, en tant que paramètre de référence, pour la valeur théorique la plus importante, une fraction de cette puissance maximale possible du récepteur (puissance du récepteur à la mise en service), et, en tant que paramètre de référence, pour la valeur théorique la plus faible, une fraction comparativement plus faible de cette puissance maximale possible du récepteur (puissance du récepteur à la mise en service), ou, en tant que paramètre de référence commun à la valeur théorique la plus importante et à la valeur théorique la plus faible de l'amplitude de variation de la puissance du récepteur, une fraction de cette puissance maximale possible (puissance du récepteur à la mise en service), de préférence une valeur située entre environ 0,4 à 0,8 fois de ladite valeur, en ce que l'alimentation en énergie de service vers le générateur de chaleur ou de froid est diminuée lors du dépassement d'une valeur correspondante au paramètre de référence de la valeur théorique la plus importante diminué d'une fraction de la valeur théorique la plus importante de l'amplitude de variation de la puissance du récepteur, ou du dépassement négatif d'une valeur correspondante au paramètre de référence de la valeur théorique la plus importante diminué du montant résiduel de la valeur théorique la plus importante de l'amplitude de variation de la puissance du récepteur, et est augmentée lors du non-dépassement, pendant une période prédéterminée, d'une valeur correspondante au paramètre de référence de la valeur théorique la plus faible augmentée d'une fraction de la valeur théorique la plus faible ou du non-dépassement négatif d'une valeur correspondante au paramètre de référence de la valeur théorique la plus faible diminué du montant résiduel de la valeur théorique la plus faible de l'amplitude de variation de la puissance du récepteur, et en ce qu'après toute modification de l'alimentation d'énergie de service vers le générateur de chaleur ou de froid (opération de régulation) sont choisies, en tant que nouveaux paramètres de référence pour la valeur théorique la plus importante et la plus faible de l'amplitude de variation de la puissance du récepteur, les valeurs correspondantes aux paramètres de référence diminués ou augmentés de la puissance du récepteur voyant le jour immédiatement après, ou après écoulement d'une période prédéterminée, par rapport à la puissance du récepteur antérieure.

13. Procédé selon l'une des revendications 1 à 9, pour lequel la modification de la puissance calorifique et de refroidissement fournie au fluide caloriporteur situé à l'arrivée de l'agent calorifique ou de refroidissement a lieu au moyen d'un dispositif de mélange multi-voies, tel que mélangeurs à trois ou à quatre voies, caractérisé en ce que, lors de l'apparition d'une divergence de la variation de la puissance du récepteur supérieure à la limite supérieure de la plage de valeur théorique déterminée de l'amplitude de sa plage de variation ou inférieure à la limite inférieure de la plage de valeur théorique déterminée de son amplitude de variation, l'alimentation en puissance calorifique ou de froid du fluide caloriporteur à l'arrivée du fluide de chauffage ou de refroidissement est changée par modification du rapport entre le débit de masse alimenté à l'arrivée de chauffage ou de refroidissement à partir du générateur de chaleur ou de froid et le débit de masse total et/ou changement de la position de l'organe du dispositif de mélange à plusieurs voies déterminant ce rapport, et la puissance du récepteur voyant le jour soit immédiatement après, soit après écoulement d'une certaine période est déterminée, au même titre que la différence entre cette puissance et la puissance du récepteur dont l'amplitude de variation était déterminante pour la divergence antérieure, et que cette modification de l'alimentation en puissance calorifique ou de froid du fluide caloriporteur à l'arrivée du fluide de chauffage ou de refroidissement est répétée avec cette différence en tant que nouvelle limite de la plage de valeur théorique de l'amplitude de variation de la puissance du récepteur qui était déterminante pour la divergence antérieure, dès qu'intervient à nouveau une divergence de la variation de la puissance du récepteur supérieure à la limite supérieure ou inférieure à la limite inférieure de la plage de valeur théorique de son amplitude de variation déterminée par cette nouvelle limite, en ce qu'une valeur prédéterminée arbitrairement de la puissance du récepteur (puissance du récepteur en service) est choisie en tant que paramètre de référence pour la valeur théorique la plus importante et la valeur théorique la plus faible, et en ce que la valeur correspondante à la limite supérieure et/ ou inférieure de la plage de valeur théorique du l'amplitude de variation de la puissance du récepteur est modifiée selon son paramètre de référence dans la mesure où elle est augmentée lors de l'augmentation de son paramètre de référence et est diminuée lors de la diminution de son paramètre de référence.

FIG. 1

EP 0 192 226 B1

FIG.2

FIG.3